# EUROPEAN PATENT APPLICATION

(11) **EP 1 505 765 A1**
(43) Date of publication of application: **09.02.2005**
(21) Application number: 03733088.3
(22) Date of filing: 27.05.2003
(51) Int. Cl.: H04L 9/32

(54) **DATA PROCESSING SYSTEM, DATA PROCESSING DEVICE, DATA PROCESSING METHOD, AND COMPUTER PROGRAM**

(30) Priority: 07.06.2002 JP 2002167148; 07.06.2002 JP 2002167260; 07.06.2002 JP 2002167358
(71) Applicant: Sony Corporation, Tokyo 141-0001 (JP)
(72) Inventor: MASUGI, Madoka, c/o Sony Corporation, Shinagawa-ku, Tokyo 141-0001 (JP); SHIMADA, Noboru, c/o Sony Corporation, Shinagawa-ku, Tokyo 141-0001 (JP); OKA, Makoto, c/o Sony Corporation, Shinagawa-ku, Tokyo 141-0001 (JP); Kawaguchi, Takayoshi, c/o Sony Corporation, Shinagawa-ku, Tokyo 141-0001 (JP); ISHIBASHI, Yoshihito, c/o Sony Corporation, Shinagawa-ku, Tokyo 141-0001 (JP); ABE, Hiroshi, c/o Sony Corporation, Shinagawa-ku, Tokyo 141-0001 (JP); TOYOSHIMA, Nobutaka, c/o Sony Corporation, Shinagawa-ku, Tokyo 141-0001 (JP)
(74) Representative: Leppard, Andrew John
(86) International application number: PCT/JP2003/006585
(87) International publication number: WO 2003/105400

(57) **Abstract**

A privilege management system enabling effective privilege management, such as confirmation processing of service receiving privileges and so forth, is realized. A group attribute certificate which has, as stored information, group identification information corresponding to a group which is a set of certain devices or certain users, and also has affixed an electronic signature of an issuer, is issued to a service reception entity, and verification is performed by means of signature verification for of the group attribute certificate presented from the user device regarding whether or not there has been tampering, screening is performed regarding whether or not this is a service-permitted group based on group identification information stored in the group attribute certificate by using a group information database, and determination is made regarding whether or not service can be provided, based on the screening. Centralized privilege confirmation corresponding to various user sets or device sets can be made, so management of individual privilege information can be omitted, thereby enabling effective privilege management.

## Description

### Technical Field

The present invention relates to a data processing system, a data processing device, a method thereof, and a computer program. More particularly, the present invention relates to a data processing system, a data processing device, a method thereof, and a computer program, whereby service receiving privilege management for users requiring confirmation in contents usage for example, or service usage processing or the like, is executed in an effective and secure manner, and data processing is executed based on access privilege confirmation of users or devices.

### Background Art

As of recent, there is a great deal of service providing processing accompanying communication between terminals, such as distribution of various types of software data such as music data, image data, game programs, and so forth (hereafter referred to as Content) via communication networks such as the Internet or distributable storage media such as DVDs, CDs, memory cards, and the like, and payment accompanying data transmission/reception between terminals. For example, users having various types of user devices, such as PCs, portable communication terminals, portable devices, memory cards, or the like, making connection with service providing devices of service providers in the home or out of the home to exchange data between devices or to receive contents or service, is becoming an increasing everyday occurrence.

Specific examples of the various service usages include accessing a contents distribution service provider using a PC or portable terminal or the like to download various types of contents such as music, moving pictures, game programs, and so forth, shopping or transferring funds using a memory card or the like having a built-in IC chip storing personal information, bank account information, shopping limit monetary amount information, or the like, and using in the stead of tickets at train stations or for busses or the like.

While distribution of contents and services and the like via such communication networks or media is becoming more commonplace, on the other hand, there is the problem of unauthorized use of contents or services, i.e., use of services by users not having proper privileges, and development of a system whereby contents or services or the like are provided only to users having proper usage privileges in a sure manner, thereby eliminating unauthorized use of services, is awaited.

For example, with many software contents, such as music data, image data, game programs, etc., the creator or vendor generally holds the rights to distribution thereof, and with distribution of such contents, a system taking security into consideration is employed, whereby usage of the software is permitted under certain usage restrictions, i.e., only to authorized users, such that duplication or the like without permission is not performed.

One means by which usage restriction of devices or users receiving services is realized is encryption processing. For example, there is an arrangement wherein, at the time of providing content or service information for example to a device or user, the content or service information is encrypted and provided, with a decryption key capable of being used on by an authorized device or user being distributed thereto, thereby enabling usage of the content or service. The encrypted data can be returned to decrypted data (plaintext) by decryption processing using the decryption key.

While there are various data encryption/decryption methods and arrangements using an encryption key and decryption key, one example is a method called the shared key encryption method. With the shared key encryption method, the encryption key used for the data encryption processing, and the decryption key used for the data decryption processing, are shared, and authorized users are provided with a shared key to use for the encryption processing and decryption processing, thereby eliminating data access by unauthorized users which do not have the key. A representative method of this method is DES (Data Encryption Standard).

Also, a method wherein processing with an encryption key used for encryption and processing with a decryption key used for decryption, is the so-called public key encryption method. The public key encryption method is a method using a public key, which unspecified users can use, wherein an encrypted document for a specified individual is subjected to encryption processing using a public key which the specific individual has generated. The document encrypted by the public key can only be decrypted by a secret key corresponding to the public key used for the encryption processing. Only the individual which has generated the public key has the secret key, so only the individual which has the secret key can decrypt the document encrypted with the public key. A representative example of the pubic key encryption method is elliptic curve encryption, or RSA (Rivest-Shamir-Adleman) encryption. Using such encryption methods enable a system wherein encrypted content scan be decrypted only by the authorized user.

With a content or service usage management arrangement such as described above, there are known methods for determining whether or not an authorized user by performing authentication processing between the service provider which provides the contents or services and the user device such as a PC, portable terminal, memory card, etc., before providing encrypted data such as content or service information or the like, or before providing a decryption key. In general authentication processing, the other party is confirmed, and a session key which is valid only for that communication is generated, and in the event that authentication is established, communication is carried out by encrypting the data of the content or the decryption key or the like, using the generated session key.

### Disclosure of Invention

While there is a technique for executing confirmation of user privileges by executing authentication processing between the service provider which provides services and the user on a one-on-one basis as with the system for confirming user privileges described above, development of a system wherein execution of presence/absence of service usage privileges of individual users or user terminals can be performed in an effective and secure manner is desired, in light of increasing variation of services which can be executed at user terminals such as content providing services, other information usage services, payment services, and so forth.

The present invention has been made in light of the above problem, and accordingly it is an object of the present invention to provide a data processing system, a data processing device, a method thereof, and a computer program, whereby, in a data processing system for executing data processing accompanied by data communication, accurate determination of whether or each device or user with which communication is being made has proper data processing execution privileges or service receiving privileges can be made thereby realizing data processing without mistake.

For example, it is an object thereof to provide a device and method for screening whether or not an access is from a user or communication device recognized at a communication processing device which is to be accessed, based on attribute certificates, and permitting access only from users or devices having access privileges, thereby eliminating access from other devices.

A first aspect of the present invention is a privilege management system for managing service reception privileges of user devices;
wherein a user device which is a service reception entity holds a group attribute certificate which has, as stored information, group identification information corresponding to a group which is a set of certain devices or certain users, and also has affixed an electronic signature of an issuer;
and wherein a service provider which is a service providing entity has a configuration for executing verification, by means of signature verification, of the group attribute certificate presented from the user device regarding whether or not there has been tampering, performing screening regarding whether or not this is a service-permitted group based on group identification information stored in the group attribute certificate, and executing determination regarding whether or not service can be provided, based on the screening.

Further, with an arrangement of the privilege management system according to the present invention, the group attributes certificate is a certificate issued to a user device corresponding to a device or a user, under the conditions that mutual authentication is established between a group attributes certificate issuing entity and the user device, and that the device or user to which the certificate is to be issued is following an issuance policy permitted by the service provider.

Further, with an arrangement of the privilege management system according to the present invention, the issuing processing for a new group attributes certificate is of a configuration carried out under the condition that verification is established at the group attributes certificate issuing entity regarding an already-issued group attributes certificate which the user device already holds.

Further, with an arrangement of the privilege management system according to the present invention, the service provider is of a configuration having a group information database wherein the group identifier and permitted service information for members belonging to the group are correlated, wherein the group information database is searched based on the group identification information stored in the group attributes certificate presented by the user device, and determining processing regarding whether or not service can be provided is executed.

Further, with an arrangement of the privilege management system according to the present invention, the service provider is of a configuration wherein screening regarding whether or not the object of service permission is executed for each of a plurality of sets of different group identification information obtained from a plurality of group attribute certificates based on a plurality of different group definitions presented by the user device, and determining processing regarding whether or not service can be provided is executed under the condition that all group identification sets are the object of service permission.

Further, with an arrangement of the privilege management system according to the present invention, the service provider is of a configuration wherein screening regarding whether or not the object of service permission is executed for first group identification information obtained from a first group attribute certificate based on group definitions from the user device wherein devices are group members, and screening regarding whether or not the object of service permission is executed for second group identification information obtained from a second group attribute certificate based on group definitions from the user device wherein devices are group users, and determining processing regarding whether or not service can be provided is executed under the condition that all group identification sets are the object of service permission.

Further, with an arrangement of the privilege management system according to the present invention, the user device is of a configuration including an end entity as a device for executing communication with the service provider, and a user identification device as an individual identification device; wherein the group attribute certificate is issued individually to each of the end entity and user identification device, with issuing processing being carried out under the condition that mutual authentication has been established between the group attribute certificate issuing entity and the end entity or the user identification device.

Further, an arrangement of the privilege management system according to the present invention is of a configuration wherein the group attribute certificate is an attribute certificate issued by an attribute authority, and a group identifier is stored in an attribute information filed within the attribute certificate.

Further, with an arrangement of the privilege management system according to the present invention, the group attribute certificate is of a configuration storing link information regarding a public key certificate corresponding to the group attribute certificate; wherein the service provider is of a configuration wherein verification of the public key certificate obtained by the link information is also executed at the time of performing verification of the group attribute certificate.

Further, a second aspect of the present invention is an information processing device for executing data processing as service providing processing, comprising:
a data reception unit for receiving a group attribute certificate which has, as stored information, group identification information corresponding to a group which is a set of certain devices or certain users, and also has affixed an electronic signature of an issuer as an attribute certificate to be applied to service usage privilege confirmation processing from a service providing device; and
a group attribute certificate verification processing unit for executing verification, by means of signature verification, of the group attribute certificate regarding whether or not there has been tampering, performing screening regarding whether or not this is a service-permitted group based on group identification information stored in the group attribute certificate, and executing determination regarding whether or not service can be provided, based on the screening.

Further, an arrangement of the information processing device according to the present invention is of a configuration further comprising a group information database wherein the group identifier and permitted service information for members belonging to the group are correlated; wherein the group attribute certificate verification processing unit searches the group information database based on the group identification information stored in the group attributes certificate presented by the user device, and executes determining processing regarding whether or not service can be provided.

Further, with an arrangement of the information processing device according to the present invention, the group attribute certificate verification processing unit is of a configuration wherein screening regarding whether or not the object of service permission is executed for each of a plurality of sets of different group identification information obtained from a plurality of group attribute certificates based on a plurality of different group definitions presented by the user device, and determining processing regarding whether or not service can be provided is executed, based on the screening.

Further, a third aspect of the present invention is a privilege management method for managing service reception privileges of user devices, comprising:
as an execution step at a user device which is a service reception entity, a step for transmitting to a service provider which is a service providing entity a group attribute certificate which has, as stored information, group identification information corresponding to a group which is a set of certain devices or certain users, and also has affixed an electronic signature of an issuer;
and, as an execution step at the service provider, a step for performing verification, by means of signature verification, of the group attribute certificate presented from the user device regarding whether or not there has been tampering, performing screening regarding whether or not this is a service-permitted group based on group identification information stored in the group attribute certificate, and executing determination regarding whether or not service can be provided, based on the screening.

Further, an arrangement of the privilege management method according to the present invention further comprising a group attribute certificate issuing processing step for issuing the group attributes certificate to a user device corresponding to a device or a user; wherein the group attribute certificate issuing processing step is a processing step for issuing the group attribute certificate to a user device corresponding to a device or a user under the conditions that mutual authentication is established between a group attributes certificate issuing entity and the user device, and that the device or user to which the certificate is to be issued is following an issuance policy permitted by the service provider.

Further, with an arrangement of the privilege management method according to the present invention, the group attribute certificate issuing processing step includes a verification processing step regarding an already-issued group attributes certificate which the user device already holds, wherein issuing of a group attributes certificate is carried out under the condition that the verification is established.

Further, with an arrangement of the privilege management method according to the present invention, the service provider is of a configuration having a group information database wherein the group identifier and permitted service information for members belonging to the group are correlated, wherein the group information database is searched based on the group identification information stored in the group attributes certificate presented by the user device, and determining processing regarding whether or not service can be provided is executed.

Further, with an arrangement of the privilege management method according to the present invention, the service provider is of a configuration wherein screening regarding whether or not the object of service permission is executed for each of a plurality of sets of different group identification information obtained from a plurality of group attribute certificates based on a plurality of different group definitions presented by the user device, and determining processing regarding whether or not service can be provided is executed under the condition that all group identification sets are the object of service permission.

Further, with an arrangement of the privilege management method according to the present invention, at the service provider, screening regarding whether or not the object of service permission is executed for first group identification information obtained from a first group attribute certificate based on group definitions from the user device wherein devices are group members, and screening regarding whether or not the object of service permission is executed for second group identification information obtained from a second group attribute certificate based on group definitions from the user device wherein devices are group users, and determining processing regarding whether or not service can be provided is executed under the condition that all group identification sets are the object of service permission.

Further, with an arrangement of the privilege management method according to the present invention, the group attribute certificate is of a configuration storing link information regarding a public key certificate corresponding to the group attribute certificate; and the service provider is of a configuration wherein verification of the public key certificate obtained by the link information is also executed at the time of performing verification of the group attribute certificate.

Further, a fourth aspect of the present invention is an information processing method for an information processing device for executing data processing as service providing processing, the method comprising:
a certificate reception step for receiving from a service providing device, a group attribute certificate which has, as stored information, group identification information corresponding to a group which is a set of certain devices or certain users, and also has affixed an electronic signature of an issuer, as an attribute certificate to be applied to service usage privilege confirmation processing; and
a group attribute certificate verification processing step for executing verification, by means of signature verification of the group attribute certificate, regarding whether or not there has been tampering, performing screening regarding whether or not this is a service-permitted group based on group identification information stored in the group attribute certificate, and executing determination regarding whether or not service can be provided, based on the screening.

Further, with an arrangement of the information processing method according to the present invention, the information processing device further comprises a group information database wherein the group identifier and permitted service information for members belonging to the group are correlated; wherein the group attribute certificate verification processing step includes a step for searching the group information database based on the group identification information stored in the group attributes certificate presented by the user device, and executing determining processing regarding whether or not service can be provided.

Further, with an arrangement of the information processing method according to the present invention, the group attribute certificate verification processing step includes a step for executing screening regarding whether or not the object of service permission is executed for each of a plurality of sets of different group identification information obtained from a plurality of group attribute certificates based on a plurality of different group definitions presented by the user device, and executing determining processing regarding whether or not service can be provided under the condition that all group identification sets are the object of service permission.

Further, a fifth aspect of the present invention is a computer program for effecting execution of privilege management processing for managing service reception privileges of user devices, the program comprising:
a certificate reception step for receiving from a service providing device, a group attribute certificate which has, as stored information, group identification information corresponding to a group which is a set of certain devices or certain users, and also has affixed an electronic signature of an issuer, as an attribute certificate to be applied to service usage privilege confirmation processing; and
a group attribute certificate verification processing step for executing verification, by means of signature verification of the group attribute certificate, regarding whether or not there has been tampering, performing screening regarding whether or not this is a service-permitted group based on group identification information stored in the group attribute certificate, and executing determination regarding whether or not service can be provided, based on the screening.

Further, a sixth aspect of the present invention is an access privilege management system for executing access restrictions between communication devices having communication functions;
wherein an access requesting device stores, in storage means, a group attribute certificate which has, as stored information, group identification information corresponding to a group which is a set of certain communication devices or certain users, and also has affixed an electronic signature of an issuer;
and wherein an access requested device, which is the object of an access request from the access requesting device, executes verification, by means of signature verification, of the group attribute certificate presented from the access requesting device regarding whether or not there has been tampering, performing screening regarding whether or not the access requesting device is a device which belongs to an access-permitted group based on group identification information stored in the group attribute certificate, and executes determination regarding whether or not access can be permitted, based on the screening.

Further, with an arrangement of the access privilege management system according to the present invention, the access requested device has a configuration for performing screening regarding whether or not the access requesting device is an end entity belonging to an access-permitted group, based on a group attribute certificate issued to the end entity which is an access executing device making up the access requesting device, and executing determination regarding whether or not access can be permitted, based on the screening.

Further, with an arrangement of the access privilege management system according to the present invention, the access requested device has a configuration for performing screening regarding whether or not the access requesting device is a device owned by a user belonging to an access-permitted group, based on a group attribute certificate issued to a user identification device which is an individual identification device making up the access requesting device, and executing determination regarding whether or not access can be permitted, based on the screening.

Further, an arrangement of the access privilege management system according to the present invention is of a configuration wherein the access requesting device and the access requested device have security chips with anti-tampering configurations, with mutual authentication being executed between the mutual security chips, and wherein, under the condition that mutual authentication has been established, the access requested device executes signature verification of the group attribute certificate presented from the access requesting device, and screening regarding whether or not the device belongs to an access-permitted group.

Further, an arrangement of the access privilege management system according to the present invention is of a configuration wherein the access requested device receives from a device an issuing request for a group attribute certificate certifying that the device is an access-permitted group member; and, under the conditions that mutual authentication between devices has been established and that the group attribute certificate issue requesting device is following an issuance policy permitted by the access requested device, issues a group attribute certificate to a device corresponding to a device or a user, certifying that the device is an access-permitted group member.

Further, an arrangement of the access privilege management system according to the present invention is of a configuration wherein the access requested device receives from a device an issuing request for a group attribute certificate certifying that the device is an access-permitted group member; and, under the conditions that mutual authentication between devices has been established and that verification and screening is established for an already-issued group attribute certificate already held by the group attribute certificate issue requesting device, issues a group attribute certificate to a device corresponding to a device or a user, certifying that the device is an access-permitted group member.

Further, with an arrangement of the access privilege management system according to the present invention, the group attribute certificate is of a configuration storing link information regarding a public key certificate corresponding to the group attribute certificate; and the access requesting device is of a configuration wherein verification of the public key certificate obtained by the link information is also executed at the time of performing verification of the group attribute certificate.

Further, a seventh aspect of the present invention is a communication processing device for executing access restriction processing, comprising:
a reception unit for receiving, from an access requesting device, a group attribute certificate which has, as stored information, group identification information corresponding to a group which is a set of certain communication devices or certain users, and also has affixed an electronic signature of an issuer; and
an access privilege determination processing unit for executing group attribute certificate verification processing functions, for executing verification, by means of signature verification, of the group attribute certificate received from the access requesting device regarding whether or not there has been tampering, performing screening regarding whether or not the access requesting device is a device which belongs to an access-permitted group based on group identification information stored in the group attribute certificate, and executing determination regarding whether or not access can be permitted, based on the screening.

Further, with an arrangement of the communication processing device according to the present invention, the access privilege determination processing unit has a configuration for performing screening regarding whether or not the access requesting device is an end entity belonging to an access-permitted group, based on a group attribute certificate issued to the end entity which is an access executing device at the access requesting device, and executing determination regarding whether or not access can be permitted, based on the screening.

Further, with an arrangement of the communication processing device according to the present invention, the access privilege determination processing unit has a configuration for performing screening regarding whether or not the access requesting device is a device owned by a user belonging to an access-permitted group, based on a group attribute certificate issued to a user identification device which is an individual identification device making up the access requesting device, and executing determination regarding whether or not access can be permitted, based on the screening.

Further, an arrangement of the communication processing device according to the present invention comprises an encipherment processing unit for executing mutual authentication with the access requesting device; wherein the access privilege determination processing unit has a configuration for, under the condition that mutual authentication has been established, executing signature verification of the group attribute certificate presented from the access requesting device, and screening regarding whether or not the device belongs to an access-permitted group.

Further, an arrangement of the communication processing device according to the present invention further comprises an attribute certificate generating unit for generating a group attribute certificate which has, as stored information, group identification information corresponding to a group which is a set of certain communication devices or certain users, and also has affixed an electronic signature of an issuer.

Further, with an arrangement of the communication processing device according to the present invention, the group attribute certificate is of a configuration storing link information regarding a public key certificate corresponding to the group attribute certificate; and the access privilege determination processing unit is of a configuration wherein verification of the public key certificate obtained by the link information is also executed at the time of performing verification of the group attribute certificate.

Further, an eighth aspect of the present invention is an access privilege management method for executing access restrictions between communication devices having communication functions, the method comprising:
a step for an access requesting device to transmit to an access requested device, which is the object of an access request, a group attribute certificate which has, as stored information, group identification information corresponding to a group which is a set of certain communication devices or certain users, and also has affixed an electronic signature of an issuer;
a step for the access requested device to receive the group attribute certificate presented by the access requesting device;
a screening step for executing verification, by means of signature verification, of the group attribute certificate presented from the access requesting device regarding whether or not there has been tampering, and performing screening regarding whether or not the access requesting device is a device which belongs to an access-permitted group based on group identification information stored in the group attribute certificate;
and a step for executing determination regarding whether or not access can be permitted, based on the screening results in the screening step.

Further, with an arrangement of the access privilege management method according to the present invention, the access requested device performs screening regarding whether or not the access requesting device is an end entity belonging to an access-permitted group, based on a group attribute certificate issued to the end entity which is an access executing device at the access requesting device, and executing determination regarding whether or not access can be permitted, based on the screening.

Further, with an arrangement of the access privilege management method according to the present invention, the access requested device performs screening regarding whether or not the access requesting device is a device owned by a user belonging to an access-permitted group, based on a group attribute certificate issued to a user identification device which is an individual identification device at the access requesting device, and executing determination regarding whether or not access can be permitted, based on the screening.

Further, an arrangement of the access privilege management method according to the present invention further comprises a mutual authentication execution step between security chips with anti-tampering configurations of the access requesting device and the access requested device; wherein, under the condition that mutual authentication has been established, the access requested device executes signature verification of the group attribute certificate presented from the access requesting device, and screening regarding whether or not the device belongs to an access-permitted group.

Further, an arrangement of the access privilege management method according to the present invention further comprises a step for the access requested device to receive from a device an issuing request for a group attribute certificate certifying that the device is an access-permitted group member; and a step wherein, under the conditions that mutual authentication between devices has been established and that the group attribute certificate issue requesting device is following an issuance policy permitted by the access requested device, a group attribute certificate is issued to a device corresponding to a device or a user.

Further, an arrangement of the access privilege management method according to the present invention further comprises, as an execution step at the access requested device in response to an issuing request from a device for a group attribute certificate certifying that the device is an access-permitted group member, a step for executing processing for issuing a group attribute certificate to a device corresponding to a device or a user, certifying that the device is an access-permitted group member, under the conditions that mutual authentication between devices has been established and that verification and screening is established for an already-issued group attribute certificate already held by the group attribute certificate issue requesting device.

Further, with an arrangement of the access privilege management method according to the present invention, wherein the group attribute certificate is of a configuration storing link information regarding a public key certificate corresponding to the group attribute certificate; wherein the access requesting device is of a configuration wherein verification of the public key certificate obtained by the link information is also executed at the time of performing verification of the group attribute certificate.

Further, a ninth aspect of the present invention is a communication managing method for a communication processing device for executing access restriction processing, the method comprising:
a reception step for receiving, from an access requesting device, a group attribute certificate which has, as stored information, group identification information corresponding to a group which is a set of certain communication devices or certain users, and also has affixed an electronic signature of an issuer; and
an access privilege determination processing step for executing verification, by means of signature verification, of the group attribute certificate received from the access requesting device regarding whether or not there has been tampering, performing screening regarding whether or not the access requesting device is a device which belongs to an access-permitted group based on group identification information stored in the group attribute certificate; and
an access permissible/impermissible determination step for executing determination regarding whether or not access can be permitted, based on the access privilege determination processing results.

Further, with an arrangement of the communication managing method according to the present invention, the access privilege determination processing step includes a step performing screening regarding whether or not the access requesting device is an end entity belonging to an access-permitted group, based on a group attribute certificate issued to the end entity which is an access executing device at the access requesting device.

Further, with an arrangement of the communication managing method according to the present invention, the access privilege determination processing step includes a step for performing screening regarding whether or not the access requesting device is a device owned by a user belonging to an access-permitted group, based on a group attribute certificate issued to a user identification device which is an individual identification device making up the access requesting device.

Further, an arrangement of the communication managing method according to the present invention further comprises an authentication processing step for executing mutual authentication with the access requesting device; wherein, in the access privilege determination processing step, signature verification of the group attribute certificate presented from the access requesting device, and screening regarding whether or not the device belongs to an access-permitted group, are executed, under the condition that mutual authentication has been established.

Further, with an arrangement of the communication managing method according to the present invention, the group attribute certificate is of a configuration storing link information regarding a public key certificate corresponding to the group attribute certificate; and, in the access privilege determination processing step, verification of the public key certificate obtained by the link information is also executed at the time of performing verification of the group attribute certificate.

Further, a tenth aspect of the present invention is a computer program for effecting execution of a communication managing method for a communication processing device for executing access restriction processing, the program comprising:
a reception step for receiving, from an access requesting device, a group attribute certificate which has, as stored information, group identification information corresponding to a group which is a set of certain communication devices or certain users, and also has affixed an electronic signature of an issuer; and
an access privilege determination processing step for executing verification, by means of signature verification, of the group attribute certificate received from the access requesting device regarding whether or not there has been tampering, performing screening regarding whether or not the access requesting device is a device which belongs to an access-permitted group based on group identification information stored in the group attribute certificate; and
an access permissible/impermissible determination step for executing determination regarding whether or not access can be permitted, based on the access privilege determination processing results.

Further, an eleventh aspect of the present invention is a data processing system for executing data processing accompanied by data communication processing, between a plurality of devices capable of mutual communication, wherein, of the plurality of devices, a data processing requesting device, which requests data processing to the other device with which communication is being made, holds a group attribute certificate which has, as stored information, group identification information corresponding to a group which is a set of certain devices or certain users, and also has affixed an electronic signature of an issuer, and transmits the group attribute certificate to a data processing requested device at the time of data processing requesting processing;
and wherein the data processing requested device executes verification processing of the received group attribute certificate, determines whether or not the data processing requesting device has data processing requesting privileges based on the verification, and executes data processing based on determination of privileges.

Further, with an arrangement of the data processing system according to the present invention, the group attribute certificate stored in the data processing requesting device has as the issuer thereof the data processing requested device, and has affixed the electronic signature of the data processing requested device; wherein the data processing requested device is of a configuration for executing electronic signature verification processing applying a public key of itself, as verification processing of the received group attribute certificate.

Further, with an arrangement of the data processing system according to the present invention, all of the mutually communicable plurality of devices are devices which mutually request data processing of the other device with which communication is being made, with each of the devices having a configuration storing the group attribute certificate issued by the communication party device and transmitting the group attribute certificate stored in itself at the time of data processing requesting of the other device with which communication is being made, and under the condition of verification being established at the receiving device, processing corresponding to the data processing request is mutually executed.

Further, with an arrangement of the data processing system according to the present invention, all of the mutually communicable plurality of devices have security chips with anti-tampering configurations, with mutual authentication being executed between the mutual security chips at the time of data processing requesting of the other device with which communication is being made, and wherein, under the condition that mutual authentication has been established, the transmission of group attribute certificates between the devices, and verification of the transmitted group attribute certificates, is executed.

Further, with an arrangement of the data processing system according to the present invention, the group attribute certificate stored in the data processing requesting device has as the issuer thereof the data processing requested device; and issuing processing is performed under the condition that mutual authentication has been established between the data processing requesting device and the data processing requested device.

Further, with an arrangement of the data processing system according to the present invention, of the mutually communicable plurality of devices, at least one or more devices comprise, as a device configuration, an end entity for executing communication processing with other device and data processing, and a user identification device having individual identification functions capable of exchanging data with the end entity; and, in the event that the group attribute certificate is issued to members making up a certain user group, issuing processing is carried out under the condition that mutual authentication is established between the user identification device and a group attribute certificate issuing processing executing device.

Further, with an arrangement of the data processing system according to the present invention, of the mutually communicable plurality of devices, one is a maintenance executing device for executing maintenance processing for devices, and the other devices are service receiving device which receive the maintenance service from the maintenance executing device; wherein the service receiving device stores a service attribute certificate which is a group attribute certificate issued by the maintenance executing device; the maintenance executing device stores a control attribute certificate which is a group attribute certificate issued by the service receiving device; the service attribute certificate is applied for verification at the maintenance executing device that the service receiving device belongs to a group of devices or users having maintenance service receiving privileges; and the control attribute certificate is applied for verification at the service receiving device that the maintenance executing device belongs to a group of devices or users having maintenance service executing privileges.

Further, with an arrangement of the data processing system according to the present invention, a maintenance program executed at the service receiving device is transmitted to or stored in the service receiving device as an enciphered maintenance program; and the service receiving device is of a configuration for deciphering the enciphered maintenance program within a security chip having an anti-tampering configuration, and then executing on the service receiving device.

Further, with an arrangement of the data processing system according to the present invention, maintenance processing executed at the service receiving device is executed based on commands transmitted from the maintenance executing device to the service receiving device; and the service receiving device transmits a response to the maintenance executing device for the execution results of the commands, and the maintenance executing device executes transmission of new commands to the service receiving device based on the transmitted response.

Further, a twelfth aspect of the present invention is a data processing device for executing data processing based on data processing requests from a data processing requesting device, the data processing device comprising:
a data reception unit for receiving from the data processing requesting device a group attribute certificate which has, as stored information, group identification information corresponding to a group which is a set of certain devices or certain users and also has affixed an electronic signature of an issuer;
a privilege determining processing unit for executing verification processing of the received group attribute certificate, and determining whether or not the data processing requesting device has data processing requesting privileges based on the verification; and
a data processing unit for executing data processing based on determination of privileges.

Further, with an arrangement of the data processing device according to the present invention, the privilege determining processing unit is of a configuration for executing electronic signature verification processing applying a public key of itself, as verification processing of the received group attribute certificate.

Further, with an arrangement of the data processing device according to the present invention, the data processing device has a security chip with an anti-tampering configuration and comprising an enciphering processing unit; and the enciphering processing unit has a configuration wherein mutual authentication is executed with the data processing requesting device in response to a data processing request from the data processing requesting device; wherein the privilege determining processing unit is of a configuration for executing verification of the group attribute certificate, under the condition that mutual authentication has been established.

Further, with an arrangement of the data processing device according to the present invention, the data processing device is of a configuration comprising an attribute certificate generating processing unit having functions for generating a group attribute certificate which has, as stored information, group identification information corresponding to a group which is a set of certain devices or certain users, and also has affixed an electronic signature.

Further, a thirteenth aspect of the present invention is a data processing method for executing data processing accompanied by data communication processing, between a plurality of devices capable of mutual communication, wherein, of the plurality of devices, a data processing requesting device, which requests data processing to the other device with which communication is being made, executes a step for transmitting, to the other device with which communication is being made at the time of data processing requesting processing, a group attribute certificate which has, as stored information, group identification information corresponding to a group which is a set of certain devices or certain users, and also has affixed an electronic signature of an issuer;
wherein the data processing requested device executes:
a verification processing step for the received group attribute certificate;
a step for determining whether or not the data processing requesting device has data processing requesting privileges based on the verification; and
a step for executing data processing based on determination of privileges.

Further, with an arrangement of the data processing method according to the present invention, the group attribute certificate stored in the data processing requesting device has as the issuer thereof the data processing requested device, and has affixed the electronic signature of the data processing requested device; and, in the verification processing step at the data processing requested device, electronic signature verification processing applying a public key of itself is executed, as verification processing of the received group attribute certificate.

Further, with an arrangement of the data processing method according to the present invention, all of the mutually communicable plurality of devices are devices which mutually request data processing of the other device with which communication is being made, with each of the devices having a configuration storing the group attribute certificate issued by the communication party device and transmitting the group attribute certificate stored in itself at the time of data processing requesting of the other device with which communication is being made, and under the condition of verification being established at the receiving device, processing corresponding to the data processing request is mutually executed.

Further, with an arrangement of the data processing method according to the present invention, all of the mutually communicable plurality of devices have security chips with anti-tampering configurations, with mutual authentication being executed between the mutual security chips at the time of data processing requesting of the other device with which communication is being made, and wherein, under the condition that mutual authentication has been established, the transmission of group attribute certificates between the devices, and verification of the transmitted group attribute certificates, is executed.

Further, an arrangement of the data processing method according to the present invention further comprises an issuing processing step for the group attribute certificate stored in the data processing requesting device; the issuing processing step being executed under the condition that mutual authentication has been established between the data processing requesting device and the data processing requested device.

Further, an arrangement of the data processing method according to the present invention further comprises an issuing processing step for the group attribute certificate stored in the data processing requesting device; wherein, in the event that the group attribute certificate is issued to members making up a certain user group, the issuing processing step is executed under the condition that mutual authentication is established with a user identification device having individual identification functions making of the data processing requesting device.

Further, with an arrangement of the data processing method according to the present invention, of the mutually communicable plurality of devices, one is a maintenance executing device for executing maintenance processing for devices, and wherein the other devices are service receiving device which receive the maintenance service from the maintenance executing device, the method comprising: a step for the service receiving device to transmit to the maintenance executing device a service attribute certificate which is a group attribute certificate issued by the maintenance executing device; a service attribute certificate verification step for the maintenance executing device to execute verification of the received service attribute certificate; a step for the maintenance executing device to transmit to the service receiving device a control attribute certificate which is a group attribute certificate issued by the service receiving device; a control attribute certificate verification step for the service receiving device to execute verification of the control attribute certificate; and a maintenance processing step for executing maintenance processing under the condition that both verification of the service attribute certificate verification and the control attribute certificate verification have been established.

Further, with an arrangement of the data processing method according to the present invention, a maintenance program executed at the service receiving device is transmitted to or stored in the service receiving device as an enciphered maintenance program; and the service receiving device is of a configuration for deciphering the enciphered maintenance program within a security chip having an anti-tampering configuration, and then executing on the service receiving device.

Further, with an arrangement of the data processing method according to the present invention, maintenance processing executed at the service receiving device is executed based on commands transmitted from the maintenance executing device to the service receiving device; and the service receiving device transmits a response to the maintenance executing device for the execution results of the commands, and the maintenance executing device executes transmission of new commands to the service receiving device based on the transmitted response.

Further, a fourteenth aspect of the present invention is a data processing method for executing data processing based on data processing requests from a data processing requesting device, the method comprising:
a data reception step for receiving from the data processing requesting device a group attribute certificate which has, as stored information, group identification information corresponding to a group which is a set of certain devices or certain users and also has affixed an electronic signature of an issuer;
a privilege determining processing step for executing verification processing of the received group attribute certificate, and determining whether or not the data processing requesting device has data processing requesting privileges based on the verification; and
a data processing step for executing data processing based on determination of privileges.

Further, with an arrangement of the data processing method according to the present invention, the privilege determining processing step includes a step for executing electronic signature verification processing applying a public key of itself, as verification processing of the received group attribute certificate.

Further, an arrangement of the data processing method according to the present invention further comprises a step for executing mutual authentication with the data processing requesting device in response to a data processing request from the data processing requesting device; and the privilege determining processing step executes verification of the group attribute certificate, under the condition that mutual authentication has been established.

Further, a fifteenth aspect of the present invention is a computer program for effecting execution of data processing based on data processing requests from a data processing requesting device, the program comprising:
a data reception step for receiving from the data processing requesting device a group attribute certificate which has, as stored information, group identification information corresponding to a group which is a set of certain devices or certain users and also has affixed an electronic signature of an issuer;
a privilege determining processing step for executing verification processing of the received group attribute certificate, and determining whether or not the data processing requesting device has data processing requesting privileges based on the verification; and
a data processing step for executing data processing based on determination of privileges.

According to the configuration of the present invention, a group attribute certificate which has, as stored information, group identification information corresponding to a group which is a set of certain devices or certain users, and also has affixed an electronic signature of an issuer, is issued to a service reception entity, and verification is performed by means of signature verification for of the group attribute certificate presented from the user device regarding whether or not there has been tampering, screening is performed regarding whether or not this is a service-permitted group based on group identification information stored in the group attribute certificate, and determination is made regarding whether or not service can be provided, based on the screening; accordingly, centralized privilege confirmation corresponding to various user sets or device sets can be made, so management of individual privilege information can be omitted, thereby enabling effective privilege management.

Further, according to the configuration of the present invention, determining processing regarding whether or not service can be provided is enabled applying a group information database wherein a group identifier and permitted service information for members belonging to the group are correlated, thereby enabling detailed differentiation of setting privileges for each group.

Further, according to the configuration of the present invention, screening regarding whether or not the object of service permission is executed for each of a plurality of sets of different group identification information obtained from a plurality of group attribute certificates based on a plurality of different group definitions presented by the user device, and determining processing regarding whether or not service can be provided can be executed under the condition that all group identification sets are the object of service permission, thereby enabling various arrangements of privilege settings, such as providing services based on multiple conditions such as a group set corresponding to devices and a group set for users, and so forth.

Further, according to the configuration of the present invention, based on group identification information stored in a group attribute certificate which has, as stored information, group identification information corresponding to a group which is a set of certain communication devices or certain users, and also has affixed an electronic signature of an issuer, screening is performed regarding whether or not the access requesting device is a device which belongs to an access-permitted group, and determination regarding whether or not access can be permitted is made based on the screening, thereby permitting access only to an access requesting communication processing device group which are users or user devices which are a member of a group arbitrarily set by users having communication processing devices.

Further, according to the configuration of the present invention, screening is performed regarding whether or not the access requesting device is a device owned by a user belonging to an access-permitted group, based on a group attribute certificate issued to a user identification device which is an individual identification device making up the access requesting device, and determination is made regarding whether or not access can be permitted, based on the screening, so even in the event that the communication processing device has been changed, access is permitted in the screening based on the group attribute certificate issued to the user identification device which is the individual identification device, and cases wherein access is forbidden due to changing the communication processing device can be prevented.

Further, according to the configuration of the present invention, a data processing requesting device, which requests data processing to the other device with which communication is being made, transmits to a data processing requested device a group attribute certificate which has, as stored information, group identification information corresponding to a group which is a set of certain devices or certain users, and also has affixed an electronic signature of an issuer, verification processing of the received group attribute certificate is performed at the data processing requested device, determination is made regarding whether or not the data processing requesting device has data processing requesting privileges based on the verification, and data processing is performed based on determination of privileges, so cases wherein processing is executed by a wrong device or user is prevented, and proper data processing based on valid privileges is carried out.

Further, according to the configuration of the present invention, with an arrangement wherein a plurality of data processing devices request data processing of the other device with which communication is being made, thereby collaboratively executing data processing, each of the devices transmits the group attribute certificate stored in itself at the time of data processing requesting of the other device with which communication is being made, and under the condition of verification being established at the receiving device, processing corresponding to the data processing request is mutually executed, thereby enabling proper collaborative data processing accompanying communication between the plurality of data processing devices.

Further, according to the configuration of the present invention, a maintenance executing device and a maintenance service receiving device each store a control attribute certificate and a service attribute certificate, with the attribute certificates being exchanged at the time of executing maintenance service, and mutually verified and screened at each device, wherein maintenance processing is performed under the condition that verification has been established, so maintenance processing can be realized in a sure manner within the set privilege ranges of each.

Note that the computer program according to the present invention is program code which can be provided to computer systems capable of executing various types of computer code for example, in a computer-readable format by storage media or communication media, for example, storage media such as CDs, FDs, MOs, and the like, or communication media such as a network or the like. Providing such a program in a computer-readable format realizes processing corresponding to the program on the computer system.

Further objects, features, and advantages of the present invention will become apparent from detailed description based on the later-described embodiments of the present invention and the appended drawings. Note that the term "system" in the present specification means a logical group configuration of multiple devices, and is not restricted to the component devices being within a single housing.

### Brief Description of the Drawings

Fig. 1 is a diagram describing the public key infrastructure and privilege management infrastructure in a privilege management system.
Fig. 2 is a diagram illustrating the format of a public key certificate.
Fig. 3 is a diagram illustrating the format of a public key certificate.
Fig. 4 is a diagram illustrating the format of a public key certificate.
Fig. 5 is a diagram illustrating the format of an attribute certificate as a privilege information certificate.
Fig. 6 is a diagram illustrating a configuration example of an issuer, holder, verifier, and attribute information, of a group attribute certificate (group AC).
Fig. 7 is a diagram illustrating an issuing policy table of a group attribute certificate.
Fig. 8 is a diagram illustrating a trust model for describing the trust relation configuration of the entities participating in a privilege management system.
Fig. 9 is a diagram illustrating a configuration example of a security chip configured at an end entity (EE) and user identification device (UID) as user devices.
Fig. 10 is a diagram illustrating an example of stored data of the security chip of a user device.
Fig. 11 is a diagram describing a schematic flow of issuing application, issuing processing, and usage processing, of a group attribute certificate.
Fig. 12 is a diagram describing group information sharing processing between a service provider (SP) and an attribute authority (AA) or attribute registration authority (ARA).
Fig. 13 is a diagram illustrating a handshake protocol (TLS 1.0) which is one authentication method for the public key encryption method.
Fig. 14 is a diagram illustrating the generating configuration of MAC (Message Authentication Code).
Fig. 15 is a diagram illustrating an information configuration example of an issuing policy table and a group information database.
Fig. 16 is a diagram illustrating a processing sequence in the event that the security chip (SC) of the end entity (EE) which is a user device is the issue requesting entity for the group attribute certificate.
Fig. 17 is a flowchart describing the processing for generating an electronic signature.
Fig. 18 is a flowchart describing the processing for verifying an electronic signature.
Fig. 19 is a sequence diagram describing the procedures for issuing a group attribute certificate corresponding to a user security chip (USC) within a user identification device (UID).
Fig. 20 is a sequence diagram describing the processing up to starting service usage privilege configuration, using a group attribute certificate.
Fig. 21 is a diagram describing the relation between a public key certificate (PCK) and attribute certificate (AC).
Fig. 22 is a diagram illustrating the verification processing flow for an attribute certificate (AC).
Fig. 23 is a diagram illustrating the verification processing flow for a public key certificate (PKC).
Fig. 24 is a sequence diagram describing the processing up to starting services including service usage privilege confirmation, using a group attribute certificate.
Fig. 25 is a sequence diagram describing the screening processing for a group attribute certificate (Gp. AC).
Fig. 26 is a diagram describing the concept of a case wherein a user or user device belonging to multiple different groups is a condition for providing services.
Fig. 27 is a sequence diagram describing the processing up to providing service based on the group attribute certificate issued corresponding to the user security chip (USC) within the user identification device (UID).
Fig. 28 is a sequence diagram describing the processing up to providing service based on the group attribute certificate issued corresponding to the user security chip (USC) within the user identification device (UID).
Fig. 29 is a sequence diagram describing the processing for issuing a group attribute certificate between user devices, and storing the group attribute certificate.
Fig. 30 is a diagram describing the processing sequence for issuing a group attribute certificate having access permission information as an attribute.
Fig. 31 is a diagram describing an example of correlation between a group attribute certificate having access permission information as group information, and another group attribute certificate.
Fig. 32 is a diagram describing a processing sequence for an access requested user device to commission attribute certificate issuing processing to another user device instead of executing the attribute certificate issuing processing itself.
Fig. 33 is a diagram describing a service usage sequence accompanying access permissible/impermissible determination processing using a group attribute certificate defining access permission information as group information.
Fig. 34 is a diagram illustrating an example of a group attribute certificate used for services.
Fig. 35 is a sequence diagram describing the processing for issuing a second group attribute certificate B including content usage permission information as group information, based on a first group attribute certificate A.
Fig. 36 is a sequence diagram describing processing for presenting the second group attribute certificate B to a service provider, confirming content usage privileges, and receiving provision of services, i.e., content distribution services.
Fig. 37 is a diagram describing examples of attribute certificates to be applied to processing wherein multiple different attribute certificates are applied to conform the content usage privilege of a user or user device, and provide services.
Fig. 38 is a flowchart describing content usage privilege confirmation applying different group attribute certificates, and service providing processing.
Fig. 39 is a diagram illustrating a combination table data configuration example of group attribute certificates set as service providing conditions.
Fig. 40 is a diagram describing usage privilege confirmation processing applying multiple group attribute certificates.
Fig. 41 is a diagram illustrating an example of a group attribute certificate to be applied in medical processing.
Fig. 42 is a diagram describing an attribute certificate stored in various devices in a remote control system which performs medical processing.
Fig. 43 is a diagram describing a processing sequence for performing usage privilege confirmation processing of a medical diagnosis program execution service, applying a group attribute certificate stored in a user identification device, and starting the service.
Fig. 44 is a diagram describing a processing sequence for performing usage privilege confirmation processing of a diagnosis data handling processing service for the execution results of a medical diagnosis program, applying a group attribute certificate, and starting the service.
Fig. 45 is a diagram illustrating a group attribute certificate to be applied to remote maintenance processing.
Fig. 46 is a diagram describing an attribute certificate stored in each device in a system which performs maintenance services.
Fig. 47 is a diagram describing a usage arrangement of a service attribute certificate and a control attribute certificate at the time of executing service.
Fig. 48 is a sequence diagram describing service processing such as maintenance or the like, applying the service attribute certificate stored in a home appliance (EE) and a control attribute certificate stored in the service provider.
Fig. 49 is a diagram describing screening processing of the service attribute certificate.
Fig. 50 is a diagram describing a service based on a control attribute certificate, e.g., a sequence for executing maintenance processing for a home appliance, for example.
Fig. 51 is a diagram describing an example of processing for transmitting a maintenance execution program from a manufacturer side device (SP) to a user side home appliance (EE).
Fig. 52 is a diagram describing an example of processing for consecutively transmitting commands from a maintenance execution program from a manufacturer side device (SP) to a user side home appliance (EE), receiving responses based on execution of the commands from the home appliance (EE), and responding to the responses.
Fig. 53 is a diagram describing an example of processing for providing a service attribute certificate and control attribute certificate to the manufacturer side (SP) at the time of requesting providing of a service.
Fig. 54 is a diagram describing an example of a group attribute certificate applied in a communication service.
Fig. 55 is a diagram describing an storage configuration example of a group attribute certificate applied in a communication service.
Fig. 56 is a diagram describing a processing sequence for performing usage privilege confirmation processing of a chat room participation service applying a group attribute certificate, and starting the service.
Fig. 57 is a diagram describing a processing sequence for performing access privilege confirmation processing applying a group attribute certificate, and starting communication.
Fig. 58 is a diagram describing the overview of an execution attribute certificate.
Fig. 59 is a flowchart describing the overview of usage procedures for an execution attribute certificate.
Fig. 60 is a diagram describing the issuing sequence for an execution attribute certificate.
Fig. 61 is a diagram describing the issuing sequence for an execution attribute certificate.
Fig. 62 is a diagram illustrating a configuration example of an execution AC table.
Fig. 63 is a diagram describing the processing for generating a registration key generating execution AC at a security module (SM).
Fig. 64 is a diagram describing the processing for generating a registration key, based on the registration key generating execution AC executed at a security chip.
Fig. 65 is a diagram describing the processing for generating a service providing execution AC at a security module (SM).
Fig. 66 is a diagram showing an application sequence of a service providing execution AC at the user device side.
Fig. 67 is a diagram describing the processing details in service providing processing at a security chip (SC).
Fig. 68 is a diagram describing security chip (SC) registration key destruction processing.
Fig. 69 is a diagram describing reset processing which is destruction processing of a registration key based on a reset request.
Fig. 70 is a diagram describing execution attribute certificate reset (destruction) processing, wherein an execution attribute certificate is destroyed under acknowledgement of a service provider (SP), and the service provider is notified that the destruction was carried out without fail.
Fig. 71 is a diagram describing execution attribute certificate reset (destruction) processing, wherein an execution attribute certificate is destroyed under acknowledgement of a service provider (SP), and the service provider is notified that the destruction was carried out without fail.
Fig. 72 is a diagram describing the details of reset confirmation results generating processing.
Fig. 73 is a diagram describing registration key destruction processing based on an execution AC.
Fig. 74 is a diagram describing processing for applying services, applying a service providing execution attribute certificate, with restrictions on the number of times, at a user device.
Fig. 75 is a diagram describing processing for applying services, applying a service providing execution attribute certificate, with restrictions on the number of times, at a user device.
Fig. 76 is a diagram describing processing at a security chip (SC) in the event that the number of usage times following updating ≥ 1.
Fig. 77 is a diagram describing processing at a security chip (SC) in the event that the number of usage times following updating = 0.
Fig. 78 is a diagram describing processing for applying a service providing execution attribute certificate with transfer functions.
Fig. 79 is a diagram describing processing details following deciphering processing of the service providing execution attribute certificate with transfer functions.
Fig. 80 is a diagram describing processing details following deciphering processing of the service providing execution attribute certificate with transfer functions.
Fig. 81 is a diagram describing enciphered data deciphering processing, applying a service providing execution attribute certificate with transfer functions.
Fig. 82 is a diagram describing the overview of a screening proxy execution attribute certificate.
Fig. 83 is a diagram describing processing applying a screening proxy execution attribute certificate.
Fig. 84 is a diagram describing processing for generating and issuing a screening proxy group attribute certificate.
Fig. 85 is a diagram describing processing for inputting a screening proxy execution attribute certificate and generating a screening proxy group attribute certificate.
Fig. 86 is a diagram describing the overview of an allograph execution attribute certificate.
Fig. 87 is a diagram describing processing applying an allograph execution attribute certificate.
Fig. 88 is a diagram describing processing executed at the time of a presentation request for an allograph group attribute certificate from a verifier such as a service provider (SP) or the like.
Fig. 89 is a diagram illustrating a configuration example of an information processing device of the entities such as a user device, service provider, and so forth.

### Best Mode for Carrying Out the Invention

The following is a detailed description of the present invention with reference to the drawings. Note that the description will proceed in order of the items described below.
(1) Privilege management system configuration overview
(2) User device configuration
(3) Group attribute certificate issuing and usage processing
   (3-1) Preparation processing before issuing group attribute certificate
   (3-2) Group attribute certificate issuing processing
   (3-3) Group attribute certificate usage processing
(4) Issuing and usage processing of group attribute certificates between user devices
(5) Specific usage examples of group attribute certificate
   (5-1) Content distribution service
   (5-2) Remote control service
   (5-3) Remote maintenance service
   (5-4) Personal communication service
(6) Execution attribute certificate (execution AC)
   (6-1) Execution attribute certificate overview
   (6-2) Execution attribute certificate issuing processing
   (6-3) Execution attribute certificate application processing
   (6-4) Registration key resetting processing
   (6-5) Execution attribute certificate reset (destruction) processing
(7) Specific usage processing of execution attribute certificate
   (7-1) Service providing execution attribute certificate with restrictions on the number of times
   (7-2) Service providing execution attribute certificate with transfer function
   (7-3) Proxy execution attribute certificate
(8) Configuration of entities

### [(1) Privilege management system configuration overview]

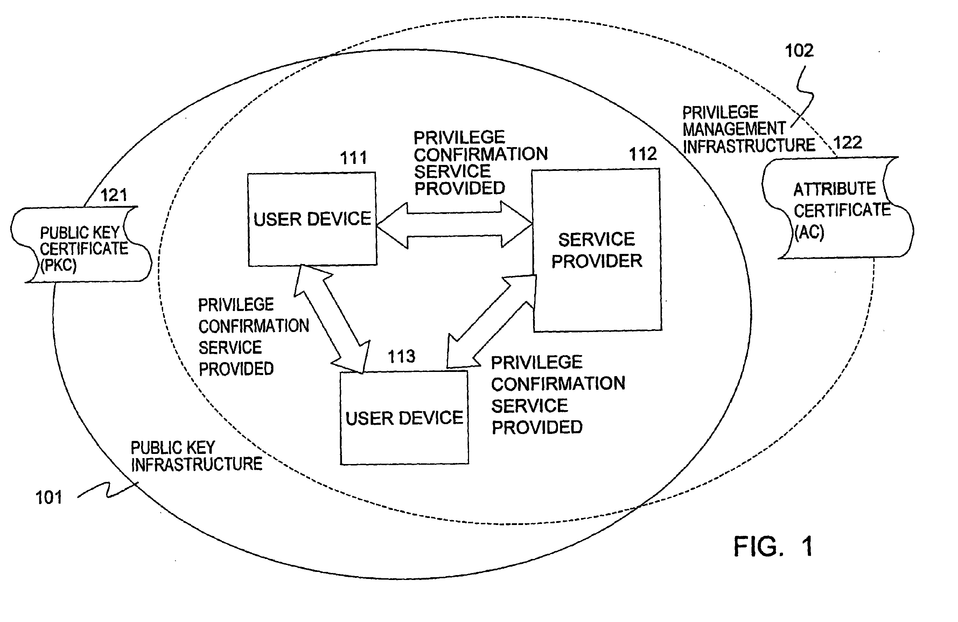

As shown in Fig. 1, the privilege management system according to the present invention has as the basic infrastructure a public key infrastructure (PKI) 101 based on public key certificates (PKC) 121, and a privilege management infrastructure (PMI) 102 based on attribute certificates (AC) 122, and has a configuration wherein privilege confirmation processing is executed between user devices 111 and 113 which have an anti-tampering security chip (or security module) and a service-provider-side service provider device 112, or between the mutual user devices 111 and 113, and service providing processing is executed based on privilege confirmation.

The user devices 111 and 113 are terminals of a user which receive various types of content providing services such as music, images, programs, etc., from a service provider 112, as well as other information usage services and payment services and the like, for example, and specifically, the user devices 111 and 113 are PCs, game terminals, reproducing devices for DVDs or CDs or the like, portable communication terminals PDAs, memory cards, or the like.

Also, the user devices 111 and 113 are terminals capable of mutual communication processing between the user devices, and execute processing regarding whether or not access can be made to the user devices based on privilege confirmation. A user device is provided with a security chip having an anti-tampering configuration. The details of user devices will be described later.

The service provider 112 is a service provider which performs providing of various services to the user devices 111 and 113 having the security chips, such as contents providing, payment processing, and so forth. While Fig. 1 only shows two user devices and one service provider, there are a great number of user devices and service providers under the infrastructures of the public key infrastructure (PKI) 101 and the privilege management infrastructure (PMI) 102, with each executing service providing based on privilege confirmation. Note that service is not only provided from service providers to user devices, but also services are provided mutually between user devices.

### (Public Key Certificate: PKC)

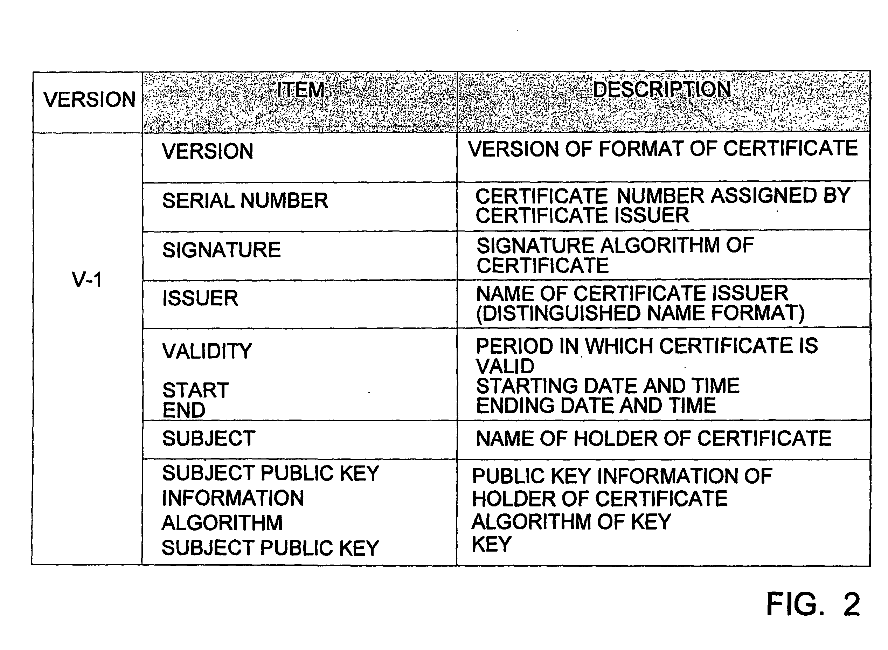

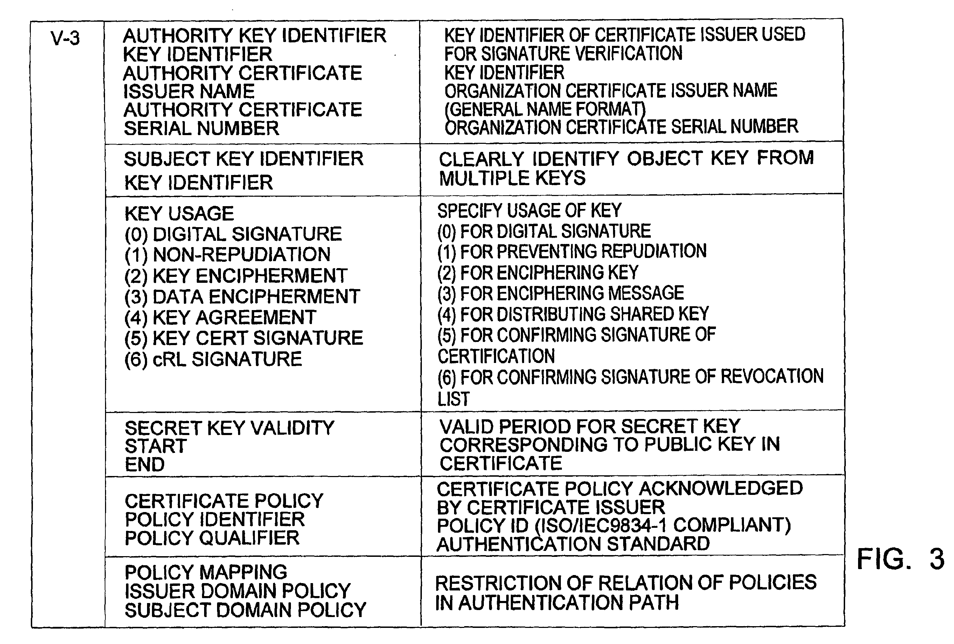

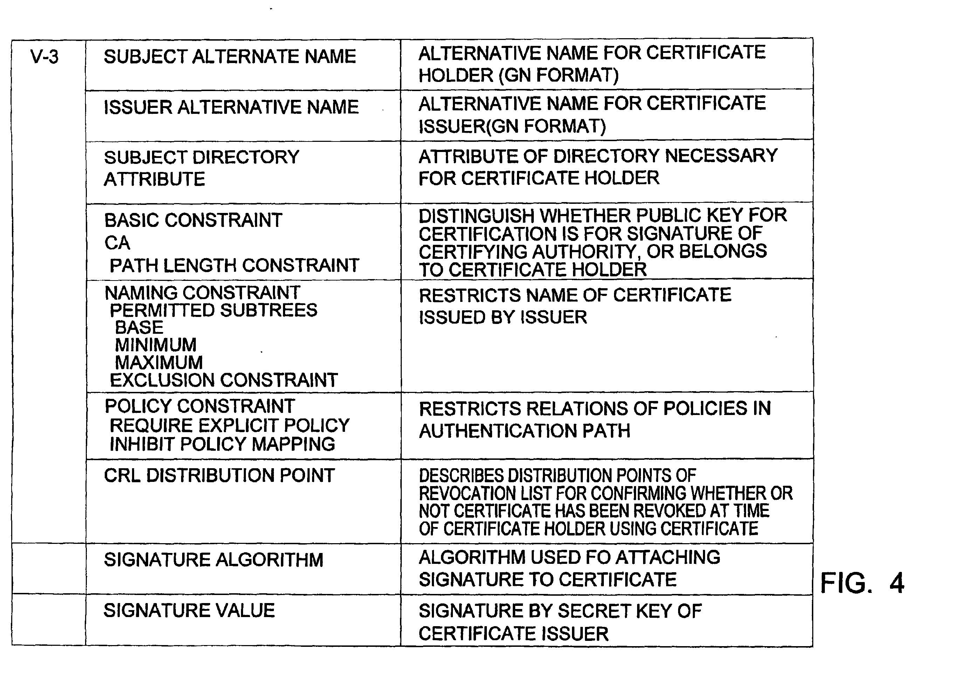

Next, the public key infrastructure will be described. The public key infrastructure (PKI) 101 is an infrastructure enabling execution of authentication processing between communicating entities, encipherment processing of transfer data, etc., applying public key certificates (PKC). Description will be made regarding public key certificates (PKC) with reference to Fig. 2, Fig. 3, and Fig. 4. A public key certificates is a certificate issued by a certification authority (CA), and is a certificate created by a user or entity presenting own ID, public key, etc., to the certification authority, and the certification authority side adding the ID of the certification authority, the period of validity, etc, and further attaching a signature of the certification authority.

Now, it has become commonplace to provide a registration authority (RA) as an agent for the certification authority (CA), with a configuration wherein public key certificate (PKC) issuing applications are accepted, applicants are screened, and management is performed, at the registration authority (RA).

Fig. 2 through Fig. 4 show an example of a public key certificate format. This is an example compliant with public key certificate format ITU-T X.509.

Version indicates the version of the certificate format.

Serial Number is the serial number of the public key certificate set by the certification authority (CA) of the public key certificate.

Signature is a signature algorithm of the certificate. Note that there are elliptic curve encryption and RSA for signature algorithms, and in the event that elliptic curve encryption is applied, parameter and key length are recorded, and in the event that RSA is applied, key length is recorded.

Issuer is a field where the name of the issuer of the public key certificate, i.e., the name of the public key certificate issuing authority (IA) is recorded in an identifiable format (Distinguished Name).

Validity records the date and time of starting and the date and time of ending, as the valid period of the certificate.

Subject Public Key Information stores the algorithm of the key and the key as public key information of the certificate holder.

Authority Key Identifier (Key Identifier, Authority Cert Issuer, Authority Cert Serial Number) is information for identifying the key of the certificate issuer used for signature verification, and stores the key identifier, name of the authority certificate issuer, and authority certificate serial number.

Subject Key Identifier stores identifiers for identifying the keys in the event of authenticating multiple keys in a public key certificate.

Key Usage is a field for specifying the purpose of use of the key, with the following usage purposes being specified: (0) for digital signature, (1) for denial prevention, (2) for key encryption, (3) for message encipherment, (4) for sending shared key, (g) for signature confirmation in authentication, and (6) for signature confirmation in revocation list.

Private Key Usage Period records the valid period of the secret key corresponding to the public key stored in the certificate.

Certificate Policy records the certificate issuing policies of the public key certificate issuer. An example is policy ID and authentication standards compliant to ISO/IEC 9384-1.

Policy Mapping is a field for storing information relating to restrictions relating to policies in the authentication path, and is necessary only for the certification authority (CA) certificate.

Subject Alt Name is a field for recording an alternative name for a certificate holder.

Issuer Alt Name is a field for recording an alternative name for the certificate issuer.

Subject Directory Attribute is a field for recording attributes of a directory necessary for the certificate holder.

Basic Constraint is a field for distinguishing whether the public key to be proved is for a certification authority (CA) signature or the certificate holder.

Permitted Subtree Constraint Name (Name Constraints Permitted Subtrees) is a field storing restriction information of the name of the certificate issued by the issuer.

Constraint Policy (Policy Constraints) is a field for storing restriction information relating to policies in the authentication path.

CRL Reference Point (Certificate Revocation List Distribution Points) is a field for describing reference points of a revocation list, for confirming whether or not the certificate is invalid, at the time of the certificate holder using the certificate.

Signature Algorithm is a field storing an algorithm used for signing a certificate.

Signature is a signature field of the public key certificate issuer. An electronic signature is data generated by generating a hash value applying a hash function to the entire certificate, and using the secret key of the issuer with regard to the hash value. While removing the signature and hash will enable tampering, if this can be detected, the effects are essentially the same as being tamper-proof.

The certification authority issues the public key certificate shown in Fig. 2 through Fig. 4, updates public key certificates of which the valid period has expired, and creates, manages, and distributes a revocation list for rejecting users which have engaged in unauthorized activities. Also, public keys and secret keys are generated as necessary.

On the other hand, at the time of using the public key certificate, the user uses the public key of the certification authority which the user himself/herself holds, to verity the electronic signature of the public key certificate, extracts the public key from the public key certificate following successfully verifying the electronic signature, and uses the public key. Accordingly, all users using the public key certificate need to hold a common certification authority public key.

### (Attribute Certificate)

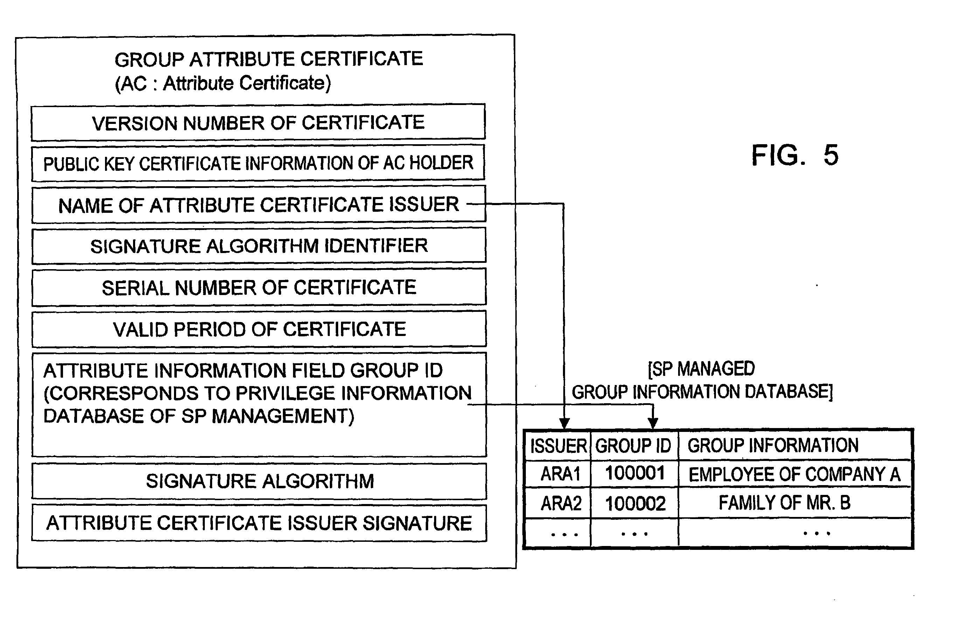

The Privilege Management Infrastructure (PMI) 102 is an infrastructure which enables execution of privilege confirmation processing applying the attribute certificate (AC) 122. A group attribute certificate (group AC), which is a form of an attribute certificate, will be described with reference to Fig. 5 through Fig. 7. The functions of an attribute certificate are confirmation functions of service usage privileges, with privilege-related information such as usage privileges of contents and services of a service provider for example, and attribute information of the holder relating to privileges, are described in the attribute certificate.

An attribute certificate is a certificate basically issued by an attribute authority (AA), which stores attribute information with regard to certificate issuance, created by the attribute authority side attaching information such as ID and valid period and the like, and further attaching a signature with the secret key of the attribute authority. Note, however, that in the following description, group attribute certificates and execution attribute certificates are not necessarily restricted to an attribute authority (AA) as the issuing authority thereof, and that issuing processing can be made at a service provider or user device.

Providing an attribute registration authority (ARA) as an agent for the attribute authority (AA) and performing attribute certificate (AC) issuing application reception, screening of applicants, and management, allows the processing load to be dispersed.

The group attribute certificate (group AC) applied in the configuration of the present invention is an attribute certificate wherein multiple objects, such as multiple users or multiple user devices are set as one group as a set with the same attributes, and is issued to the devices or users making up the group with the set group as a unit. A group attribute certificate holds a stored information group identification information set corresponding to the group made up of certain devices or certain users, and also has the electronic signature of the issuer attached thereto.

This is issued to users or user devices having an attribute of a company, organization, school, or the like, to which multiple people belong, or belonging to a group such as a family. Or, this is issued to members (users, user devices) of a group which is a unit of multiple users which receive services provided by a single service provider. Various settings can be made regarding groups, and specific examples will be described later.

Now, an execution attribute certificate which will be described later on holds as stored data encipherment execution commands including data processing commands subjected to encipherment processing, and address (Ad) information indicating the storage region in the user device memory for the registration key applied for decipherment processing of the enciphered execution commands. Details of the execution attribute certificate will be described later.

The basic format of the attribute certificate is stipulated by ITU-T X.509, and a profile is established with IETF PKIX WG. Unlike a public key certificate, this does not include the public key of the holder. However, the signature of the attribute certificate authority is attached, and accordingly is the same as the public key certificate in that determination regarding whether or not there has been tampering can be made by verifying this signature.

Also note that the group attribute certificate or execution attribute certificate applied in the present invention can be configured compliant to the basic format of the attribute certificate. However, following the format stipulated by ITU-T X.509 is not indispensable, and an original format may be used to configure the attribute certificate.

With the configuration of the present invention, the functions of the attribute certificate authority (AA) which issues and manages attribute certificates (AC), and of the attribute registration authority (ARA), can be handled by the service provider or user device. Of course, the service provider or user device itself can be configured to function as an attribute certificate authority (AA) or attribute registration authority (ARA).

An attribute certificate is basically used in connection with a public key certificate. That is to say, whether the attribute certificate holder is the real person or not is confirmed with the public key certificate, and further, what sort of privileges are provided to the holder is confirmed. For example, at the time of a service provider providing services to a user or a user device, whether the user or user device has the privilege to receive the service is confirmed by verifying the attribute certificate. At the time of verification of the attribute certificate, following signature verification of the certificate, verification of the public key certificate correlated with the attribute certificate is also performed.

At this time, as a rule, the certificate chain is preferably tracked to the highest order public key certificate and verified in order. With an certification authority configuration wherein multiple certification authorities (CA) exist in a hierarchical arrangement, a public key certificate of a lower-order certification authority itself is signed by a higher order certification authority issuing the public key certificate. That is to say, there is a chain public key certificate issuing configuration wherein a higher-level certification authority (CA-High) issues public key certificates to a lower certification authority (CA-Low). Chain verification of public key certificates means tracking the certificate chain from bottom to top so as to obtain the chain information up to the highest-order public key certificate, thereby performing signature verification of public key certificates up to the highest order (root CA).

Not performing revocation processing can be realized by making the valid period of the attribute certificate to be short. In this case, revocation procedures of the certificate and reference procedures of revocation information and the like can be omitted, which is advantageous in that the system is simplified. However, some sort of measures must be taken regarding unauthorized use of certificates, so sufficient caution is necessary.

The configuration of the group attribute certificate will be described with reference to Fig. 5.

The version number of the certificate indicates the version of the certificate format.

Public Key Certificate Information of AC Holder is information regarding the public key certificate (PKC) of the issuer of the attribute certificate (AC), and is information of the PKC issuer name, PKC serial number, PKC issuer unique ID, and so forth, having functions as link data for correlating with a corresponding public key certificate.

Name of Attribute Certificate Issuer is a field where the name of the issuer of the attribute certificate, i.e., the attribute authority (AA) is recorded in an identifiable format (Distinguished Name).

Signature Algorithm Identifier is a field for recording the signature algorithm identifier of the attribute certificate.

Valid Period of Certificate records starting date and time, and ending date and time, which is the valid period of the certificate.

The Attribute Information field stores a group ID as the group identification information for identifying the group of the group attribute certificate. The group ID is an identifier (ID) corresponding to the entry of the service provider (SP) managed group information database (see lower right space in Fig. 5) possessed by a service provider performing privilege confirmation using this group attribute certificate.

The service provider (SP) managed group information database which the service provider has is a table correlating, for example, the issuer of the group attribute certificate (ARA) and the group identification information as a group identifier (group ID), and group information such as "employee of company A" and "family member of Mr. B", as shown the lower right space in Fig. 5. The service provider extracts corresponding entries from the table based on the group identification information (group ID) as certificate-stored data in the privilege confirmation processing based on the group certificate, and obtains the group attribute certificate information including the group information.

Note that various types of information can be stored in the attribute information field other than group identification information (group ID), for example, content usage restriction information such as content usage restrictions and the like, detailed information relating to privilege such as service usage restriction information and the like, and further, various types of information such as service provider identifier (ID), service provider name, and so forth. While details will be described later, this may be also applied as a field for storing information necessary for obtaining a content key to be used for deciphering enciphered contents.

The service provider sends the group attribute certificate to the user device, and following verification of the attribute certificate, the user device stores this in memory of the security chip within itself.

The attribute certificate further stores a signature algorithm, with a signature made by an attribute certificate issuer, such as an attribute authority (AA), for example. In the event that the issuer is a service provider or a user device, signatures of each issuer are attached. An electronic signature is data generated by generating a hash value applying a hash function to the entire attribute certificate, and using the secret key of the issuer of the attribute certificate with regard to the hash value.

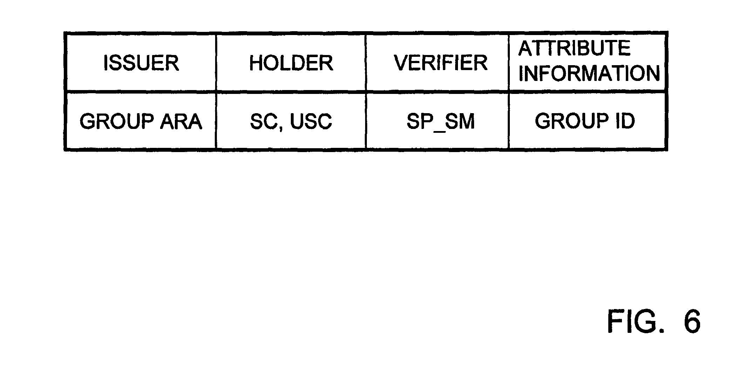

Fig. 6 shows a configuration example of the issuer, holder, verifier, and attribute information, of a group attribute certificate (group AC). In the event that a group attribute certificate is issued to each of multiple user device groups belonging to users in one company or one family for example, the issued group attribute certificate is stored in the security chip (SC) or user security chip (USC) within the device owned by the user. Details of user devices will be described later.

A verifier which executes privilege confirmation based on the group attribute certificate issued to the user device is a security module (SM) within a service provider device for example, which is a service providing entity, or a security chip (SC) within a user device. Note that the security chip within the user device or the security module in the service provider device preferably has an anti-tampering configuration wherein external read-out of data is restricted.

A group attribute certificate has, as attribute information, group identification information (group ID) serving as identification information, capable of identifying, for example, the one company or the one family.

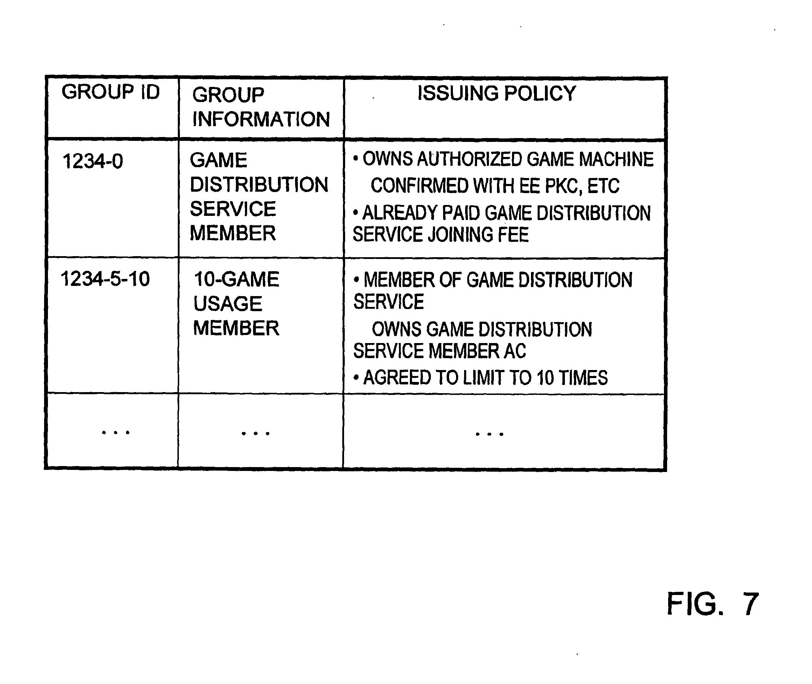

Fig. 7 illustrates a configuration example of an issuing policy table of the group attribute certificate. The group attribute certificate issuing policy table is a table managed by an entity issuing the group attribute certificate, such as an attribute certificate authority (AA), an attribute registration authority (ARA) serving as an agent for the attribute certificate authority (AA), or a service provider or user device, and is a table wherein the group identification information (group ID) of the issued group attribute certificate, group information, and issuing policy such as issuing standard and the like, are correlated. For example, screening is executed based on the issuing policy table of the group attribute certificate at the time of newly issuing, additionally issuing, or updating group attribute certificates, and procedures such as issuing and updating are carried out as long as the policies are satisfied.

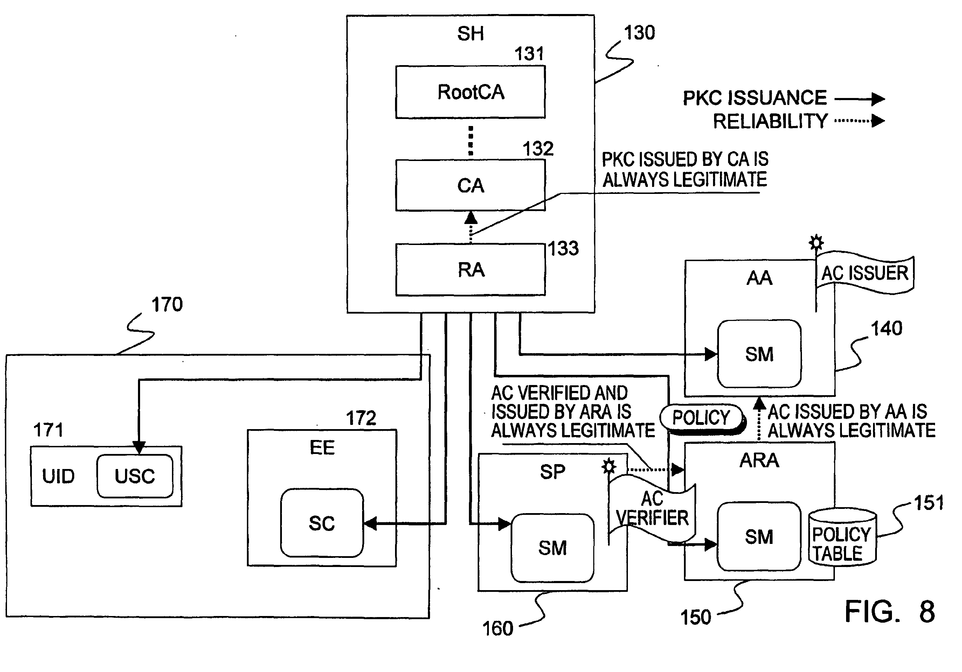

Fig. 8 illustrates a trust model describing the trust relation configuration of the entities participating on the privilege management system.

The system holder (SH) 130 is the entity carrying out the centralized administration of the entire privilege management system according to the present invention, i.e., the system operating entity, and ensures the legitimacy of the security chips (SC) and security modules (SM) of the entities participating in the system, and is responsible of issuing public key certificates (PKC). The system holder (SH) 130 comprises a root CA 131 as the highest-order certification authority, multiple certification authorities (CA) 132 in a hierarchical configuration, and a registration authority (RA) 133 serving as a public key certificate issuing agent.

The system holder (SH) 130 issues public key certificates (PKC) to the entities, which are the attribute authority (AA) 140, attribute registration authority (ARA) 150, service provider 160, and user identification device (UID) 171 and end entity (EE) 172 serving as a user device 170, with each entity storing the public key certificate (PKC) in an external storage device a built-in anti-tampering configuration security chip (SC) or security module (SM), in some cases.

Also, the group attribute certificate (group AC) receives attribute certificate issuing requests from the service provider 160, the user identification device (UID) 171 and end entity (EE) 172 serving as a user device 170, and so forth, at the attribute registration authority (ARA) 150, performs attribute certificate issuing screening following the policy (issuing conditions, etc.) of the policy table 151 described with reference to Fig. 7 earlier, and in the event that determination is made that issuing is permissible, transfers an issuing commission from the attribute registration authority (ARA) 150 to the attribute authority (AA) 140.

The attribute authority (AA) 140 stores the group identification information (group ID) as attribute information based on the group attribute certificate issuing commission, and issues a group attribute certificate (see Fig. 5) with a signature attached with the secret key of the attribute authority (AA) 140, to the issuing requester.

As described above, the attribute authority (AA) 140 and the attribute registration authority (ARA) 150 can be configured so that the service provider or user device carry out the functions thereof.

### [(2) User device configuration]

Next, the configuration of a user device serving as an information processing device for using services will be described. User devices are divided into two categories, based on the functions thereof. One is an end entity (EE) serving as a device which actually uses services, examples of which are various types of data processing devices such as PCs, home servers, PDAs and other like portable terminals, IC cards and so forth, having an interface for receiving service information provided by the service provider. These devices have a security chip (SC) or module (SM) with an anti-tampering configuration, storing a public key certificate corresponding to the device, and a group attribute certificate corresponding to the device, as necessary.

The other is a user identification device (UID) applied to individual authentication processing. The user identification device (UID) is also configured of a similar devices as the end entity, but is a device which does not necessarily have an interface for directly receiving service information provided by the service provider. Communication with the service provided devices is carried out via the end entity (EE). The user identification device (UID) is a device applied to user authentication. These devices have security chips (SC) or secret modules (SM) with anti-tampering configurations, storing public key certificates corresponding to the device, and group attribute certificates corresponding to the device, as necessary.

Note that while the end entity (EE) and the user identification device (UID) can be configured as individual devices, a configuration may also be made wherein the functions of both are provided to a single device.

As for a specific configuration example, there is a configuration wherein a device such as an IC card for example makes up the user identification device (UID), and a PC the end entity (EE). With this configuration, the IC card is set in the PC in a state wherein data transfer can be made, first, communication is made between the IC card and the service provider via the PC to execute user authentication and user privilege confirmation processing applying the public key certificate and the group attribute certificate, and following this processing, processing can be further executed for authentication and privilege confirmation between the PC service as an end entity and the service provider. Details of the privilege confirmation processing will be described later.

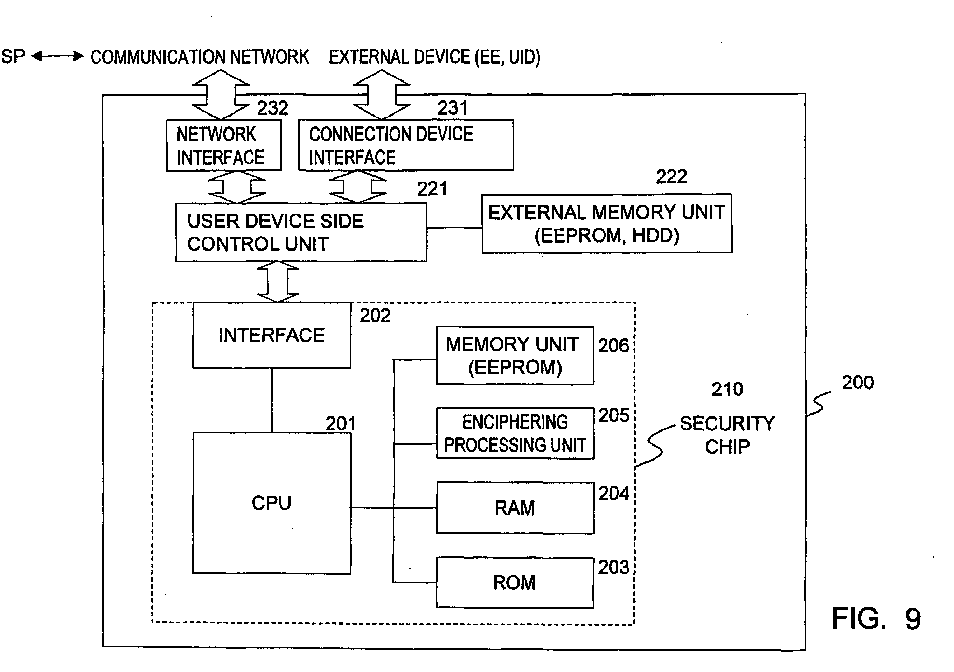

Description of an example of the configuration of the security chip included in the end entity (EE) and user identification device (UID) serving as a user device will be descried with reference to Fig. 9. Note that the end entity (EE) is configured of a CPU serving as data processing means, a PC, game terminal, portable terminal, PDA, IC card (memory card), playback or recording/playback device for DVDs or CDs or the like, having communication functions etc., and has a security chip (SC) with an anti-tampering configuration.

As shown in Fig. 9, the user device 200 made up of the end entity (EE) or user identification device (UID) has a security chip 210 built in so as to be capable of mutually transferring data to a user device control unit 221.

The security chip 210 comprises a CPU (Central Processing Unit) 201 having program execution functions and computation processing functions, and also has a communication interface 202 with data communication interface functions, ROM (Read Only Memory) 203 storing various types of programs to be executed by the CPU 201, such as encipherment programs, RAM (Random Access Memory) 204 functioning as loading area of the execution program, work area of processing the programs, an encipherment processing unit 205 for executing authentication processing with external devices, generating electronic signatures, verification processing, and encipherment processing including encipherment and decipherment of stored data, and a memory unit 206 configured of, for example, EEPROM (Electrically Erasable Programmable ROM), storing information for each service provider, and information unique to the device, including various types of key data.

The user device 200 comprises an external memory unit 222 configured of EEPROM or a hard disk or the like, serving as a storage region for storing enciphered contents or service information of the like. The external memory unit 222 can also be used as a storage region for the public key certificate and group attribute certificate.

In the event of a user device having a security chip connecting to an external entity such as a service provider for example, and executing data transfer processing, connection with the service provider is executed via a network interface 232. However, as described above, it is the end entity (EE) which has the interface for executing connection with the service provider, and the user identification device (UID) does not necessarily have the network interface 232; accordingly, connection is made to the connecting device interface 231 of the end entity (EE) via the connecting device interface 231 of the user identification device (UID), and communication via the network interface 232 of the end entity is executed.

That is to say, the user identification device (UID) executes communication with the service provider device via the end entity.

In the event of transferring data between the security chip 210 of the user device such as the end entity (EE) and user identification device (UID), and the service provider, mutual authentication is preformed between the security chip 210 and the external entity, and also the transferred data is enciphered, as necessary. Details of such processing will be described later.

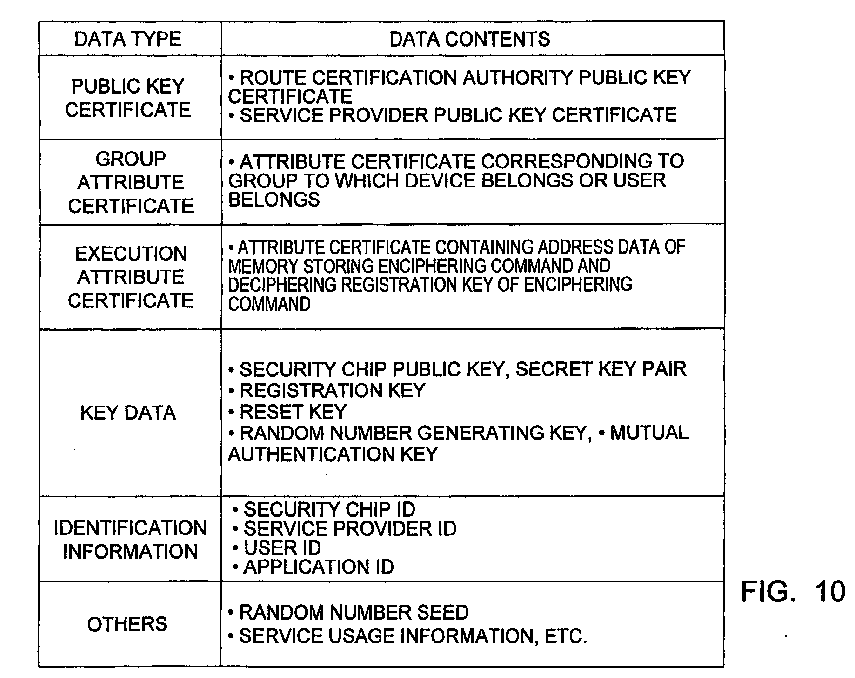

Fig. 10 shows an example of stored data in the security chip of the user device. Much of this is stored in the memory unit 206 configured of EEPROM (Electrically Erasable Programmable ROM), such as flash memory which is a type of non-volatile memory, but the public key certificate, group attribute certificate, and later-described execution attribute certificate, may be stored in the memory within the security chip or in external memory.

The various types of data will be described.

Public key certificate (PKC): A public key certificate is a certificate indicating to a third party that the public key is authentic, and the certificate includes the public key to be distributed, and an electronic signature of a reliable certification authority is affixed thereto. The user device stores public key certificates necessary for obtaining public keys to be applied to authentication, encipherment, decipherment processing, etc., at the time of executing data communication with user devices, such as a public key certificate of the highest-order certification authority (root CA) having the hierarchical configuration described above, a public key certificate of a service provider which is to provide service to the user device, and so forth.

Group attribute certificate (AC): While the public key certificate identifies the real; person of the certificate user (holder), the group attribute certificate is for identifying the group of certificate users and confirming the usage privileges given to members making up the group. A user can use services based on the rights and privileges information listed in the group attribute certificate, by presenting the group attribute certificate. Note that the group attribute certificate is issued based on predetermined issuing procedures and each entity which has received the group attribute certificate stores this within the security chip (SC) or security module (SM) having an anti-tampering configuration, or in some cases, in external memory. The details of issuing and storing processing will be described later.

Execution attribute certificate: This is an attribute certificate having, as the stored data thereof, enciphered execution commands including data processing executing commands subjected to encipherment processing, and address (Ad) information indicating the storage region within the memory of the user device where the registration key to be applied for the deciphering processing of the enciphered execution commands is; whereby various types of services are executed by obtaining executing commands by deciphering the enciphered execution commands by applying the registration key obtained from the memory within the user device based on the address information, and executing the execution commands. The details of such processing will be described later.

Key data: Key data stored includes public key and secret key pairs set for the security chip, registration keys applied at the time of deciphering enciphered execution commands stored in the execution attribute certificate described above, reset keys applied for destruction (reset) processing of the registration key, and further, random number generating keys, mutual authentication keys, etc. Note that the storage region of the registration key is in a memory region determined by an address determined beforehand. The registration key and reset key will be described later in detail.

Identification information: For the identification information, the security chip ID serving as the identifier of the security chip is stored. Also, a service provider ID serving as an identifier of a service provider (SP) from which continuous service is to be received, a user ID provided to a user using the user device, an application ID for identifying an application corresponding to a service provided by the service provider, and so forth, can also be stored.

Other: The user device also stores random number generating seed information, i.e., information for generating random numbers used for authentication processing, enciphering processing, etc., following ANSI X9.17, and usage information relating to services to which various usage restrictions have been applied, for example, information such as information regarding the number of times of using contents updated at the time of using contents with contents usage number-of-time restrictions, information such as payment information or the like, and further, hash values calculated based on the information.

Note that the configuration example shown in Fig. 10 is only an example, and that various types of information other than these relating to the user device receiving services can be sorted as necessary.

Also, note that the security chip or security module of the service provider side at the service providing side for example, can also be realized with a configuration similar to the security chip configuration at the user device shown in Fig. 9, so as to function as the various executing means for the later-described group attribute certificate verification processing and generating processing, and execution attribute certificate verification processing and generating processing. For example, the same configuration as the security chip shown in Fig. 9 can be applied as means for executing verification processing of a group attribute certificate or execution attribute certificate received via the network interface which is a data transmission/reception unit, or means for executing generating processing of a group attribute certificate or execution attribute certificate.

### [(3) Group attribute certificate issuing and usage processing]

Next, the group attribute certificate issuing processing and usage processing for setting multiple users or devices as a group, such as a user belonging to various sets such as the same organization such as a school or company, or one family, or the like, or such as devices manufactured by the same manufacturer, users and devices and the like receiving the services of the same service provider, and so forth, as one group, and issuing a group attribute certificate to each of the users or devices belonging to the group, will be described.

A group attribute certificate is a certificate whereby the fact that a user or device (user device) attempting to receive a service belongs to a certain group can be confirmed, and is presented to a service providing entity, a service provider for example, at the time of receiving the service. The service provider executes verification processing of the group attribute certificate presented thereto, and provides the service under the condition that confirmation has been made that the user or user device belongs to the certain group.

A group attribute certificate is a certificate which has, as stored information, group identification information set corresponding to the group made up of a set of certain devices or certain users, and carries the electronic signature of the issuer.

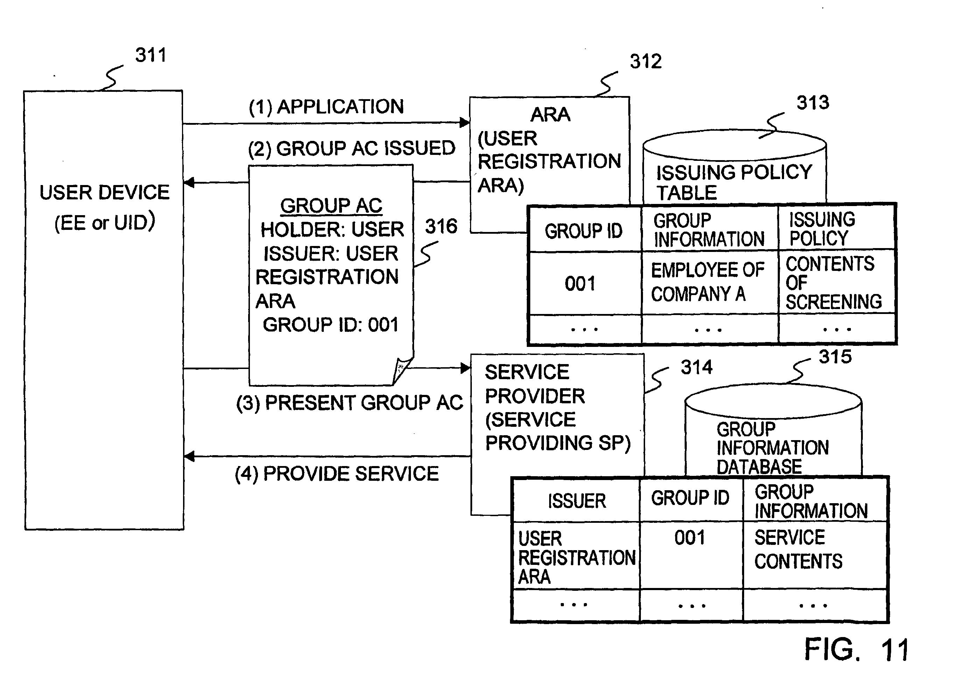

Fig. 11 schematically illustrates the flow of issuing application, issuing processing, and usage processing, of the group attribute certificate. A user device 311 which desires to receive services provided by a service provider 314 which provides services under the condition that confirmation of proof of belonging to a group based on the group attribute certificate is made, i.e., an end entity (EE) or user identification device (UID) having a security chip, first makes an issue request to the issuing entity for the group attribute certificate. For example, an application for issuing a group attribute certificate is made to a attribute registration authority (ARA) 312.

The attribute registration authority (ARA) 312 makes reference to the issuing policy table 313 based on the issuing application, and in the event that the policies are satisfied, commissions the attribute authority (AA) to issue an attribute certificate, and transmits the group attribute certificate 316 which the attribute authority (AA) has issued, to the user device 311.

The group attribute certificate 316 stores a group ID serving as a group identifier, in the attribute information field (see Fig. 5). The user device 311 presents the group attribute certificate 316 to the service provider 314 at the time of receiving some sort of service provided by the service provider 314, such as contents distribution, payment processing, etc., for example. The service provider 314 determines whether or not the user device 311 requesting the service to be provided has privileges for receiving the service, by verification processing of the group attribute certificate and by making reference to the group information database 315, and in the event that determination is made that the user device 311 has the privileges, providing of the services thereto is executed.

Now, with regard to the group attribute certificate issuing and usage processing, the three items of
(3-1) Preparation processing before issuing group attribute certificate
(3-2) Group attribute certificate issuing processing
(3-3) Group attribute certificate usage processing will be described in order.

### (3-1) Preparation processing before issuing group attribute certificate

First, the preparation processing before issuing the group attribute certificate will be described. As described above, with the normal style, the group attribute certificate is basically issued by the attribute authority (AA), the attribute registration authority (ARA) receives an issuing request from the attribute certificate issuing requesting entity, policy screening and the like is executed, determination is made that issuing is permissible, following which the attribute certificate issuing request is transferred to the attribute authority (AA), and an attribute certificate issued by the attribute authority (AA) is transmitted to the issue requesting entity via the attribute registration authority (ARA). However, as described below, issuing can be made at the service provider (SP) and user device, under respective policies thereof.

The group attribute certificate according to the present invention is issued to members (devices or users) making up a group, upon having determined some sort of an identifiable group, such as a family, school, company, devices of a certain manufacturer, or the like, while a service provider providing services determines whether or not a user or device requesting services belongs to a certain group, based on the group attribute certificate. Accordingly, in the event that there is the need for the group attribute certificate issuing processing executing entity and the entity for executing privilege confirmation (verification processing) based on the group attribute certificate and providing service to have a common understanding of the group defined corresponding to the group attribute certificate, processing for sharing information relating to the group defined corresponding to the group attribute certificate, i.e., group information, between the group attribute certificate issuing entity and service providing entity, as the preparation processing before issuing the group attribute certificate, is required.

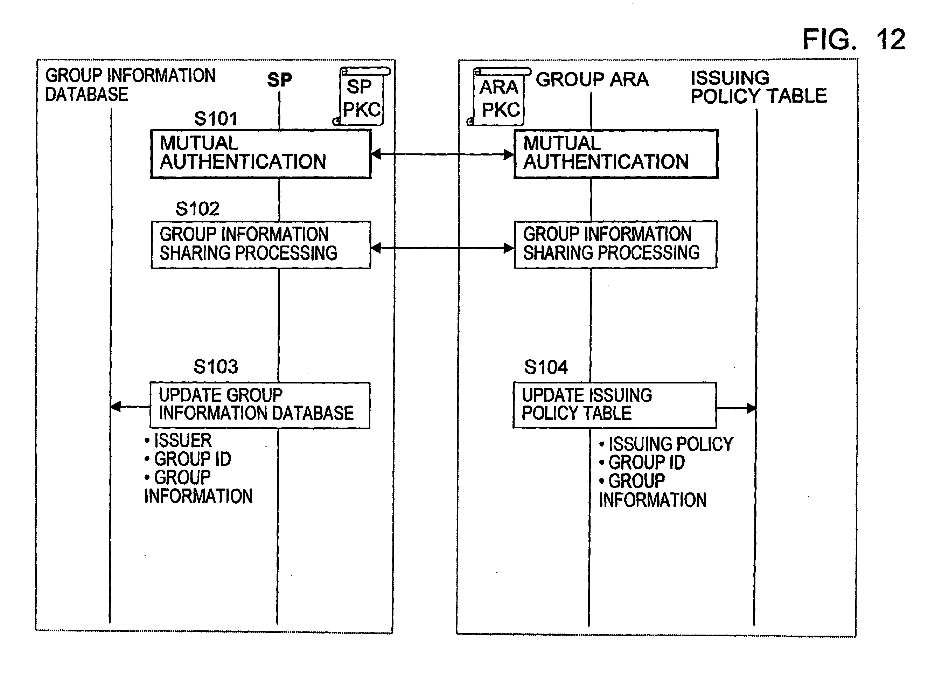

The following is a description with reference to Fig. 12 regarding group information sharing processing in a case wherein the group attribute certificate issuing entity is an attribute authority (AA) or attribute registration authority (ARA), and the service providing entity is a service provider (SP).

Note that in the following description, the attribute authority (AA) and the attribute registration authority (ARA) are in a trust relation, and description will be made with an example of a configuration wherein the attribute registration authority (ARA) performs screening for issuing the group attribute certificate, and the attribute authority (AA) performs group attribute certificate issuing processing based on the screening results performed by the attribute registration authority (ARA). Accordingly, the group information sharing entities are the service provider (SP) and attribute registration authority (ARA), these two.

The group information sharing processing between the service provider (SP) and attribute registration authority (ARA) will be described following the processing sequence diagram shown in Fig. 12.

First, in step S101, mutual authentication processing is executed between the service provider (SP), and the attribute registration authority (ARA) which executes issuing screen for the group attribute certificate. Note that hereafter, the attribute registration authority (ARA) which executes issuing screen for the group attribute certificate will be referred to as group attribute certificate registration authority (ARA).

The mutual authentication performed between the service provider (SP) and the group attribute certificate registration authority (ARA) is processing executed in order to confirm between the two entities executing data transmission/reception whether or not the other party is the proper data communication party. Data transfer is performed under the conditions that authentication is established. Also, a session key is preferably generated at the time of mutual authentication processing, for a configuration wherein data transfer is made under encipherment processing based on the session key as a shared key. Either public key encipherment or shared key encipherment may be used for the mutual authentication method.

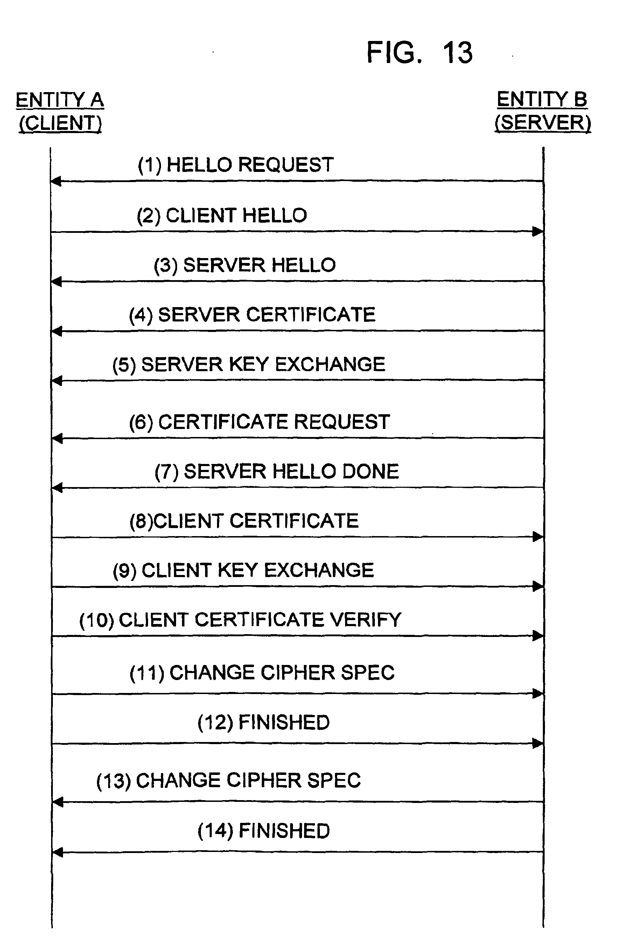

Here, the handshake protocol (TLS 1.0), a mutual authentication method which is a type of public key encipherment method, will be described with reference to the sequence diagram shown in Fig. 13.

In Fig. 13, an entity A (client) and entity B (server) are the two entities for executing communication, and here corresponding to he service provider (SP) or group attribute certificate registration authority (ARA). First, (1) the entity B transmits a negotiation start request for determining the encipherment specifications to the entity A as a hello request. (2) The entity A, upon receiving the hello request, transmits the encipherment algorithm, session ID, and protocol version candidates, to the entity B side, as a client hello.

(3) The entity B side transmits the enciphered algorithm, session ID, and protocol version, regarding which usage has been determined, to the entity A as a service hello. (4) the entity B transmits a set of public key certificates (X. 509v3) up to its own root CA, to the entity A (server certificate). In the event of not tracing the certificate chain in order to perform verification up to the highest-order public key certificate, transmitting the set of public key certificates (X. 509v3) up to the root CA is not absolutely necessary. (5) the entity B transmits an RSA public key or Diffie & Hellman public key information to the entity A (server key exchange). This is public key information to be temporarily applied in the event that the certificate cannot be used.

(6) Next, the entity B side requests a certificate of the entity A as a certificate request to the entity A, and (7) notifies the end of negotiation processing by the entity B (server hello end).

(8) the entity A which has received the server hello end transmits the set of public key certificates (X. 509v3) up to its own root CA (client certificate) to the entity B. In the event that chain verification of the public key certificate is not performed, transmitting the set of public key certificates is not absolutely necessary. (9) The entity A enciphers a 48-byte random number with the public key of the entity Bz, and transmits this to the entity B. The entity B and the entity A generate a master secret including data and the like for generating a message authentication code (MAC) for transmission/reception data verification processing, based on this value.

(10) the entity A enciphers a digest of the message so forth using the secret key of the client, to confirm the correctness of the client certificate, transmits this to the entity B (client certificate verify), (11) notifies start of usage of the encipherment algorithm and key determined earlier (change cipher spec), and (12) notifies the end of authentication. On the other hand, (13) the entity B side also notifies the entity A of start of usage of the encipherment algorithm and key determined earlier (change cipher spec), and (14) notifies the end of authentication.

Data transfer between entity A and entity B is then executed following the encipherment algorithm determined in the above processing.

Verification of data tampering is performed by adding a message authentication code (MAC), calculated from the master secret generated upon agreement between the entity A and entity B in the above authentication processing, to the transmitted data of each entity, thereby performing message tampering verification.

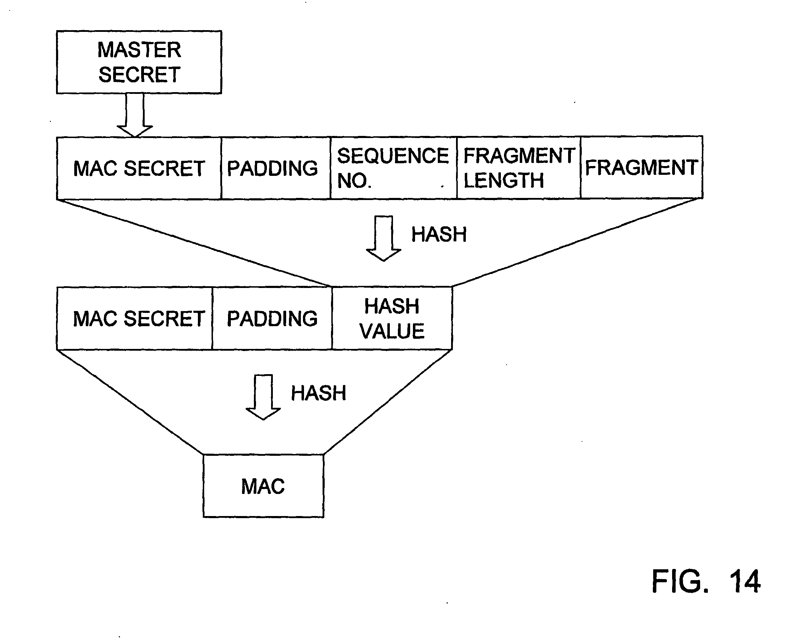

Fig. 14 illustrates the generating configuration of a message authentication code (MAC). The data transmitting side adds a MAC secret generated based on a master secret generated in the authentication processing, to transmitted data, calculates a hash value from the entire data, and further calculates a hash based on the MAC secret, padding, and hash value, thereby generating a message authentication code (MAC). The generated MAC is attached to the transmitted data, and in the event that the received MAC matches the MAC generated based on the reception data at the reception side, the data is determined to be not tampered with, and in the event that these do not match, the data is determined to have been tampered with.

In step S101 shown in Fig. 12, mutual authentication processing, following the above-described sequence for example, is performed between the service provider (SP) and the attribute registration authority (ARA) which has executed the group attribute certificate issuing screening, and upon confirmation being made that both are the correct communication parties, in step S102 group information sharing processing is executed between the service provider (SP) and the attribute registration authority (ARA).

Specifically, group information sharing is performed as processing wherein the issuing policy table managed by the group attribute certificate issuing entity (e.g., the attribute registration authority (ARA)), and the group information database of the service providing entity (e.g., the service provider (SP)) based on verification and verification of the group attribute certificate, are set so as to hold matching information.

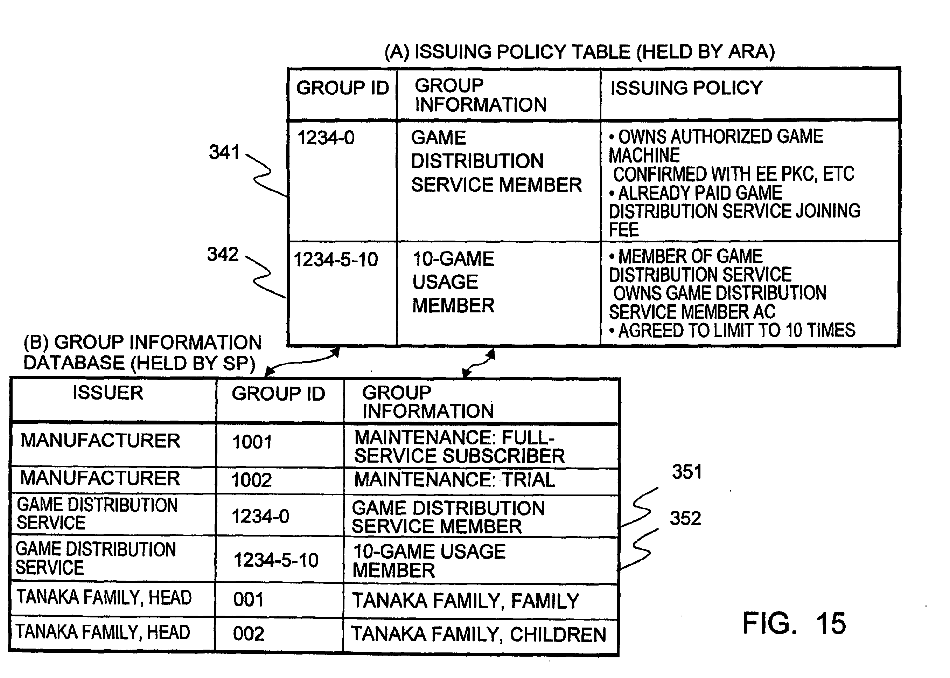

As described above, the group attribute certificate issuing entity (e.g., the attribute registration authority (ARA)) has an issuing policy table, and the service providing entity (e.g., the service provider (SP)) based on verification and verification of the group attribute certificate has a group information database. Fig. 15 illustrates a configuration example of the information.

The (A) issuance policy table is held and managed by the attribute registration authority (ARA), and is referred to for group attribute certificate issuing processing and the like. On the other hand, the (B) group information database (DB) is held and managed by the service provider (SP), and reference is made thereto at the time of verifying the group attribute certificate when providing services.

It is necessary that the (A) issuance policy table held and managed by the attribute registration authority (ARA), and the (B) group information database (DB) held and managed by the service provider (SP) agree. In the example shown in Fig. 15, the entry 341 of the (A) issuance policy table agrees with the entry 351 of the (B) group information database (DB), and the entry 342 of the (A) issuance policy table agrees with the entry 352 of the (B) group information database (DB). This agreement maintaining processing between the (A) issuance policy table held and managed by the attribute registration authority (ARA), and the (B) group information database (DB) held and managed by the service provider (SP) is the group information sharing processing step S102 in the sequence diagram of Fig. 12.

Note that there are the following two examples for arrangements of group information sharing processing.

Policy acceptance type: A service providing entity (e.g., the service provider (SP)) based on verification and verification of the group attribute certificate studies issuing policies of various group attribute certificate issuing entities (e.g., attribute registration authority (ARA)), selects a group ARA suitable for its own services, and the service provider (SP) obtains the group information which the group ARA selected here manages.

Issuance commissioning type: An issuing policy set by a service providing entity (e.g., the service provider (SP)) based on verification and verification of the group attribute certificate is presented to a group attribute certificate issuing entity (e.g., group attribute certificate registration authority (ARA)) which does not have its own attribute certificate issuing policies but simply is commissioned to issue group attribute certificates, and the group attribute certificate registration authority (ARA) performs group attribute certificate issuing processing following the policy presented thereto.

Various arrangements can be made for specific group information sharing processing arrangements, such as an arrangement wherein information relating to a group attribute certificate, such as group ID, issuer, group information, issuing policy, etc., are set by the group attribute certificate issuing entity (e.g., group attribute certificate registration authority (ARA)), presented to a service providing entity (e.g., the service provider (SP)) based on verification and verification of the group attribute certificate, and both entities agree thereupon; an arrangement wherein the service provider sets such information and presents the information to the group ARA, with both entities agreeing thereupon; an arrangement wherein the information of each is set by each, and the overall information is mutually agreed on; an arrangement wherein the service provider unilaterally trusts the group attribute certificate registration authority (ARA); and so forth.

Note that in the case of the issuance commissioning arrangement, in the event of a new service provider (SP) starting a new service using group attribute certificates, the attribute registration authority (ARA) performs registration screening of the service provider (SP) itself, following which the above-described group information sharing processing is performed.

Upon the group information sharing processing of step S102 ending, in step S103 the service provider (SP) executes data updating processing based on the agreed information, with regard to the group information database managed by itself. As shown in Fig. 15, the group information database stores the data of issuer, group identification information (group ID), and group information, and data registration and updating regarding this information is executed. On the other hand, in step S104, the attribute registration authority (ARA) executes data updating processing based on the agreed information, with regard to the issuing policy table managed by itself. As shown in Fig. 15, the issuing policy table stores the data of the group ID, group information, and issuing policy, and data registration and updating regarding this information is performed.

Note that the above-described processing is processing which is necessary in the event that the service provider (SP) and the attribute registration authority (ARA) are configured as independent entities, and in the event that the service provider (SP) also serves as the attribute registration authority (ARA), the service provider (SP) itself holds and manages both the group information database and the issuing policy table, so the group information sharing processing between the service provider (SP) and the attribute registration authority (ARA) as described above can be omitted.

Also, note that the above-described example is a case wherein the group attribute certificate issuing entity is an attribute registration authority (ARA) and the service providing entity based on verification and verification of the group attribute certificate is a service provider (SP), but the above-described processing is executed according to combinations of the various entities.

### (3-2) Group attribute certificate issuing processing

Next, group attribute certificate issuing processing will be describing. The group attribute certificate issuing processing is executed by the attribute authority (AA), as a rule. However, service providers and user device can also issue based on own issuing policies. In the following, a group attribute certificate issuing processing sequence by the attribute authority (AA) will be described.

With a normal attribute certificate issuing sequence, a processing arrangement wherein the attribute registration authority (ARA) receives an issuing request from an attribute certificate issue requesting entity, executes policy screening or the like, and following determining that issuing is permissible, transfers an attribute certificate issue request to the attribute authority (AA), and the attribute certificate which the attribute authority (AA) issues is transferred to the issue requesting entity via the attribute registration authority (ARA).

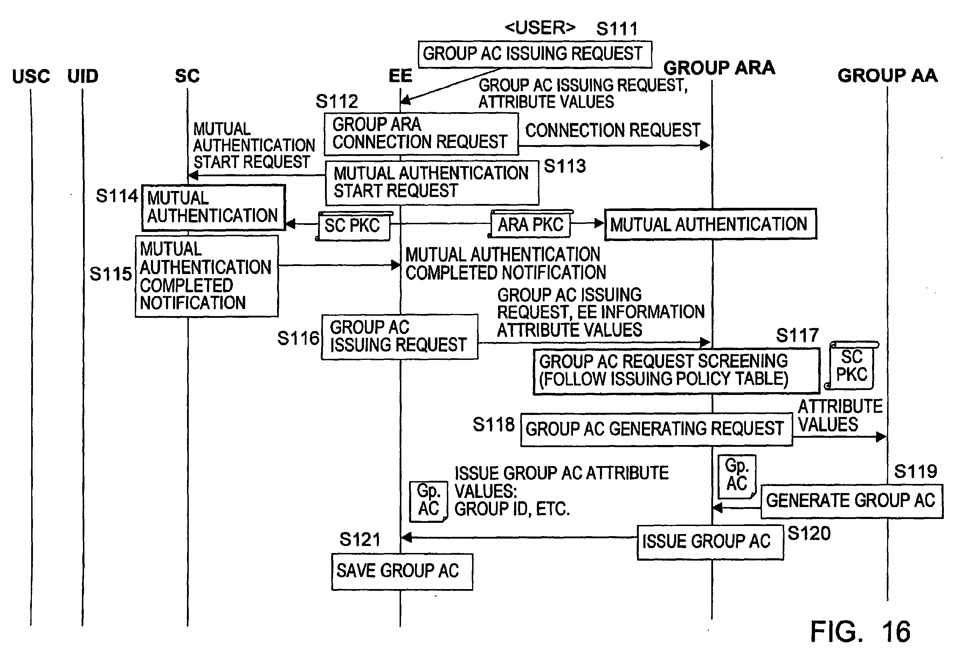

The processing in a case wherein the security chip (SC) of the end entity (EE), which is a user device, is the group attribute certificate issue requesting entity, will be described with reference to Fig. 16. Note that in Fig. 16, UID: user identification device (user device) control unit, USC: user security chip configured within the UID,
EE: end entity (user device) control unit,
SC: security chip configured within the EE,
Group ARA: group attribute certificate registration authority control unit, and
Group AA: group attribute authority control unit.

First, in step S111, the user inputs an issue request command for a group attribute certificate (Gp. AC) via the input interface of the end entity (EE). At this time, the user inputs attribute values necessary for issuing the group attribute certificate. The attribute values are the group ID, information proving belonging to the group, or the like.

Upon the end entity (EE) receiving input of the group attribute certificate (Gp. AC) issuing request for the user, in step S112 the end entity (EE) makes a connection request to the group ARA, and in step S113 outputs a mutual authentication start request to the security chip (SC) within the end entity (EE).

In step S114, mutual authentication is carried out between the security chip and the group ARA. This is executed as mutual authentication processing of the public key method described earlier with reference to Fig. 13, for example. In step S115, a mutual authentication completion notification is output from the security chip to the end entity, including results information of establishment or non-establishment of mutual authentication. In the event that mutual authentication is not established, continuation of processing is cancelled. In the event that mutual authentication is established, in step S116 the end entity (EE) transmits a group attribute certificate (Gp. AC) issuing request to the group ARA. This group attribute certificate (Gp. AC) issuing request includes end entity information, and attribute information (e.g., group ID, group information).

In step S117, the group ARA which has received the group attribute certificate (Gp. AC) issuing request from the end entity (EE) makes reference to the issuing group policy table, determines whether or not issuing of a group attribute certificate compliant with the policy can be made, and in the event that this can be made, the flow proceeds to step S118, while in the event that this cannot be made, a issue not-permitted message is notified to the end entity.

In step S118, the group ARA transmits the group attribute certificate (Gp. AC) issuing request having the attribute values (group ID) to the group AA, and in step S119, the group AA stores the group ID as attribute information, generates a group attribute certificate (see Fig. 5) with an electronic signature attached, and transmits this to the group ARA.

In step S120, the group ARA transmits the issued group attribute certificate (Gp. AC) to the end entity (EE). The end entity (EE) stores the received group attribute certificate (Gp. AC) in the memory thereof. At this time, verification of the electronic signature of the received group attribute certificate (Gp. AC) is performed, and following confirmation that there is no tampering, this is stored in memory.

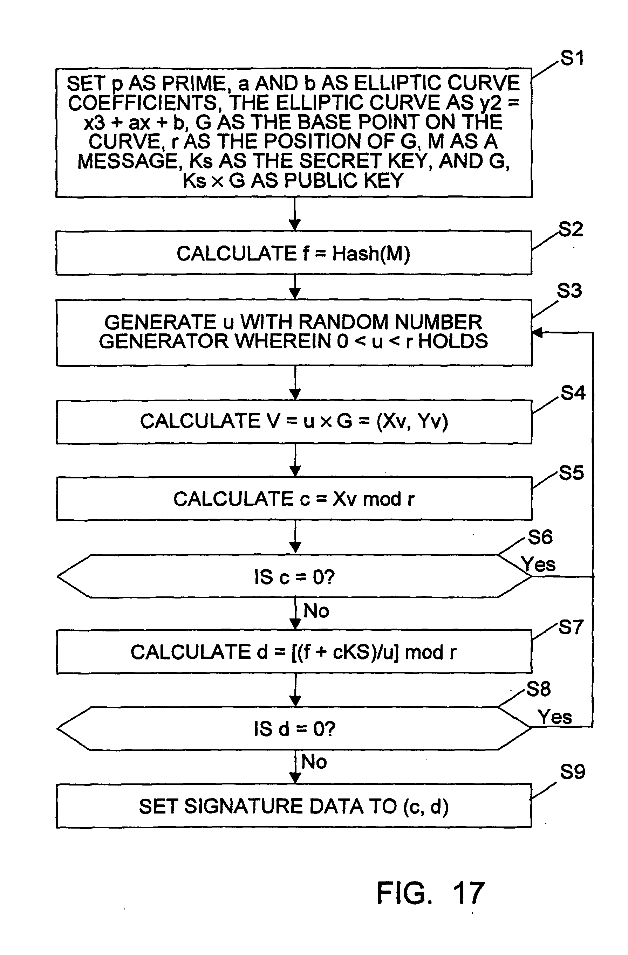

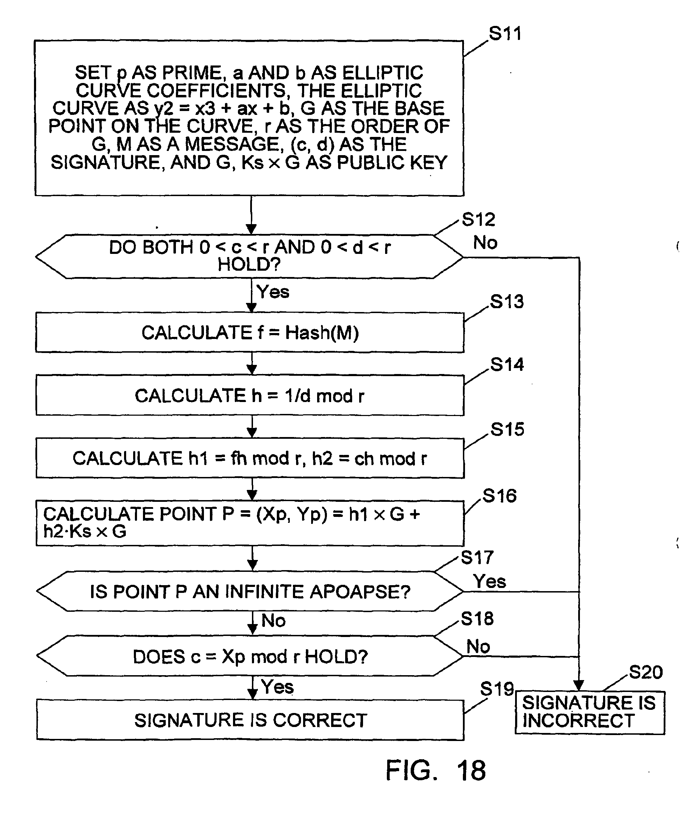

The electronic signature generating executed by the group AA at the time of generating the group attribute certificate, and the electronic signature verification processing executed by the end entity at the time of storing the group attribute certificate, will be described with reference to Fig. 17 and Fig. 18.

A signature is attached to enable verification of data tampering, and the aforementioned MAC value may be used, and an electronic signature using the public key encipherment method may also be used.

First, a method for generating an electronic signature using the public key encipherment method will be described with reference to Fig. 17. The processing shown in Fig. 17 is electronic signature data generating processing using EC-DSA ((Elliptic Curve Digital Signature Algorithm), IEEE P1363/D3). The example described here uses the Elliptic Curve Cryptosystem (hereafter, ECC) as public key encipherment. Note that with the data processing device according to the present invention, similar public key encipherment such as RSA encipherment ((Rivest, Shamir, Adleman), etc. (ANSI X9.31)) may also be used besides the Elliptic Curve Cryptosystem.

The steps in Fig. 17 will be described. In step S1, p as prime, a and b as elliptic curve coefficients (elliptic curve: y² = x³ + ax + b, 4a³ + 27b² ≠ 0 (mod p)), G as the base point on the elliptic curve, r as the order of G, and Ks as the secret key (0 < Ks < r). In step S2, the hash value of the message M is calculated, with f = Hash(M).

Now, the method for obtaining a hash value using a hash function will be described. A hash function is a function wherein a message is taken as input, this is compressed into data of a predetermined bit length, and output as a hash value. The hash function is difficult to predict from input of the hash value (output), and changing 1 bit of the data input to the hash function changes a great number of bits in the hash value, and further, finding different input data with the same hash value is difficult. There are cases wherein MD4, MD5, SHA-1, or the like are used for hash functions, and cases wherein DES-CBS is used. In this case, the MAC which is the final output (check value: equivalent to ICV) is the hash value.

Next, in step S3, a random number u (0 < u < r) is generated, and in step S4 coordinates V (Xv, Yv) wherein the base point is multiplied by u are calculated. Note that addition and doubling on the elliptic curve are defined as follows.

With P = (Xa, Ya), Q = (Xb, Yb), R = (Xc, Yc) = P + Q,
at the time of P # Q (addition),${\text{Xc =λ}}^{\text{2}} \text{- Xa - Xb}$$\text{Yc = λ × (Xa - Xc) - Ya}$$\text{λ = (Yb - Ya) / (Xb - Xa),}$ and at the time of P = Q (doubling),${\text{Xc = λ}}^{\text{2}} \text{- 2Xa}$$\text{Yc = λ × (Xa - Xc) - Ya}$${\text{λ = ((3Xa)}}^{\text{2}} \text{+ a) / (2Ya)}$

These are used to calculate u times the point G (though slow, the computation method which is the easiest to understand is performed as follows. G, 2 × G, 4 × G, and so on, is calculated, u is converted to binary and 2ⁱ × G (a value wherein G is doubled i times (i being the bit position of u counted from LSB)) is added to the ones).

In step S5 c = Xv mod r is calculated, in step S6 determination is made regarding whether this value is 0, and if not 0, in step S7 d = [(f + cKs)/u] mod r is calculated, in step S8 determination is made regarding whether d is 0, and if not 0, in step S9 c and d are output as electronic signature data. Assuming that r has a bit length of 160, the electronic signature data will be 320 bits long.

In the event that c is 0 in step S6, the flow returns to step S3 and a new random number is generated again. In the same way, in the event that d is 0 in step S8, the flow returns to step S3 and the random number is generated again.

Next, the verification method for the electronic signature using the public key encipherment method will be described with reference to Fig. 18. In step S11, M is the message, p prime, a and b as elliptic curve coefficients (elliptic curve: y² = x³ + ax + b, 4a³+ 27b² ≠ 0 (mod p)), G as the base point on the elliptic curve, r as the order of G, and G and Ks x G as the public key (0 < Ks < r). In step S12, whether or not the electronic signature data c and d satisfy 0 < c < r, 0 < d < r is verified. In the event that this is satisfied, the hash value of the message M is calculated in step S13, as f = Hash(M). Next, in step S14, h = 1/d mod r is calculated, and in step S15, h1 = fh mod r, h2 = ch mod r are calculated.

In step S16, the already-calculated h1 and h2 are used to calculate point P = (Xp, Yp) = h1 × G + h2 · Ks × G. The electronic signature verifier knows the base point G and Ks × G, so calculation of multiplication by scalars of the point on the elliptical curve can be calculated in the same way as with step S4 in Fig. 17. In step S17, determination is made regarding whether or not the point P is an infinite apoapse, and if not an infinite apoapse the flow proceeds to step S18 (in reality, determination of infinite apoapse can be made in step S16. that is, adding P = (X, Y), Q = (X, -Y) shows that λ cannot be calculated, thereby revealing that P + Q is an infinite apoapse. In step S18, Xp mod r is calculated, and compared with the electronic signature data c. Finally, in the event that this value matches, the flow proceeds to step S19, and determination is made that the electronic signature is correct.

In the event that determination is made that the electronic signature is correct, this tells that the data has not been tampered with, and that the holder of the secret key corresponding to the public key has generated the electronic signature.

In step S12, in the event that either electronic signature data c or d do not satisfy 0 < c < r, 0 < d < r, the flow proceeds to step S20. Also, in the event that the point P is an infinite apoapse in step S17 as well, the flow proceeds to step S20. Moreover, in the event that the value of Xp mod r does not match the electronic signature data c in step S18 as well, the flow proceeds to step S20.

In the event that determination is made that the electronic signature is not correct in step S20, this tells that either the data has been tampered with, or that the holder of the secret key corresponding to the public key has not generated the electronic signature. As mentioned above, while removing the signature and hash will enable tampering, detection thereof means the effects are essentially the same as being tamper-proof.

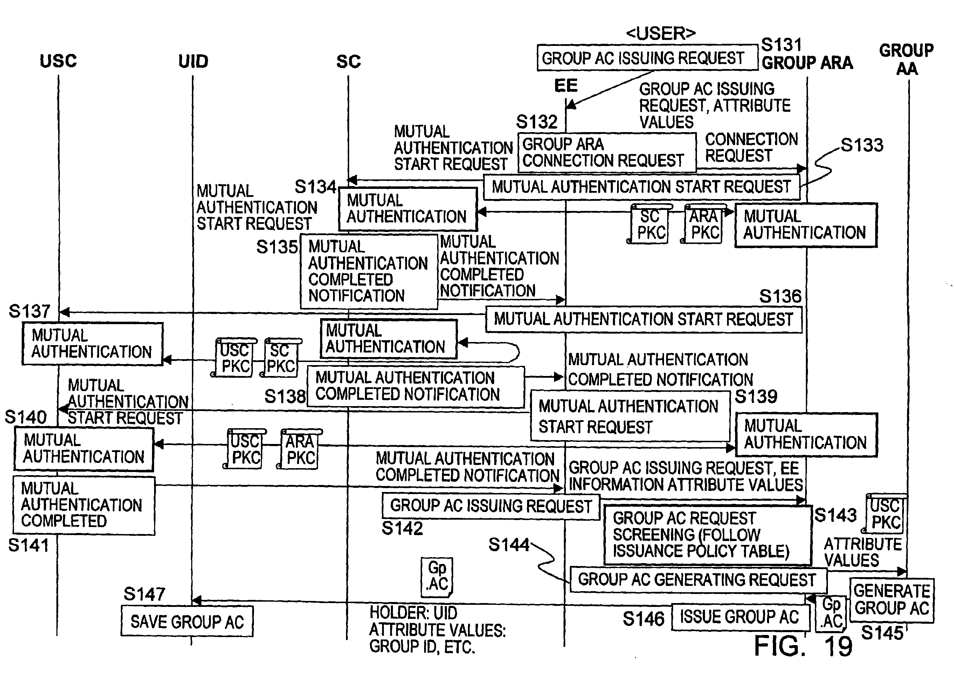

Next, the procedures for issuing the group attribute certificate corresponding to the user security chip (USC) within the user identification device (UID) will be described with reference to Fig. 19. As described above, the UID is configured so as to be capable of external communication via the end entity (EE), so attribute certificate obtaining processing is also executed via the end entity (EE).

The processing in steps S131 through S135 is the same processing as that in steps S111 through 115 described with reference to Fig. 16, and accordingly description thereof will be omitted.

Upon mutual authentication between the security chip (SC) within the end entity and the group ARA being established in step S134, in step S137 mutual authentication between the user security chip (USC) within the user identification device (UID) and the security chip (SC) within the end entity is executed. This authentication processing is carried out via the connected device interface 231 (see Fig. 9) of the end entity (EE) and the user identification device (UID). This authentication processing can be executed as authentication processing based on the public key method described earlier with reference to Fig. 13, as processing centered on the encipherment processing unit (see Fig. 9) of the security chip and security module. In step S138, authentication completion notification including authentication established information is made to the end entity (EE), and the flow proceeds to the next step under the condition that authentication has been established.

In step S139, a user security chip (USC) mutual authentication start request is output from the end entity (EE), and in step S140, mutual authentication is executed between the USC and the group ARA. In step S141, an authentication completed notification including authentication established information is notified from the USC to the end entity (EE), and under the condition that authentication has been established, the end entity (EE) transmits a group attribute certificate (Gp. AC) issue request to the group ARA in step S142. The group attribute certificate (Gp. AC) issue request includes the end entity information, and attribute values (e.g., group ID, group information).

Upon receiving the group attribute certificate (Gp. AC) issue request from the end entity (EE), the group ARA makes reference to the issuing policy table in step S143, determines whether or not a group attribute certificate can be issued in compliance with the policy, and if this can be issued, the flow proceeds to step S144, and if this cannot be issued, the end entity is notified of a issuing no-permissible message.

In step S144, the group ARA transmits a group attribute certificate (Gp. AC) issuing request accompanied by attribute values (group ID) to the group AA, and in step S145, the group AA stores the group ID as attribute information, generates a group attribute certificate (see Fig. 5) with an electronic signature attached, and transmits this to the group ARA.

In step S146, the group ARA transmits the issued group attribute certificate (Gp. AC) to the UID via the end entity (EE). The UID stores the received group attribute certificate (Gp. AC) in memory. At this time, verification of the electronic signature of the group attribute certificate (Gp. AC) is performed, and after confirmation is made that there is no tampering, storage in memory is performed.

As described above, in order for a user identification device (UID) which does not have direct communication functions with the group ARA to obtain a group attribute certificate corresponding to the user security chip (USC), there is the need to go through the end entity (EE). At this time, establishment of all of:
(1) Mutual authentication between the SC of the EE and the group ARA,
(2) Mutual authentication between the SC of the EE and the USC of the UID, and
(3) Mutual authentication between the USC of the UID and the group ARA,
   for example, in order for mutual authentication to be carried out between the user security chip (USC) and the group ARA. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

### (3-3) Group attribute certificate usage processing

The processing for using a group attribute certificate stored in a security chip (SC) within a user device, or a user security chip (USC), will be described. Description here will not make mention of specific service forms, and will deal with service usage privilege authentication processing based on the group attribute certificate, up to starting of the services. Specific service arrangements will be described later under a different item.

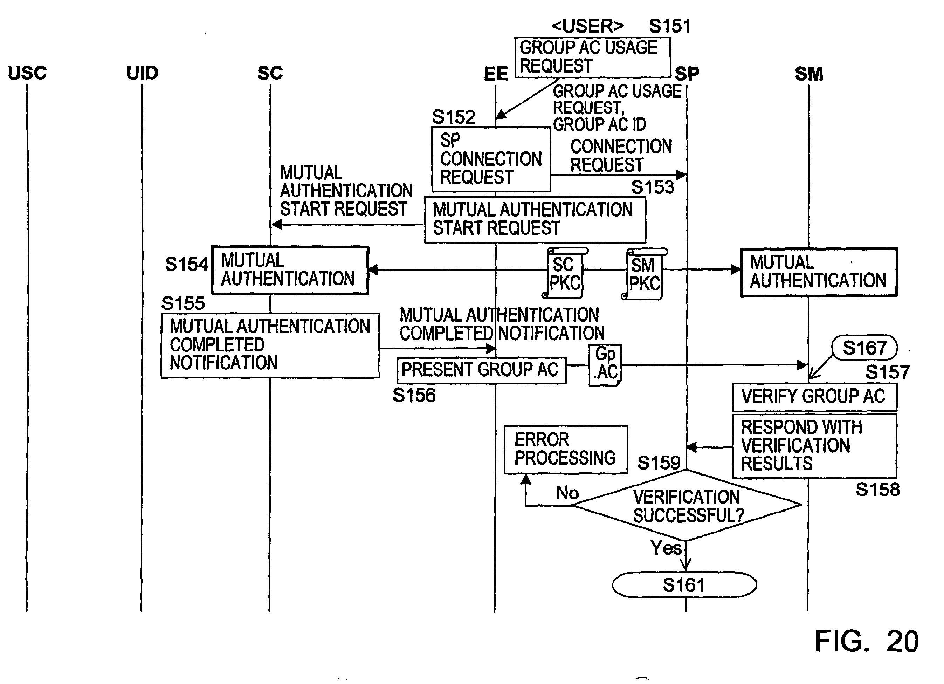

The processing up to the starting of services, including service usage privilege confirmation using the group attribute certificate issued to the security chip (SC) within an end entity (EE) service as a user device, will be described with Fig. 20 on. Note that in Fig. 20,
UID: user identification device (user device) control unit,
USC: user security chip configured within the UID,
EE: end entity (user device) control unit,
SC: security chip configured within the EE,
SP: service provider control unit, and
SM: security module within SP.

Also note that the security chip (SC) of the user device (EE), the user security chip (USC) of the user identification device (UID), and the security module of the service provider (SP), have the same configuration as the security chip described earlier in Fig. 9, for example.

First, in step S151, a user inputs a group attribute certificate (Gp. AC) usage request command via the input interface of the entity (EE). At this time, the user specifies he group ID set in the group attribute certificate to be used. However, in the event that a single group ID can be determined by specifying a certain service, an arrangement may be made wherein only the service is specified.

Upon the end entity (EE) receiving the group attribute certificate (Gp. AC) usage request input from the user, the end entity (EE) makes a connection request to the service provider (SP) in step S152, and on the other hand, in step S153 outputs a mutual authentication start request to the security chip (SC) within the end entity (EE).

In step S154, mutual authentication between the security chip and the security module (SM) of the service provider (SP) is carried out. This is processing centered on the encipherment processing unit 205 shown in Fig. 9 for example, configured within the security chip of the security module (SM) of the service provider (SP), and is executed as public key mutual authentication processing described earlier with reference to Fig. 13, for example.

In step S155, a mutual authentication completion notification including mutual authentication established/not-established results information, is output from the security chip to the end entity. In the event that mutual authentication is not established, continuing processing is cancelled. In the event that mutual authentication is established, in step S156 the end entity (EE) transmits the group attribute certificate (Gp. AC) stored in its own memory to the security module (SM) of the service provider (SP). Or, a configuration may be made wherein transmission of the group attribute certificate (Gp. AC) is made in response to a transmission request from the service provider (SP). Also, there are cases wherein the end entity (EE) makes a usage request for the group attribute certificate (Gp. AC) along with transmission of the group attribute certificate (Gp. AC). This group attribute certificate (Gp. AC) stores the group identification information (group ID) as an attribute value.

The service provider receives the group attribute certificate (Gp. AC) from the end entity (EE) using a network interface having the same configuration as that of the user device shown in Fig. 9 for example, as a reception unit, and transfers this to the security module (SM). The security module (SM) executes group attribute certificate verification processing in step S157. As described earlier, the security module has the same configuration as the security chip of the user device shown in Fig. 9, so the security module functions as the group attribute certificate verification processing unit.

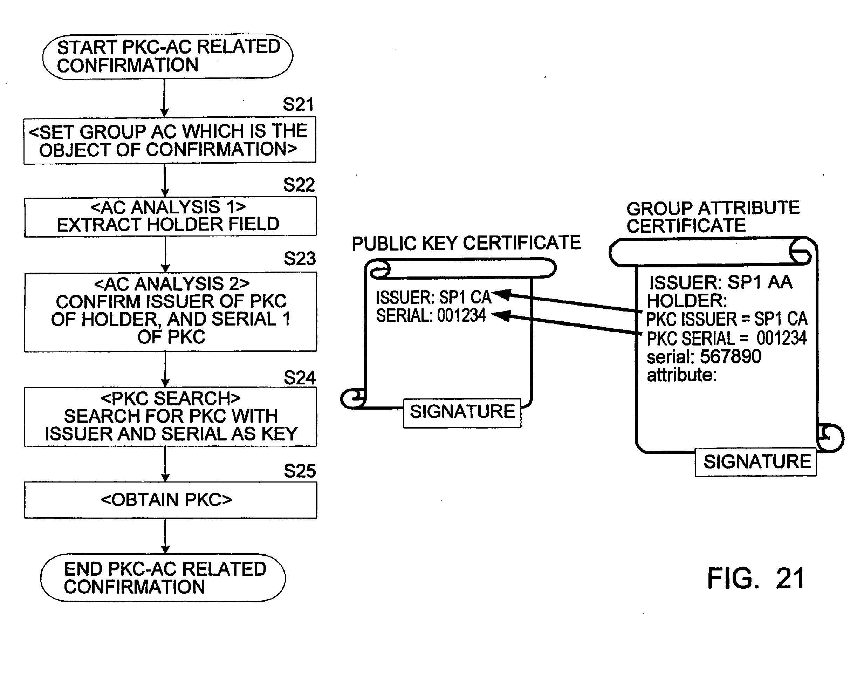

The details of verification processing of the group attribute certificate will be described with reference to Fig. 21 through Fig. 23. First, the correlation confirmation processing between the attribute certificate (AC) and the public key certificate (PKC) will be described with reference to Fig. 21. The flowchart shown in Fig. 21 is confirmation processing for the public key certificate (PKC) related to the attribute certificate (AC) performed at the time of verifying the attribute certificate (AC).

Upon the attribute certificate (AC) to be confirmed being set (S21), the public key certificate information (holder) field of the AC holder of the attribute certificate is extracted (S22), the issuer information of the public key certificate (PKC issuer) and public key certificate serial number (PKC serial), which are stored within the extracted key certificate information (holder) field, are confirmed (S23), the public key certificate (PKC) is searched based on the issuer information of the public key certificate (PKC issuer) and public key certificate serial number (PKC serial) (S24), and the public key certificate (PKC) correlated with the attribute certificate (AC) is obtained (S25).

As shown in Fig. 21, the attribute certificate (AC) and the public key certificate (PKC) are correlated by the issuer information of the public key certificate (PKC issuer) and public key certificate serial number (PKC serial) stored in the public key certificate information (holder) field of the AC holder of the attribute certificate.

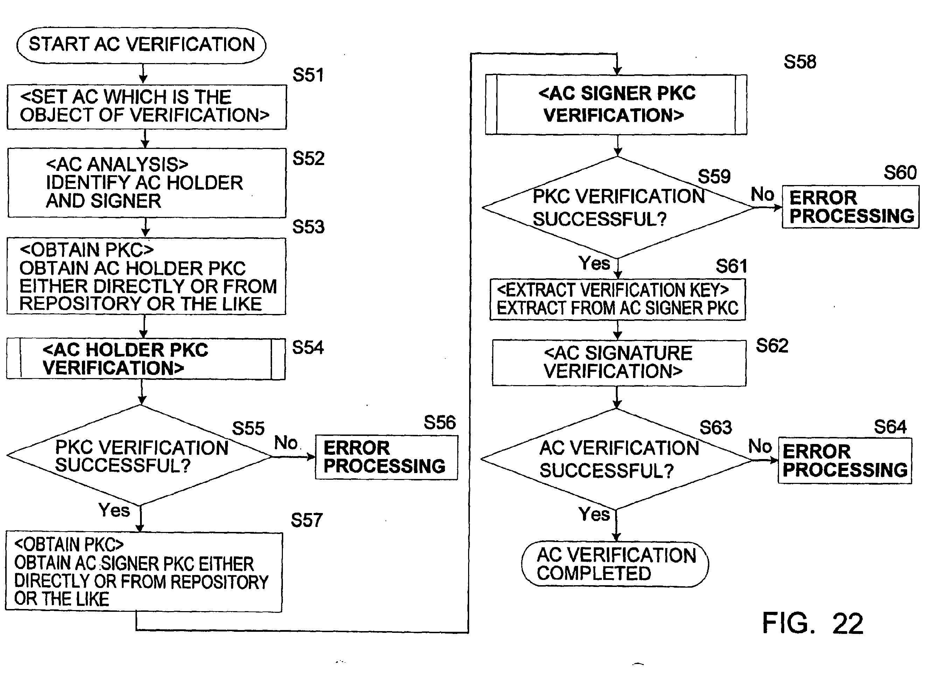

Next, verification processing of an attribute certificate (AC) will be descried with reference to Fig. 22. First, the attribute certificate (AC) to be verified is set (S51), and the holder of the attribute certificate (AC) and the signer thereof are identified, based on the stored information of the attribute certificate (AC) (S52). Further, the public key certificate of the holder of the attribute certificate (AC) is obtained either directly or from a repository (S53), and public key certificate verification processing is executed (S54).

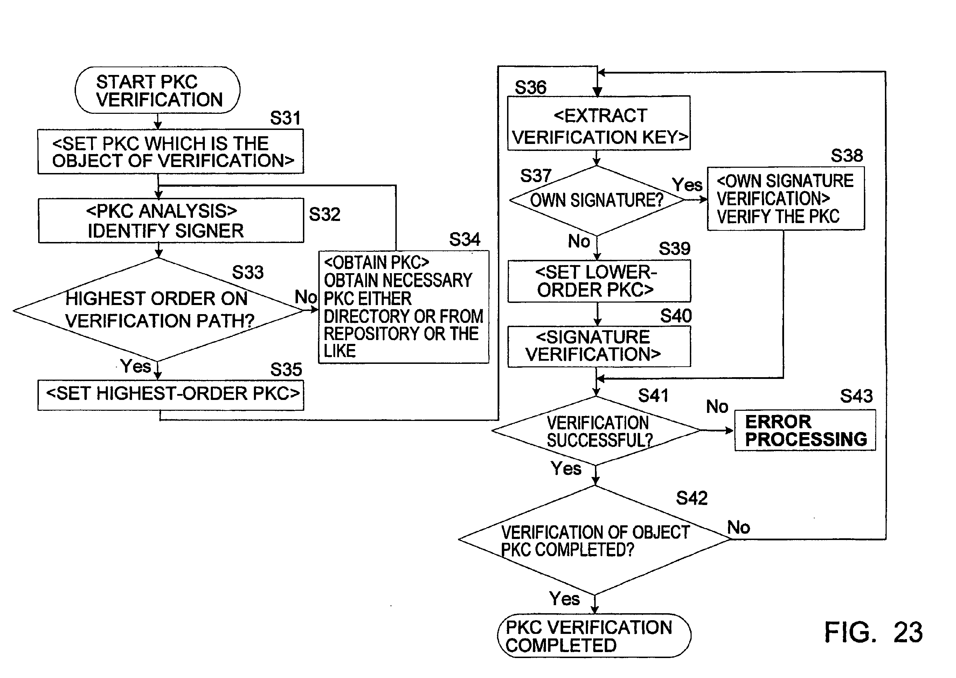

Verification processing of a public key certificate (PKC) will be described with reference to Fig. 23. Verification of the public key certificate (PKC) shown in Fig. 23 is a chain processing flow wherein chain information is obtained by tracking the certificate chain from lower order to higher order, up to the highest-order public key certificate, and verifying the signature of the public key certificates up to the highest order (root CA). First, the public key certificate (PKC) to be verified is set (S31), and the signer of the public key certificate (PKC) is identified, based on the stored information of the public key certificate (PKC) (S32). Further, whether or not this is the highest-order public key certificate of the certificate chain to be verified is determined (S33), and in the event that this is not the highest-order, the highest-order public key certificate is obtained either directly or from a repository or the like (S34). Upon the highest-order public key certificate having been obtained and set (S35), a verification key (public key) necessary for signature verification is obtained (S36), whether or not the signature to be verified is an own signature is determined (S37), and in the event that this is not an own signature, an lower-order PKC is set (S39), and signature verification is executed based on the verification key (public key) obtained from the higher-order public key certificate (S40). That is to say, in the own signature determination in step S37, in the event that the signature is an own signature verification is executed with own public key as a verification key (S38), and the flow proceeds to step S41.

In the event that signature verification is successful (Yes in S41), determination is made regarding whether or not verification of the object PKC has been completed (S42), and in the event that this has been completed, PKC verification ends. In the event that this is not completed, the flow returns to step S36, and obtaining of a verification key (public key) necessary for signature verification and signature verification of a lower-order public key certificate is repeated. In the event that signature verification fails (No in S41), the flow proceeds to step S43, and error processing, such as stopping subsequent processing for example, is executed.

Returning to step S22, let us continue with description of attribute certificate verification processing. In the event that verification of the public key certificate described in Fig. 23 fails (No in S55), the flow proceeds to step S56, and error processing is performed. For example, subsequent processing is cancelled. In the event that verification of the public key certificate is successful (Yes in S55), a public key certificate corresponding to the signer of the attribute certificate (AC) is obtained either directly or from a repository or the like (S57), and verification processing of the public key certificate corresponding to the signer of the attribute certificate (AC) is executed (S58).

In the event that verification of the public key certificate corresponding to the signer of the attribute certificate (AC) fails (No in S59), the flow proceeds to step 560, and error processing is performed. For example, subsequent processing is cancelled. In the event that verification of the public key certificate is successful (Yes in S59), the public key is extracted from the public key certificate corresponding to the signer of the attribute certificate (AC) (S61), and signature verification processing of the attribute certificate (AC) is performed using the extracted public key (S62). In the event of failing in the signature verification (No in S63), the flow proceeds to step S64, and error processing is performed, For example, subsequent processing is cancelled. In the event of succeeding in the signature verification (Yes in S63), the attribute certificate verification ends, and the flow proceeds to subsequent processing, i.e., other condition confirmation processing to be executed for providing services.

Let us now return to the sequence diagram in Fig. 20 to continue description. Upon verification of the group attribute certificate (Gp. AC) in step S157 being executed by the above-described processing, the security module (SM) outputs the verification results to the service provider (SP), and in the event that verification is not successful, error processing is performed and providing of services is cancelled without being executed. In this case, processing may be executed wherein the end entity is notified that verification of the group AC was unsuccessful.

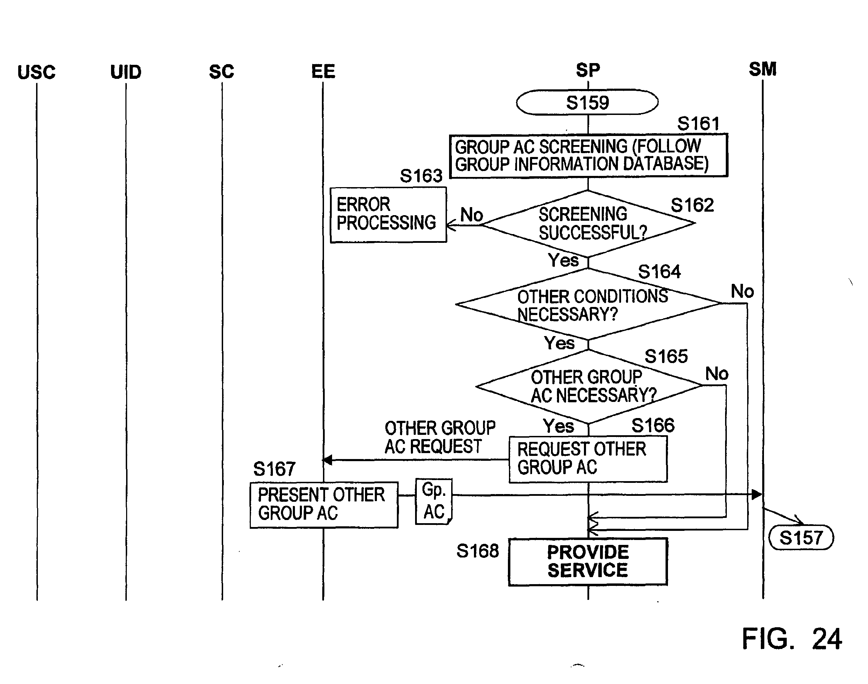

Upon verification of the group attribute certificate (Gp. AC) succeeding and the authenticity of the group attribute certificate (Gp. AC) being confirmed, the flow proceeds to step S161. The processing from step S161 on will be described with reference to Fig. 24. In step S161, screening of the group attribute certificate (Gp. AC) is performed. Screening is executed based on the group information database which the service provider holds.

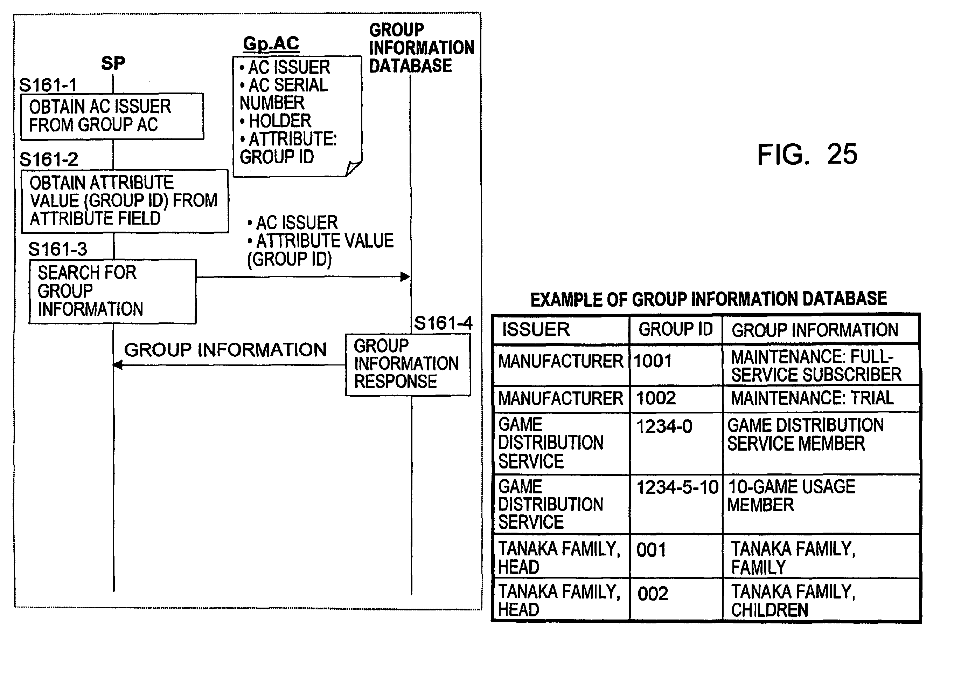

The screening processing of the group attribute certificate (Gp. AC) will be described with reference to Fig. 25. In step S161-1, the service provider (SP) obtains issuer information from the verified group attribute certificate (Gp. AC). Further, in step S161-2, the attribute value, i.e., the group identification information (group ID) is obtained from the attribute field.

In step S161-3, the group information data is searched based on the AC issuer and group ID obtained from the group attribute certificate (Gp. AC), and whether or not a registered entry exists is confirmed. In the event that there is a corresponding registration entry, group information is obtained from the group information database in step S161-4.

Let us return to the sequence diagram in Fig. 24 to continue description. In the event that there is no group information registered corresponding to the group attribute certificate (Gp. AC), or in the event that user does not satisfy the conditions indicated in the group information, screening is unsuccessful (No in S162), and error processing is executed in step S163. For example, a message to the effect that the screening of the group AC has been unsuccessful and the service cannot be executed, is notified to the end entity (EE). Also, in the event that verification and screening of multiple group attribute certificates is necessary for providing services, the conditions are managed in a service information database.

The service information database is a database storing information regarding what group AC is necessary for providing services. However, there is no particular need to hold the aforementioned group information database and the service information database independent one from another, and a database configuration may be made wherein the group information database and the service information database are integrated or linked. That is to say, a configuration may be made wherein data regarding which group AC is necessary to provide services is obtained from the above group information database or link information of the group information database. In the following, description will be made with the group information database also functioning as a service information database.

Let us return to the sequence diagram in Fig. 24 to continue description. In the event that screening is successful (Yes in S162), whether or not other conditions are necessary for executing service is determined. The conditions are conditions which the service provider can optionally set. Further, in step S165, determination is made regarding whether or not other group attribute certificates are necessary to provide services.

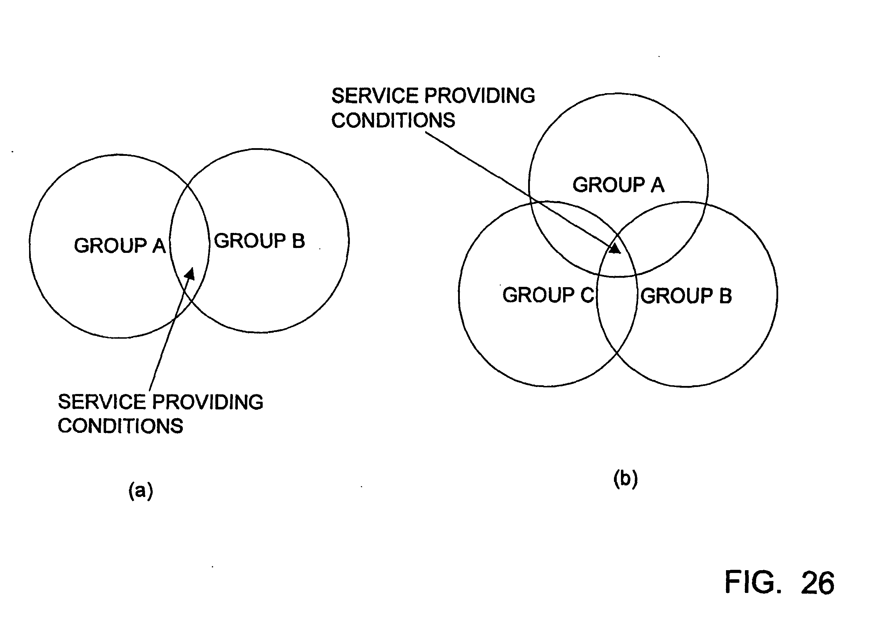

This is assuming a case wherein, as shown in Fig. 26, the user or user device belongs to multiple different groups as service providing conditions. For example, as shown in Fig. 26(a), a setting can be made wherein service is provided by proving belong to two different groups.

Specifically, the setting is that service is provided upon presenting and verification of two group attribute certificates; a group attribute certificate A (group A) proving that the residence of the user belongs to a certain region, and a group attribute certificate B (group B) indicating that the user device is a device of a certain manufacturer.

Further, as shown in Fig. 26(b), settings can be made wherein service is provided by proving belonging to three or more different groups. Specifically, the setting is that service is provided upon presenting and verification of three group attribute certificates; a group attribute certificate A (group A) proving that the residence of the user belongs to a certain region, a group attribute certificate B (group B) indicating that the user device is a device of a certain manufacturer; and a group attribute certificate C (group C) indicating that the age of the user is within a certain range.

In this way, in the event of providing services under the condition that the user or the user device belongs to multiple different groups, applying two or more different group attribute certificates issued to the user or user device, the service provider (SP) requests the end entity (EE) to present another group attribute certificate (Gp. AC) in step S166. In step S167, in response to the request, the group attribute certificate is transmitted to the security module (SM) of the service provider (SP) by the end entity (EE). The security module (SM) executes the processing from S157 on in Fig. 20 regarding the group attribute certificate newly received from the end entity (EE), i.e., group attribute certificate verification processing, screening processing, and so forth.

Under the condition that verification and screening of the group attribute certificates necessary for providing services has been successful, service providing is executed in step S168. These services are varied such as distribution of contents provided by a service provider, payment processing, remote controlling of devices which are user devices (e.g., home appliances), remote maintenance processing, communication services, and so forth. Specific examples of these will be described later on.

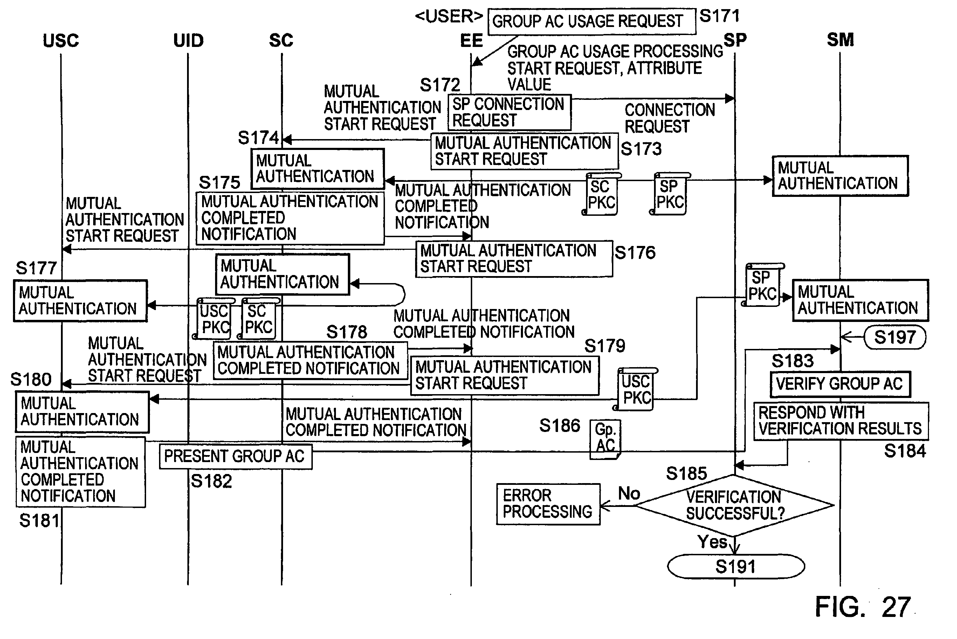

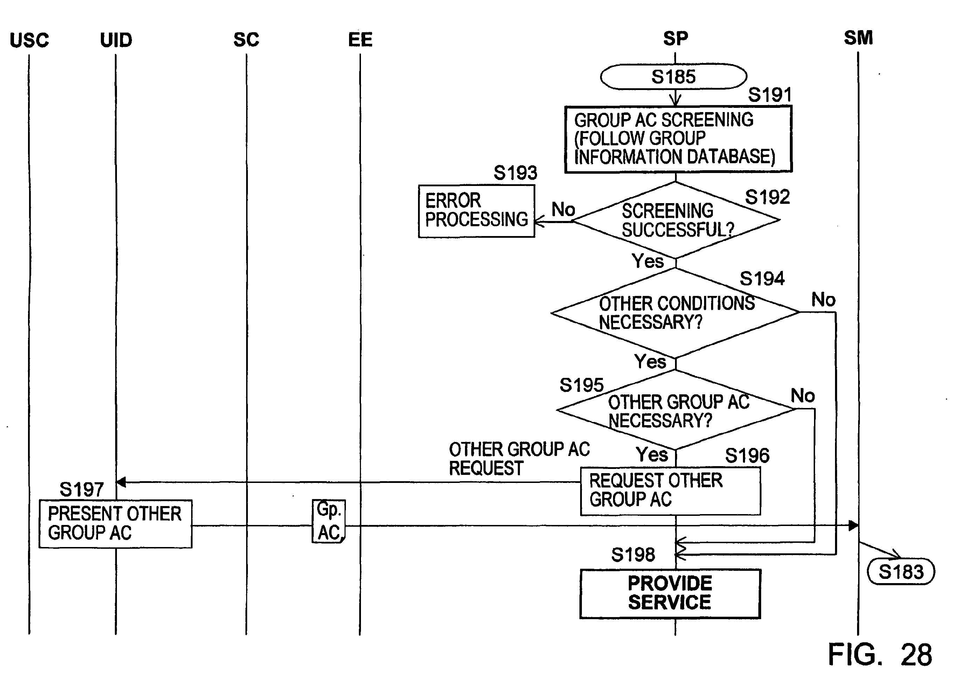

Next, the processing up to providing of services, based on a group attribute certificate issued corresponding to a user security chip (USC) within a user identification device (UID) serving as a user devices will be described with reference to Fig. 27 and Fig. 28. A user identification device (UID) is a device which functions as an individual identification device. Group attribute certificates can be individually issued to end entities and user identification devices. Basically, a group attribute certificate issued to a user identification device is issued as a certificate enabling confirmation of whether or not the user himself/herself is member of a certain group. The UID is of a configuration wherein external communication can be made via the end entity (EE), so usage processing of the attribute certificates is also performed via the end entity (EE).

As with the processing in steps S151 through S155 in Fig. 20, the step S171 through S175 in Fig. 27 are processing centered on mutual authentication between the security chip (SC) within the end entity (EE) and the security module (SM) of the service provider (SP).

In the event that mutual authentication is established between the security chip (SC) within the end entity and the security module (SM) of the service provider (SP) in step S174, mutual authentication is performed between the user security chip (USC) within the user identification device (UID) and the security module chip (SC) within the end entity in step S177. This authentication processing is carried out via the connected device interface 231 (see Fig. 9) of the end entity (EE) and the user identification device (UID). This authentication processing can be executed as authentication processing based on the public key method described earlier with reference to Fig. 13, as processing centered on the encipherment processing unit (see Fig. 9) of the security chip and security module. In step S178, authentication completion notification including authentication established information is made to the end entity (EE), and the flow proceeds to the next step under the condition that authentication has been established.

In step S179, a mutual authentication start request is output to the user security chip (USC) from the end entity (EE), and in step S180, mutual authentication is executed between the USC and the security module (SM) of the service provider (SP). In step S181, an authentication completed notification including authentication established information is notified from the USC to the end entity (EE), and under the condition that authentication has been established, the user identification device (UID) transmits a group attribute certificate (Gp. AC) to the security module (SM) of the service provider (SP) in step S182. The group attribute certificate (Gp. AC) is a group attribute certificate (Gp. AC) issued to the user security chip (USC) of the user identification device (UID).

Upon receiving the group attribute certificate (Gp. AC) from the user security chip (USC), the security module (SM) of the service provider (SP) executes verification processing of the received group attribute certificate in step S183. This verification processing is the same as that described with reference to Fig. 21 through Fig. 23. Now, the processing of steps S184 through S198 (Fig. 28) is basically the same as the processing regarding the group attribute certificate corresponding to the security chip (SC) of the end entity described with reference to Fig. 20 and Fig. 24, and accordingly, description thereof will be omitted. However, in step S197 shown in Fig. 28, transmission of a new group attribute certificate is performed by the user identification device (UID).

As described above, in the event for a user identification device (UID) which does not have direct communication functions with the service provider (SC) to obtain a group attribute certificate corresponding to the user security chip (USC), there is the need to go through the end entity (EE). At this time, establishment of all of:
(1) Mutual authentication between the SC of the EE and the service provider (SP),
(2) Mutual authentication between the SC of the EE and the USC of the UID, and
(3) Mutual authentication between the USC of the UID and the service provider (SP),
for example, is performed in order for mutual authentication to be carried out between the user security chip (USC) and the service provider (SP). Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

Note that while in Fig. 20 and Fig. 24, processing using a group attribute certificate corresponding to the security chip (SC) of the end entity (EE) has been described, and in Fig. 27 and Fig. 28, processing using the group attribute certificate issued to the user security chip (USC) of the user identification device (UID) has been described, but a configuration may be made wherein service is provided based on verification and screening of multiple group attribute certificates, namely, a group attribute certificate corresponding to the security chip (SC) of the end entity (EE) and a group attribute certificate issued to the user security chip (USC) of the user identification device (UID), such as described with reference to Fig. 26 earlier. In this case, the processing shown in Fig. 27 and Fig. 28, and the processing shown in Fig. 20 and Fig. 24 is combined and executed.

For example, a configuration can be made wherein the service provider performs screening regarding whether or not an end entity (devices) serving as a user device is the object of service permission based on first group identification information obtained from a first group attribute certificate based on group definition with the end entity as a member, and performs screening regarding whether or not an user sent from the user identification device is the object of service permission based on second group identification information obtained from a second group attribute certificate based on group definition with the user as a member, and performs service-permissible determination processing under the condition that all group identification information has been determined to be the object of permitting service.

### [(4) Issuing and usage processing of group attribute certificates between user devices]

In the above description, a group attribute certificate has been described as being primarily applied as a certificate for confirming usage privileges for services to be provided from a service provider to a user device. While the group attribute certificate issuing entity is basically the group attribute authority (group AA), an arrangement may be made wherein the service provider (SP) executes the functions of the group attribute authority (group AA) and group ARA, to issue group attribute certificates under the own policies of the service provider (SP). Further, an arrangement may be made wherein a user device itself executes the functions of the group attribute authority (group AA) and group ARA, to issue group attribute certificates under the own policies of the user device. The following is a description of a configuration wherein a user device issues group attribute certificates and executes access restrictions to the user device using the group attribute certificates.

As for a specific usage arrangement, let us consider an access privilege management arrangement wherein, in the event that a user device (end entity) which is a communication processing device having communication functions for example, wants to permit access from only certain members, the user device issues group attribute certificates in which the certain members are set as a group, and other user devices requesting access are required to present the issued group attribute certificate, the presented group attribute certificate is verified, and access is permitted.

While this service providing arrangement, i.e., an access permission service providing arrangement can be realized with configurations wherein a service provider (SP) issues group attribute certificates, access management can be realized on an individual level by the user device setting certain friends, members of a family, same company, school, etc., as a group, and generating and issuing group attribute certificates storing as group identification information corresponding to the set group.

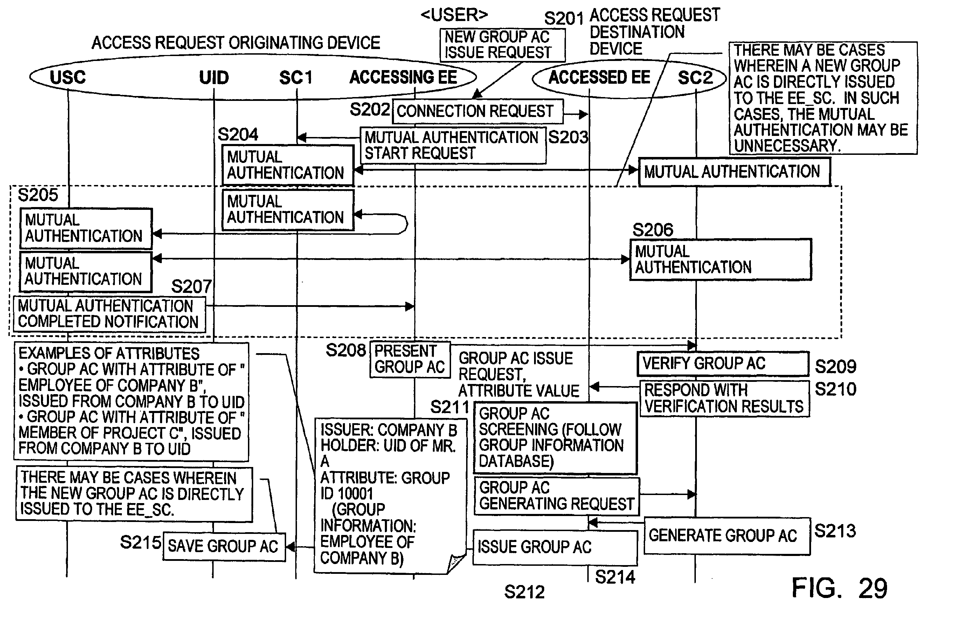

First, with reference to Fig. 29, description will be made with regard to a case wherein group attribute certificates are issued and stored among user devices.

Description will be made with regard to a case wherein the security chip (SC) of the end entity (EE) serving as the communication processing device which is the user device, is the issuing entity of the group attribute certificate, with reference to Fig. 29. Note that in Fig. 29,
UID: access-requesting user identification device (user device) control unit,
USC: access-requesting user security chip configured within the UID,
Access-requesting EE: access-requesting end entity (user device) control unit,
SC1: security chip configured within the access-requesting EE,
Access-requested EE: access-requested end entity (user device) control unit, and
SC2: security chip configured within the access-requested EE.

Here, the accessing EE and the accessed EE are each different user communication processing devices. Also, the security chips (SC1 and SC2), and user security chip (USC) have the same configuration as the security chip described earlier with Fig. 9, executing access privilege determining processing and the like by verification of group attribute certificate at the security chips.

That is to say, the access requested device which has received the group attribute certificate sent from the access requesting device to the access requested device, with a reception unit such as a network interface of the like, hands the received group attribute certificate to the security chip serving as the access privilege determining processing unit, and access privilege determining processing is carried out based on the received group attribute certificate within the security chip.

Note that the processing sequence diagrams of Fig. 29 and on describe the processing procedures from the stage of group attribute certificate issuing processing wherein access privilege is proved. That is top say, first, the security chip of a communication processing device executes group attribute certificate generating processing, and performs issuing processing of the group attribute certificate proving the privilege. Subsequently, in this sequence, the issued group attribute certificate is exchanged between communication processing devices, thereby confirming access privileges. Accordingly, the security chip of the communication processing device functions as the generating means and verifying means of group attribute certificates.

The processing procedures will be described following the sequence diagram in Fig. 29. First, in step S201, the access requesting user inputs a new issuing command for a group attribute certificate (Gp. AC) via the input interface of the end entity (accessing EE).

Upon the end entity (accessing EE) receiving input of the group attribute certificate (Gp. AC) issue request from the user, in step S202, the end entity (accessing EE) makes a connection request to the access requested end entity (accessed EE), and on the other hand, in step S203, outputs a mutual authentication start request to the security chip (SC) within the accessing end entity (accessing EE).

In step S204, mutual authentication is performed between the security chip (SC1) of the access requesting user device and the security chip (SC2) of the access requested end entity (accessed EE). This is executed as the public key certificate mutual authentication processing described with reference to Fig. 13, for example. In step S205, mutual authentication is performed between the security chip (SC1) of the access requesting user device and the user security chip (USC), and in step S206, mutual authentication is executed between the access requesting user security chip (USC) and the security chip (SC2) corresponding to the access requested end entity (accessed EE). In step S207, a mutual authentication completion notification which includes mutual authentication establishment/non-establishment is output from the access requesting user security chip (USC) to the end entity (EE).

Note that the processing of steps S205 through S207 is processing necessary in the event of issuing a group attribute certificate corresponding to the access requesting user security chip (USC), and can be omitted in the event of issuing a group attribute certificate corresponding to the access requesting security chip (SC1).

In the event that any one of the above mutual authentications is not established, continuation of the processing is cancelled. In the event that all mutual authentications are established, in step S208 the access requesting end entity (EE) presents a group attribute certificate (Gp. AC) which it already holds to the access requested security chip (SC2), and requests issuing of a new group attribute certificate (Gp. AC).

The processing here is an example of processing for verifying a group attribute certificate (Gp. AC) which the access requester already holds and issuing a new group attribute certificate (Gp. AC) with different definition. That is to say, conformation of attributes by the already-existing group attribute certificate (Gp. AC) is included in the issuing policy of the group attribute certificate (Gp. AC) to be newly issued. For example, confirmation of the identification of the user, confirmation that the device is of a certain manufacturer, or the like, is executed based on the already-existing group attribute certificate (Gp. AC), and issuing processing of the new group attribute certificate (Gp. AC) is performed under the condition that the confirmation can be made.

An example of an already-existing group attribute certificate (Gp. AC) is a group attribute certificate issued by a credit card company, issued corresponding to the user by performing mutual authentication with the user security chip (USC) of the user identification device (UID), for example. Another is a group attribute certificate stored in an end entity (EE) as the result of mutual authentication with the security chip (SC) of an end entity (EE) such as a communication terminal serving as a communication processing device, a PC, or the like, issued by a manufacturer proving that the terminal has been manufactured by the manufacturer.

The security chip (SC2) of the access requested device verifies the already-issued group attribute certificate received from the end entity (EE) of the access requesting device. This verification processing is the same processing as that described with reference to Fig. 21 through Fig. 23 earlier, and is processing including attribute certificate signature verification, corresponding and chain public key certificate verification, and so forth.

The access requested security chip (SC2) outputs the verification results to the access requested end entity (EE), and in the event that verification is unsuccessful, does not execute subsequent processing but cancels the processing, as error processing. In this case, processing for transmitting an error notification to the accessing end entity (EE) may be performed.

In the event that verification of the group attribute certificate (Gp. AC) is successful and the authenticity of the group attribute certificate (Gp. AC) has been confirmed, the flow proceeds to step S211. In step S211, screening of the group attribute certificate (Gp. AC) is performed. Screening is executed based on the group information database which the access requested end entity (EE) holds. This screening processing is processing the same as the processing described with reference to Fig. 25 earlier. That is to say, issuer information and group identification information (group ID) is obtained from the verified group attribute certificate (Gp. AC), the group information database is searched based on the obtained AC issuer and group ID, and whether or not there is a registered entry is confirmed. In the event that there is a corresponding registration entry, the group information is obtained from the group information database.

In the event that there is no group information registered corresponding to the group attribute certificate (Gp. AC), or in the event that the group information conditions are not satisfied, the screening is unsuccessful, and the processing is canceled as an error. On the other hand, in the event that screening is successful, in step S212 a new group attribute certificate generating request is output to the security chip (SC2) following the request, the security chip (SC2) generates the group attribute certificate following the request in step S213, and in step S214 the new group attribute certificate (Gp. AC) is issued from the accessed end entity (EE) to the user identification device (UID) of the accessing user device.

In the event that the access requesting user device is, for example, a communication terminal device such as a PC storing secure information of a company B, the newly-issued group attribute certificate will correspond to attributes such as
"attribute of 'employee of company B', issued from company B to UID",
"attribute of 'member of project C', issued from company B to UID", or the like.

The access requesting user device which is a communication terminal device such as a PC storing secure information of company B can request presentation of a group attribute certificate at the time of an access request from an indeterminate user device, executes verification and screening of the presented group attribute certificate, and determine whether or not access is permissible.

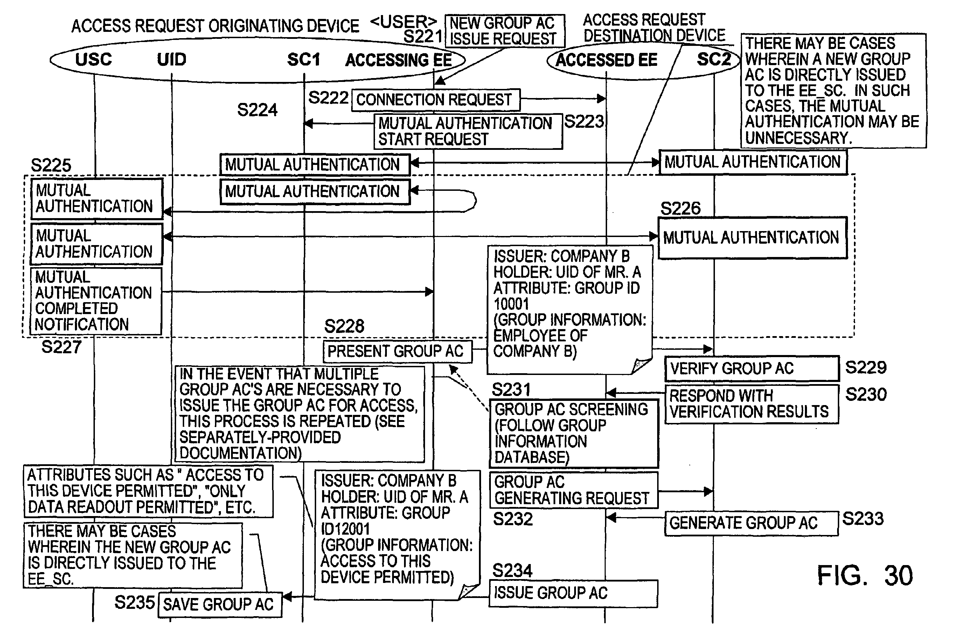

Next, an issuing processing sequence of a group attribute certificate having access permission information as an attribute will be described with reference to Fig. 30. In Fig. 30, steps S221 through S235 correspond to step S201 through S215 in Fig. 29, and the processing thereof is the same.

In Fig. 30, in step S228 the group attribute certificate which the access requesting end entity (accessing EE) presents to the security chip (SC2) of the access requested user device is a certificate having "attribute of 'employee of company B', issued from company B to UID", and the security chip (SC2) of the access requested user device executes verification and screening of this attribute certificate and issues a new group attribute certificate, i.e., a certificate having as the attribute, attribute information permitting access to the device (access requested user device).

Now, in the event that proof by another group attribute certificate besides the "attribute of 'employee of company B', issued from company B to UID" is necessary as conditions for issuing the certificate having the attribute information which is group information permitting access to the device (access requested user device), the processing of steps S228 through S231 is repeated as many times as the number of group attribute certificates necessary.

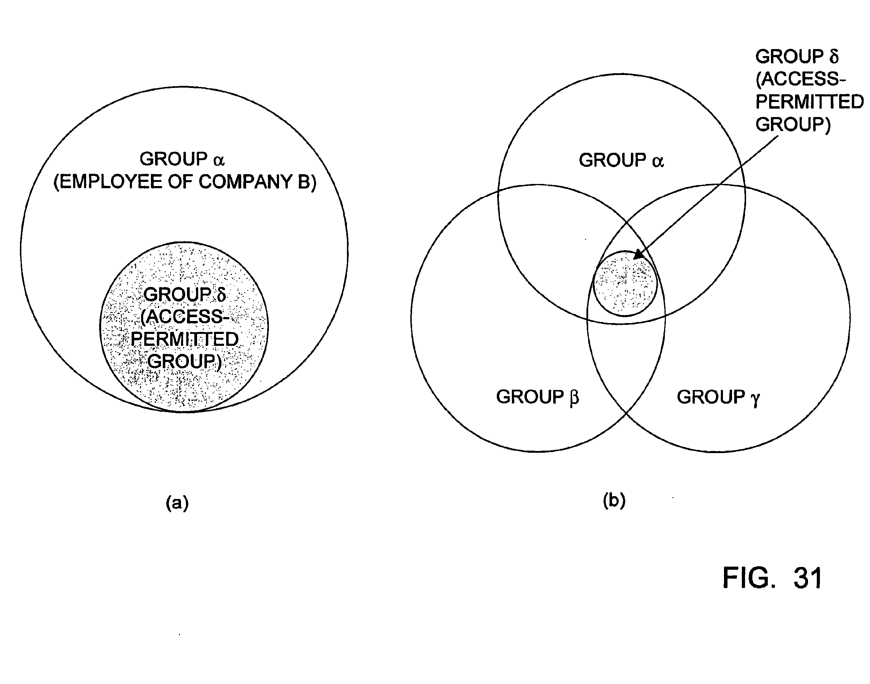

An example of correlation between a group attribute certificate having access permission information as group information, and another group attribute certificate, will be described with reference to Fig. 31. In (a), a group attribute certificate having access permission information as group information corresponds to a group δ, and the condition for issuing a group attribute certificate corresponding to this group δ for example is being a member of a group α. Being a member of the group α can be proved with the group attribute certificate proving the "attribute of 'employee of company B', issued from company B to UID", and the group attribute certificate corresponding to the group δ is issued under the condition that the group attribute certificate proving membership of the group α has been presented and that the verification and screening thereof have succeeded.

In Fig. 31(b), a group attribute certificate having access permission information as group information corresponds to the group δ, and the condition for issuing a group attribute certificate corresponding to this group δ for example is satisfying all of the conditions of being a member of the group α, being a member of a group β, and being a member of a group γ.

Specifically, the setting is that the group attribute certificate is issued having access permission information corresponding to the group δ as group information upon presenting and verification of three group attribute certificates; a group attribute certificate α (group α) proving that the residence of the user belongs to a certain region, a group attribute certificate β (group β) indicating that the user device is a device of a certain manufacturer; and a group attribute certificate γ (group γ) indicating that the age of the user is within a certain range.

By issuing a group attribute certificate to a user identification device serving as an individual identification device making up an access requesting device, access can be permitted in screening based on the group attribute certificate issued to the user identification device serving as the individual identification device even in the event that the end entity (EE) which is the communication processing device has been changed, thereby preventing cases wherein access is denied due to changing the communication processing device (end entity (EE)).

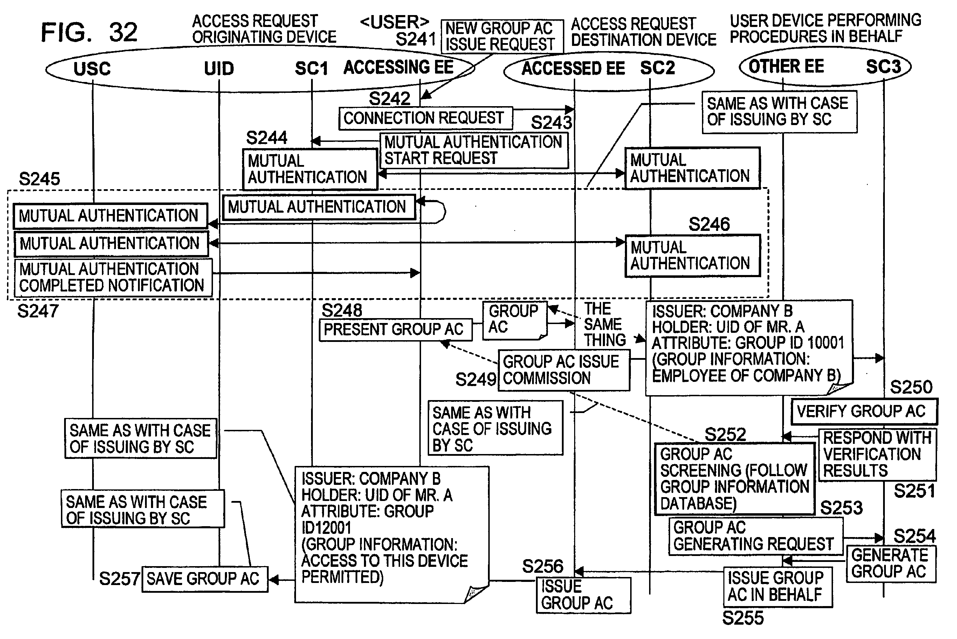

Next, the processing sequence executed for an access requested user device to not execute the attribute certificate issuing processing itself but commission the attribute certificate issuing processing to another user device will be described with reference to Fig. 32. In Fig. 32,
UID: access-requesting user identification device (user device) control unit,
USC: access-requesting user security chip configured within the UID,
Access-requesting EE: access-requesting end entity (user device) control unit,
SC1: security chip configured within the access-requesting EE,
Access-requested EE: access-requested end entity (user 5 device) control unit,
SC2: security chip configured within the access-requested EE, and
Other EE: third user device (procedure agent user device) SC3: security chip of other EE.

In Fig. 32, steps S241 through S248 correspond to steps S201 through 208 in Fig. 29, and the processing is the same, so description will be omitted. In step S248, the access requested user device end entity (accessed EE) transfers the group attribute certificate presented from the access requesting end entity (accessing EE) to the security chip (SC3) of a procedure agent user device, the security chip (SC3) executes the verification (S250) of the transferred group attribute certificate, and the end entity (other EE) of the procedure agent user device further executes screening (S252) based on the verification result notification (S251).

Further, under the condition that verification and screening has been successful, a group attribute certificate generating request is output to the security chip (SC3) (S253), in step S254 the security chip (SC3) generates a group attribute certificate according to the request, in step S255 a new group attribute certificate (Gp. AC) is issued to the user identification device (UID) of the access requesting user device from the procedure agent end entity (other EE), and in step S257 the user identification device (UID) of the access requesting'user device stores the received group attribute certificate.

The processing sequence shown in Fig. 32 is a configuration wherein, in the event that the access requested user device does not have attribute certificate verification, screening and issuing functions, a third device can be commissioned to carry out these processes. Note that the procedure agent user device may be configured of a service provider (SP) or the like.

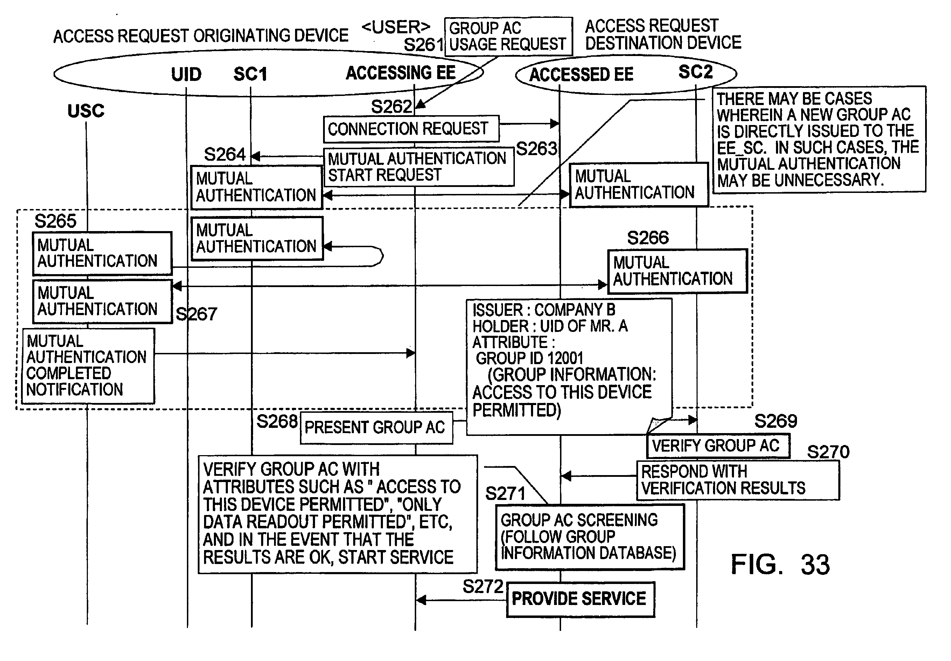

Next, the service usage sequence having access permitted/not-permitted determining processing, using a group attribute certificate wherein access permission information is defined as group information, will be described with reference to Fig. 33.

First, in step S261, an access request command which is group attribute certificate (Gp. AC) usage processing, is input by the access requesting user via the input interface of the end entity (accessing EE).

Upon the end entity (accessing EE) receiving the request from the user, in step S262 the end entity (accessing EE) makes a connection request to the access requested end entity (accessed EE), and on the other hand, in step S263, outputs a mutual authentication start request to the security chip (SC1) within the accessing end entity (accessing EE).

In step S264, mutual authentication is performed between the security chip (SC1) of the access requesting user device and the security chip (SC2) of the access requested end entity (accessed EE). This is executed as the public key certificate mutual authentication processing described with reference to Fig. 13, for example. In step S265, mutual authentication is performed between the security chip (SC1) of the access requesting user device and the user security chip (USC), and in step S266, mutual authentication is executed between the access requesting user security chip (USC) and the security chip (SC2) corresponding to the access requested end entity (accessed EE). In step S267, a mutual authentication completion notification which includes mutual authentication establishment/non-establishment is output from the access requesting user security chip (USC) to the end entity (EE).

Note that the processing of steps S265 through S267 is processing necessary in the event of using a group attribute certificate corresponding to the access requesting user security chip (USC), and can be omitted in the event of using a group attribute certificate corresponding to the access requesting security chip (SC1).

In the event that any one of the above mutual authentications is not established, continuation of the processing is cancelled. In the event that all mutual authentications are established, in step S268 the access requesting end entity (EE) presents a group attribute certificate (Gp. AC) to the access requested security chip (SC2), and requests access permission.

The security chip (SC2) of the access requested device verifies the group attribute certificate received from the access requesting end entity (EE) (S269). This verification processing is the same processing as that described with reference to Fig. 21 through Fig. 23 earlier, and is processing including attribute certificate signature verification, corresponding and chain public key certificate verification, and so forth.

The access requested security chip (SC2) outputs the verification results to the access requested end entity (EE) (S270), and in the event that verification is unsuccessful, does not execute subsequent processing but cancels the processing, as error processing. In this case, processing for transmitting an error notification to the accessing end entity (EE) may be performed.

In the event that verification of the group attribute certificate (Gp. AC) is successful and the authenticity of the group attribute certificate (Gp. AC) has been confirmed, the flow proceeds to step S271. In step S271, screening of the group attribute certificate (Gp. AC) is performed. Screening is executed based on the group information database which the access requested end entity (EE) holds. This screening processing is processing the same as the processing described with reference to Fig. 25 earlier. That is to say, issuer information and group identification information (group ID) is obtained from the verified group attribute certificate (Gp. AC), the group information database is searched based on the obtained AC issuer and group ID, and whether or not there is a registered entry is confirmed. In the event that there is a corresponding registration entry, the group information is obtained from the group information database. The group information includes information such as for example, "access permitted to this device" or "only data readout permitted" or the like, and services are provided following this information.

In the event that there is no group information registered corresponding to the group attribute certificate (Gp. AC), or in the event that the group information conditions are not satisfied, the screening is unsuccessful, and the processing is canceled as an error. On the other hand, in the event that screening is successful, in step S272 service providing is permitted, i.e., access to a service registered as group information, e.g., a device, is permitted.

### [(5) Specific usage examples of group attribute certificate]

(5-1) Content distribution service
(5-2) Remote control service
(5-3) Remote maintenance service
(5-4) Personal communication service

These usage arrangements will each be described.

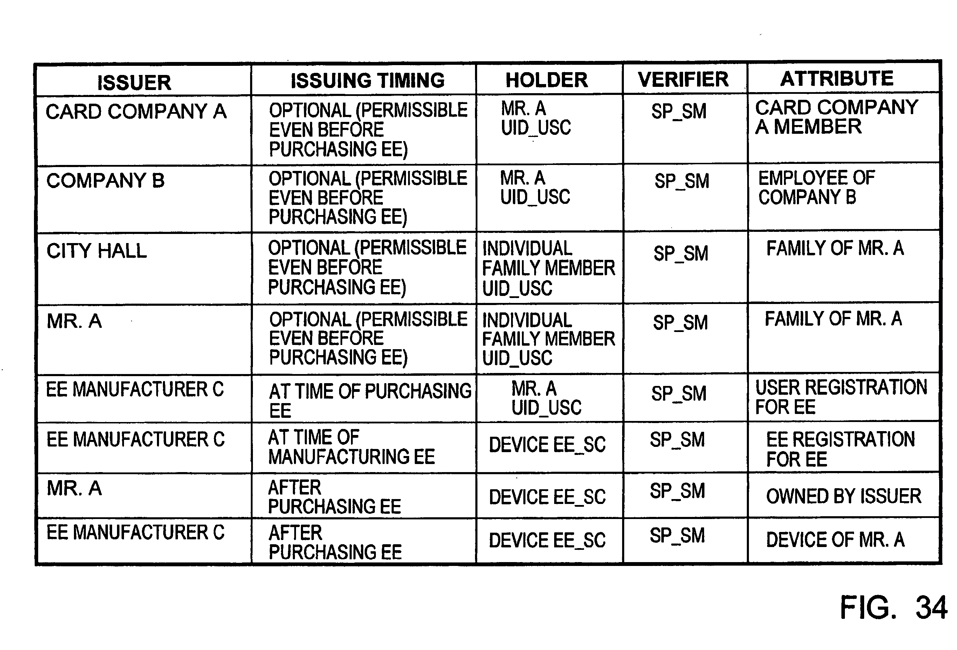

Fig. 34 shows an example of group attribute certificates used for the various services. Fig. 34 illustrates the group attribute certificate issuer, issuing timing, holder, verifier, and attribute, in a correlated manner. As described above, the issuer may be a variety of issuing entities besides a group ARA which only performs group attribute certificate issuing processing, such as a service provider, user device, etc, and examples of a service provider include "card company A" which issues credit cards, a certain organization, such as "company B" or "City hall", an individual user "Mr. A", "EE manufacturer C" which manufactures end entities (EE) such as PCs, communication terminals, game devices, and so forth.

The timing for issuing the group attribute certificate may be set to various timings, such as an arbitrary timing, at the time of purchasing, manufacturing, or after purchasing, the end entity (EE) such as a PC, communication terminal, game device, or the like, according to the service to be provided based on the certificate.

The holder of the group attribute certificate is a user or a user device which is a member of a certain group, and a group attribute certificate issued with a user, "Mr. A" for example, as the holder thereof, is issued based on authentication of the user security chip (USC) of the user identification device (UID) of Mr. A, to the user security chip (USC), and group attribute certificates issued to the members of a family, for example, are issued based on authentication of the user security chips (USC) of the user identification devices (UID) of the family members, to the user security chips (USC), and group attribute certificates provided to user devices such as PCs, communication terminals, game devices, etc., are issued based on authentication of the user security chip (USC), to the security chip (SC) of the end entity (EE).

The executer of the verification processing of these group attribute certificates is the security module (SM) of the service provider (SP) which provides the services based on attributes proven by the group attribute certificates, or, though not shown in the drawings, the security chips (SC, USC) of user devices.

Examples of the holder attributes proven by the group attribute certificates include "card company A member", "employee of company B"," family of Mr. A ", "registered user", "registered user device", "device (EE) of group attribute certificate issuer", "device (EE) of Mr. A", and so forth, with the above attributes being proved regarding the presenting user or presenting device of the group attribute certificate, through verification and screening of the group attribute certificate. The group attribute certificate verifier such as a service provider or the like provides predetermined services based on the proven holder attributes.

### (5-1) Content distribution service

First, description will be made regarding a content distribution service using a group attribute certificate. There are various arrangements for confirming the usage privileges for contents in content distribution applying group attribute certificates.

First, as one example, description will be made regarding a processing example wherein, based on a first group attribute certificate A proving that a user is a member holding a credit card issued by a credit card company, a second group attribute certificate B is issued by a content distribution service provider which is a content distribution service entity including content usage permission information as group information, and the second group attribute certificate B is applied to execute confirmation of the content usage privileges, upon which the content distribution service is carried out.

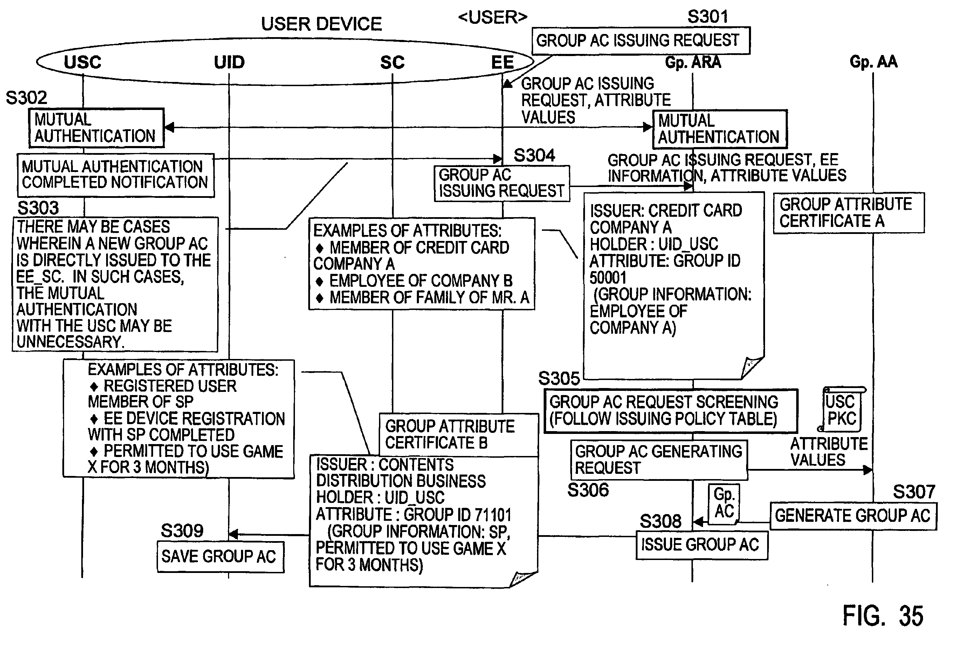

The processing for issuing the second group attribute certificate B including the content usage privilege as group information will be described, based on the first group attribute certificate A proving that the user device is a credit card member, with reference to Fig. 35.

In the example in Fig. 35, the first group attribute certificate A issued to the user security chip (USC) of the user identification device (UID) proving credit card membership is presented to a group attribute certificate registration authority (Gp. ARA), and a group attribute authority (Gp. AA) issues the second group attribute certificate B of which the content distribution service provider is the issuing entity. Here, the content distribution service provider is assumed to have agreed with the group attribute certificate registration authority (Gp. ARA) on group attribute certificate issuing policies.

In Fig. 35,
UID: user identification device (user device) control unit,
USC: user security chip configured within the UID,
EE: end entity (user device) control unit,
SC: security chip configured within the EE,
Group ARA: group attribute certificate registration authority control unit, and
Group AA: group attribute authority control unit.

First, in step S301, the user inputs a group attribute certificate (Gp. AC) issuing request command via the input interface of the end entity (EE). At this time, the user inputs an attribute value which is necessary for issuing the group attribute certificate. The attribute value is a group ID, or information proving belonging to the group.

Upon receiving the group attribute certificate (Gp. AC) issuing request input from the user of the end entity (EE), in step S302 mutual authentication is performed between the user security chip (USC) and the group ARA. Though omitted here, at this time, establishment of all of:
(1) Mutual authentication between the SC of the EE and the group ARA,
(2) Mutual authentication between the SC of the EE and the USC of the UID, and
(3) Mutual authentication between the USC of the UID and the group ARA,
for example, is performed in order for mutual authentication to be carried out between the user identification device (UID) having no direct communication functions with the group ARA. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

The authentication processing is executed primarily as encipherment processing at the encipherment processing units (see Fig. 9) of the security chips in the respective devices, such as public key mutual authentication processing described with reference to Fig. 13 earlier, for example. In step S303, a mutual authentication completion notification, including results information of mutual authentication established/not-established, is output from the user security chip (USC) to the end entity. In the event that mutual authentication is not established, continuation of processing is cancelled. In the event that mutual authentication is established, in step S304, the end entity (EE) transmits a group attribute certificate (Gp. AC) issuing request to the group ARA. The group attribute certificate (Gp. AC) issuing request includes end entity information and attribute information (e.g., group ID, group information), and further, includes the first group attribute certificate A proving being a credit card member, to be presented as a condition for issuing the second group attribute certificate B of which the content distribution provider is the issuing entity.

After verifying the first group attribute certificate A proving being a credit card member, the group ARA which has received group attribute certificate (Gp. AC) issuing request from the end entity (EE) makes reference to the issuing policy table in step S305 to determine whether or not a group attribute certificate can be issued compliant with the policies, and if this is permissible the flow proceeds to step S306, and if not permissible, the end entity is notified with a issuing not-permissible message.

In step S306, the group ARA transmits a group attribute certificate (Gp. AC) issuing request having an attribute value (group ID) to the group AA, and in step S307, the group AA stores the group ID as attribute information, generates the group attribute certificate affixed with the electronic signature, i.e., the second group attribute certificate B including content usage permission information as group information, and transmits this to the group ARA.

In step S308, the group ARA transmits the issued group attribute certificate (Gp. AC) to the user identification device (UID). The user identification device (UID) stores the group attribute certificate (Gp. AC) that has been received. At this time, verification of the electronic signature of the group attribute certificate (Gp. AC) is performed, and after confirming that there has been no tampering, is stored in memory.

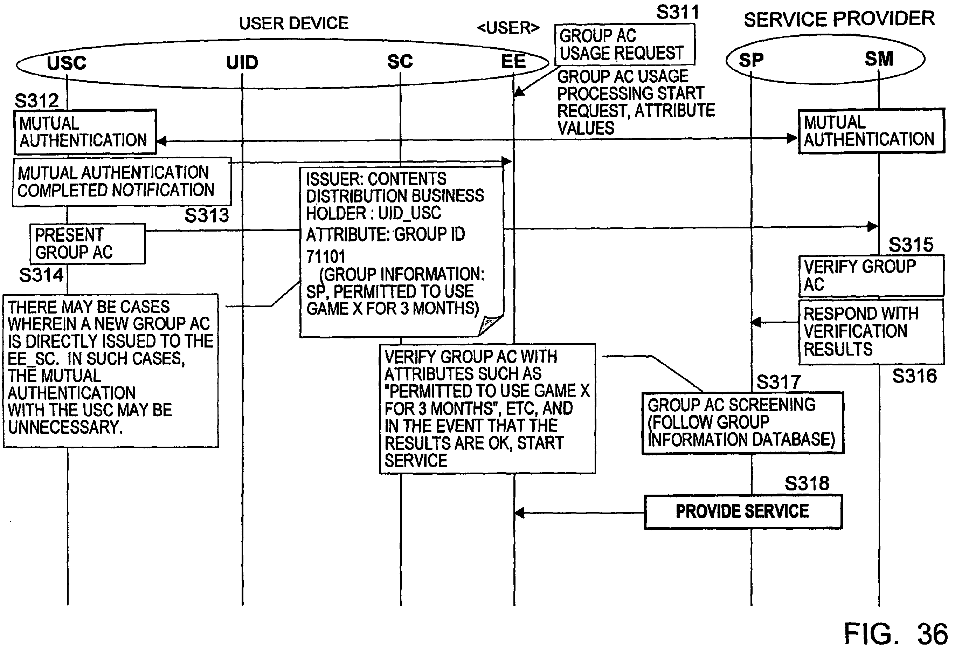

Next, with reference to Fig. 36, description will be made regarding processing wherein the group attribute certificate B issued by the above processing, i.e., the second group attribute certificate B including content usage permission information as group information, is presented to the service provider, confirmation is made that there are content usage privileges, and providing of service, i.e., content distribution services, is received. In Fig. 36, UID: user identification device (user device) control unit, USC: user security chip configured within the UID,
EE: end entity (user device) control unit,
SC: security chip configured within the EE,
SP: service provider control unit, and
SM: security module within SP.

Also note that the security chip (SC), the user security chip (USC), and the security module (SM), have the same configuration as the security chip described earlier in Fig. 9, and privilege determining processing and the like is performed by verification of the group attribute certificate at the security chip. That is to say, the service provider which has received, with a reception unit such as a network interface or the like, the group attribute certificate sent from the service requesting device to the service requested device, hands the received group attribute certificate to the security module (chip) serving as a privilege determining processing unit, and privilege determining processing is executed based on the group attribute certificate received within the security module (chip).

First, in step S311, a user inputs a group attribute certificate (Gp. AC) usage request command via the input interface of the entity (EE). At this time, the user specifies he group ID set in the group attribute certificate to be used. However, in the event that a single group ID can be determined by specifying a certain service, an arrangement may be made wherein only the service is specified.

Upon the end entity (EE) receiving the group attribute certificate (Gp. AC) usage request input from the user, mutual authentication is performed between the user security chip (USC) and the security module (SM) of the service provider in step S312. Now, while omitted in the illustration here, in the event that a user identification device (UID) does not have direct communication functions with the service provider (SP), all of:
(1) Mutual authentication between the SC of the EE and the SP-SM,
(2) Mutual authentication between the SC of the EE and the USC of the UID, and
(3) Mutual authentication between the USC of the UID and the SP-SM,
is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

The authentication processing is executed as public key mutual authentication processing described earlier with reference to Fig. 13, centered on the encipherment processing unit of the security chip and security module. In step S313, a mutual authentication completion notification including mutual authentication established/not-established result information is output from the security chip to the end entity. In the event that the mutual authentication is not established, continuation of the processing is cancelled. In the event that mutual authentication is established, in step S314 the user security chip (USC) transmits the group attribute certificate (Gp. AC) stored in its own memory to the security module (SM) of the service provider (SP). The group attribute certificate (Gp. AC) is the second group attribute certificate B including the content usage permission information obtained by the processing described earlier with reference to Fig. 35 as group information.

In step S315, the security module (SM) which has received the group attribute certificate (Gp. AC) from the user security chip (USC) executes group attribute certificate verification processing. The verification processing of the group attribute certificate is as described earlier with reference to Fig. 21 through Fig. 23, and is executed as processing including attribute certificate signature verification, corresponding public key certificate (PKC) and chain public key certificate confirmation processing, and so forth.

Following verification processing of the group attribute certificate (Gp. AC), the security module (SM) outputs the verification results to the service provider (SP), and in the event that verification is not established, providing of services is not executed and the processing is cancelled as error processing. In this case, processing may be performed wherein the end entity is notified to the effect that verification of the group AC was not established.

In the event that the verification of the group attribute certificate (Gp. AC) is successful and the authenticity of the group attribute certificate (Gp. AC) has been confirmed, the flow proceeds to step S317. In step S317, screening of the group attribute certificate (Gp. AC) described earlier with reference to Fig. 25 is carried out. The screening is executed based on the group information database which the service provider holds. That is to say, the service provider (SP) obtains the issuer information and group ID from the verified group attribute certificate (Gp. AC), searches the group information database based on the obtained information, and confirms whether or not there is a registered entry. In the event that there is a corresponding registered entry, the group information is obtained from the group information database.

The group information in this case is group information of the content usage permission information, e.g., information permitting usage of a game X for 3 months, and so forth. In step S318, the service provider (SP) performs service providing, i.e., distributes the game program with a 3-month usage period set therein, to the end entity (EE) of the user device in accordance with the group information.

While the above-described content distribution service processing is an example of performing content usage privilege confirmation with one group attribute certificate, a processing example will be described next regarding a case of providing service upon confirming the content usage privilege of a user or user device, applying multiple different group attribute certificates proving different group attributes.

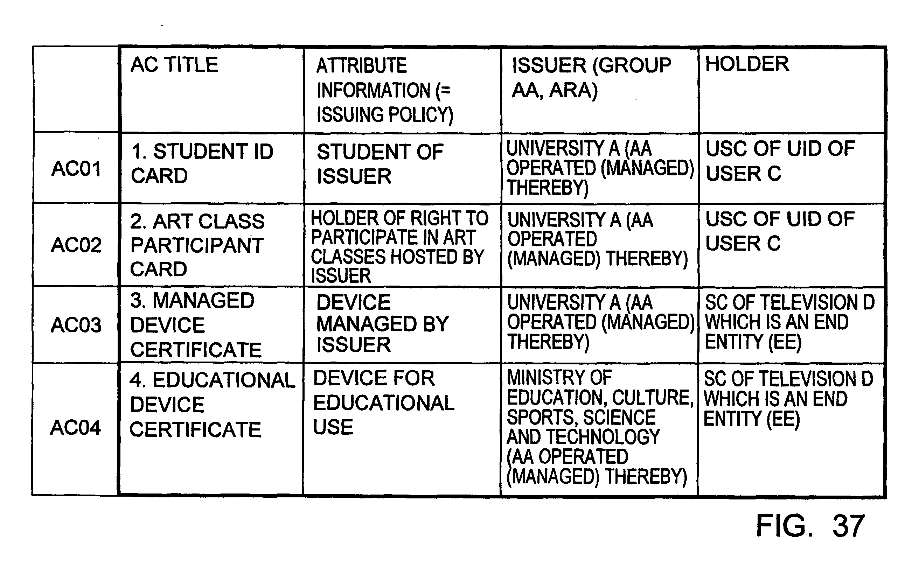

Fig. 37 illustrates the multiple group attribute certificates to be applied in the present example. A group attribute certificate (Gp. AC) AC01 is issued by university A, and is a student ID card proving that the holder is a student at university A, and is a group attribute certificate (Gp. AC) issued based on authentication with the user security chip (USC) of the user identification device (UID) of C. A group attribute certificate (Gp. AC) AC02 is issued by university A, and is an art class participant card proving that the holder has privileges to take art classes, and is a group attribute certificate (Gp. AC) issued based on authentication with the user security chip (USC) of the user identification device (UID) of C.

The group attribute certificate (Gp. AC) AC03 is issued by university A, and is a managed device certificate proving that the device is a device managed by university A, and is a group attribute certificate (Gp. AC) issued based on authentication with the security chip (SC) of a television set D serving as an end entity (EE). A group attribute certificate (Gp. AC) AC04 is issued by the Ministry of Education, Culture, Sports, Science and Technology, and is a educational device certificate proving that the device is a device for educational use, and is a group attribute certificate (Gp. AC) issued based on authentication with the security chip (SC) of a television set D serving as an end entity (EE).

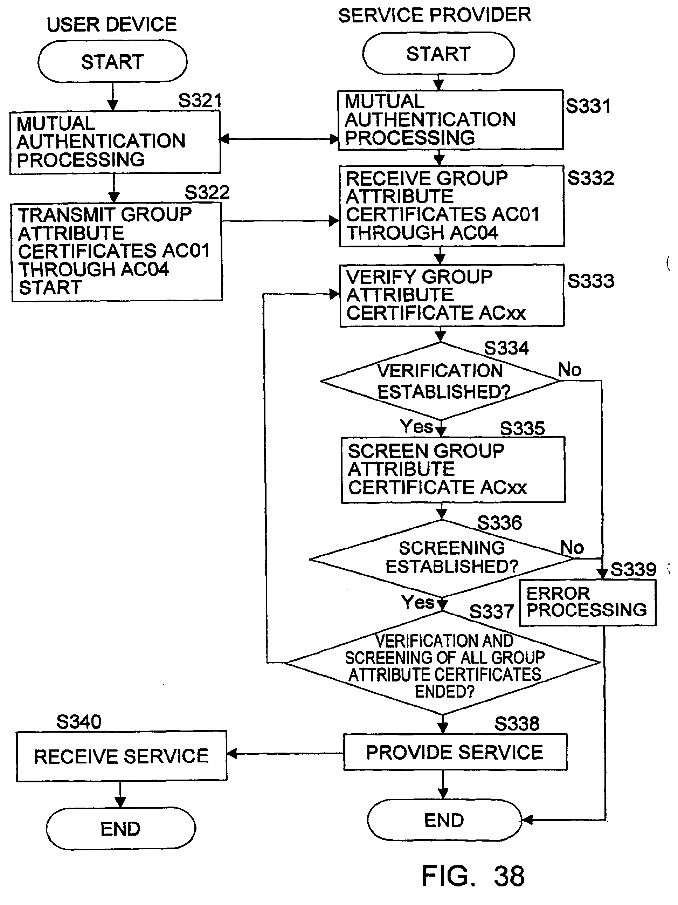

The content usage privilege confirmation and service providing processing applying these four different group attribute certificates AC01 through AC04 will be described with reference to Fig. 38.

Fig. 38 shows the user device side processing to the left and the service provider side processing to the right. Note that the user device includes the end entity (EE), the security chip (SC) within the EE, the user identification device (UID), and the user security chip (USC) within the UID.

In steps S321 and 331, mutual authentication processing is executed between the user device and service provider. Note that the mutual authentication is executed according to the device to which the group attribute certificate to be presented has been issued, with mutual authentication between either one or both of the SC of the EE and the SP-SM, and the USC of the UID and the SP-SM being carried out.

In the case of the present embodiment, of the four group attribute certificates shown in Fig. 37, AC01 and AC02 have been issued to the user security chip (USC) of the user identification device (UID) of C, and AC03 and AC04 have been issued to the security chip (SC) configured in the television set D serving as the end entity (EE), so the processing consists of the user identification device (UID) ff C connecting to the television set D serving as the end entity (EE) via the connected device interface 231 (see Fig. 9), connecting to the security module (SM) of the service provider (SP) via the network interface 232 (se Fig. 9) of the television set D serving as the end entity (EE), and performing mutual authentication between the SC of the EE and the SP-SM, and mutual authentication between the USC of the UID and the SP-SM.

The authentication processing is executed as public key mutual authentication processing described earlier with reference to Fig. 13, centered on the encipherment processing unit of the security chip and security module. In the event that the mutual authentication is not established, continuation of the processing is cancelled. In the event that mutual authentication is established, in step S322 the device transmits the multiple group attribute certificates (Gp. AC) AC01 through AC04 stored in its own memory to the security module (SM) of the service provider (SP). The group attribute certificates (Gp. AC) AC01 through AC04 are the four types of group attribute certificates shown in Fig. 37.

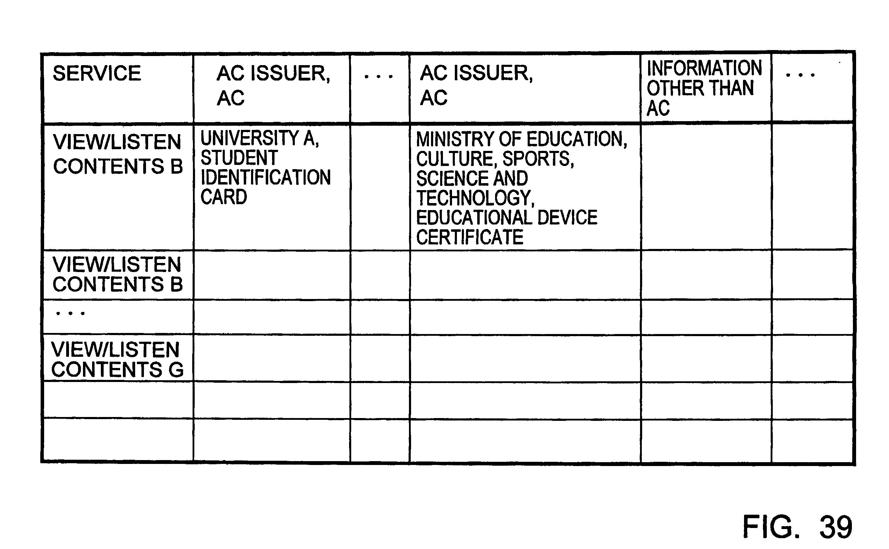

At the time of providing services, the combined data of the group attribute certificates necessary may be of a configuration notified from the service provider side to the user side. The service provider holds group attribute certificate combination table data set as the service providing conditions shown in Fig. 39, for example. In the example shown in Fig. 39, data is stored indicating that in order to view the content B which is a service, the group attribute certificate which is a student ID card issued by the university A, the group attribute certificate indicating which is an education device certificate issued by the Ministry of Education, Culture, Sports, Science and Technology are necessary, and this table is applied to notify the user device regarding presentation of necessary group attribute certificates.

In step S332, the security module (SM) which has received the four types of group attribute certificates (Gp. AC) AC01 through AC04 necessary for providing the services FROM the user device in this example sequentially selects one group attribute certificate from the multiple group attribute certificates in step S333, and executes verification processing. The group attribute certificate verification processing is as described earlier with reference to Fig. 21 through Fig. 23, and is executed as processing including attribute certificate signature verification, corresponding public key certificate (PKC) and chain public key certificate confirmation processing, and so forth.

Following verification processing of the group attribute certificate (Gp. AC), in the event that verification is not established (No in S334), providing of services is not executed and the processing is cancelled as error processing (S339). In this case, processing may be performed wherein the end entity is notified to the effect that verification of the group AC was not established.

In the event that the verification of the group attribute certificate (Gp. AC) is successful (Yes in S334) and the authenticity of the group attribute certificate (Gp. AC) has been confirmed, the flow proceeds to step S335. In step S335, screening of the group attribute certificate (Gp. AC) described earlier with reference to Fig. 25 is carried out. The screening is executed based on the group information database which the service provider holds. That is to say, the service provider (SP) obtains the issuer information and group ID from the verified certified group attribute certificate (Gp. AC), searches the group information database based on the obtained information, and confirms whether or not there is a registered entry. In the event that there is a corresponding registered entry, the group information is obtained from the group information database. The group information in this case is information including content distribution permission information.

In the event that screening of a group attribute certificate fails (No in S336), for example, in the event that obtaining the group information has failed, the service provided is not carried out and the processing is cancelled, as error processing (S339). In this case, processing for notifying the end entity to the effect that verification of the group AC was not established may be performed.

In the event that screening of the group attribute certificate is established (Yes in S336), and the flow proceeds to step S337, determination is made regarding whether verification and screening of all presented group attribute certificates has ended, and in the event that not all has ended, the verification and screening processing from step S333 on is executed for the group attribute certificate which has not been finished.

In the event that determination is made in step S337 that all verification and screening has ended for the presented group attribute certificates, in step S338 the service is executed, and the user device executes service reception in step S340. Specifically, the user C can view the distributed content on the television set D (see Fig. 37) which is the end entity.

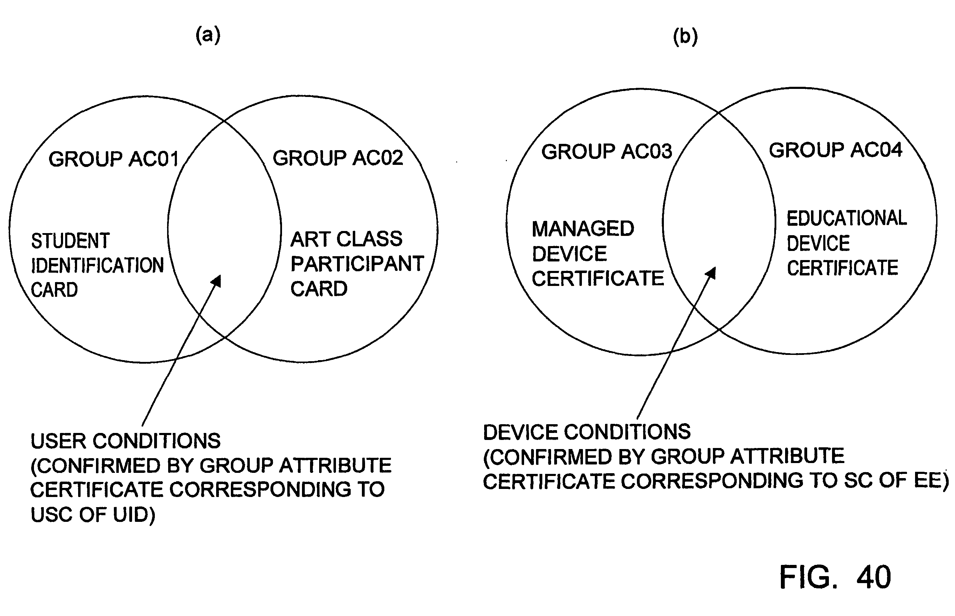

A model diagram of the usage privilege confirmation processing applying the multiple group attribute certificates described above is shown in Fig. 40. That is to say, illustrating the definition regions of the group attribute certificates defining four different types of attributes with the groups AC01 through AC04 in Fig. 40, in order for usage privileges of the above content to be permitted, there is the need as shown in (a) for user group attributes to belong to both groups of the student ID card (group attribute certificate (AC01)) and art class participant card (AC02) and as shown in (b) for device group attributes for the device used to satisfy the conditions of holding both the managed device certificate and educational device certificate as device group attributes.

Proof of belonging to both groups of the student ID card (group attribute certificate (AC01)) and art class participant card (AC02) as user group attributes shown in (a) is confirmed by verification and screening of group attribute certificates corresponding to the user security chip (USC) of the user identification device (UID), and proof of being a device holding the managed device certificate and educational device certificate as device group attributes shown in (b) is confirmed by verification and screening of group attribute certificates corresponding to the security chip (SC) of the end entity (EE).

Note that with the flow described with reference to Fig. 39, processing is performed for providing service under the condition that verification and screening of four group attribute certificates is successful, but instead of for providing service under the condition that verification and screening of four group attribute certificates is successful, processing can be performed wherein a new group attribute certificate is issued for permitting providing of the service, the user presents anew this one newly-issued group attribute certificate, and verification thereof enables the service to be provided.

Note however that in this case, the group attribute certificate newly issued defines both groups of the user group and device group, so a user identification device (UID) matching the group definition is set to a device (EE) matching the group definition, and authentication of the user security chip (USC) of the UID is established by mutual authentication between the user security chip (USC) of the UID and the security module (SM) of the service provider (SP), and further, authentication of the security chip (SC) is established by mutual authentication between the security chip (SC) of the end entity (EE) and the security module (SM) of the service provider (SP). Further, verification and screening being established for the above-described newly-issued group attribute certificate is a condition for using the service.

### (5-2) Remote control service

Next, a service usage example for executing remote control of a device which is an end entity (EE), by executing privilege confirmation, as an example of a data processing system configuration based on group attribute certificates.

Here, a medical processing example will be described, wherein a medical device is an end entity (EE), with a medical device installed in the home and a hospital-side medical device (SP) serving as a service provider performing communication, so that the hospital-side medical device (SP) transmits commands, based upon which medical diagnosis and tests and the like of the user are performed by the medical device (EE) installed in the home, and obtained information such as testing data and the like is transmitted from the medical device (EE) installed in the home to the hospital-side medical device (SP)

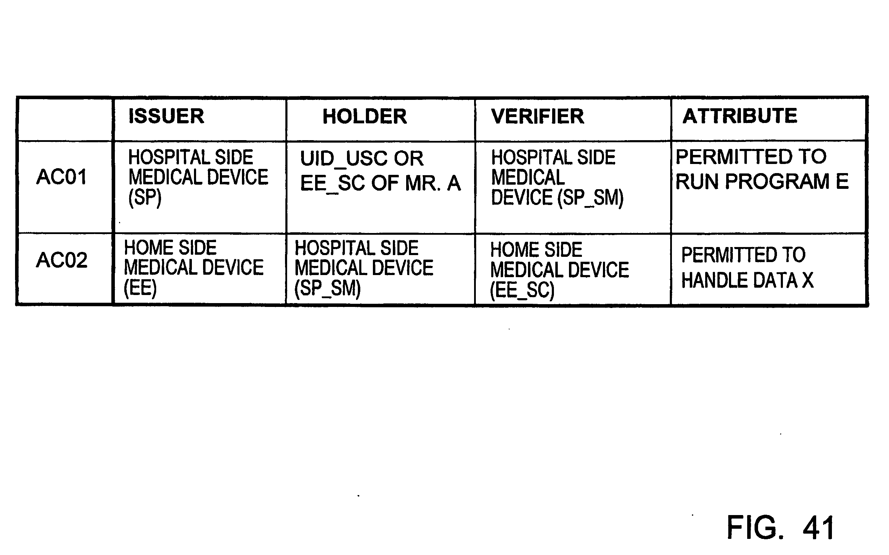

At the time of executing each processing in the data processing system for carrying out the above medical processing, processing for confirming whether or not the processing can be made based on verification and screening of the group attribute certificates for each, and following execution permitted/not-permitting confirmation being made, various types of data processing relating to medical processing produces are carried out. An example of group attribute certificates to be applied is shown in Fig. 41.

The issuer of the group attribute certificate AC01 is the hospital-side medical device serving as the service provider (SP), and the holder, i.e., the holder which is the object of issuing the group attribute certificate by performing authentication processing with the hospital-side medical device (SP) which is the issuer of the group attribute certificate AC01 at the time of issuing, is the user security chip (USC) of the user identification device (UID) of Mr. A who is to receive medical services by means of the home-side medical device (EE). Or, this may be the security chip (SC) of the home-side medical device (EE).

The group attribute certificate AC01 is applied at the time of confirmation processing for determining whether or not the medical program can be executed, and is sent to the hospital-side medical device (SP) from the USC or the SC of the user device which is the holder, and following verification and screening of the group attribute certificate AC01, the service, i.e., running the medical diagnosis program, is permitted with the hospital-side medical device (SP).

The issuer of the group attribute certificate AC02 is the home-side medical device (EE), and the holder, i.e., the holder which is the object of issuing the group attribute certificate by performing authentication processing with the home-side medical device (EE) which is the issuer, at the time of issuing the group attribute certificate AC02, is the security module (SM) of the hospital-side medical device serving as the service provider (SP).

The group attribute certificate AC02 obtained from the subject of diagnosis (Mr. A) by executing the medical diagram, and is applied at the time of processing for determining whether or not processing can be performed wherein diagnosis data such as, for example, blood pressure values, pulse, blood sample data, etc., is transmitted from the home-side medical device (EE) to the hospital-side medical device (SP).

The group attribute certificate AC02 is sent from the hospital-side medical device (SP) to the home-side medical device (EE), and following verification and screening of the group attribute certificate AC02 at the home-side medical device (SP), service, providing of the service, i.e., sending processing of the medical diagnosis result data is performed.

Note that while the issuing processing of the group attribute certificates AC01 and AC02 can be issued from the hospital-side medical device (SP) or home-side medical device (EE), or user identification device (UID) itself, serving as the group attribute authority (group AA) and group attribute certificate registration authority (group ARA), but a configuration can also be made wherein the group attribute authority (group AA) and group attribute certificate registration authority (group ARA) are commissioned to carry out the issuing processing. However, in this case, performing processing following the policies of the issuer is a condition.

For example, regarding issuing processing of the group attribute certificate AC01, a preferable method is for the hospital-side medical device (SP) which is the issuer, or the group attribute certificate registration authority (group ARA) which is an issuing agent, causes Mr. A who is the subject of medical diagnosis to present an already-issued group attribute certificate proving that the user is Mr. A, such as a group attribute certificate issued by a credit card company for example, and following verifying the presented group attribute certificate, to perform issuing processing of a new group attribute certificate AC01. The processing sequence for issuing a new group attribute certificate on the condition of verification of such an already-issued group attribute certificate is the same as the processing sequence described earlier with reference to Fig. 29, Fig. 30, Fig. 32, etc.

Also, in the same way, regarding issuing processing of the group attribute certificate AC02, a preferable method is for the home-side medical device (EE) which is the issuer, or the group attribute certificate registration authority (group ARA) which is an issuing agent, causes the hospital-side medical device (SP) to present an already-issued group attribute certificate proving that it is the hospital-side medical device (SP), such as a group attribute certificate issued by a manufacturer or public managing organization for example, and following verifying the presented group attribute certificate, to perform issuing processing of a new group attribute certificate AC02.

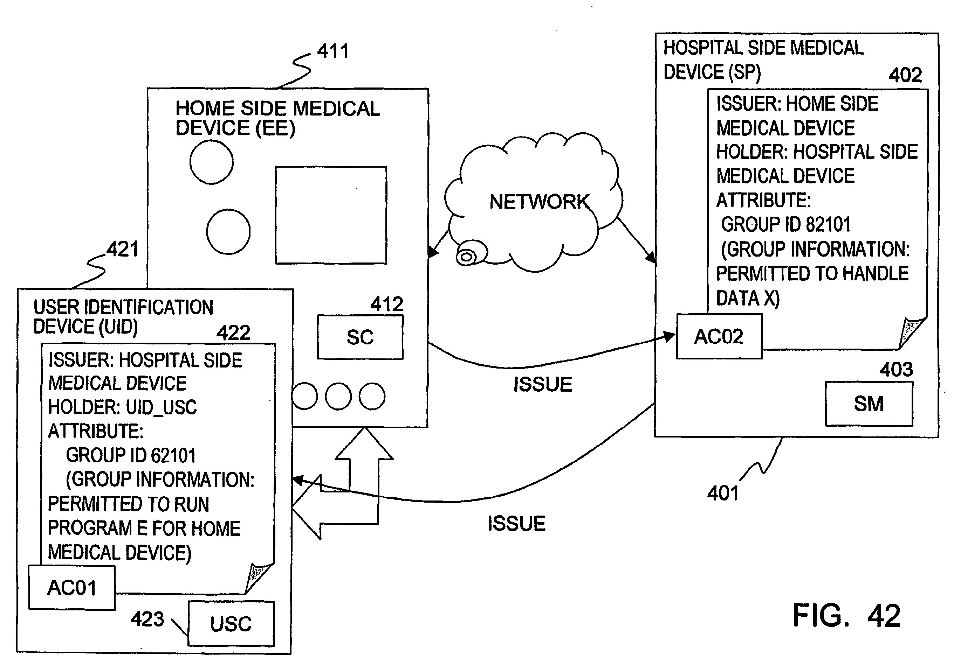

In the remote control system which performs medical processing, the group attribute certificates to be stored in the devices are as shown in Fig. 42. The hospital-side medical device (SP) 401 serving as the service provider, and the home-side medical device (EE) 411 serving as the end entity are capable of mutually transferring data over a communication network, and the home-side medical device (EE) 411 and the user identification device (UID) 421 are capable of mutually transferring data via their respective connected device interfaces 231 (see Fig. 9).

Each of the devices are provided with a (user) security chip 412, 423, or security module 403, having an anti-tampering configuration, for executing mutual authentication processing or encipherment and decipherment of transferred data and the like at the time of data communication processing. Also, the verification processing of the group attribute certificates is carried out by the (user) security chips 412, 423, or security module 403.

The user identification device 421 stores the group attribute certificate AC01, 422 described earlier with reference to Fig. 41. The issuer of the group attribute certificate AC01, 422 is the hospital-side medical device (SP) 401 serving as a service provider, and is applied for confirmation processing for determining whether or not the medical program can be executed, is sent from the user device USC 421 which is the holder to the hospital-side medical device (SP) 401, and following verification and screening of the group attribute certificate AC01 at the security module (SM) 403 of the hospital-side medical device (SP) 401, the service is provided, i.e., the medical diagnosis program is executed.

Also, the hospital-side medical device (SP) 401 serving as the service provider stores the group attribute certificate AC02, 402. With the issuer of the group attribute certificate AC02, 402 the issuer is the home-side medical device (EE) 411, the holder is the hospital-side medical device (SP) 401, and is sent from the hospital-side medical device (SP) to the home-side medical device (EE), and before the processing for sending the diagnosis data obtained from the diagnosis subject (Mr. A) from the home-side medical device (EE) 411 to the hospital-side medical device (SP) 401, verification and screening of the group attribute certificate AC02, 402 is performed at the security chip (SC) 412 of the home-side medical device (EE), and the transmission of the diagnosis results data is executed under the condition that the verification and screening is successful.

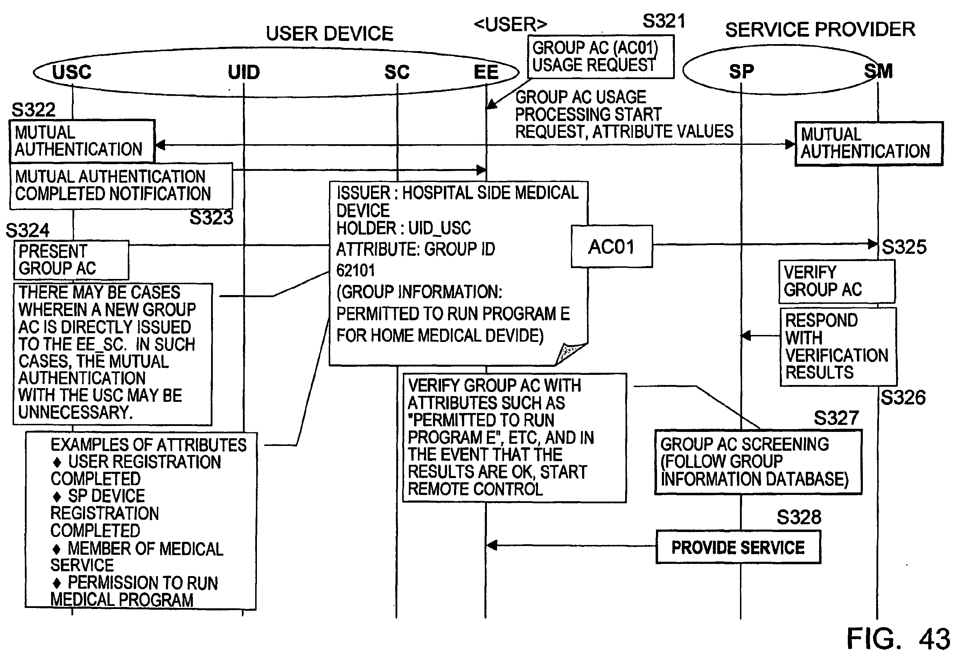

The processing sequence for applying the group attribute certificate AC01, 422 stored in the user identification device 421 to perform usage privilege confirmation processing of the execution service of the medical diagnosis program, and start the service, will be described with reference to Fig. 43. In Fig. 43,
UID: user identification device (user device) control unit, USC: user security chip configured within the DID,
EE: home-side medical device (EE) control unit,
SC: security chip configured within the EE,
SP: hospital-side medical device (SP) control unit, and
SM: security module within SP.

Also note that the security chip (SC), the user security chip (USC), and the security module (SM), have the same configuration as the security chip described earlier in Fig. 9, and privilege determining processing and the like is performed by verification of the group attribute certificate at the security module or chip. That is to say, the service provider or user device which has received, with a reception unit such as a network interface or the like, the group attribute certificate sent from the data processing requesting device to the data processing requested device, hands the received group attribute certificate to the security module (chip) serving as a privilege determining processing unit, and privilege determining processing is executed based on the group attribute certificate received within the security module (chip), with various types of data processing being executed based on determination of privileges.

First, in step S321, a user inputs a group attribute certificate (Gp. AC) = AC01 usage request command via the input interface of the home-side medical device (EE) serving as the end entity. This group attribute certificate (Gp. AC) is the AC01 shown in Fig. 41 and Fig. 42. At this time, the user specifies the group ID set in the group attribute certificate AC01 to be used. However, in the event that a single group ID can be determined by specifying a certain service, an arrangement may be made wherein only the service is specified.

Upon the home-side medical device (EE) receiving the group attribute certificate (Gp. AC) AC01 usage request input from the user, mutual authentication is performed between the user security chip (USC) and the security module (SM) of the hospital-side medical device (SP) serving as the service provider (SP) in step S322. Now, while omitted in the illustration here, in the event a user identification device (UID) does not have direct communication functions with the SP, all of:
(1) Mutual authentication between the SC of the EE and the SP-SM,
(2) Mutual authentication between the SC of the EE and the USC of the UID, and
(3) Mutual authentication between the USC of the UID and the SP-SM,
is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

The authentication processing is executed as public key mutual authentication processing described earlier with reference to Fig. 13, centered on the encipherment processing unit (see Fig. 9) of the security chip and security module. In step S323, a mutual authentication completion notification including mutual authentication established/not-established result information is output from the user security chip to the end entity. In the event that the mutual authentication is not established, continuation of the processing is cancelled. In the event that mutual authentication is established, in step S324 the user security chip (USC) transmits the group attribute certificate (Gp. AC) AC01 stored in its own memory to the security module (SM) of the service provider (SP). The group attribute certificate (Gp. AC) AC01 is the group attribute certificate AC01 applied to processing for determining service receiving right privileges for the medical program, as described with reference to Fig. 41 and Fig. 42.

In step S325, the security module (SM) of the hospital-side medical device (SP) which has received the group attribute certificate (Gp. AC) AC01 from the user security chip (USC) executes group attribute certificate verification processing. The verification processing of the group attribute certificate is as described earlier with reference to Fig. 21 through Fig. 23, and is executed as processing including confirmation processing of attribute certificate signature verification, corresponding public key certificate (PKC) and chain public key certificate confirmation processing, and so forth.

Following verification processing of the group attribute certificate (Gp. AC), the security module (SM) outputs the verification results to the hospital-side medical device (SP), and in the event that verification is not established, providing of services is not executed and the processing is cancelled as error processing. In this case, processing may be performed wherein the end entity is notified to the effect that verification of the group AC was not established.

In the event that the verification of the group attribute certificate (Gp. AC) is successful and the authenticity of the group attribute certificate (Gp. AC) has been confirmed, the flow proceeds to step S327. In step S327, screening of the group attribute certificate (Gp. AC) described earlier with reference to Fig. 25 is carried out. The screening is executed based on the group information database which the hospital-side medical device (SP) serving as the service provider holds. That is to say, the hospital-side medical device (SP) obtains the issuer information and group ID from the verified group attribute certificate (Gp. AC) AC01, searches the group information database based on the obtained information, and confirms whether or not there is a registered entry. In the event that there is a corresponding registered entry, the group information is obtained from the group information database.

The group information in this case includes the medical diagnosis program execution permission information. In step S328, the hospital-side medical device (SP) serving as the service provider performs service providing processing, i.e., executes the medical diagnosis program following the group information. That is to say, the medical diagnosis processing by remote control is performed, i.e., execution commands of the diagnosis programs are transmitted to the home-side medical device (EE) and diagnosis of the user is carried out through the home-side medical device (EE).

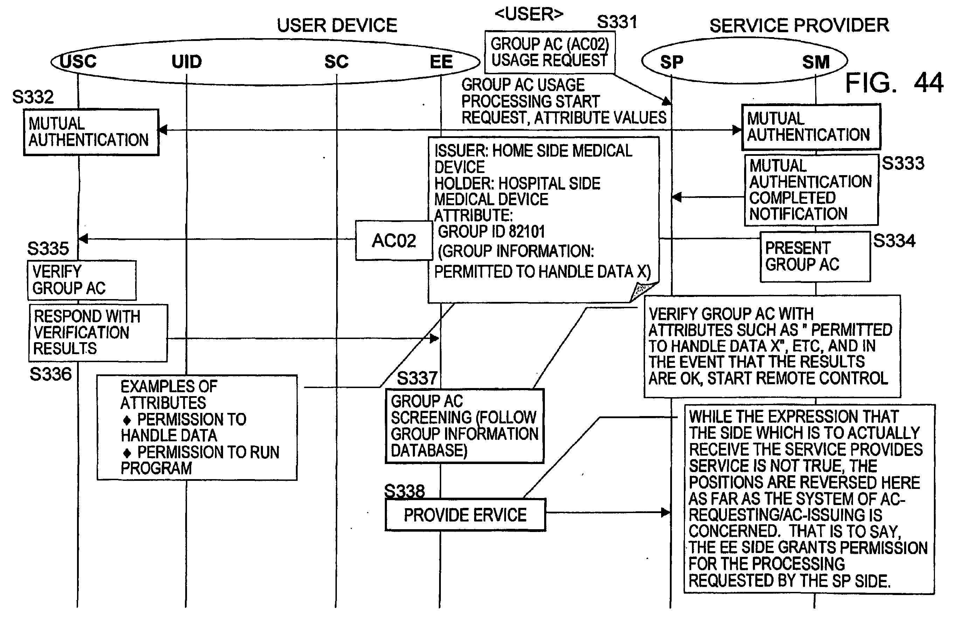

Next, the processing sequence will be described with reference to Fig. 44 for applying the group attribute certificate AC02, 402 stored in the hospital-side medical device (SP) 401 to perform usage privilege confirmation processing of the diagnosis data transaction processing service which is the medical diagnosis program execution results, and starting the service.

First, in step S331, the user operating the hospital-side system inputs a group attribute certificate (Gp. AC) = AC02 usage request command via the input interface of the hospital-side medical device (SP). This group attribute certificate (Gp. AC) is the AC02 shown in Fig. 41 and Fig. 42. At this time, the user operating the hospital-side system specifies the group ID set in the group attribute certificate AC02 to be used. However, in the event that a single group ID can be determined by specifying a certain service, an arrangement may be made wherein only the service is specified.

Upon the hospital-side medical device (SP) receiving the group attribute certificate (Gp. AC) AC02 usage request input, mutual authentication is performed between the user security chip (USC) and the security module (SM) of the hospital-side medical device (SP) serving as the service provider (SP) in step S332. Now, while omitted in the illustration here, in the event a user identification device (UID) does not have direct communication functions with the SP, all of:
(1) Mutual authentication between the SC of the EE and the SP-SM,
(2) Mutual authentication between the SC of the EE and the USC of the UID, and
(3) Mutual authentication between the USC of the UID and the SP-SM,
   is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

The authentication processing is executed as public key mutual authentication processing described earlier with reference to Fig. 13, centered on the encipherment processing unit (see Fig. 9) of the security chip and security module. In step S333, a mutual authentication completion notification including mutual authentication established/not-established result information is output from the security module (SM) to the hospital-side medical device (SP). In the event that the mutual authentication is not established, continuation of the processing is cancelled. In the event that mutual authentication is established, in step S334 the security module (SM) of the hospital-side medical device (SP) transmits the group attribute certificate (Gp. AC) AC02 stored in its own memory to the user security chip (USC) of the home-side medical device side. The group attribute certificate (Gp. AC) AC02 is the group attribute certificate AC02 applied to processing for determining service receiving right privileges for the diagnosis results data, as described with reference to Fig. 41 and Fig. 42.

In step S335, the user security chip (USC) which has received the group attribute certificate (Gp. AC) AC02 from the security module (SM) of the hospital-side medical device (SP) executes group attribute certificate verification processing. The verification processing of the group attribute certificate is as described earlier with reference to Fig. 21 through Fig. 23, and is executed as processing including confirmation processing of attribute certificate signature verification, corresponding public key certificate (PKC) and chain public key certificate confirmation processing, and so forth.

Following verification processing of the group attribute certificate (Gp. AC), the user security chip (USC) outputs the verification results to the home-side medical device (EE) (S336), and in the event that verification is not established, providing of diagnosis results transmission services is not executed and the processing is cancelled as error processing. In this case, processing may be performed wherein the hospital-side medical device (SP) is notified to the effect that verification of the group AC was not established.

In the event that the verification of the group attribute certificate (Gp. AC) is successful and the authenticity of the group attribute certificate (Gp. AC) has been confirmed, the flow proceeds to step S337. In step S337, screening of the group attribute certificate (Gp. AC) described earlier with reference to Fig. 25 is carried out. The screening is executed based on the group information database which the home-side medical device (EE) holds. That is to say, the home-side medical device (EE) obtains the issuer information and group ID from the verified group attribute certificate (Gp. AC) AC02, searches the group information database based on the obtained information, and confirms whether or not there is a registered entry. In the event that there is a corresponding registered entry, the group information is obtained from the group information database.

The group information in this case includes diagnosis results transmission permission information of the medical diagnosis program. In step S338, the home-side medical device (EE) performs service providing processing, i.e., executes transmission processing of the diagnosis results of the medical diagnosis program following the group information. That is to say, processing for transmitting the medical diagnosis processing results from the home-side medical device (EE) to the hospital-side medical device (SP) is performed.

### (5-3) Remote maintenance service

Next, as a configuration example of a data processing system which executes privilege confirmation based on group attribute certificates to perform data processing, an example of using a service which executes remote maintenance of devices which are end entities (EE), e.g., home appliances.

Here, description will be made regarding an example wherein various home appliances such as audio-video equipment, air conditioners, refrigerators, and so forth, having communication functions, are end entities (EE), and communication is performed between the home appliances installed in the home or the like and a service providing device (SP) at the manufacturer thereby executing repair, maintenance, upgrading, and other control processing, of the home appliances (EE) installed in the home, based on commands transmitted from the service providing device (SP).

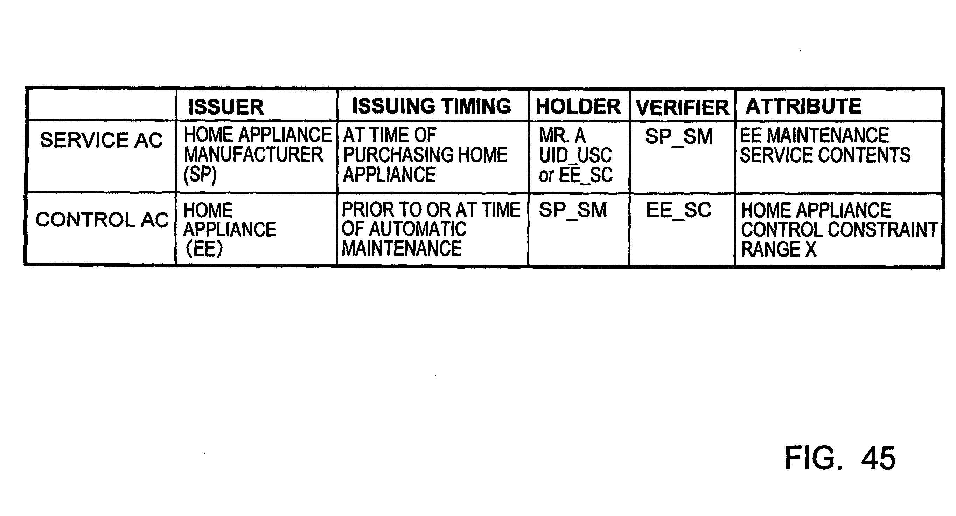

At the time of executing the above-describe processes, processing is performed for confirming whether or not processing can be carried out, based on verification and screening of each of the group attribute certificates, and following the execution permissible/not-permissible confirmation, each process is carried out. Fig. 45 shows an example of the group attribute certificates to be applied. The group attribute certificates are classified into two general categories. One is service attribute certificate (AC), and the other is control attribute certificate (AC).

With a service attribute certificate (AC), the issuer is a home appliance manufacturer side device serving as a service provider (SP), and the holder, i.e., the holder which is the object of issuing of the attribute certificate by means of performing authentication processing with the home appliance manufacturer side device (SP) which is the issuer at the time of issuing the service attribute certificate (AC), is a user security chip (USC) of a user identification device (UID) using the home appliance installed in the home, or the security chip (SC) of the home appliance (EE).

The service attribute certificate is issued to a home appliance purchaser group of home appliance group given privileges to receive subsequent services regarding repair, maintenance upgrade, and other control processing of the home appliance (EE), by the user which has purchased the home appliance entering into a subscriber contract with the manufacturer side at the time of purchasing the home appliance. Accordingly, the service attribute certificate is a group attribute certificate issued to a home appliance purchaser group or a home appliance group.

In the event of issuing to a home appliance purchaser group, issuing processing is performed under the condition that mutual authentication is established between the user security chip (USC) of the user identification device (UID) and the security module of the home appliance manufacturer (SP), and in the event of issuing to a home appliance group, issuing processing is performed under the condition that mutual authentication is established between the security chip (SC) of the home appliance (EE) and the security module of the home appliance manufacturer (SP).

At the time of requesting repair, maintenance, upgrade, or other control service of the home appliance (EE), the service attribute certificate is sent from the home appliance (EE) or the user identification device (UID) to the manufacturer side device (SP) and following verification and screening of the group attribute certificate at the manufacturer side device (SP), transition is made to providing of the services.

With a control attribute certificate, the issuer is a home appliance (EE), which receives the repair, maintenance, upgrade, or other control service, and the holder, i.e., the holder which is the object of issuing of a group attribute certificate by performing mutual authentication with the home appliance (EE) at the time of issuing the control attribute certificate, is the security module (SM) of the manufacture side device serving as the service provider (SP).

This control attribute certificate is a certificate issued under the condition of holding a service attribute certificate following purchasing the home appliance, between the user which has purchased the home appliance and the manufacturer side, and is issued, for example, from a user having multiple home appliances of the same manufacture, to the manufacturer side device which is the service provider, corresponding to each home appliance, as a certificate stating the execution range of maintenance services for each of the home appliances. Or an arrangement may be made wherein a certificate recording difference control privilege information is issued for one home appliance. An example is an attribute certificate permitting only upgrade processing as a received service, to commission software upgrading processing, an attribute certificate permitting only inspecting processing for regular inspections, and so forth, as home appliance control information.

A control attribute certificate is a group attribute certificate of which a plurality can be issued to a home appliance group of multiple home appliances owned by one user, or to one home appliance. In the event of issuing to a home appliance group of multiple home appliances owned by a single user, issuing processing is performed under the condition of establishment of mutual authentication between the user security chip (USC) of the user identification device (UID) and the security module of the home appliance manufacturer (SP), and in the event of issuing to one particular home appliance, issuing processing is performed under the condition of establishment of mutual authentication between the USC of the UID or the security chip (SC) of the particular home appliance (EE) and the security module of the home appliance manufacturer (SP).

The control attribute certificate is issued from the user side (EE or UID) and stored in the manufacturer side device providing the service, is transmitted from the manufacturer side device to the user side (EE or UID) at the time of executing repair, maintenance, upgrading, or other control service of the home appliance (EE), and transition is made to providing the service following verification and screening of the control attribute certificate at the user side (EE or UID).

Issuing of service attribute certificates or control attribute certificates can be performed by the manufacturer side device (SP) or home appliance (EE) or user identification device (UID) itself executing functions of a group attribute authority (AA) and group attribute certificate registration authority (ARA), but a configuration may also be made wherein issuing processing is commissioned to a group attribute authority (AA) and group attribute certificate registration authority (ARA). However, processing following the policies of the issuer being executed is a condition in this case.

For example, issuing processing of a service attribute certificate is preferably performed by a manufacturer side device (SP) which is the issuer, or a group attribute certificate registration authority (ARA) serving as an issuing agent, causing a user which desires to receive a service to present, an already-issued group attribute certificate which proves the identity of the user, such as a group attribute certificate issued from a credit card company, and following verification of the presented group attribute certificate, a service attribute certificate is issued as a new group attribute certificate, or, wherein a home appliance is caused to present a group attribute certificate proving that the home appliance belongs to a product group manufactured by the manufacturer, the group attribute certificate being stored in the home appliance at the time of manufacturing, and following verification of the presented group attribute certificate, issuing processing is performed for issuing a service attribute certificate as a new group attribute certificate. As for conditions for verification of an already-issued group attribute certificate in this way, the processing sequence for issuing the new group attribute certificate is the same processing sequence as that described earlier with reference to Fig. 29, Fig. 30, Fig. 32, and so forth.

Also, with the issuing processing for a control attribute certificate, a preferable method is, in the same way, for the home appliance (EE) which is the issuer or a group attribute certificate registration authority (ARA) serving as an issuing agent to cause the manufacturer side device (SP) to present an already-issued group attribute certificate proving that it is an authentic device of the manufacture side, such as a service attribute certificate serving as a group attribute certificate issued by the manufacturer as described above, and following verification of the presented certificate, issue processing is performed for the control attribute certificate as a new group attribute certificate.

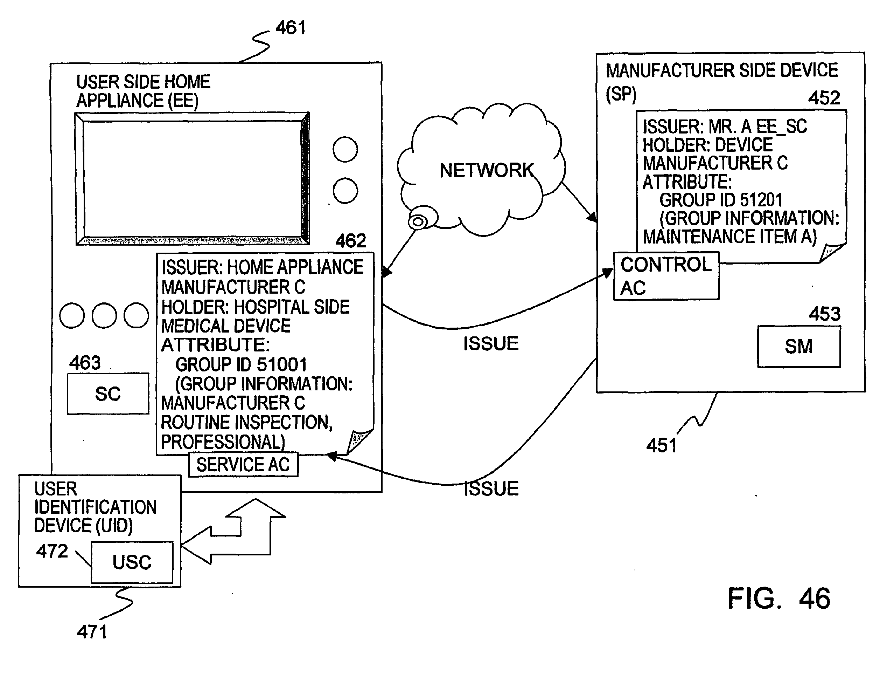

In a system for performing maintenance services, the attribute certificates stored in the devices are as shown in Fig. 46. The manufacturer side device (SP) 451 serving as the service provider, and the user-side home treatment device (EE) 461 serving as the end entity are capable of mutually transferring data by a communication network, and the user side home appliance (EE) 461 and the user identification device (UID) 471 are capable of mutually transferring data by a communication network via connected device interfaces 231 (see Fig. 9) of each.

Each of the devices have (user) security chips 463 and 472 or security module 453 having anti-tampering configurations, performing mutual authentication processing at the time of data communication processing, and encipherment and decipherment and the like of the transferred data. Also, verification processing of the group attribute certificate is executed at the (user) security chips 463 and 472 or security module 453.

The service attribute certificate 462 described above with reference to Fig. 45 is stored in the user side home appliance (EE) 461. The service attribute certificate 462 has as the issuer thereof the manufacturer side device (SP) 451 serving as the service provider, is applied to confirmation processing for determining whether or not it is permissible to execute home appliance maintenance or repair or the like, and is sent from the SC 463 of the user side home appliance (EE) 461 which is the holder to the manufacturer side device (SP) 451. After verification and screening at the security module (SM) 463 of the manufacturer side device (SP) 451, the service, i.e., transmission of control attribute certificate and maintenance and the like within the privilege range permitted by the control attribute certificate is carried out.

The control attribute certificate 452 is stored at the manufacturer side device (SP) 451 serving as the service provider. The control attribute certificate 452 has as the issuer the user side home appliance (EE) 461, the holder thereof is the manufacturer side device (SP) 451, is sent from the manufacturer side device (SP) to the user side home appliance (EE) 461, and before executing services such as maintenance or the like, verification and screening of the control attribute certificate is executed at the security chip (SC) of the user side home appliance (EE) 461, and under the condition that verification and screening has been established, processing such as maintenance, repair, upgrading, etc., is executed within the privilege range confirmed by the control attribute certificate.

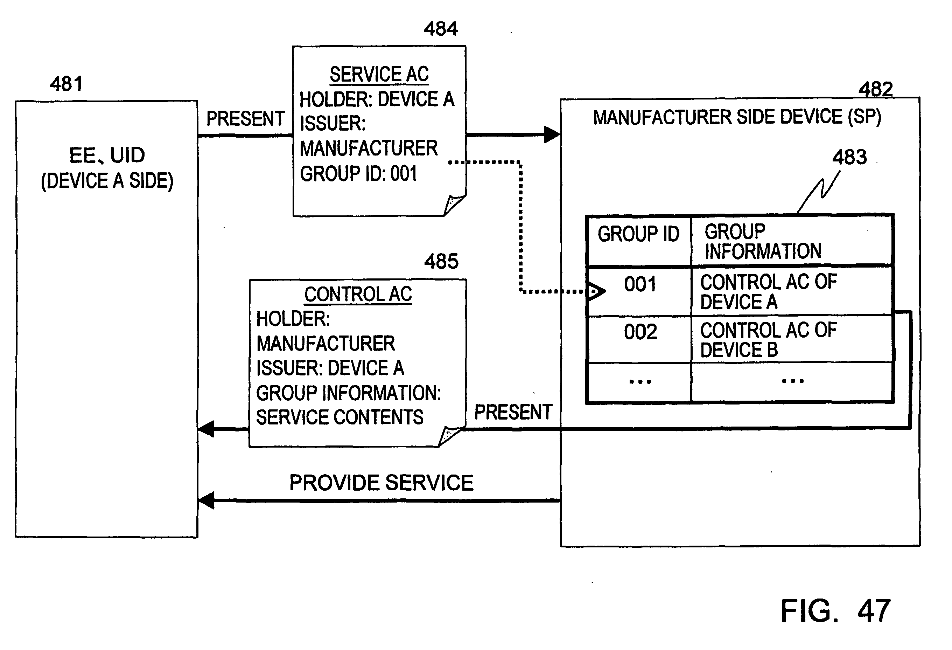

An arrangement of using a service attribute certificate and control attribute certificate at the time of executing service is described with reference to Fig. 47. First, a service attribute certificate (AC) 484 is presented to the manufacturer side device (SP) 482 from a home appliance (EE) which desires to receive service such as maintenance, repair, inspection, upgrading, or the like, or a user identification device (UID) connected to the home appliance. Following verification of the service attribute certificate at the security module (SM), the manufacturer side device (SP) 482 searches a group information database 483 based on the group ID corresponding to the service attribute certificate, extracts a control AC or control AC identification data as group data, and obtains a control AC corresponding to the service AC.

The manufacturer side device (SP) 482 transmits the obtained control attribute certificate (AC) 485 to the home appliance (EE) or the user identification device (UID) connected to the home appliance, and following verification at the security chip of the home appliance (EE) or user identification device (UID) connected to the home appliance, executes the service such as maintenance or the like to the home appliance (EE) following control information permitted in the control attribute certificate (AC).

Note that an execution program for the maintenance, repair, upgrading, etc., may be stored within the home appliance beforehand and used, or may be transmitted from the manufacturer side to the home appliance side as necessary to be executed. Preferably, authentication processing, and enciphering processing of the transmitted data is performed at the time of transmitting the execution program.

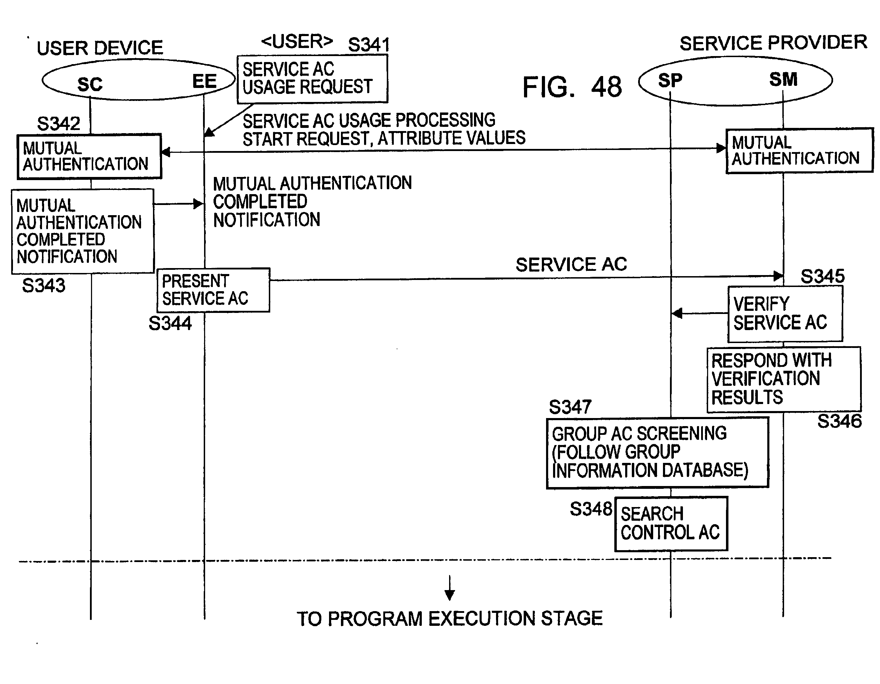

Next, with reference to Fig. 48 on, the processing for performing usage privilege confirmation processing relating to services such as maintenance and the like of a home appliance using a service attribute certificate stored in the home appliance (EE) which is a user device, and a control attribute certificate stored in the service provider. In Fig. 48,
EE: user side home appliance (EE) control unit,
SC: security chip configured within the EE,
SP: manufacturer-side device (SP) control unit, and
SM: security module within SP.

Also note that the security chip (SC), the user security chip (USC), and the security module (SM), have the same configuration as the security chip described earlier in Fig. 9, and privilege determining processing and the like is performed by verification of the group attribute certificate at the security module or chip. That is to say, the service provider or user device which has received, with a reception unit such as a network interface or the like, the group attribute certificate sent from the requesting device requesting service, i.e., data processing such as maintenance processing or the like, to the service requested device, hands the received group attribute certificate to the security module (chip) serving as a privilege determining processing unit, privilege determining processing is executed based on the group attribute certificate received within the security module (chip), and various data processing is executed based on a determination that the privilege is held.

First, in step S341, a user inputs a usage request command for a service attribute certificate (AC) which is a group attribute certificate (Gp. AC) via the input interface of the user side home appliance (EE) serving as the end entity. At this time, the user specifies the group ID set in the service attribute certificate (AC) to be used. However, in the event that a single group ID can be determined by specifying a certain service, an arrangement may be made wherein only the service is specified.

Upon the user side home appliance (EE) receiving the service attribute certificate (AC) usage request input from the user, mutual authentication is performed between the security chip (SC) and the security module (SM) of the manufacturer side device (SP) serving as the service provider in step S342. Note that while the description here is of an example of using a service attribute certificate issued to the security chip (SC) of the home appliance (EE), an arrangement may be made in the same way using a service attribute certificate issued to the security chip (SC) of the user identification device (UID). However, in the event a user identification device (UID) does not have direct communication functions with the SP, all of:
(1) Mutual authentication between the SC of the EE and the SP-SM,
(2) Mutual authentication between the SC of the EE and the USC of the UID, and
(3) Mutual authentication between the USC of the UID and the SP-SM,
   is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

The authentication processing is executed as public key mutual authentication processing described earlier with reference to Fig. 13, centered on the encipherment processing unit of the security chip and security module (see Fig. 9). In step S343, a mutual authentication completion notification including mutual authentication established/not-established result information is output from the security chip to the end entity. In the event that the mutual authentication is not established, continuation of the processing is cancelled. In the event that mutual authentication is established, in step S344 the security chip (SC) transmits the service attribute certificate stored in its own memory to the security module (SM) of the service provider (SP) which is the manufacturer side device.

In step S345, the security module (SM) of the manufacturer side device (SP) which has received the service attribute certificate from the security chip (SC) of the user side home appliance executes service attribute certificate verification processing. The verification processing of the service attribute certificate is as described earlier with reference to Fig. 21 through Fig. 23, and is executed as processing including attribute certificate signature verification, corresponding public key certificate (PKC) and chain public key certificate confirmation processing, and so forth.

Following verification processing of the service attribute certificate, the security module (SM) outputs the verification results to the manufacturer side device (SP), and in the event that verification is not established, providing of services is not executed and the processing is cancelled as error processing. In this case, processing may be performed wherein the end entity is notified to the effect that verification of the service AC was not established.

In the event that the verification of the service attribute certificate is successful and the authenticity of the service attribute certificate has been confirmed, the flow proceeds to step S347. In step S347, screening of the service attribute certificate is carried out. The screening is executed based on the group information database which the manufacturer side device (SP) serving as the service provider holds.

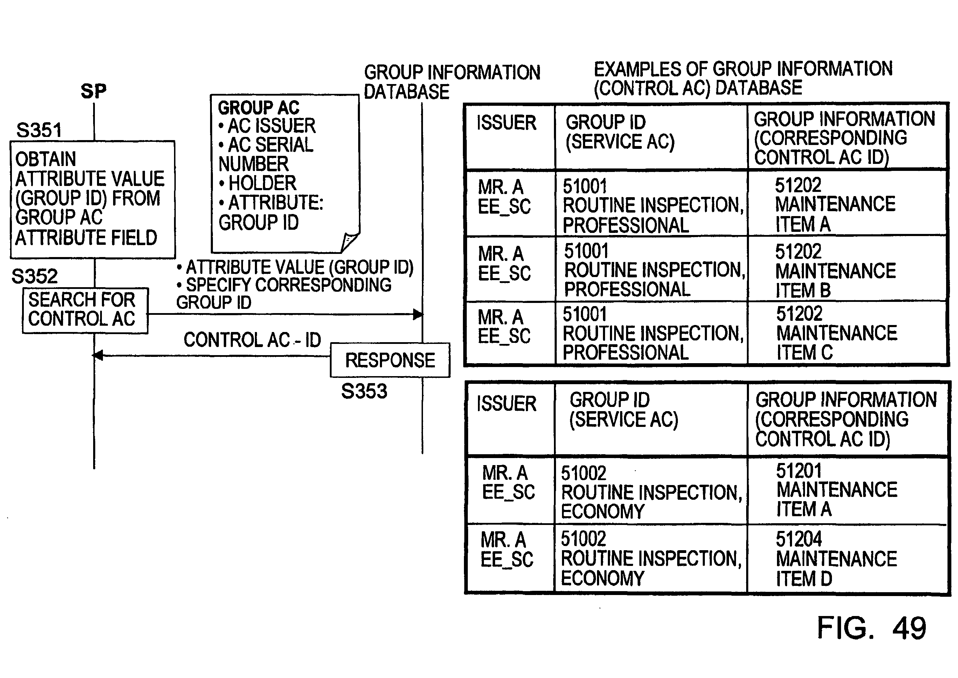

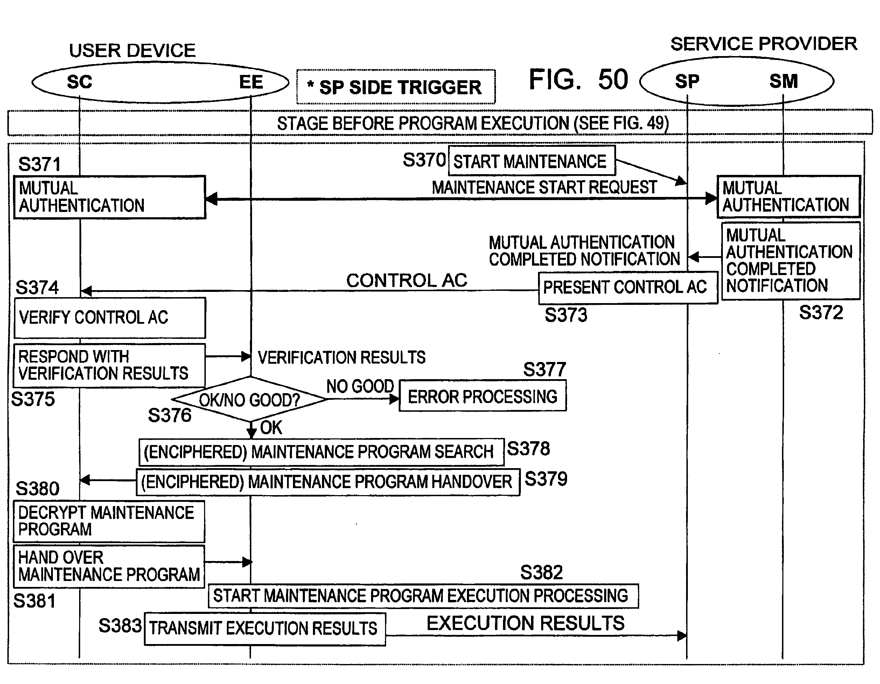

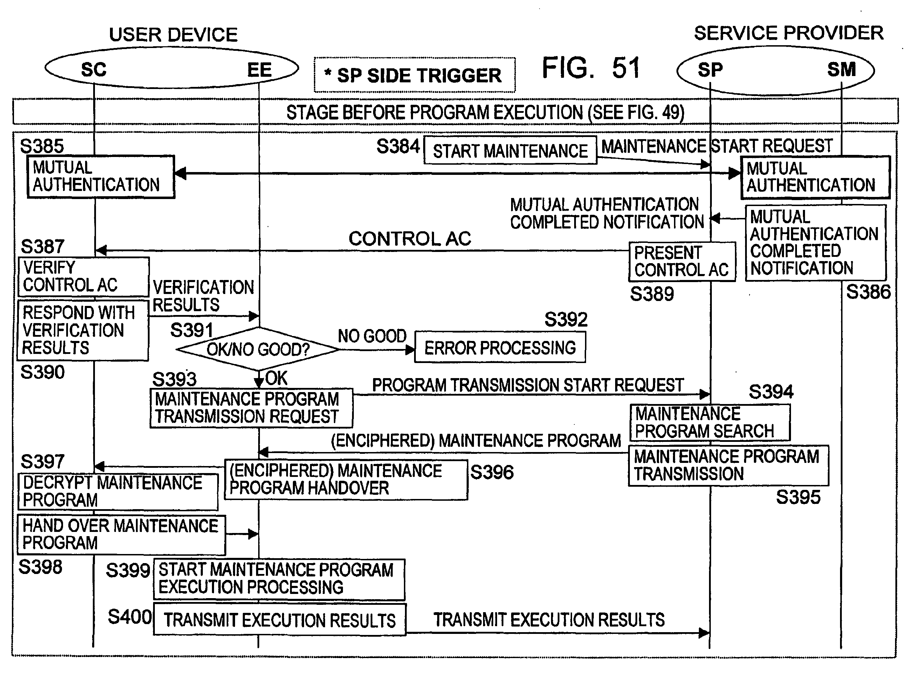

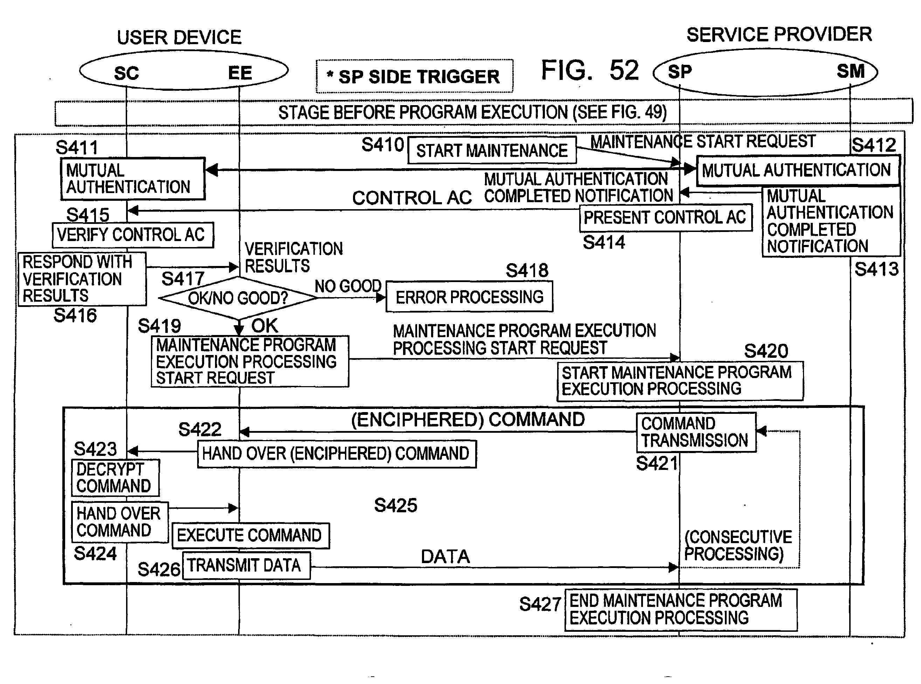

Screening processing of the service attribute certificate will be described with reference to Fig. 49. In step S351, the service provider (SP) obtains a group ID as an attribute from the already-verified service attribute certificate. In step S352, the group information database is searched (S352) based on the group ID obtained from the service attribute certificate, and control attribute certificate information, e.g., the identifier (ID) of the control attribute certificate, is obtained from a registered entry (S353).

As shown in Fig. 49, the group information database (DB) held by the service provider stores the issuer, group ID of service AC, and corresponding control attribute certificate information serving as group information such as an ID, in a correlated manner, with the service provider (SP) searching the group information database (DB) based on the group ID obtained from the already-verified service attribute certificate (AC) received from the user side home appliance, and obtaining the control attribute certificate (AC) corresponding to the service AC as group information.

Next, in step S348 (Fig. 48), the manufacturer side device (SP) serving as the service provider obtains the control attribute certificate (AC) based on the ID of the control attribute certificate (AC) obtained from the group information database (DB).

Next, description will be made regarding the sequence for executing processing for services for a home appliance such as maintenance, inspection, repair, upgrading, control etc., based on the control attribute certificate, by the service provider which has received the service attribute certificate, with reference to Fig. 50 on.

In step S370 in Fig. 50, an operator operating the manufacturer side device inputs a maintenance processing execution command applying the control attribute certificate, via an input interface of the manufacturer side device (SP). At the time of this processing, the operator specifies the group ID set in the control attribute certificate to be used.

Upon the manufacturer side device (SP) receiving the maintenance processing execution request input applying the control attribute certificate, in step S371, mutual authentication between the security chip (SC) of the home appliance (EE) and the security module (SM) of the manufacturer side device (SP) serving as the service provider is performed. Note that in the event the service providing sequence based on the control attribute certificate shown in Fig. 50 is to be carried out in the same session as the verification processing sequence of the service attribute certificate described earlier with reference to Fig. 48, this mutual authentication processing is unnecessary.

In the event that authentication processing is performed, in step S372, a mutual authentication completion notification including mutual authentication established/not-established result information is output from the security module (SM) to the manufacturer side device (SP). In the event that the mutual authentication is not established, continuation of the processing is cancelled. In the event that mutual authentication is established, in step S373 the security module (SM) of the manufacturer side device (SP) transmits the control attribute certificate extracted based on the received service attribute certificate to the security chip (SC) of the user side home appliance. As described earlier, this control attribute certificate is a group attribute certificate applied to processing for confirming control range processing privileges of the home appliance.

The security chip (SC) which has received the control attribute certificate (AC) from the security module (SM) of the manufacturer side device (SP) executes control attribute certificate verification processing in step S374. The control attribute certificate verification processing is as described earlier with reference to Fig. 21 through Fig. 23, and is executed as processing including attribute certificate signature verification, corresponding public key certificate (PKC) and chain public key certificate confirmation processing, and so forth.

Following verification processing of the control attribute certificate, the security chip (SC) outputs the verification results to the user side home appliance (EE) (step S375), and in the event that verification is not established (NG in S376), maintenance processing and the like is cancelled as error processing (S377). In this case, processing may be performed wherein the manufacturer side device (SP) is notified to the effect that verification of the control attribute certificate was not established.

In the event that the verification of the control attribute certificate is successful (OK in S376) and the authenticity of the control attribute certificate has been confirmed, the flow proceeds to step S378. In step S378, the home appliance (EE) searches for a maintenance execution program. The maintenance execution program is a program either stored in memory of the home appliance (EE) correlated with a control attribute certificate ID or group ID, or is transmitted from the manufacturer side device (SP) at the time of executing processing, and is enciphered beforehand as necessary. In this sequence diagram, an example is a case of the a maintenance execution program being stored in memory of the home appliance (EE) and correlated with a control attribute certificate ID or group ID.

In step S379, the enciphered maintenance execution program extracted by the home appliance (EE) is transferred to the security chip (SC), and in step S380, deciphering processing is executed at the security chip (SC) side. Deciphering processing is executed based on a key provided from the service provider (SP) side for example, or a key unique to the user device, or the like. Various processing methods can be employed for program enciphering formats, such as public key, shared key, and so forth. Also note that a configuration may be used wherein an attribute certificate storing a key may be used to provide the security chip with a key.

In step S381, the maintenance program deciphered from the security chip (SC) is output to the end entity (EE) which is the home appliance, and in step S382, the maintenance program is executed and following execution of the program, in step S383 the execution results are transmitted to the service provider (SP).

Fig. 51 is, like Fig. 50, a sequence for a service provider which has received a service attribute certificate to execute services based on a control attribute certificate, i.e., processing such as maintenance, inspection, repair, upgrading, or control of the like, of a home appliance for example, and is an example wherein the maintenance execution program is transmitted from the manufacturer side device (SP) to the user side home appliance (EE). Steps S384 through S392 correspond to steps S370 through S377 in Fig. 50.

In step S393 following verification OK of the control AC, a transmission request for the maintenance program is output from the user side home appliance (EE) to the manufacturer side device (SP), and in step S394, the manufacturer side device which is the service provider executes the maintenance program search and transmits the searched program to the user side home appliance (EE) in step S395, which is the difference with the processing sequence shown in Fig. 50.

Note that the transmitted program is enciphered as necessary. Transmission is made after encipherment with various decipherable formats based on, for example, a session key, a key provided from the service provider (SP) side, or a key unique to the user device, or the like. Various processing methods can be employed for program enciphering formats, such as public key, shared key, and so forth. Also note that a configuration may be used wherein an attribute certificate storing a key may be used to provide the security chip with a key.

The processing sequence in Fig. 52 is, like Fig. 50 and Fig. 51, a sequence for a service provider which has received a service attribute certificate to execute services based on a control attribute certificate, i.e., processing such as maintenance, inspection, repair, upgrading, or control of the like, of a home appliance for example, and is an example wherein the maintenance execution program is transmitted from the manufacturer side device (SP) to the user side home appliance (EE), with responses based on execution of commands being received from the user side home appliance (EE) and processing corresponding to the responses being executed.

Steps S410 through S420 correspond to steps S384 through S394 in Fig. 51. With this configuration, the service provider (SP) enciphers the commands according to the maintenance program as necessary in step S421 and transmits this to the home appliance (EE), in step S422 the home appliance (EE) hands the enciphered commands to the security chip, deciphering is performed at the security chip (SC) (S423), and following handing the deciphered commands from the security chip (SC) over (S424), the commands are executed at the home appliance (EE) (S425), the execution results are transmitted from the home appliance (EE) to the service provider (SP) as command execution results, and the service provider (SP) which has received the response transmits the next execution commands based on the response to the home appliance (EE).

Upon execution of all commands following the maintenance program ending, in step S427 the maintenance program execution processing ends.

The above-described maintenance processing arrangement is an arrangement wherein a service attribute certificate is presented from a user side home appliance to a manufacturer side device, while the manufacturer side device presents a control attribute certificate to the home appliance, verification and screening of the mutual attribute certificates is executed, and services are received or confirmation of privileges within a provided range is made.

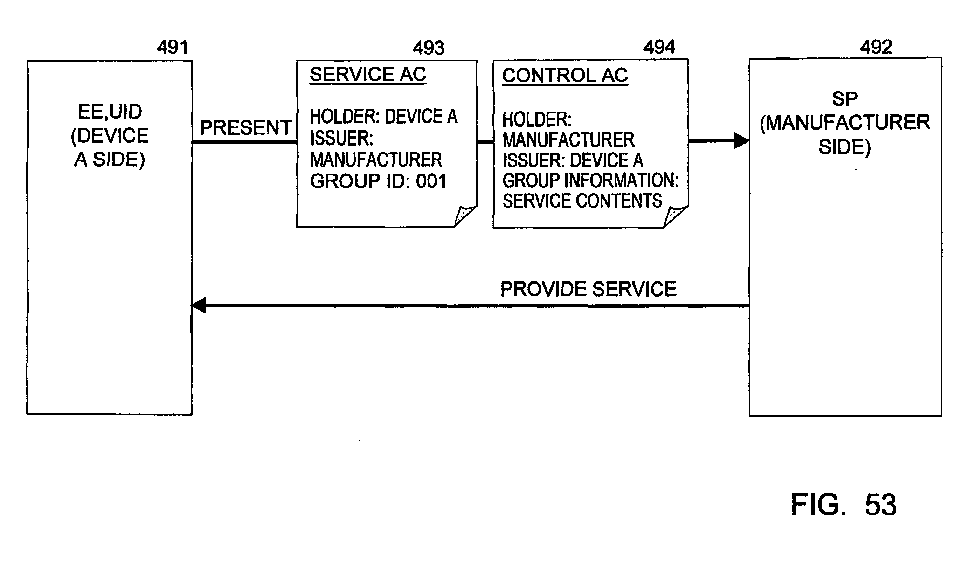

Usage arrangements for the service attribute certificates and control attribute certificates are not restricted to the above-described processing arrangements, rather, as shown in Fig. 53 for example, an arrangement may be made wherein both the attribute certificates are stored in a user side device 491 with the service attribute certificate 493 and control attribute certificate 494 being presented to the manufacturer side (SP) 492 at the time of requesting services, whereby verification and screening of the service attribute certificate 493 and control attribute certificate 494 is performed at the manufacturer side (SP) 492, and following confirmation of the relation of the two parties, maintenance processing is preformed with regard to the user side device 491 within the range of privileges indicated by the control attribute certificate 494.

Also, an arrangement may be made wherein a program is stored in the home appliance which periodically automatically performs maintenance at certain time intervals, with a maintenance request having a service attribute certificate being transmitted to the manufacturer side at programmed time intervals, and the control attribute certificate transmission and maintenance processing being carried out by the manufacturer side based on reception of the request.

### (5-4) Personal communication service

Next, description will be made regarding a communication service usage example using a PC, PDA, or other like communication terminal serving as an end entity (EE), upon executing privilege confirmation based on a group attribute certificate.

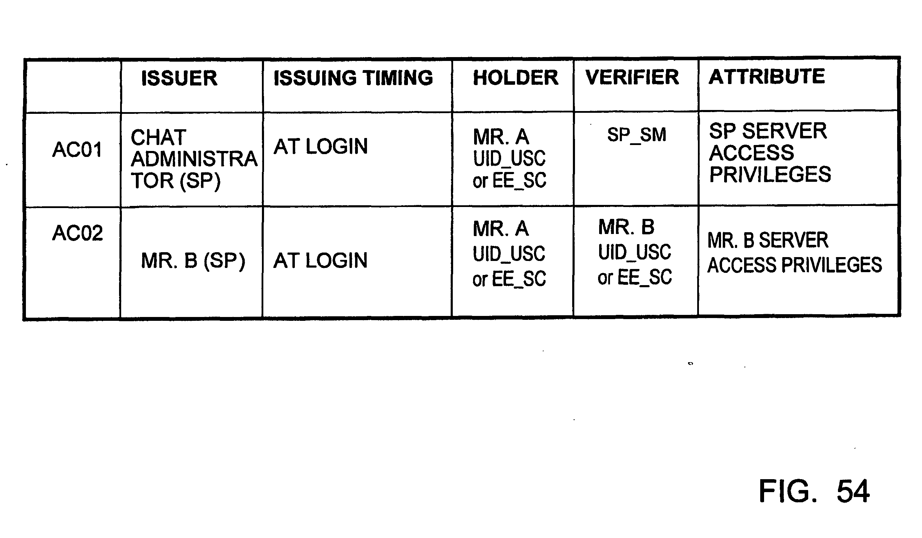

Here, an example will be described wherein a communication terminal installed in the home or the like, which is an end entity (EE) such as a PC, PDA, or other like communication terminal, connects to a server of a service provider which provides a chat room, so that communication between communication terminals via the chat room, and direct communication between end entities (EE), is performed as a communication service, executing the access restriction processing using group attribute certificates. An example of the group attribute certificate to be applied in the communication service is shown in Fig. 54.

The issuer of a group attribute certificate AC01 is a chat administrator serving as the service provider (SP), and the holder, i.e., the holder to which the group attribute certificate AC01 is to be issued by performing authentication processing with the chat administrating service provider (SP) at the time of issuing the group attribute certificate AC01, is the security chip (SC) of the end entity which is the communication terminal of user Mr. A or the user security chip (USC) of the user identification device (UID) of Mr. A.

This group attribute certificate AC01 is an attribute certificate proving access privileges to the server making up the chat room which the chat administrating service provider (SP) provides, and is issued to a user group or user device having privileges for participating in the chat room.

The issuer of the group attribute certificate AC02 is a user device (EE or UID) of Mr. B, and the holder, i.e., the holder to which the group attribute certificate AC02 is issued by performing authentication processing with the security chip (SC) (SC or USC) of the user device of Mr. B which is the issuer at the time of issuing the group attribute certificate AC02, is the security chip (SC or USC) of the user device of Mr. B.

The group attribute certificate AC02 is an attribute certificate proving access privileges to the managing service of the user device of Mr. B, and is issued to a user group or user device group having privileges to access the managing server of the user device of Mr. B.

Note that the issuing processing of the group attribute certificates AC01 and AC02 can be performed by the service provider (SP) or the user device of Mr. B serving as an end entity (EE) or the user identification device (UID) itself executing functions of a group attribute authority (AA) and group attribute certificate registration authority (ARA), but a configuration may also be made wherein issuing processing is commissioned to a group attribute authority (AA) and group attribute certificate registration authority (ARA). However, processing following the policies of the issuer being executed is a condition in this case.

For example, issuing processing of the group attribute certificates AC01 and AC02 is preferably performed by the service provider (SP) which is the issuer, the user device of Mr. B (EE, UID), or a group attribute certificate registration authority (ARA) serving as an issuing agent, causing Mr. A who is an issuance requester, to present an already-issued group attribute certificate which proves the identity of the user, such as a group attribute certificate issued from a credit card company, and following verification of the presented group attribute certificate, the group attribute certificates AC01 and AC02 are issued as new group attribute certificates. As for conditions for verification of an already-issued group attribute certificate in this way, the processing sequence for issuing the new group attribute certificates is the same processing sequence as that described earlier with reference to Fig. 29, Fig. 30, Fig. 32, and so forth.

The arrangement for issuing and storing group attribute certificates shown in Fig. 54 is as shown in Fig. 555. The chat room service provider (SP) 501, the communication terminal (EE) 511 of Mr. A serving as an end entity, and the communication terminal (EE) 531 of Mr. B, are capable of mutually transferring data by a communication network, and the communication terminal (EE) 511 and user identification device (UID) 521, and communication terminal (EE) 531 and user identification device (UID) 533, capable of mutually transferring data by a communication network via connected device interfaces 231 (see Fig. 9) of each.

Each of the devices have (user) security chips 512, 522, 532, 534, or a security module 502, having anti-tampering configurations, performing mutual authentication processing at the time of data communication processing, and encipherment and decipherment and the like of the transferred data. Also, verification processing of the group attribute certificate is executed at the security chips and security module.

The user identification device 521 of Mr. A stores the group attribute certificate AC01, 523 described earlier with reference to Fig. 54. The group attribute certificate AC01, 523 has as an issuer the chat room service provider (SP) 501, and is applied to chat room participation privilege confirmation processing, transferred from the USC 521 of the user device of Mr. A who is the holder, to the chat room service provider (SP) 501, and following verification and screening of the group attribute certificate AC01 at the security module (SM) of the chat room service provider (SP) 501, the service, i.e., participation in the chat room, is permitted.

Also, the user identification device 521 of Mr. A also stores a group attribute certificate AC02, 524, as described earlier with reference to Fig. 54. The group attribute certificate AC02, 524 has a the issuer the user device (EE 531 or UID 533) of Mr. B, and is applied to access privilege confirmation processing to the managing server of the user device of Mr. B, is transmitted from the USC 521 of the user device of Mr. A who is the holder to the user device (EE 531 or UID 533) of Mr. B, and following verification and screening of the group attribute certificate AC02 at the security chip (SC 532 or USC 534) of the user device (EE 531 or UID 533) of Mr. B, service, i.e., access to the managing server of the device of Mr. B, is permitted.

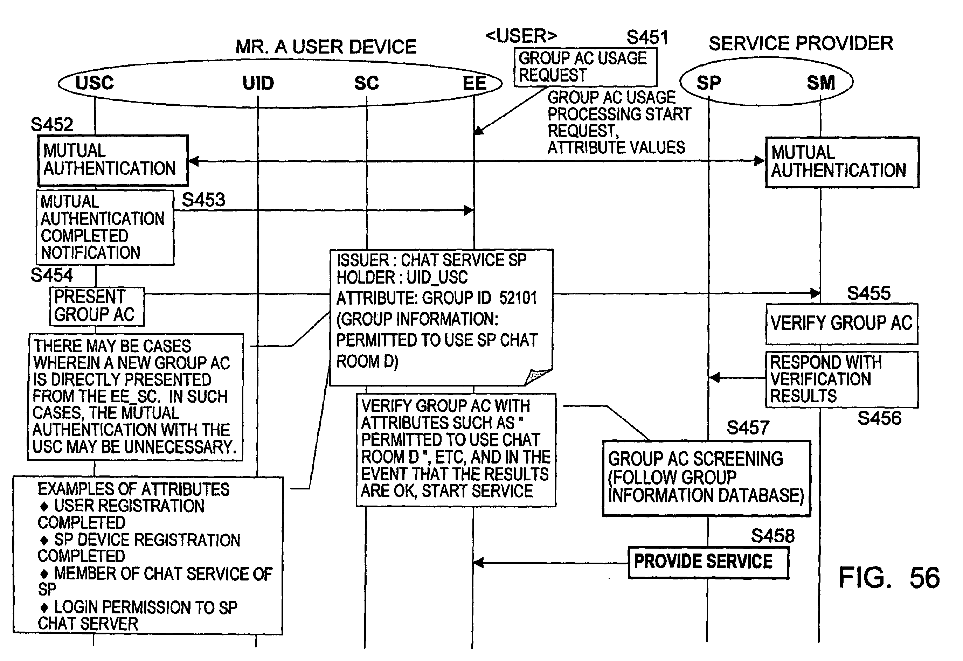

The processing sequence for applying the group attribute certificate AC01, 523 stored in the user identification device 421 of Mr. A to perform user privilege confirmation processing of chat room participation service, and start the service, will be described with reference to Fig. 56. In Fig. 56,
DID: Mr. A user identification device (user device) control unit,
USC: user security chip configured within the UID,
EE: Mr. A communication device (user device) control unit, SC: security chip configured within the EE,
SP: chat room service provider (SP) control unit, and
SM: security module within SP.

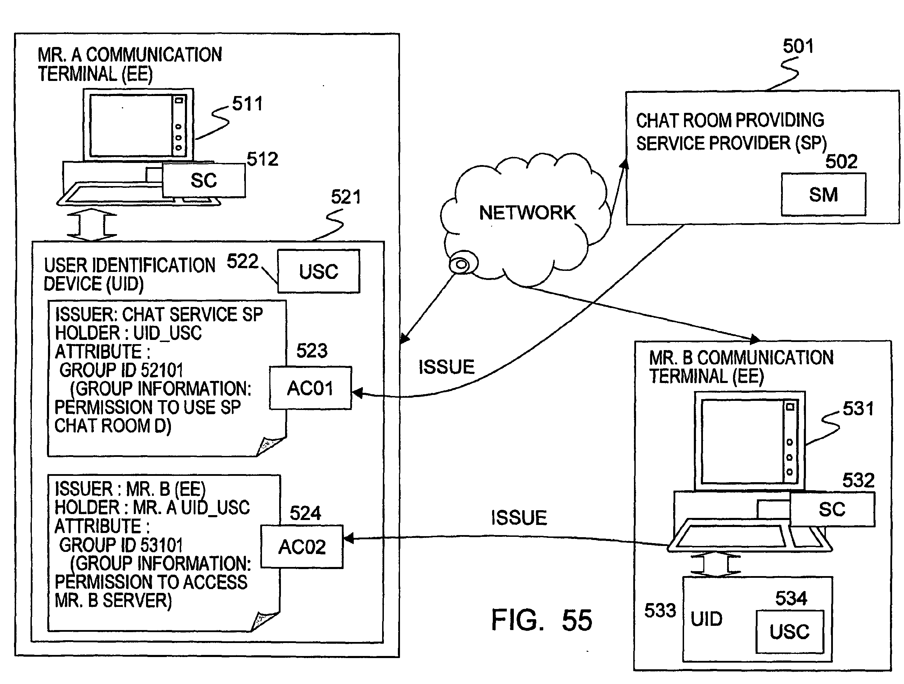

First, in step S451, a user (Mr. A) inputs a group attribute certificate (Gp. AC) = AC01 usage request command via the input interface of the communication terminal (EE) of Mr. A serving as an end entity. This group attribute certificate (Gp. AC) is the AC01 shown in Fig. 54 and Fig. 55. At this time, the user specifies the group ID set in the group attribute certificate AC01 to be used. However, in the event that a single group ID can be determined by specifying a certain service, an arrangement may be made wherein only the service is specified.

Upon the Mr. A communication terminal (EE) receiving the group attribute certificate (Gp. AC) AC01 usage request input from the user, mutual authentication is performed between the user security chip (USC) and the security module (SM) of the chat room service provider (SP) serving as the service provider in step S452. Now, while omitted in the illustration here, in the event a user identification device (UID) does not have direct communication functions with the SP, all of:
(1) Mutual authentication between the SC of the EE and the SP-SM,
(2) Mutual authentication between the SC of the EE and the USC of the UID, and
(3) Mutual authentication between the USC of the UID and the SP-SM,
is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

The authentication processing is executed as public key mutual authentication processing described earlier with reference to Fig. 13, centered on the encipherment processing unit (see Fig. 9) of the security chip and security module. In step S453, a mutual authentication completion notification including mutual authentication established/not-established result information is output from the user security chip to the end entity. In the event that the mutual authentication is not established, continuation of the processing is cancelled. In the event that mutual authentication is established, in step S454 the user security chip (USC) transmits the group attribute certificate (Gp. AC) AC01 stored in its own memory to the security module (SM) of the service provider (SP). The group attribute certificate (Gp. AC) AC01 is the group attribute certificate AC01 applied to processing for determining chat room participation receiving right privileges, as described with reference to Fig. 54 and Fig. 55.

In step S455, the security module (SM) of the chat room providing service provider (SP) which has received the group attribute certificate (Gp. AC) AC01 from the user security chip (USC) executes group attribute certificate verification processing. The verification processing of the group attribute certificate is as described earlier with reference to Fig. 21 through Fig. 23, and is executed as processing including attribute certificate signature verification, corresponding public key certificate (PKC) and chain public key certificate confirmation processing, and so forth.

Following verification processing of the group attribute certificate (Gp. AC), the security module (SM) outputs the verification results to the chat room providing service provider (SP), and in the event that verification is not established, providing of services is not executed and the processing is cancelled as error processing. In this case, processing may be performed wherein the end entity is notified to the effect that verification of the group AC was not established.

In the event that the verification of the group attribute certificate (Gp. AC) is successful and the authenticity of the group attribute certificate (Gp. AC) has been confirmed, the flow proceeds to step S457. In step S457, screening of the group attribute certificate (Gp. AC) described earlier with reference to Fig. 25 is carried out. The screening is executed based on the group information database which the chat room providing service provider (SP) serving as the service provider holds. That is to say, the chat room providing service provider (SP) obtains the issuer information and group ID from the already-verified group attribute certificate (Gp. AC) AC01, searches the group information database based on the obtained information, and confirms whether or not there is a registered entry. In the event that there is a corresponding registered entry, the group information is obtained from the group information database.

The group information in this case includes chat room participation permission information. In step S458, the chat room providing service provider (SP) serving as the service provider performs service providing processing, i.e., permits participation to the chat room following the group information. That is to say, processing for permitting access to the server providing the chat room is performed.

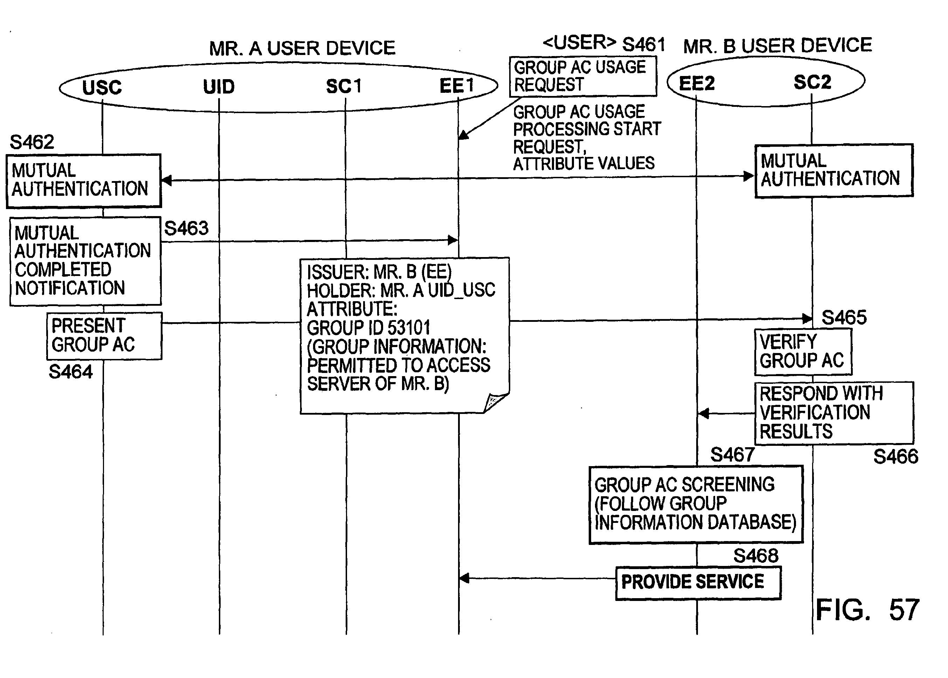

Next, the processing sequence for applying the group attribute certificate AC02, 524 stored in the user identification device 421 of Mr. A to perform user privilege confirmation processing to the user device of Mr. B, and start communication between MR. A and Mr. B, will be described with reference to Fig. 57. In Fig. 57,
UID: Mr. A user identification device (user device) control unit,
USC: user security chip configured within the UID,
EE1: Mr. A communication device (user device) control unit, SC1: security chip configured within EE1,
EE2: Mr. B communication device (user device) control unit, and ,
SC2: security chip configured within EE2.

First, in step S461, a user (Mr. A) inputs a group attribute certificate (Gp. AC) = AC02 usage request command via the input interface of the communication terminal (EE1) of Mr. A serving as an end entity. This group attribute certificate (Gp. AC) is the AC02 shown in Fig. 54 and Fig. 55. At this time, the user specifies the group ID set in the group attribute certificate AC02 to be used.

Upon the Mr. A communication terminal (EE1) receiving the group attribute certificate (Gp. AC) AC02 usage request input from the user, mutual authentication is performed between the user security chip (USC) and the security chip (SC2) of the user device of Mr. B in step S462. Note that the example described here is a case wherein the issuing entity of the group attribute certificate (Gp. AC) AC02 is the security chip (SC) of the communication terminal (EE) of Mr. B. In a case wherein the issuing entity is the user identification device (UID) of Mr. B, mutual authentication would be performed with the user security chip (USC) of the user identification device (UID) of Mr. B.

The authentication processing is executed as public key mutual authentication processing described earlier with reference to Fig. 13, centered on the encipherment processing unit of the security chip and security module. In step S463, a mutual authentication completion notification including mutual authentication established/not-established result information is output from the user security chip (USC) of Mr. A to the end entity (EE1). In the event that the mutual authentication is not established, continuation of the processing is cancelled. In the event that mutual authentication is established, in step S464 the user security chip (USC) transmits the group attribute certificate (Gp. AC) AC02 stored in its own memory to the security chip (SC2) of the communication terminal (EE) of Mr. B. The group attribute certificate (Gp. AC) is the group attribute certificate AC02 applied to processing for determining access privileges to the server of the user device of Mr. B, as described with reference to Fig. 54 and Fig. 55.

In step S465, the security chip (SC2) of the communication terminal (EE) of Mr. B which has received the group attribute certificate (Gp. AC) AC02 from the user security chip (USC) executes group attribute certificate verification processing. The verification processing of the group attribute certificate is as described earlier with reference to Fig. 21 through Fig. 23, and is executed as processing including attribute certificate signature verification, corresponding public key certificate (PKC) and chain public key certificate confirmation processing, and so forth.

Following verification processing of the group attribute certificate (Gp. AC), the security chip (SC2) of the communication terminal (EE) of Mr. B outputs the verification results to the communication terminal (EE) of Mr. B, and in the event that verification is not established, providing of services is not executed and the processing is cancelled as error processing. In this case, processing may be performed wherein Mr. A is notified to the effect that verification of the group AC was not established.

In the event that the verification of the group attribute certificate (Gp. AC) is successful and the authenticity of the group attribute certificate (Gp. AC) has been confirmed, the flow proceeds to step S467. In step S467, screening of the group attribute certificate (Gp. AC) described earlier with reference to Fig. 25 is carried out. The screening is executed based on the group information database which the communication terminal (EE) of Mr. B holds. That is to say, the communication terminal (EE) of Mr. B obtains the issuer information and group ID from the already-verified group attribute certificate (Gp. AC) AC02, searches the group information database based on the obtained information, and confirms whether or not there is a registered entry. In the event that there is a corresponding registered entry, the group information is obtained from the group information database.

The group information in this case includes access privilege information for access to the server of the communication terminal of Mr. B. In step S468, the communication terminal (EE) of Mr. B performs service providing processing, i.e., permits access to the server of the user device of Mr. B.

### [(6) Execution attribute certificate (execution AC)]

Next, an execution attribute certificate (execution AC) which enables not only determining service receiving privileges in service providing arrangements based on privilege confirmation using attribute certificates, but also restricting execution of the service itself by attribute certificates, will be described.

### (6-1) Execution attribute certificate overview

The above-described group attribute certificates, or conventionally-known general attribute certificates, are capable of verifying that the stored data of the attribute certificate such as privilege information or the like which is a holder attribute, has not been tampered with, by signature verification. The execution attribute certificate (execution AC) which will be described below not only executes confirmation that the certificate has not been tampered with, by verification, but also has a configuration for deciphering enciphered data (program) stored the execution attribute certificate by the certificate holder, and receiving services based on the deciphering of the enciphered data (program).

A key (registered key) applied for deciphering enciphered data (program) stored in an execution attribute certificate is a secret shared key which only the issuer of the execution attribute certificate and the holder of the execution attribute certificate which is the security chip (SC) of the user device corresponding to the service receiver, can know. Accordingly, execution of services based on the execution attribute certificate can be made only with predetermined user devices.

Note that in the following, description will be made regarding an arrangement wherein the security chip (SC) of the user device which is the end entity (EE) executes processing of the execution attribute certificate, but the processing of the security chip (SC) described below is processing which can be carried out in the same way by the user security chip (USC) of the user identification device (UID), as with the processing of the group attribute certificate described above.

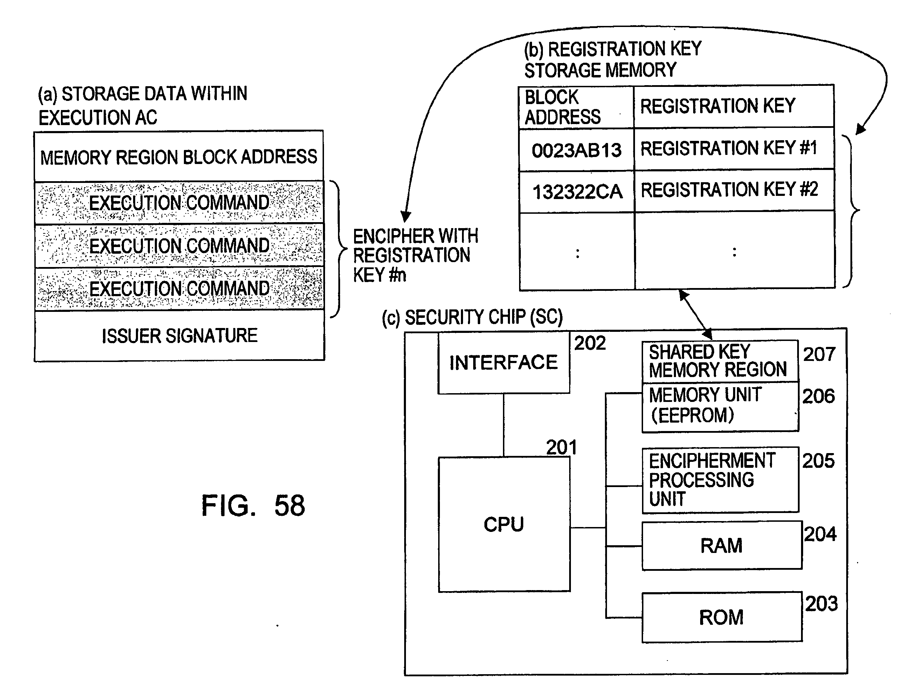

As shown in Fig. 58(a), the execution attribute certificate has data which is an execution command such as a program or the like necessary for executing the provided service that has been enciphered with a registration key, and a memory region block address which is address data indicating a registration key storage region in memory of the security chip storing the registration key, e.g., the registration key storage region in the shared key memory region 207 formed within the EEPROM 206 of the security chip shown in Fig. 58(c) for example. Further, the execution attribute certificate has various types of attribute certificate data (see Fig. 5), with the signature of the issuer affixed. Data tampering verification can be executed by signature verification. Signature generating and verification processing can be executed following the processing described earlier with reference to Fig. 17 and Fig. 18.

Also note that the execution attribute certificate can be configured compliant to the basic format of attribute certificates, compliant with ITU-T X.509 for example. However, following the format stipulated by ITU-T X.509 is not indispensable, and an original format may be used to configure the attribute certificate.

As shown in Fig. 58(b), the shared key memory region 207 of the security chip (SC) has stored multiple registration keys corresponding to multiple execution attribute certificates which an end entity (EE) serving as a user device holds, corresponding to predetermined block addresses.

The shared key memory region 207 is a memory region in non-volatile memory made up of blocks of a fixed size, such as 64 bits for example. Storage processing and resetting processing of registration keys is carried out following predetermined procedures. This processing will be described later. Except for reset commands, access to the registration key storage memory region can only be realized by using a command enciphered with the registration key stored in the block to be accessed. Also, with regarding secret keys as well, in addition to an arrangement wherein secret keys cannot be read out, and arrangement is conceived wherein enciphered or deciphered results cannot be directly read out with the secret key. Here, the term cannot be directly read out means that enciphering with the secret key following applying a hash function, or deciphering and executing command enciphered with a public key, can be realized. In the following a security chip or a module which is the holder of an execution attribute certificate is to be understood to have such an arrangement.

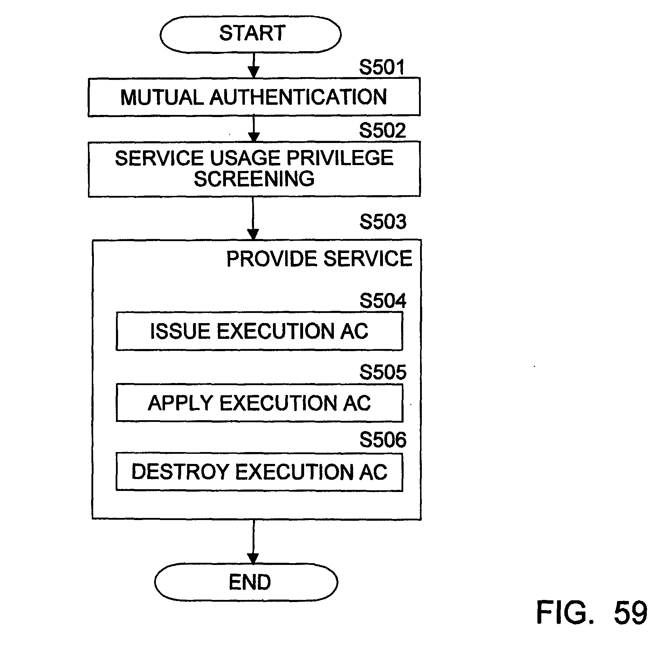

An overview of the usage procedures of an execution attribute certificate will be described following the flowchart in Fig. 59. Fig. 59 illustrates a flowchart schematically showing the processing at a service provider (SP) serving as an issuer of the execution attribute certificate, and a user device serving as a receiver of a service through the execution attribute certificate, for example. In step S501, mutual authentication is executed between the service provider (SP) and the user device, and in step S502, screening of service usage privileges based on a group attribute certificate as described above for example, is performed. The processing here is the same as the authentication processing and verification processing with group attribute certificates described above, and the authentication processing is executed as public key mutual authentication processing described earlier with reference to Fig. 13, centered on the encipherment processing unit of the security chip and security module (see Fig. 9). The verification processing is as described earlier with reference to Fig. 21 through Fig. 23, and is executed as processing including attribute certificate signature verification, corresponding public key certificate (PKC) and chain public key certificate confirmation processing, and so forth.

Next, as processing in step S503, service providing processing based on the execution attribute certificate (execution AC) is performed. Service providing processing based on the execution attribute certificate (execution AC) is carried out by one of: the execution attribute certificate (execution AC) issuing processing shown in step S504; the execution attribute certificate (execution AC) applying processing shown in step S505; and the execution attribute certificate (execution AC) destroying processing shown in step S506.

### (6-2) Execution attribute certificate issuing processing

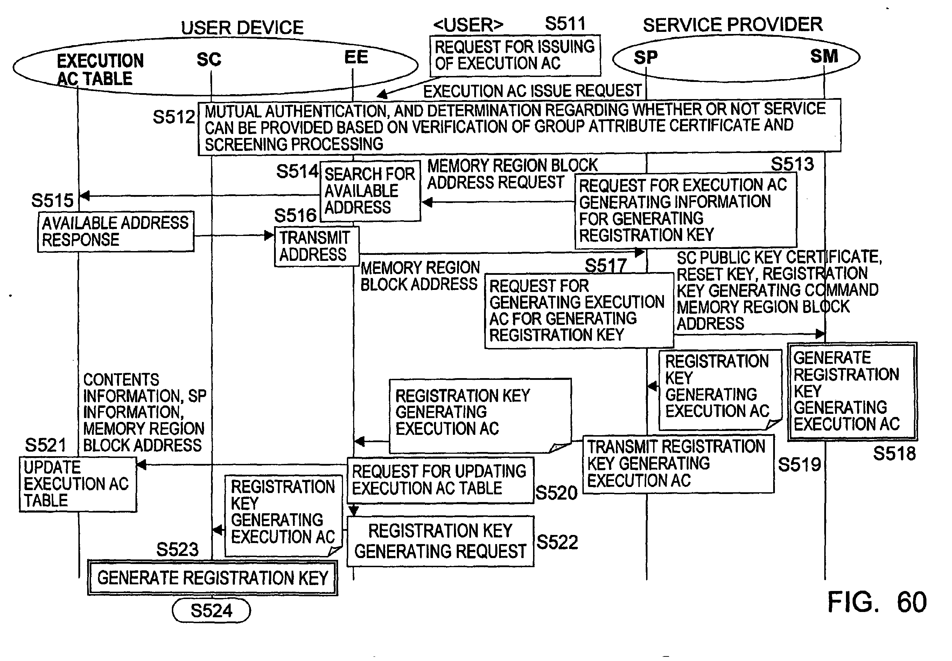

First, execution attribute certificate issuing processing will be described. Fig. 60 illustrates the issuing sequence of an execution attribute certificate. In Fig. 60,
EE: user device end entity (EE) control unit,
SC: security chip configured within the EE,
Execution AC table: execution AC managing table storage memory and memory control unit
SP: service provider device for executing execution AC issuing processing (SP) control unit, and
SM: security module within SP.

First, in step S511, a user inputs an issuing request command for a execution attribute certificate (execution AC) via the input interface of the end entity (EE) serving as a user device. Upon the end entity (EE) receiving the execution attribute certificate issuing request input from the user, mutual authentication is performed between the security chip (SC) and the security module (SM) of the service provider (SP) in step S512, as well as verification and screening of an already-issued group attribute certificate applied to the issuing conditions for an execution attribute certificate (execution AC).

The authentication processing is executed as public key mutual authentication processing described earlier with reference to Fig. 13, centered on the encipherment processing unit of the security chip and security module (see Fig. 9). The verification processing is as described earlier with reference to Fig. 21 through Fig. 23, and is executed as processing including attribute certificate signature verification, corresponding public key certificate (PKC) and chain public key certificate confirmation processing, and so forth.

Note that while the description here is of an example of issuing processing of an execution attribute certificate to the security chip (SC) of an end entity (EE), in the event of issuing an execution attribute certificate to the user security chip (USC) of the user identification device (UID), all of:
(1) Mutual authentication between the SC of the EE and the SP-SM,
(2) Mutual authentication between the SC of the EE and the USC of the UID, and
(3) Mutual authentication between the USC of the UID and the SP-SM,
is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

Upon the authentication, group attribute certificate verification and screening, in step S512 being all established, the service provider (SP) performs registration key generating execution AC generating information request processing to the end entity (EE) of the user device. Specifically, this is processing for requesting an available memory region address in the memory to be used as the storage region for the registration key to be applied to encipherment and decipherment processing of the execution command (Fig. 58) of the execution attribute certificate.

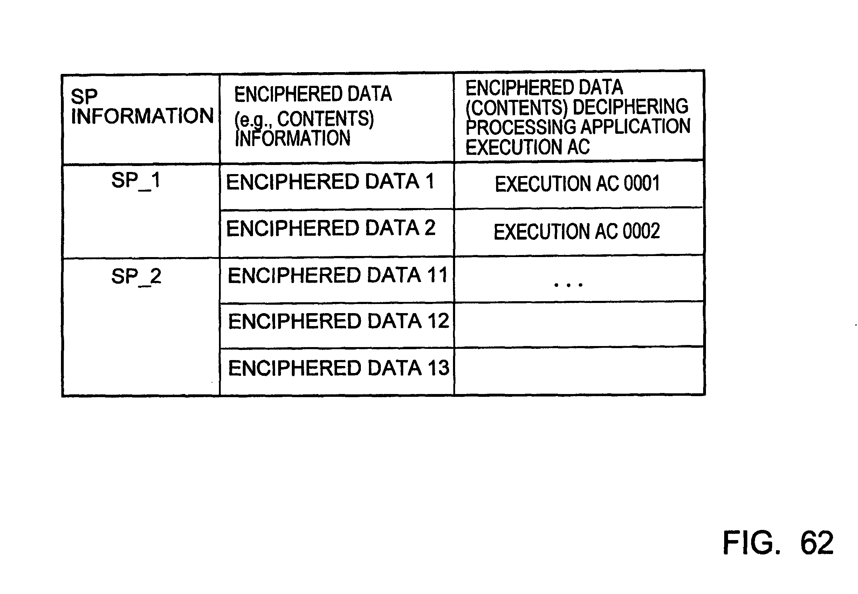

Upon the end entity (EE) receiving the registration key generating execution AC generating information request, in step S514, an available memory region address search for memory to be used for the storing region of the registration key is output to an execution AC table control unit, and the execution AC table (control unit) responds to this request by making reference to the execution AC table and notifying the end entity of an available memory region address to be used to store a newly-registered registration key. As shown in Fig. 62 for example, an Execution AC table is a table correlating SP information which is identification data of a service provider, service information which the service provider provides, such as enciphered content information for example, and an execution AC stored as execution commands of a program necessary to use the service information provided by the service provider. The execution AC table is stored in memory within the end entity (EE) or the security chip (SC).

The execution AC table (control unit)makes reference to memory region block addresses of registration keys corresponding to execution ACs already stored, detects an available address in its own security chip, and notifies the end entity of the available memory region address where the new-registration registration key should be stored. The execution AC table control unit is a control unit which performs access control of the memory storing the execution AC table, and is made up of a CPU or the like executing data extraction, and for executing memory access control processing for end entities (EE) or security chips (SC).

In step S516, the end entity (EE), transmits the available address to the service provider (SP). The service provider (SP) which has received the new-registration key memory region block address outputs a generating request for a registration key generating execution AC to the security module (SM) in step S517. In step S518, the security module (SM) performs generating processing for the registration key generating execution AC. The registration key generating execution AC generating request output from the service provider (SP) to the security module (SM) includes a security chip public key certificate storing a security chip public key (KpSC), a reset key (Kreset) used for resetting the registration key, a registration key generating command (GenKer), and a memory region block address (Ad).

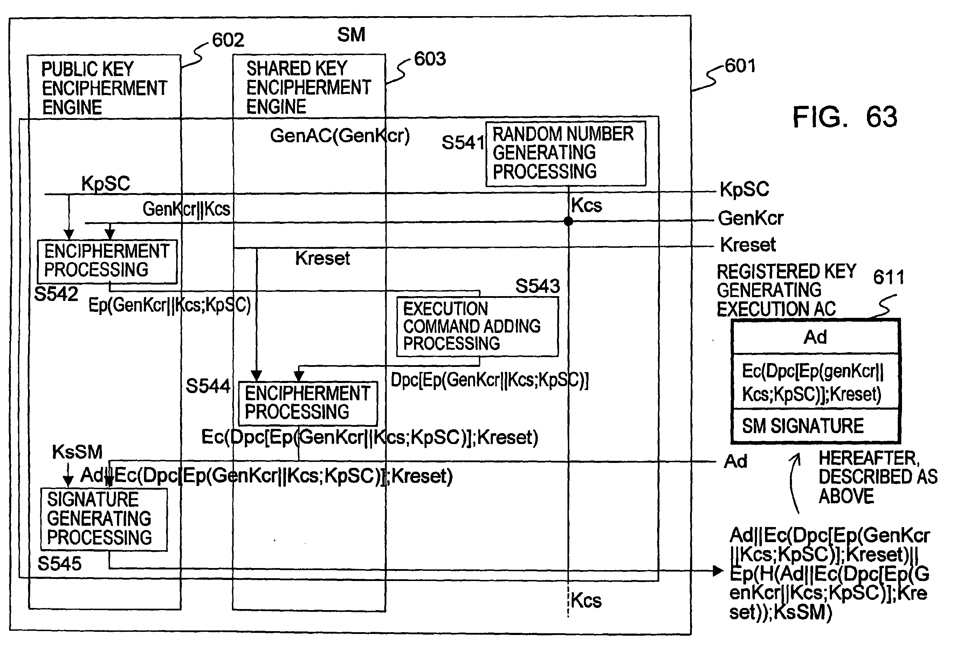

The details of the generating processing for the registration key generating execution AC at the security module (SM) will be described with reference to Fig. 63.

The security module (SM) 601 has the same configuration as that of the security chip configuration described earlier with reference to Fig. 9, with Fig. 63 illustrating the extracted encipherment processing unit and memory unit thereof. The encipherment processing unit comprises a public key encipherment engine 602, and shared key encipherment engine 603. The security module (SM) 601 has a configuration such as of a CPU, RAM, ROM, etc., as described earlier with reference to Fig. 9, and is capable also of data processing, and data input/output processing.

The public key encipherment engine 602 executes pubic key encryption such as elliptic curve encryption, or RSA (Rivest-Shamir-Adleman) encryption, and performs processing such as data encipherment and decipherment, signature generation, verification processing, and so forth. The shared key encipherment engine 603 executes shared key encipherment processing such as, for example, DES, triple DES, and so forth, and performs data encipherment and decipherment and so forth. The security module (SM) 601 further has hash generating processing, and random number generating processing functions.

At the time of a registration key generating execution AC generating request such as described above, the security module (SM) inputs the security chip public key certificate storing the security chip public key (KpSC), the rest key used for resetting the registration key (Kreset), the registration key generating command (GenKer), and memory region block address (Ad).

In the random number generating processing in step S541, the session key (Kcs) based on the generated random number, and the registration key generating command (GenKer) are enciphered using the security chip public key (KpSC) inn step S542, thereby generating enciphered data (Ep(GenKcr||Kcs:KpSC). Note that a||b indicates linked data, and Ep(a;b) indicates an enciphered message based on the public key enciphering method of a, applying a key b.

Next, in step S543, execution command adding processing is performed. Dpc[a] indicates an execution command for executing a command within the data a based on decipherment with the secret key based on the public key enciphering method. Further, in step S544, shared key encipherment processing based on the reset key (Kreset) is executed, thereby generating the enciphered data (Ec(Dpc[Ep(GenKcr|||Kcs;KpSC)];Kreset). Ec(a;b) indicates an enciphered message based on the shared key enciphering method of a, applying a key b.

Further, in step S545, linked data of the enciphered data (Ec(Dpc[Ep(GenKcrl|||Kcs;KpSC)];Kreset) and the memory region block address (Ad) indicating the storage region of the new-registration key is subjected to signature processing applying the secret key (KsSM) of the security module (SM). As a result of these processes, a registration key generating execution AC 611 is generated.

The registration key generating execution AC 611 is of a configuration including the
memory region block address (Ad) indicating the storage region of the new-registration key,
enciphered data (Ec(Dpc[Ep(GenKcr|||Kcs;KpSC)];Kreset), and
signature data Ep(H(Ad||Ec(Dpc[Ep(GenKcr||Kcs;KpSC)];Kreset:KsSM). Note that H(a) indicates the hash value of a.

Description will be continued, returning to the sequence diagram in Fig. 60. In step S518, upon the registration key generating execution AC generating processing at the security module (SM) ending, the registration key generating execution AC is sent from the security module (SM) to the service provider (SP), and in step S519, the registration key generating execution AC is sent from the service provider (SP) to the end entity (EE) of the user device.

In step S520, the end entity (EE) of the user device transmits an update request to the execution AC table (see Fig. 62) of the execution AC table (control unit), where the execution AC table (control unit) updates the execution AC table in step S521. The update request for the execution AC table (see Fig. 62) includes content information which can be used by applying the newly-registered key, service provider information, and memory region block address, and this information is registered as new entries to the execution AC table.

Further, the end entity (EE) of the user device outputs a registration key generating request to the security chip (SC) in step S522. This request is performed as processing wherein the registration key generating execution AC is sent to the security chip (SC).

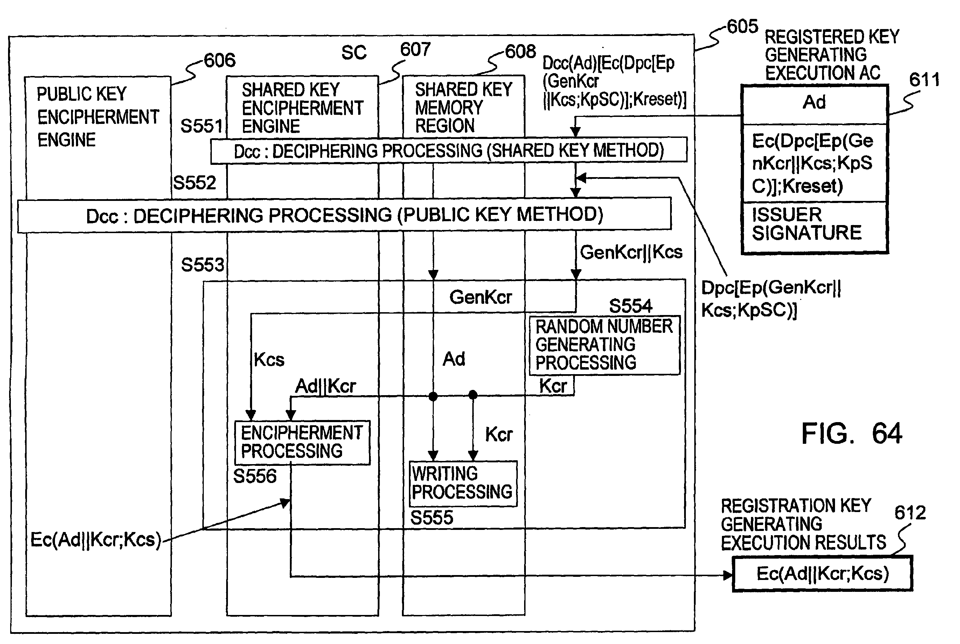

The security chip (SC) executes the registration key generating processing in step S523. Description will be made regarding the registration key generating processing based on the registration key generating execution AC executed at the security chip with reference to Fig. 64.

The security chip (SC) 605 is of the same configuration as the security chip configuration described with reference to Fig. 9 earlier. However, this comprises a shared key memory region, as described with reference to Fig. 58. Fig. 64 illustrates the enciphering processing unit and memory unit of the configuration there in an extracted manner. The encipherment processing unit comprises a public key encipherment engine 606, and shared key encipherment engine 607, and has a shared key memory region 608 for the memory unit thereof. The security chip (SC) 605 has a configuration such as of a CPU, RAM, ROM, etc., as described earlier with reference to Fig. 9, and is capable also of data processing, such as data processing based on execution commands enciphered at the enciphering processing unit for example, and data input/output processing. For example, writing and reading data to and from the shared key memory 608, external data input, external data output, data transfer between devices, and like data processing, is executed based on the control of the CPU.

The public key encipherment engine 606 executes pubic key encryption such as elliptic curve encryption, or RSA (Rivest-Shamir-Adleman) encryption, and performs processing such as data encipherment and decipherment, signature generation, verification processing, and so forth. The shared key encipherment engine 607 executes shared key encipherment processing such as, for example, DES, triple DES, and so forth, and performs data encipherment and decipherment and so forth. The shared key memory region 608 is memory storing registration keys, and is memory formed of non-volatile memory made up of fixed-sized blocks such as 64 bits for example. The security chip (SC) 605 further has hash generating processing, and random number generating processing functions.

The security chip (SC) inputs the registration key generating AC 611 from the end entity at the time of the registration key generating request.

In step S551, the execution command data (Dpc[Ec(GenKcr||Kcs;KpSC)] of the registration key generating AC 611 is extracted by shared key deciphering applying the reset key (Kreset), and further, in step S552, as data processing corresponding to the deciphered execution command, the linked data of the registration key generating command (GenKer) and session key (Kcs) by public key deciphering applying the secret key (KsSC) of the security chip.

The next step S553 is also data processing corresponding to a deciphering execution command, and is an execution processing step for registration key generating processing (GenKer). In step S554, a registration key (Ker) based on a random number is generated, and in step S555, a registration key (Kcr) is written to the shared key memory region 608 following the memory region block address (Ad) which is the storage region address of the registration key.

Further, in step S556, the linked data of the registration key (Kcr) and memory region block address (Ad) is enciphered with the session key (Kcs), and output to the end entity (EE) as the registration key generating results 612.

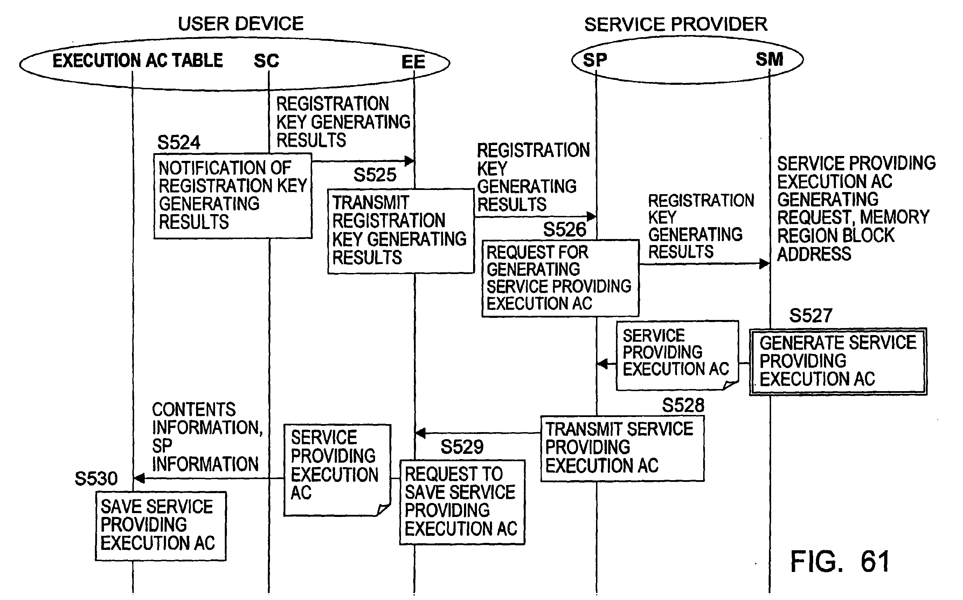

The output step of the registration key generating results 612 to the end entity (EE) is equivalent to the step S524 in Fig. 61.

The registration key generating results obtained by the linked data of the registration key (Kcr) and memory region block address (Ad) being enciphered with the session key (Kcs) is transmitted from the end entity (EE) of the user device to the service provider (SP).

Upon receiving the registration key generating results, the service provider (SP) transmits the registration key generating results to the security module (SM) in step S526, thereby making a request to generate a service providing execution AC. The security module (SM) executes the service providing execution AC generating processing in step S527.

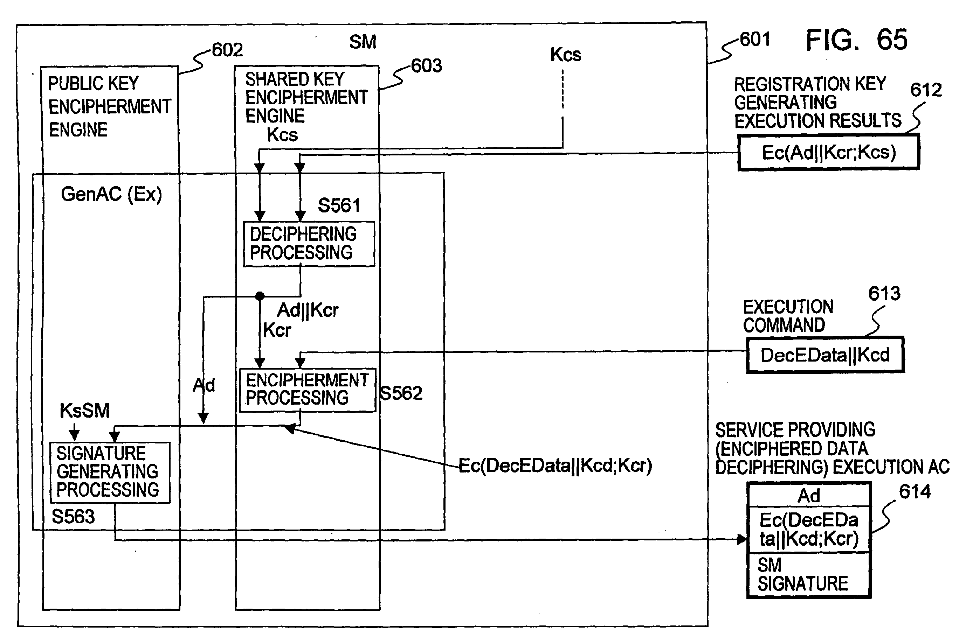

The service providing execution AC generating processing by the security module (SM) will be described with reference to Fig. 65.

First, in step S561, the session key (Kcs) is applied to execute deciphering processing of the registration key generating results, and obtain the linked data (Ad||Kcr) of the registration key (Kcr) and the memory region block address (Ad). Further, in step S562, an execution command (DecEDatap|| Kcd) 613 for storing to the service providing execution AC is enciphered applying the registration key (Kcr). Note that an execution command is an execution command for an execution program or the like, set according to the service providing execution AC. Here, an example is illustrated of an execution command configured of linked data of a data deciphering key (Kcd) and enciphered data deciphering command (DecEData).

Further, in step S563, a secret key (KsSM) of the security module is used to generate a signature (see Fig. 17) with regard to the enciphered data (Ec(DecEData||Kcd);Kcr) wherein the execution command (DecEData||Kcd) 613 has been enciphered with the registration key (Kcr), and the data of the memory region block address (Ad) of the security chip of the user device storing the registration key (Ker), thereby generating a service providing execution AC 614. Here, the service providing execution AC 614 is an execution attribute certificate for executing the encipherment processing of enciphered data as a service.

Application of the registration key (Kcr) is indispensable for deciphering the executing command stored in the execution attribute certificate, and the only one that has the registration key information here is the security chip (SC) of the user device participating in the service providing execution AC generating processing, and the security module (SM) of the service provider.

Returning to Fig. 61, description will be continued of the sequence diagram. Upon the security module (SM) generating the service providing execution AC in step S527, this is sent from the privilege service provider (SP) to the end entity (EE) of the user device in step S528, and further in step S529, is sent to the execution AC table control unit, and in step S530, is stored in the execution AC table (see Fig. 62).

Due to the above processing, as shown in Fig. 58(a), the memory region block address of the security chip of the user device storing the registration key, the execution command enciphered with the registration key, and further the issuer signature, and execution attribute certificate (execution AC) having the above data, are stored in the user device. Note that besides these data, data of the fields of the group attribute certificate described earlier with reference to Fig. 5 may also be optionally stored. However, the signature must be executed for all data which is the object of tampering checking.

### (6-3) Execution attribute certificate application processing

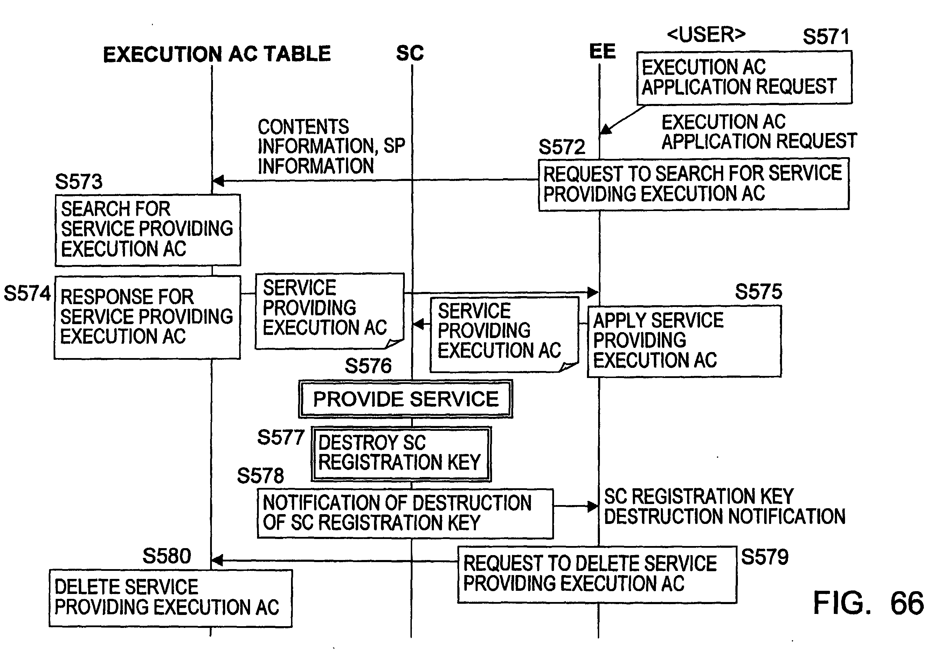

Now, the application processing of the execution attribute certificate issued by the above-described procedures will be described. Fig. 66 is an application sequence at the user device side of the service providing execution AC. The service providing execution AC has already been stored in the execution AC table of the user device by the above-described processing.

In step S571, the user inputs a service providing execution AC application processing request through the user interface of the end entity (EE). This processing request includes execution AC identifier, or service provider (SP) information, data whereby service contents can be identified, such as usage content or usage program specified data. The end entity (EE) outputs a search request for the service providing AC which the user has specified to the execution AC table in step S572. The search key is, for example, content information, service provider (SP) information, or the like.

In step S573, the execution AC table searches the corresponding service providing execution ACs based on the input key from the end entity, and outputs the service providing execution AC extracted form the table to the end entity (EE) in step S574.

In step S575, the end entity (EE) outputs the received AC to the security chip (SC), and makes a service providing execution AC application processing request. In step S576, the security chip performs providing processing for the received AC, i.e., service providing following the execution attribute certificate (execution AC).

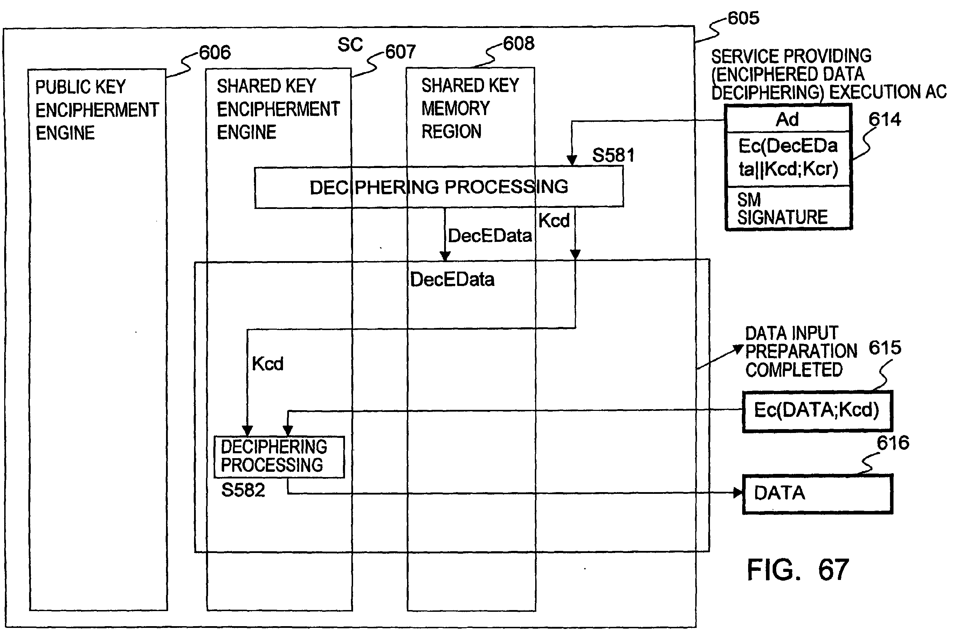

The details of the service providing processing in step S576 at the security chip (SC) will be described with reference to Fig. 67. The security chip 605 inputs the service providing execution AC 614.

The service providing execution AC 614 includes the (Ec(DecEData||Kcd);Kcr) data wherein the execution command (DecEData||Kcd) has been enciphered with the registration key (Kcr), the memory region block address (Ad) in the security chip of the user device storing the registration key (Kcr), and data whereby each data has been signed by the secret key (KsSM) of the security module.

In step S581, The security chip 605 obtains the registration key (Kcr) from the shared key memory region 608 following the memory region block address (Ad) within the service providing execution AC, executes deciphering processing of the enciphered data (Ec(DecEData||Kcd);Kcr) within the service providing execution AC using the obtained registration key (Kcr), thereby obtaining the data deciphering key (Kcd) and deciphered command (DecEData) of the enciphered data.

In step S582, data processing based on the deciphered execution command is executed. That is to say, the data deciphering key (Kcd) is applied to executing deciphering processing of the enciphered data (Ec(data;Kcd)) 615 to be deciphered which is externally input, thereby outputting deciphered data 616. This enciphered data (Ec(data;Kcd)) 615 to be deciphered is data such as images, music, programs, and like contents, enciphered with the key (Kcd), and can be deciphered by the data deciphering key (Kcd) which is obtained by deciphering the storage executing command with the registration key (Kcr) within the service providing execution AC.

Description will continue, returning to the sequence diagram in Fig. 66. Following providing the service in step S576, in step S577 the security chip (SC) performs registration key destruction processing. This registration key destruction processing is executed according to he service providing execution AC in some cases and is unnecessary to execute in other cases. In the case of an execution AC wherein the service providing processing based on the service providing execution AC is only once, this destruction processing is executed following the service providing processing.

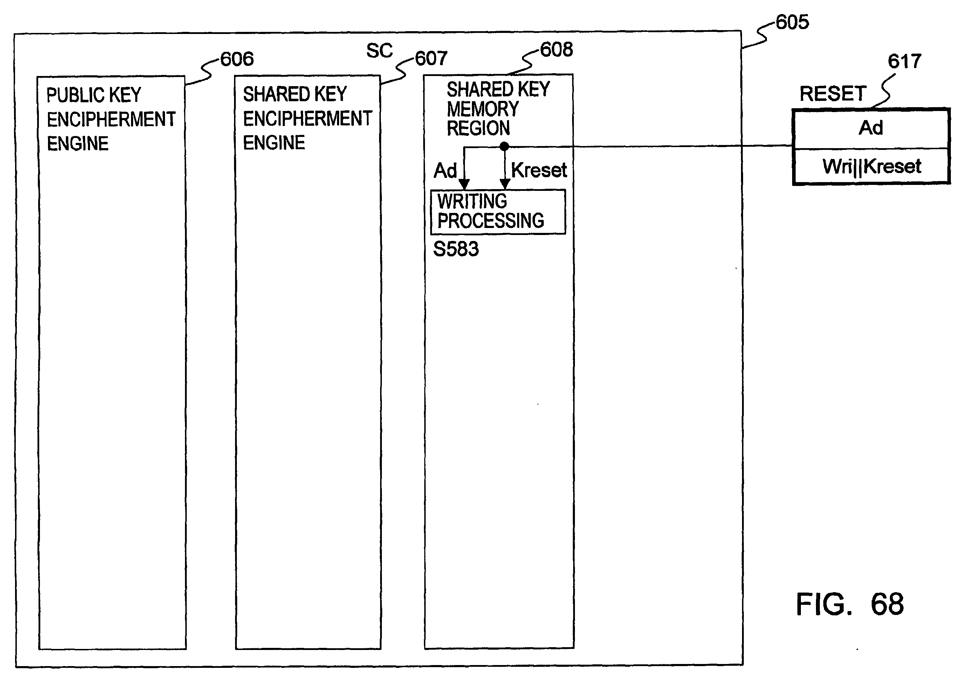

The SC (security chip) registration key destruction process in step S577 will be described with reference to Fig. 68. The registration key reset processing is performed by overwriting the reset key (Kreset) in the stored region of the registration key in the shared key memory region 608. In the event that a reset processing command 617 made up of the memory region block address (Ad) of the registration key (Kcr) to be destroyed and the reset key (Kreset) is input from an end entity (EE) for example, in step S583 writing processing of the reset key (Kreset) is executed at the memory region corresponding to the memory region block address (Ad) stored in the reset processing command 617, and thus deletion of the registration key is completed.

Description will continue, returning to the sequence diagram in Fig. 66. In step S577, upon destruction of the registration key being completed, a registration key destruction notification is output to the end entity (EE) in step S578, and in step S579 the end entity (EE) outputs a service providing execution AC deletion request to the execution AC table, and the execution AC table (control unit) deletes the corresponding execution AC from the execution AC table.

### (6-4) Registration key resetting processing

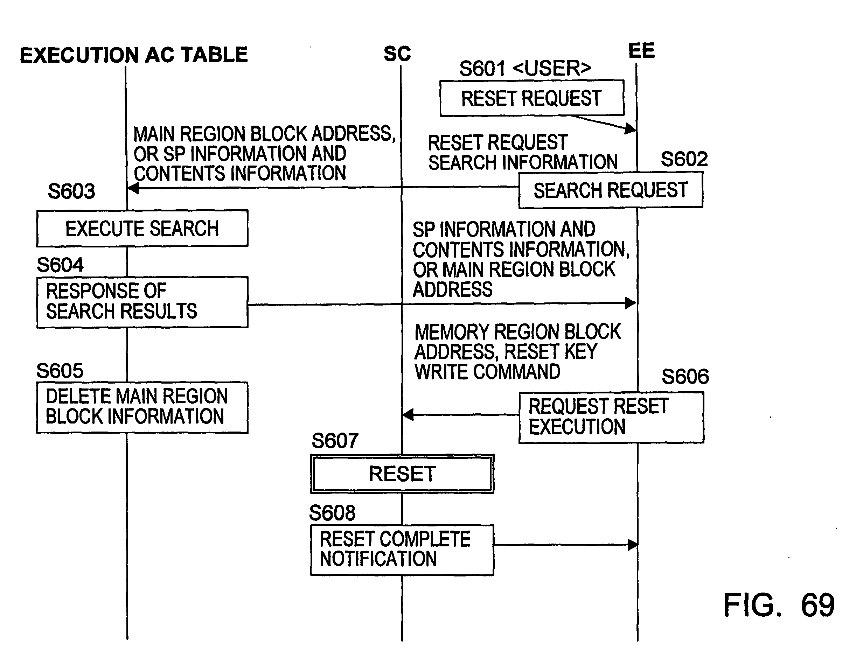

Note that the registration key destruction processing may not be performed following the providing processing of the service providing execution AC, and the reset processing which is the registration key destruction processing may be executed based on a reset request at an arbitrary timing. Description will be made regarding the processing based on this reset request, with reference to Fig. 69.

In step S601, a user inputs a registration key reset request corresponding to a service providing execution AC stored in the user device, via the user interface of an end entity (EE). In step S602, the end entity (EE) outputs a search request to the execution AC table. There are two arrangement for reset requests. One arrangement is for a case wherein the user forgets the service contents written to a certain memory region block address of the execution AC table, in which the execution AC table is searched with the memory region block address as a key, and in the event that determination is made that the registration key corresponding to the output SP information / contents information is unnecessary, a reset execution request is made. This processing request includes an execution AC identifier, or data for specifying the service contents such as, for example, contents, program, or service provider (SP) information data. The second arrangement is for a case wherein the user knows the SP information and content information, and the execution AC table is searched with this as a key, and the output memory region block address is transmitted to the SC along with a reset execution request/Note that the memory region block address of the registration key can be arbitrarily stored in the contents or in the end entity as data corresponding to the service provider.

In step S603, the execution AC table searches the corresponding service providing execution AC based on the input key from the end entity, and searches the service providers corresponding to the service providing execution AC and usable contents, which are output to the end entity (EE) in step S604.

The end entity (EE) displays the service provider and usable contents information, and if determined to be unnecessary, a reset execution request is output to the security chip in step S606.

The registration key reset processing is performed by overwriting the storage region of the registration key in the shared key memory region with the reset key (Kreset), a reset processing command made up of the memory region block address (Ad) of the registration key (Kcr) to be destroyed and the reset key (Kreset) is input from the end entity (EE), and in step S607, writing processing of the reset key (Kreset) is executed at the memory region corresponding to the memory region block address (Ad) as describe earlier with reference to Fig. 68, whereby the registration key is reset. Upon resetting of the registration key being completed in step S607, a reset completed notification is output to the end entity (EE) in step S608.

### (6-5) Execution attribute certificate reset (destruction) processing

Next, execution attribute certificate reset (destruction) processing wherein an execution attribute certificate stored in the user device is destroyed, and the fact that destruction has been executed without fail is notified to the service provider, will be described.

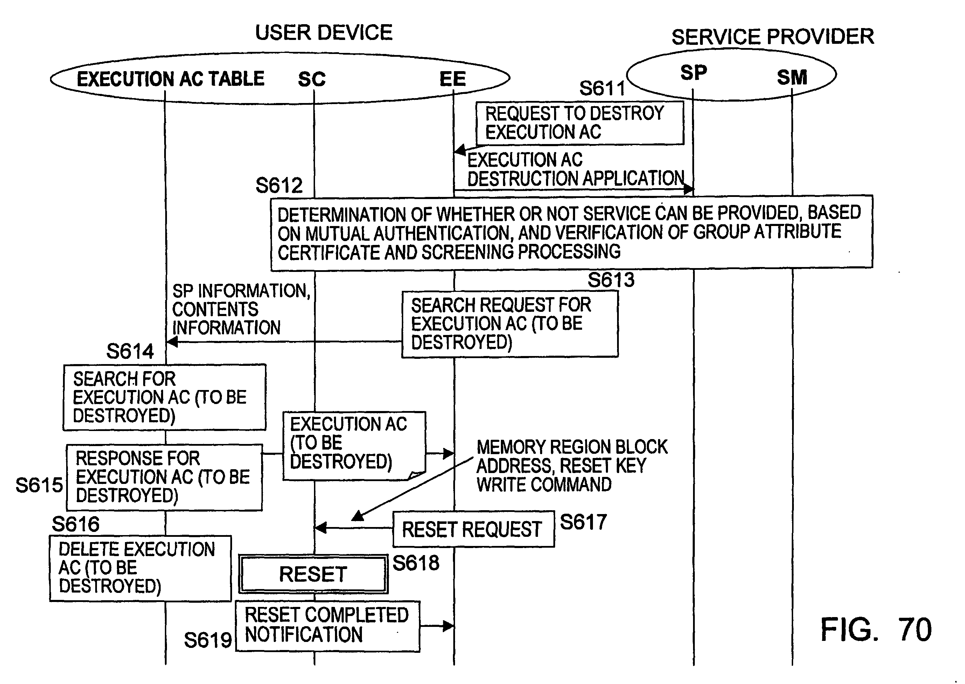

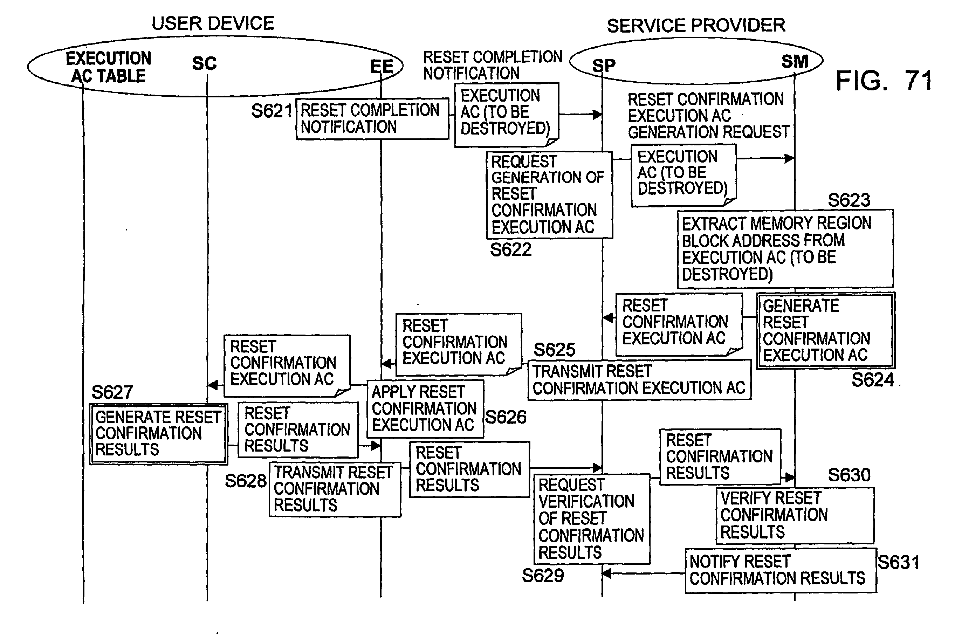

Description will be made following the processing sequence in Fig. 70 and Fig. 71. In Fig. 70 and Fig. 71, EE: user device end entity (EE) control unit,
SC: security chip configured within the EE,
Execution AC table: execution AC managing table storage memory and memory control unit
SP: service provider device control unit (SP) for executing execution AC issuing processing, and
SM: security module within SP.

First, in step S611, a user inputs an execution attribute certificate (execution AC) destruction application request command via the input interface of the end entity (EE). Based on this request, the execution attribute certificate destruction application is transmitted to the service provider. The application includes for example, execution attribute certificate (execution AC) ID, or contents and service specifying data or the like, capable of identifying the execution attribute certificate (execution AC) to be destroyed.

Upon the service provider device control unit (SP) receiving the execution attribute certificate destruction application, in step S612, mutual authentication between the security chip (SC) and security module (SM) of the service provider (SP) is performed, and if necessary, verification and screening processing of an already-issued group attribute certificate issued to the service provider to be applied as the execution attribute certificate (execution AC) destruction conditions, is performed. Viewing the execution attribute certificate destruction processing as a service, the end entity acts as the service provider.

The authentication processing is executed as public key mutual authentication processing described earlier with reference to Fig. 13, centered on the encipherment processing unit of the security chip and security module (see Fig. 9). The verification processing is as described earlier with reference to Fig. 21 through Fig. 23, and is executed as processing including attribute certificate signature verification, corresponding public key certificate (PKC) and chain public key certificate confirmation processing, and so forth.

Note that while the description here is of an example of destroying processing of an execution attribute certificate to the security chip (SC) of an end entity (EE), in the event of destroying an execution attribute certificate of the user security chip (USC) of the user identification device (UID), all of:
(1) Mutual authentication between the SC of the EE and the SP-SM,
(2) Mutual authentication between the SC of the EE and the USC of the UID, and
(3) Mutual authentication between the USC of the UID and the SP-SM,
is performed. Or as a simpler configuration, a processing configuration may be made wherein the EE basically accepts (deems authenticated) the UID upon connection to the EE, and in this case, the mutual authentication (2) above can be omitted. Further, authentication configurations under different combinations of the above three types can be realized.

Upon the authentication, group attribute certificate verification and screening, in step S612 being all established, the end entity of the user device makes a search request for the execution AC to be destroyed, to the execution AC table in step S613. The search key is, for example, contents information or service provider (SP) information or the like.

In step S614, the execution AC table searches the corresponding service providing execution AC based on the input key from the end entity, and in step S615 outputs the service providing execution AC extracted from the table to the end entity (EE). Further, the execution AC table (control unit) deletes the entry of the execution AC to be destroyed from the execution AC table in step S616.

In step S617, the end entity (EE), outputs a resent execution request to the security chip. In step S618, processing for overwriting the reset key (Kreset) in the storage region of the registration key in the shared key memory region is performed as registration key resetting processing (see Fig. 68), and a reset completed notification is output to the end entity (EE).

Further, the end entity (EE) transmits the reset completed notification to the service provider (SP) in step S621 indicated in Fig. 71. This reset completed notification has with it the execution AC to be destroyed. The service provider (SP) which has received the execution AC to be destroyed outputs a generating request for a reset conformation execution AC in step S622 to the security module (SM). This request is executed along with the execution AC to be destroyed.

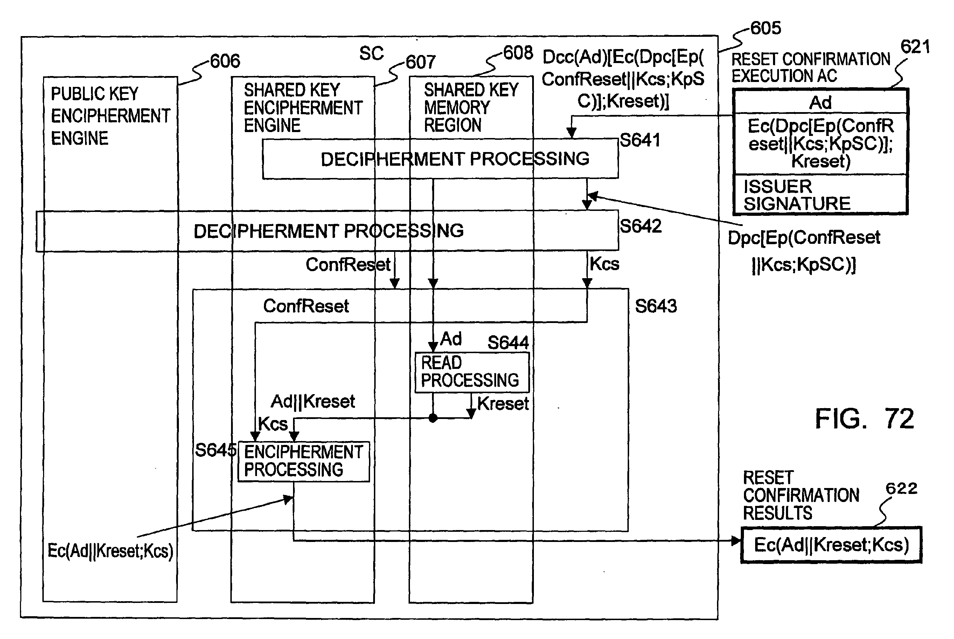

In step S623, the security module (SM) extracts the memory region block address information storing the corresponding registration key from the execution AC to be destroyed, and in step S624 executes reset confirmation execution AC generating processing. The reset confirmation execution AC is a data configuration including the memory region block address information (Ad) storing the corresponding registration key of the execution AC to be destroyed, an execution command which is a command to be executed at the security chip (SC) of the user device by the reset confirmation execution AC, and a signature of the issuer, i.e., the security module (SM) (see the reset confirmation execution AC 621 in Fig. 72).

The generated reset confirmation execution AC is transmitted from the service provider (SP) to the end entity (EE) in step S625, and further in step S626 is transferred to the security chip (SC).

At the security chip (SC), in step S627, reset confirmation result generating processing based on the reset confirmation execution AC is performed. The details of the reset confirmation generating processing of step S627 will be described in detail with reference to Fig. 72.

As shown in Fig. 72, in step S641 the security chip 605 deciphers the execution command of the reset confirmation execution AC, applying the reset key (Kreset) extracted from the shared key memory region 608 based on the address stored in the reset confirmation execution AC 621, obtains the deciphered command data (Dpc[Ep(ConfReset||Kcs;KpSC)] of the data (Ep(ConfReset|| Kcs;KpSC)) enciphered with the public key (KpSC) of the security chip, and in step S642 deciphers with the secret key of the security chip (KsCS), obtains the reset information result generating command (ConfReset) and session key (Kcs), and executes the reset confirmation result generating processing of step S643.

With the reset confirmation result generating processing in step S643, first, in step S644, the reset key (Kreset) is read out from the shared memory region 608 based on the address stored in the reset confirmation execution AC 621, and further, in step S645, linked data of the memory region block address information (Ad) and the reset key (Kreset) is enciphered with the session key (Kcs), and a reset confirmation result 622 formed of enciphered data (Ec(Ad||Kreset;Ksc)) is output to the end entity (EE).

The end entity (EE) transmits the reset confirmation result to the service provider (SP) in step S628 in Fig. 71, the service provider (SP) transmits the reset confirmation result to the security module (SM) in step S629, and the security module (SM) transmits the reset confirmation result to the service provider (SP), whereby the processing ends.

With the processing described above, destroying processing of an issued execution AC is carried out in a sure manner under the service provider.

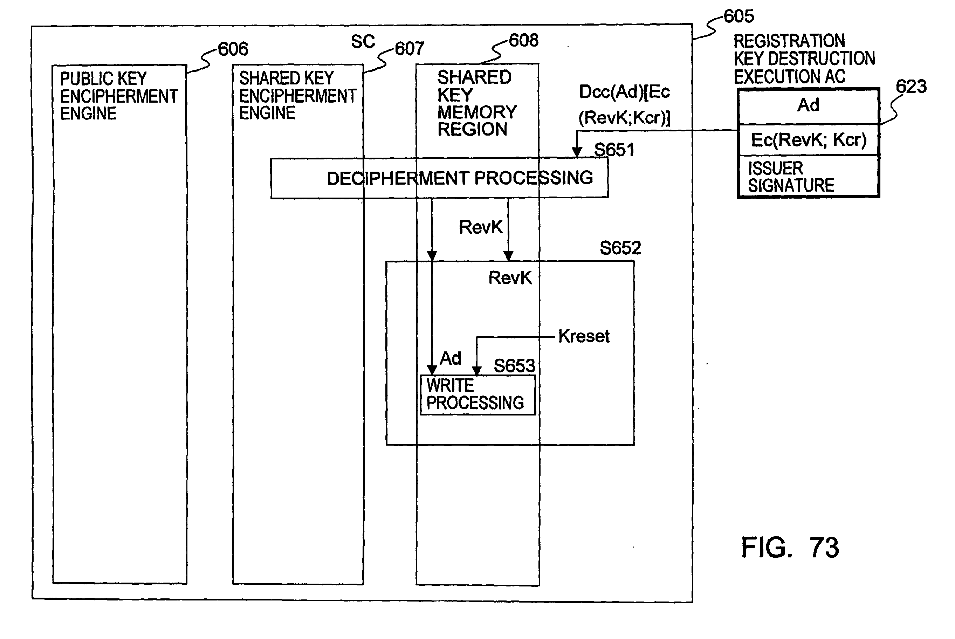

Note that the registration key destruction processing can be performed based on an execution AC. Registration key destruction processing performed based on an execution AC will be described with reference to Fig. 73. A registration key execution AC is issued by the service provider (SP) which has issued the corresponding service providing execution AC for example, and is input to the security chip (SC) via the end entity (EE) of the user device.

The registration key destroying execution AC 623 is an AC having the memory region block address information (Ad) of the shared key memory region storing a registration key to be destroyed, a registration key destruction command (RevK) enciphered with the registration key, and an issuer signature, as shown in Fig. 73.

In step S651, the execution command of the registration key destroying execution AC 623 is deciphered based on the registration key (Kcr) obtained from the shared key memory region 608, based on the memory region block address information (Ad) of the registration key destroying execution AC 623, a destruction command (RevK) is obtained, and destruction processing is executed based on the command in step S652. In step S653, the reset key (Kreset) is overwritten in the corresponding memory region based on the memory region block address information (Ad) of the registration key destroying execution AC 623, whereby the registration key is destroyed (reset).

### [(7) Specific usage processing of execution attribute certificate]

Next, specific processing applying the above-described execution attribute certificate (execution AC) will be described. As examples of the usage processing, the following items will each be described.
(7-1) Service providing execution attribute certificate with restrictions on the number of times
(7-2) Service providing execution attribute certificate with transfer function
(7-3) Proxy execution attribute certificate

### (7-1) Service providing execution attribute certificate with restrictions on the number of times

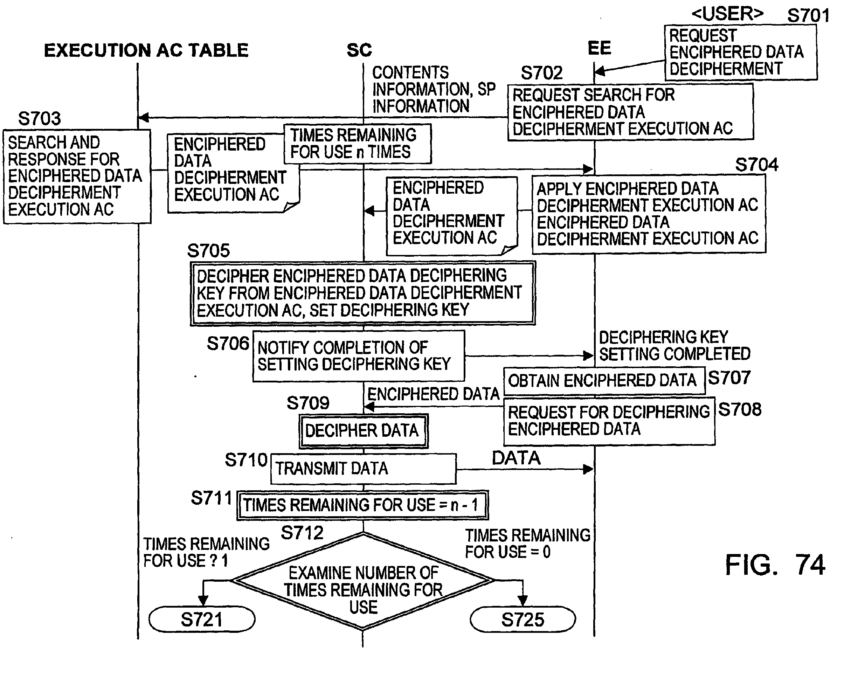

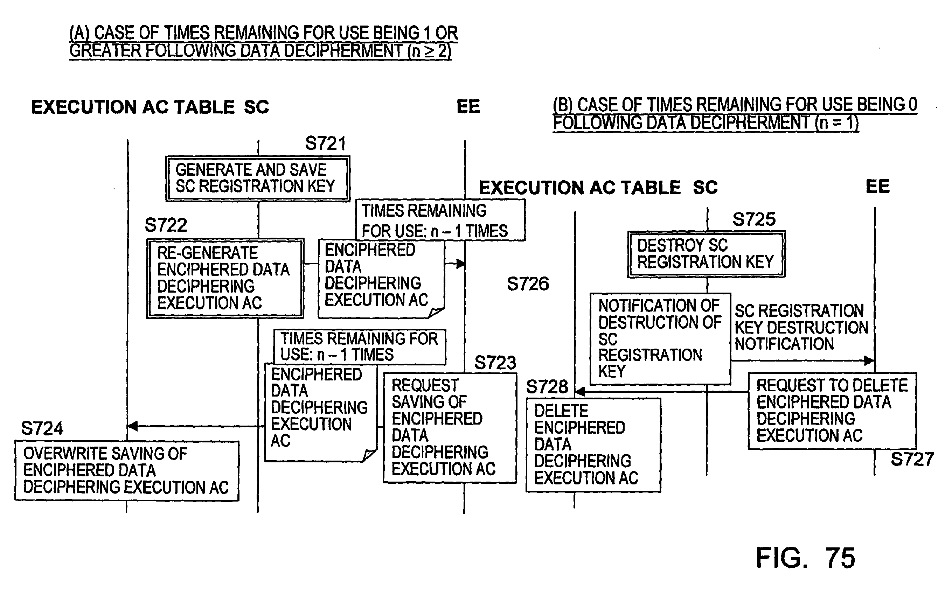

First, description will be made regarding the application processing of a service providing execution attribute certificate with restrictions on the number of times. Fig. 74 and Fig. 75 illiterate a processing sequence for applying the service providing execution attribute certificate with restrictions on the number of times to decipher and use enciphered data with restrictions on the number of times, such as images music, programs, and like contents. Description will be made of the processing sequence following the steps.

Let us say that a user device already has a service providing execution attribute certificate with restrictions on the number of times stored in memory, e.g.,. the aforementioned execution AC table, with the number of times remaining for use being n times. Number or remaining usage times data (e.g., n times) is recorded in the execution command of the service providing execution attribute certificate with restrictions on the number of times as an applicable number of times identification value. An example of recording will be described later.

In step S701, the user inputs a service providing execution AC via the user interface of the end entity (EE), in this case, an application processing request for an enciphered data deciphering execution AC. This processing request contains an execution AC identifier, or service provider (SP)information, data identifying service contents, for example usage contents specifying data. In step S702, the end entity (EE) outputs the search request for the user-specified service providing execution AC (enciphered data deciphering execution AC) to the execution AC table. The search key is, for example, contents information or service provider (SP) information or the like.

In step S703, the execution AC table searches for the corresponding enciphered data deciphering execution AC based on the input key from the end entity, and in step S704, outputs the enciphered data deciphering execution AC extracted from the table, to the end entity (EE). The number of remaining times = n times information is recorded in this enciphered data deciphering execution AC.

In step S704, the end entity (EE) outputs the received AC to the security chip (SC) and makes an application processing request for the service providing execution AC (enciphered data deciphering execution AC). This application processing is performed as follows. First, in step S705, deciphering key setting processing is executed by deciphering the execution command of the enciphered data deciphering execution AC with the registration key, a deciphering key setting completed notification is output to the end entity (EE) (S706), and at the EE, enciphered data to be deciphered is obtained from external memory for example (S707), a deciphering request is made to the SC (S708), data deciphering processing is executed at the SC (S709), data deciphering processing for transmitting the deciphered data from the SD to the EE is performed (S710), and further, in step S711, the remaining number of usage times data within the execution command of the enciphered data deciphering execution AC is updated from n to n - 1.

Further, following determining the remaining number of usage times after updating (S712), in the event that the remaining number of usage times ≥ 1, the sequence shown in Fig. 75(a) is followed so that re-generation of the registration key and saving thereof (S721), re-generating of the enciphered data deciphering execution AC (S722), transmission to the EE, and saving to the execution AC table (S724) in response to an enciphered data deciphering execution AC saving request from the EE (S723), are performed.

On the other hand, in the event that the remaining number of usage times = 0, the sequence shown in Fig. 75(b) is followed so that registration key destruction processing (S725) is executed at the SC, and following a registration key destruction notification to the EE (S726), enciphered data deciphering execution AC deletion (S728) is executed for the execution AC table, according to an enciphered data deciphering execution AC deletion request (S727) from the EE.

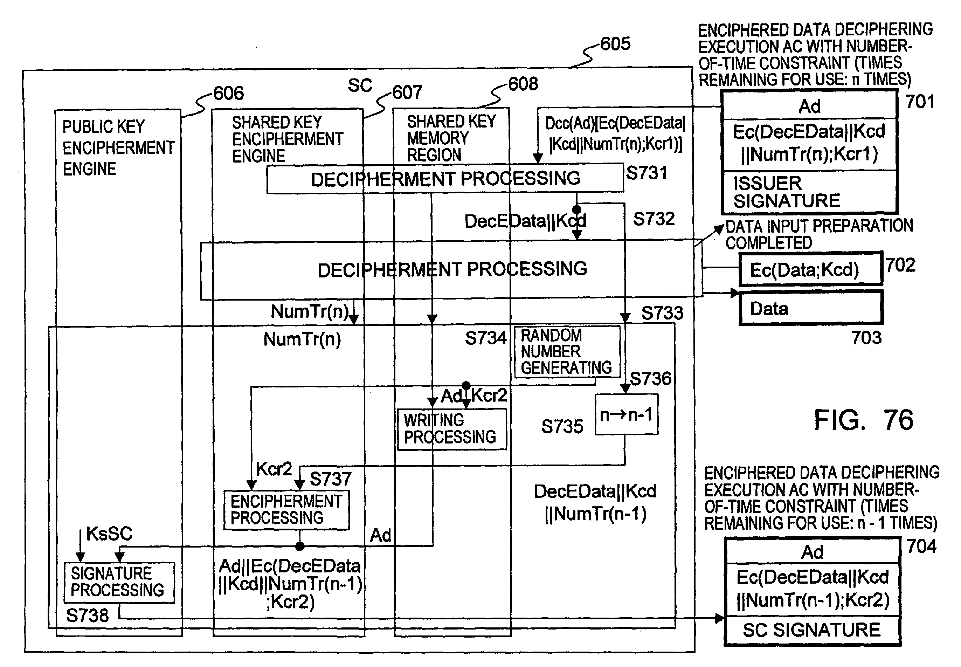

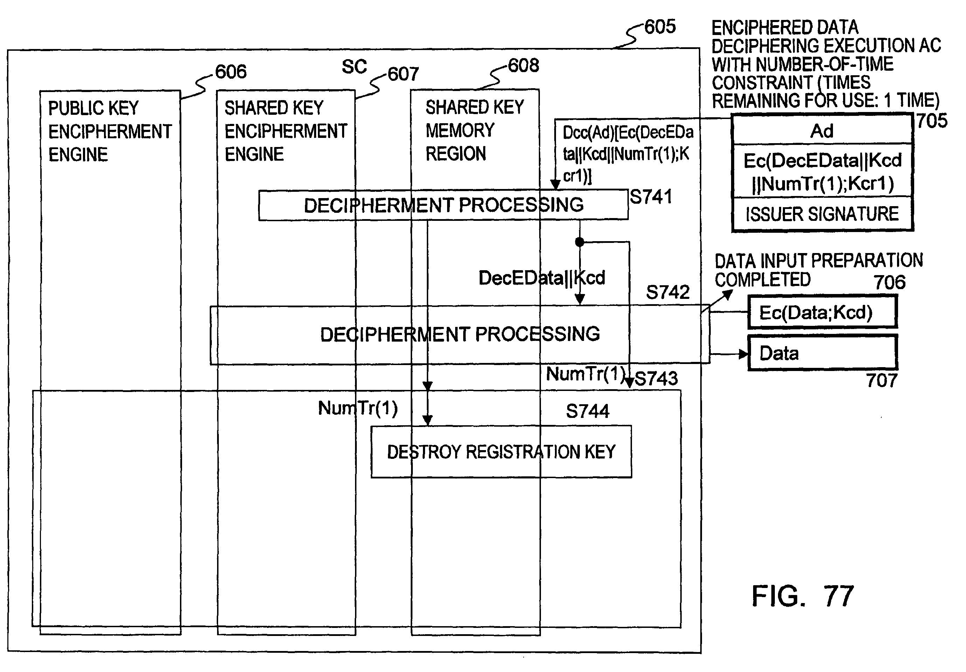

The processing at the security chip (SC) from step S705 on will be described with reference to Fig. 76 and Fig. 77. Fig. 76 is the processing carried out in the event that the remaining number of usage times ≥ 1, and Fig. 77 is the processing carried out in the event that the remaining number of usage times = 0.

First, with reference to Fig. 76, processing at the security chip (SC) in the event that the remaining number of usage times ≥ 1 will be described.

A service providing execution attribute certificate with restrictions on the number of times 701 includes an execution command (Ec(DecEData||Kcd||NumTr(n);Kcr1)), a block address (Ad) in the shared key memory region storing the registering key for enciphering the execution command, and an issuer signature. The execution command contains an enciphered data deciphering command (DecEData), data deciphering key (Kcd), and a number-of-times processing execution command (NumTr(n)) corresponding to the remaining number of usage times (n), and is an execution command (Ec(DecEData||Kcd||NumTr(n);Kcr1)) wherein these data are enciphered by the registration key (Kcr1).

First, the security chip (SC) deciphers the execution command of the execution AC 701 applying the registration key (Kcr1) extracted from the shared key memory region based on the block address (Ad) in the execution AC in step S731, extracts the data (DecEData||Kcd||NumTr(n)), and further applies the data deciphering key (Kcd) in step S732, so as to execute deciphering of enciphered data 702 (Ec(Data;Kcd)) such as externally-input enciphered contents or the like, and the deciphered contents (data) are output to the end entity.

Further, in step S733, processing is executed based on a number of times processing command (NumTr(n)). This processing is processing of which the object is to generate a new service providing execution attribute certificate with restrictions on the number of times 704 by updating the remaining number of usage times.

A new registration key Kcr2 is generated by random number generating processing (S734), and is written to the shared memory region 608 corresponding to the block address to which the original service providing execution attribute certificate with restrictions on the number of times 701 was written. Accordingly, the registration key (Kcr1) written thereto before is replaced with the new registration key (Kcr2).

In step S736, the remaining number of usage times = n extracted based on the number of times processing command (NumTr(n)) is subjected to updating of being decremented by 1, upon the contents deciphering processing being performed. This rewrites the data (DecEData||Kcd)NumTr(n)) in the execution command to (DecEData||Kcd||NumTr(n-1)), and in step S737, deciphering processing using the newly-generated registration key (Kcr2) is executed. The encipherment data is equivalent to the execution command (Ec(DecEData||Kcd||NumTr(n-1);Kcr2)) within the new service providing execution attribute certificate with restrictions on the number of times 704.

In step S738, the block address (Ad) and an electronic signature based on the execution command having the updated remaining number of usage times generated in step S737 are executed by the secret key (KsSC) of the security chip, and a new and updated service providing execution attribute certificate with restrictions on the number of times 704 is newly generated. The signature in this case is performed at the security chip.

The new and updated service providing execution attribute certificate with restrictions on the number of times 704 newly generated is output from the security chip (SC) to the end entity (EE) in step S722 in Fig. 75, and then is saved in the execution AC table in step S724.

On the other hand, processing at the security chip (SC) in the event that determination has been made that the remaining number of usage times = 0 for the remaining number of usage times inspection in the processing step 712 in Fig. 74 will be described with reference to Fig. 77.

The service providing execution attribute certificate with restrictions on the number of times 705 has an execution command (Ec(DecEData||Kcd||NumTr(1);Kcr1)), block address (Ad of the shared key memory region storing the registration key for deciphering the execution command, and an issuer signature.

First, the security chip (SC) deciphers the execution command of the execution AC 705 applying the registration key (Kcr1) extracted from the shared key memory region based on the block address (Ad) in the execution AC in step S741, extracts the data (DecEData|| Kcd||NumTr(n)), and further applies the data deciphering key (Kcd) in step S742, so as to execute deciphering of enciphered data 706 (Ec(Data;Kcd)) such as externally-input enciphered contents or the like, and the deciphered contents (data) 707 are output to the end entity.

Further, in step S743, processing is executed based on a number of times processing command (NumTr(1)). This processing is processing of which the object is to destroy the registration key, to stop further usage of services using the execution AC, i.e., deciphering of enciphered data. That is to say, in step S744, the registration key (Kcr1) is destroyed. Destroying of the registration key is executed as processing for overwriting the reset key at the corresponding region of the block address (Ad) in the shared memory region storing the registration key recorded in the service providing execution attribute certificate with restrictions on the number of times 705.

Due to this processing, the registration key (Kcr1) for deciphering the executing command stored in the service providing execution attribute certificate with restrictions on the number of times 705 is destroyed, so that deciphering of the execution command becomes impossible, and service usage applying the execution AC is stopped. Following this processing, the step S727 and S728 shown in Fig. 75 are performed, and the corresponding AC is deleted from the execution AC table.

### (7-2) Service providing execution attribute certificate with transfer function

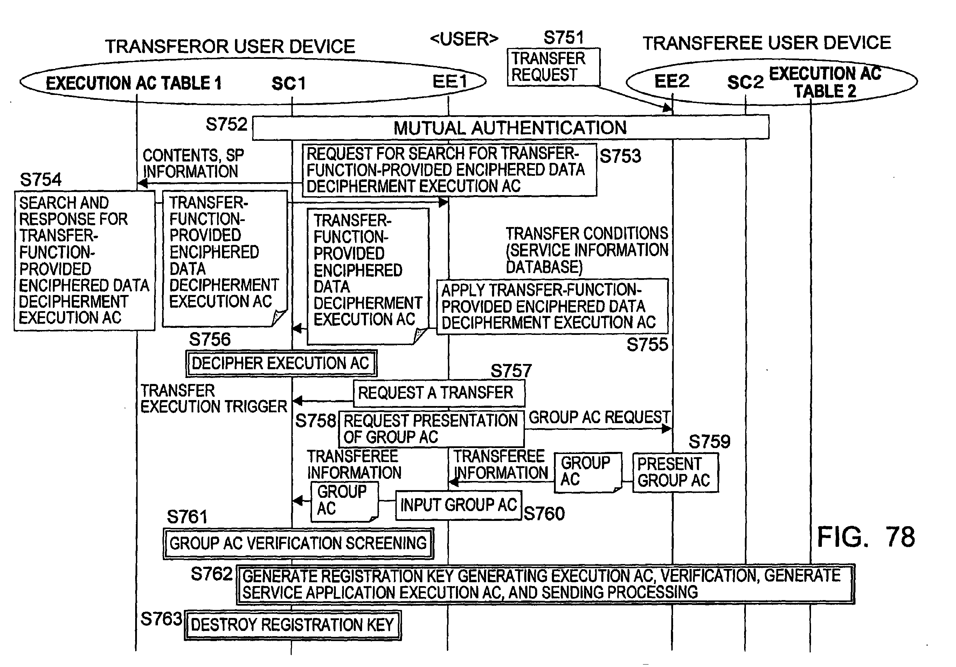

Next, the application processing of service providing execution attribute certificate with transfer functions will be described. Fig. 78 illustrates a processing sequence enabling application processing of a service providing execution attribute certificate with transfer functions, i.e., executing processing based on a service providing execution attribute certificate with transfer functions between user devices, generating a new service providing execution attribute certificate with transfer functions or service providing execution attribute certificate and sending this to another user device (transfer destination), while performing registration key destroying at own device (transfer originator), thereby enabling enciphered data (e.g., enciphered contents) to be used at another user device.

In Fig. 78,
EE1: transfer originating user device end entity (EE) control unit,
SC1: security chip configured within EE1,
Execution AC table 1: transfer originating end entity (EE) execution AC table control unit,
EE2: transfer destination user device end entity (EE) control unit,
SC2: security chip configured within EE2, and
Execution AC table 2: transfer destination end entity (EE) execution AC table control unit.

First, in step S752, a transfer destination user inputs a transfer request via the input interface of the end entity (EE), for performing transfer processing based on a service providing execution attribute certificate with transfer functions, i.e., to enable execution of enciphered data at the transfer destination user device. The transfer request contains a service providing execution attribute certificate with transfer functions ID, holder information, or usage contents (enciphered data), or service provider information or the like, as information for identifying the service providing execution attribute certificate with transfer functions to be applied.

Upon the end entity (EE2) receiving input of the transfer request from the user, in step S752, the end entity (EE2) makes a connection request to the transfer originator end entity (EE1) which has the service providing execution attribute certificate with transfer functions, and mutual authentication is executed between the security chips (SC1) and (SC2) of the user devices. This is executed as public key mutual authentication processing described earlier with reference to Fig. 13, for example.

Upon mutual authentication being established, in step S753, the end entity (EE1) of the transfer originating user device outputs a search request for the specified service providing execution attribute certificate with transfer functions, to the execution AC table 1. The search key is, for example, contents information or service provider (SP) information or the like.

In step S754, the execution AC table 1 searches for the corresponding service providing execution attribute certificate with transfer functions based on the input key from the end entity (EE1), and outputs the execution AC extracted from the table to the end entity (EE).

In step S755, the end entity (EE) outputs the received AC to the security chip (SC), and makes an application processing request for the service providing execution attribute certificate with transfer functions. The security chip performs processing for the received AC in step S756, i.e., deciphering the execution command based on the registration key obtained from the region specified by the address (Ad) stored in the execution attribute certificate (service providing execution attribute certificate with transfer functions) (S756).

Further, in step S757, the end entity (EE1) outputs a transfer processing request to the security chip (SC), and in step S758 the end entity (EE1) requests the transfer destination user device (EE2) to present a group attribute certificate necessary for transfer processing. This group attribute certificate is a group attribute certificate or the like proving the holder is a device or user group to which transfer is permitted, managed by the service provider (SP) which has issued the service providing execution attribute certificate with transfer functions, for example.

The transfer destination user device end entity (EE2) transmits a specified group attribute certificate (Gp. AC) to the transfer originating user device end entity (EE1) in step S759, the end entity (EE1) transfers the received AC to the security chip (SC1), and the security chip (SC1)

verifies the group attribute certificate (S761). The verification processing is as described earlier with reference to Fig. 21 through Fig. 23, and is executed as processing including attribute certificate signature verification, corresponding public key certificate and chain public key certificate verification processing, and so forth.

In the event that verification is not established, subsequent processing is not executed and the processing is cancelled as error processing. In this case, processing may be performed wherein an error notification is transmitted to the transfer destination end entity (EE2).

In the event that the verification of the group attribute certificate (Gp. AC) is successful and the authenticity of the group attribute certificate (Gp. AC) has been confirmed, the flow proceeds to step S762. In step S762, an execution attribute certificate is generated and transmitted for enabling usage of the enciphered data at the transfer destination user device. This processing is processing corresponding to the generation and verification of the registration key generating execution AC and generating and transmission of the service providing execution AC described earlier with reference to Fig. 60 and Fig. 61, with the transfer originating user device executing the processing of the service provider (SP) in Fig. 60 and Fig. 61.

In step S762, a new service providing execution AC, in this case a service providing execution attribute certificate is generated, and sent to the transfer destination user device. Further, in step S763, deletion is executed for the registration key applied for deciphering the execution command of the service providing execution attribute certificate with transfer functions, held at the transfer originating user device. This processing is performed by overwriting with the reset key as described above. Note that while transfer functions have been mentioned here, using an execution attribute certificate which does not delete the registration key enables duplication functions instead of transfer functions.

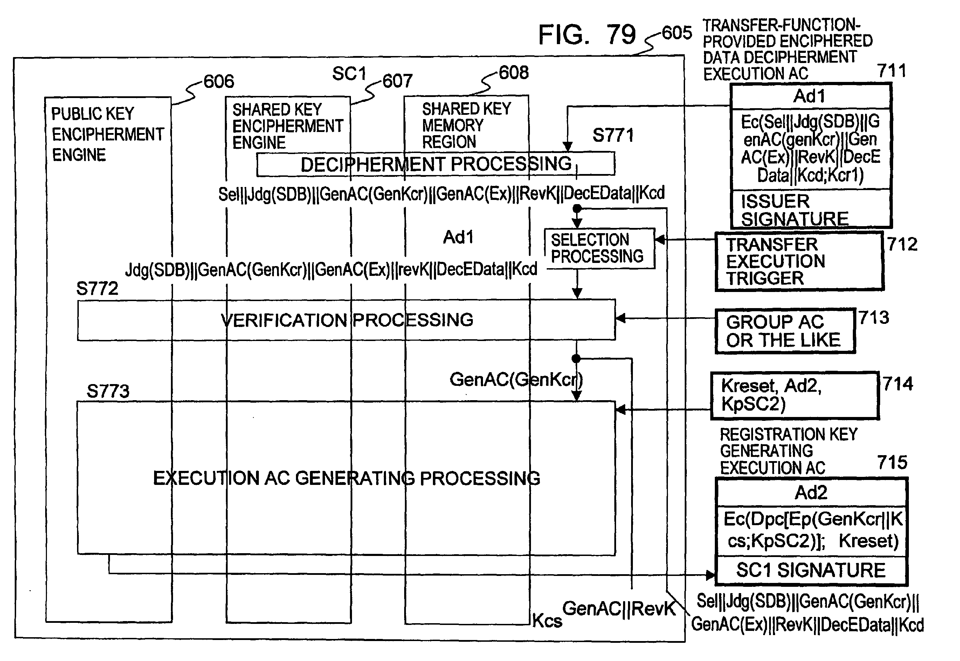

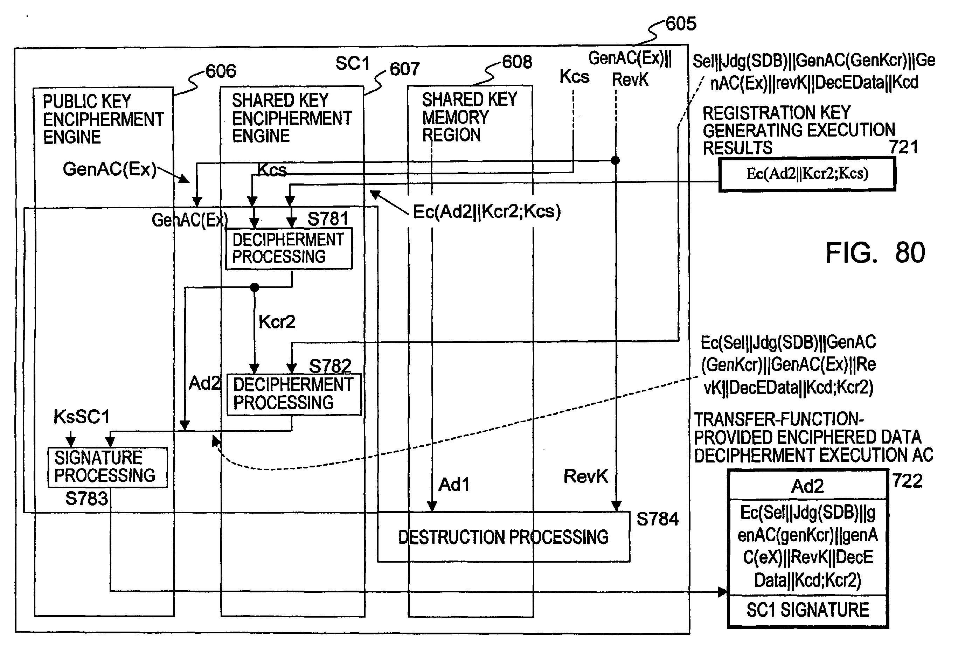

The details of the processing after deciphering of the service providing execution attribute certificate with transfer functions in step S756 executed at the security chip (SC1) of the transfer originating user device will be described with reference to Fig. 79 and Fig. 80.

The service providing execution attribute certificate with transfer functions (AC) 711 has data of: execution commands, a block address (Ad1) in the shared key memory region 608 storing a registration key for deciphering the execution commands, and issuer signature. The execution command
(Ec(Sel||Jdg(SDB)||GenAC(GenKcr)||GenAC(Ex)||RevK||DecEDatal |Kcd;Kcr1)) is of a data configuration including a processing selection command (Sel), verification screening command (Jdg(SCB)), registration key generating execution AC generating command (GenAC(GenKcr), Execution AC compiling command (GenAC(Ex), a registration key destroying command (RevK), an enciphered data deciphering command (DecEData), and a data enciphering key (Kcd), with these having been enciphered with the registration key (Kcr1).

The verification screening command (Jdg(SDB)) is a verification screening processing command of the execution AC based on the service information database (SDB). Note that the service information database (SDB) has the same data structure as the AC information necessary for providing service, and the group information database described earlier (see Fig. 15), and holds data of the issuer, group ID, and group information.

The transfer originating security chip (SC) which inputs the service providing execution attribute certificate with transfer functions (AC) 711 and performs processing for issuing a new service providing execution attribute certificate with transfer functions for the transfer destination, first obtains a registration key from the shared key memory region 608 based on the address (Ad1) of the service providing execution attribute certificate with transfer functions (AC) 711, and deciphers the execution command within the service providing execution attribute certificate with transfer functions (AC) 711. Next, upon input of a transfer execution trigger 712 from the end entity, the transfer execution processing from step S772 on is performed.

Now, a transfer execution trigger 712 means a request processing from the end entity for executing transfer processing, based on the service providing execution attribute certificate with transfer functions (AC) 711. The service providing execution attribute certificate with transfer functions (AC) 711 is an execution AC applied not only to transfer processing but also to deciphering processing of enciphered data, and whether or not to execute the processing thereof is selected by the request (trigger) from the end entity. Selection processing from the execution command
(Ec(Sel||Jdg(SDB||GenAC(GenKcr)|| GenAC(Ex)|)RevK||DecEData|| Kcd;Kcr1)) of the service providing execution attribute certificate with transfer functions (AC) 711 yields the execution command (Jdg(SDB||GenAC(GenKcr)||GenAC(Ex)||RevK), corresponding to the transfer execution processing, and the processing from step S772 on is executed following the execution command.

In step S772, verification and screening is performed for the group attribute certificate (Gp. AC) 713 obtained from the transfer destination following the verification screening command (Jdg(SDB)). The verification processing is as described earlier with reference to Fig. 21 through Fig. 23, and is executed as processing including attribute certificate signature verification, corresponding public key certificate and chain public key certificate confirmation processing, and so forth. In the event that verification is not established, subsequent processing is not executed and the processing is cancelled as error processing. In the event that the verification of the group attribute certificate (Gp. AC) is successful and the authenticity of the group attribute certificate (Gp. AC) has been confirmed, the flow proceeds to step S773.

From step S773 on, an execution attribute certificate enabling usage of the enciphered data at the transfer destination user devices is generated and transferred. This is processing corresponding to the generating and verification of the registration key generating execution AC described earlier with reference to Fig. 60, Fig. 61, and Fig. 63 through Fig. 65, and generation and transmission of the service providing execution AC, and is processing wherein the processing of the service provider (SP) shown in Fig. 60 and Fig. 61 is executed at the transfer originating user device.

The data 714 such as the reset key (Kreset), block address (Ad2) of the registration key storage region of the shared key memory at the transfer destination, and public key (KpSC2) of the security chip at the transfer destination, and so forth, necessary for this processing, are obtained from the transfer destination user device or the like. Based on this necessary data, first, in step S773, generating processing of a registration key generating execution AC 715 is preformed following the registration key generating execution AC compiling command (GenAC(GneKcr) in the execution command. This processing is the same as the generating processing for the registration key generating execution AC described earlier with reference to Fig. 63.

Next, from the security chip of the transfer destination user device, the security chip of the transfer destination user device which has received the registration key generating execution AC follows the execution AC compiling command (GenAC(Ex)) in the execution command and generates registration key generating execution results (721 in Fig. 80) following the processing described earlier with reference to Fig. 64, and transmits this to the security chip of the transfer originating user device.

Upon receiving the registration key generating execution results (721 in Fig. 80) from the security chip of the transfer destination user device, the security chip of the transfer originating user device performs the processing according to Fig. 80, and generates a new service providing execution attribute certificate with transfer functions (AC) 722 and transmits this to the transfer destination user device, while executing processing for destroying the registration key within own shared key memory region.

In step S781 in Fig. 80, the session key (Kcs) is applied to execute deciphering processing of the registration key generating results, and the registration key (Kcr2) and memory region block address (Ad2) is obtained. Further, in step S782, the execution command (Ec(Sel||Jdg(SDB)||GenAC(GenKcr)||GenAC(Ex)||RevK||DecEData| |Kcd;Kcr2)) to be stored in the new service providing execution attribute certificate with transfer functions (AC) 722 is enciphered using the registration key (Kcr2) of the transfer destination user device. Note that the execution command is an execution command such as an execution program or the like set in the new service providing execution attribute certificate with transfer functions (AC) 722 serving as the service providing execution AC.

Further, in step S783, a signature (see Fig. 17) is generated with the secret key (KcSC1) of the transfer originating security chip (SC1) with regard to the data obtained by the execution command having been enciphered with the registration key (Kcr2) and the memory region block address (Ad2) of the security chip at the transfer destination user device storing the registration key (Kcr2), thereby generating a new service providing execution attribute certificate with transfer functions (AC) 722, which is transmitted to the transfer destination user device.

Further, in step S784, the reset key is written to the address (Ad1) which had been stored in the original service providing execution attribute certificate with transfer functions (AC) 711, i.e., the registration key storing address in the shared key memory region of the transfer originating user device, and registration key destroying processing is executed.

While the above description has been made to illustrate an example of a configuration for generating and sending a new service providing execution attribute certificate with transfer functions (AC) 722 from a transfer originator to a transfer destination, this may be a configuration wherein a normal, i.e., a service providing execution attribute certificate (AC) without transfer functions being generated and sent, instead of the service providing execution attribute certificate with transfer functions (AC) 722.

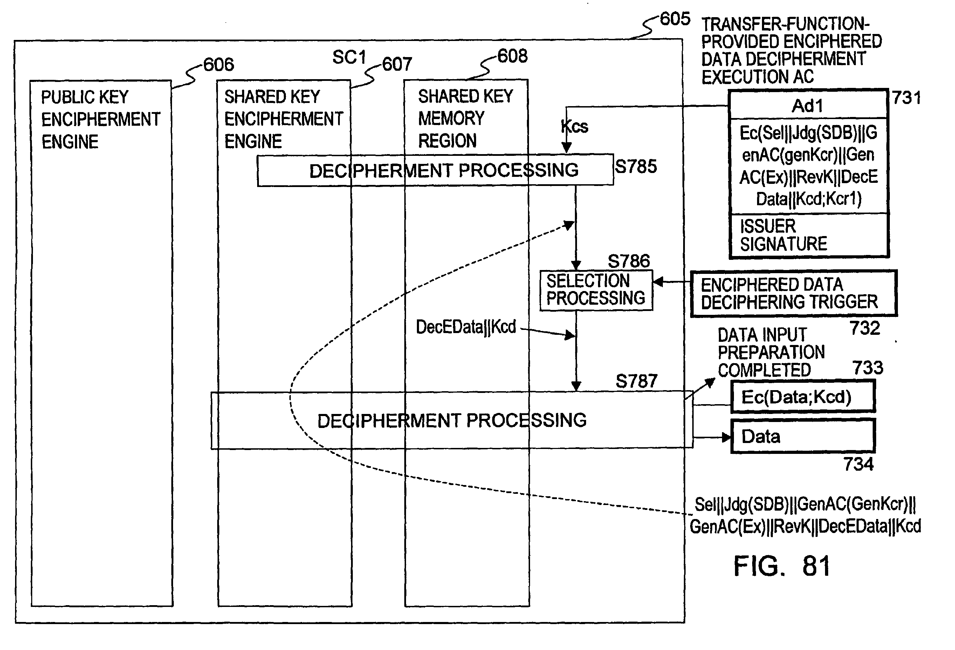

As described earlier, the service providing execution attribute certificate with transfer functions (AC) is an execution AC applied not only for transfer processing but also for deciphering processing of enciphered data. Which processing to be executed is selected by a request (trigger) from the end entity. The processing at the security chip in the event that the trigger is an enciphered data deciphering processing request will be described with reference to Fig. 81.

A service providing execution attribute certificate with transfer functions (AC) 731 has the data of an execution command, a block address (Ad1) of the shared key memory region 608 storing the registration key for deciphering the execution command, and an issuer signature.

Upon receiving input of the service providing execution attribute certificate with transfer functions (AC) 731, the security chip (SC) first obtains the registration key from the shared key memory region 608 based on the address (Ad1) of the service providing execution attribute certificate with transfer functions (AC) 731, and deciphers the execution command within the service providing execution attribute certificate with transfer functions (AC) 731. Next, upon input of the enciphered data deciphering trigger 732 from the end entity, in step S786 selection processing based on the trigger, i.e., data deciphering execution is selected, and in step S787, the deciphering processing is executed.

That is to say, the execution command (DecEData||Kcd) corresponding to data deciphering processing is obtained from the execution command
(Ec(Sel||Jdg(SDB)||GenAC(GenKcr)|| GenAC(Ex)|| RevK || DecEData| |Kcd;Kcr1)) of the service providing execution attribute certificate with transfer functions (AC) 731, and in step S787, the data deciphering key (Kcd) is applied to execute deciphering processing of the externally-input enciphered data (Ec(Data;Kcd)) 733 to be deciphered, and the deciphered data 734 is output. The enciphered data (Ec(Data;Kcd)) 733 to be deciphered is data wherein contents such as images, music, programs, etc., have been enciphered with a key (Kcd), and can be deciphered by a data deciphering key (Kcd) obtained by deciphering the storage execution command in the of the service providing execution attribute certificate with transfer functions (AC) 731 with the registration key (Kcr1).

Application examples combining transfer functions and number of times restrictions can also be conceived. For example, setting the number of time information of the execution AC to be transferred so as to be decremented by one when the execution AC is transferred enables the number of times of transferring to be restricted. Also, application examples combining duplication function and number of times restrictions can also be conceived. For example, setting the number of time information of the execution AC to be transferred so as to be decremented by one each time duplication is performed enables the number of times of duplication to be restricted. Now, the term duplication means that performed regarding a service providing execution attribute certificate without transfer functions. Further, instead of destroying the service providing execution attribute certificate that has been duplicated, providing a function wherein the number of times information is incremented by one realizes check-in/check-out functions.

Check-in/check-out will be described in brief. Transferring a service usage privilege to another device is called check-out, and further transferring to the original device from a device which has checked-out is called check-in. In the event that the service usage privilege cannot be transferred from a device which has checked-out to a device other than the original device, this is called having check-in/check-out functions.

### (7-3) Proxy execution attribute certificate

Next, the proxy execution attribute certificate will be described. In the (6-3) Execution attribute certificate application processing, description was made regarding a deciphering service of data with data of which contents are enciphered, but an execution attribute certificate can also be used to perform a service for writing an encryption key which only the service provider knows in the execution attribute certificate and issuing a certificate signed using the encryption key. This service providing execution attribute certificate is a proxy execution attribute certificate.

As for the encryption key there is a method using a shared key and a method using a secret key. The following is a description of a case using a secret key. In the event of verifying a certificate issued using a proxy execution attribute certificate, the verifier must know the public key corresponding to the secret key. Accordingly, the issuer of the proxy execution attribute certificate issues a certificate for the public key, and the certificate holder who issues using the proxy execution attribute certificate presents the public key certificate to the verifier. This public key certificate is called an allograph key certificate. The following items will each be described for proxy execution attribute certificates
(7-3-1) Screening proxy execution attribute certificate
(7-3-2) Allograph execution attribute certificate Each item will be described below.

### (7-3-1) Screening proxy execution attribute certificate

First, the screening proxy execution attribute certificate will be described. In the event of issuing an attribute certificate to an end entity with which direct exchange information from an attribute certificate authority is not easy, another end entity capable of directly exchanging information is enabled by the attribute certificate authority to perform screening for issuing by proxy, with an issuing policy stipulated, which is what a screening proxy execution attribute certificate is.

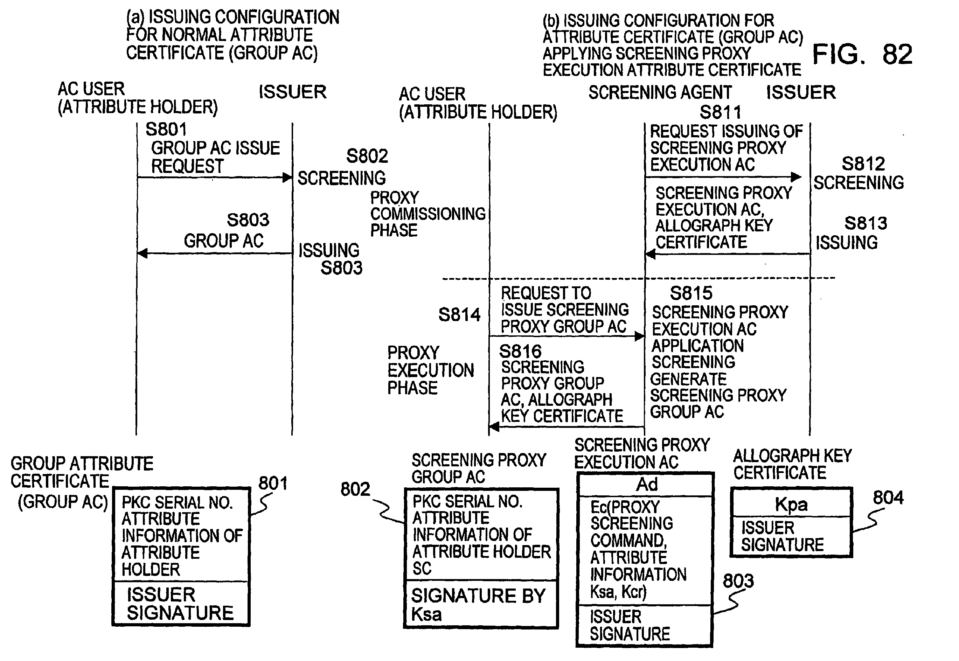

The overview of a screening proxy execution attribute certificate will be described with reference to Fig. 82. Fig. 82(a) illustrates a normal attribute certificate issuing arrangement, with an attribute holder which is a user of an attribute certificate (AC) making an issuing request (S801) to, for example, an attribute authority (AA), attribute certificate registration authority (ARA), or service provider (SP), for a group attribute certificate (Gp. AC) in this case. In this case for example, data proving the attributes of the AC user must be presented. In the above-described example, description was made with regard to an example of presenting an already-issued group attribute certificate which a credit card company has issued to the AC user.

The issuer executes screening as user confirmation of the attributes and the like of the AC user (S802), and upon determining that screening is established, an attribute certificate (a Gp. AC in this case) 801 proving the attributes of the AC user is issued to the user (S803).

The example shown in (b) is a group attribute certificate (Gp. AC) issuing sequence applying the screening proxy execution attribute certificate which will be described below in detail.

First, a screening agent which will issue the group attribute certificate to the AC user in proxy makes a screening proxy execution attribute certificate issuing request to the original issuer, e.g., an attribute authority (AA), attribute certificate registration authority (ARA), or service provider (SP) (S811), and the attribute authority (AA), attribute certificate registration authority (ARA), or service provider (SP), which is the true issuer, screens the screening agent (S812). This is executed based on data proving the attributes and the like of the screening agent, or presenting an already-issued attribute certificate, as with conventional processing. Following establishment of screening, the issuer provides the screening agent with an allograph key certificate 804 and screening proxy execution attribute certificate 803 (S813).

The allograph key certificate 804 has a public key (Kpc) used for generating and verifying an allograph, and issuer signature data. Also, the screening proxy execution attribute certificate 803 is made up of a block address (Ad) indicating the storage region of the registration key (Kcr) within the shared key memory of the user device of the screening agent, and execution command (Ec(proxy screening command||attribute information||Ksa;Kcr)) enciphered with the registration key (Kcr), and issuer signature, as with the above-described execution certificate.

The secret key (Ksa) included in the execution command is a secret key used for generating and verifying an allograph, and is a secret key corresponding to the aforementioned public key (Kpa).

Steps S811 through S813 are a proxy commissioning phase, and following the proxy commissioning phase, a proxy execution phase is started. An attribute certificate (Gp. AC) issuing request is made from the AC user (attribute holder) to the screening agent (S814). Here, a group attribute certificate which a screening agent issues is called a screening proxy group attribute certificate.

The screening agent which has received the screening proxy group attribute certificate issuing request screens the user (S815). Screening as used here may be executed based on the trust relation between the screening agent and the AC user, and data proving the attributes of the screening agent, or presenting of an already-issued attribute certificate, may not always be necessary. For example, in a setting wherein the screening agent is one family member and the user is the family, arbitrary screening can be performed based on the trust relation between the screening agent and the AC user, such as deeming screening established upon the screening agent recognizing the family, for example.

Following establishment of the screening the screening agent generates a screening proxy group attribute certificate 802. The screening proxy group attribute certificate 802 holds the information described earlier with reference to Fig. 5, such as the public key certificate (PKC) serial number issued to the security chip of the AC holder (attributes holder), attribute information, and so forth. Further, a signature is attached applying the secret key (Ksa) stored in the execution command in the screening proxy execution attribute certificate 802 which the screening agent has received from the issuer earlier.

The screening agent sends the generated screening proxy group attribute certificate 802 and the allograph key certificate 804 together to the AC user (S816). The AC user presents the screening proxy group attribute certificate 802 to the service provider (SP) for example, to prove attributes and receive services.

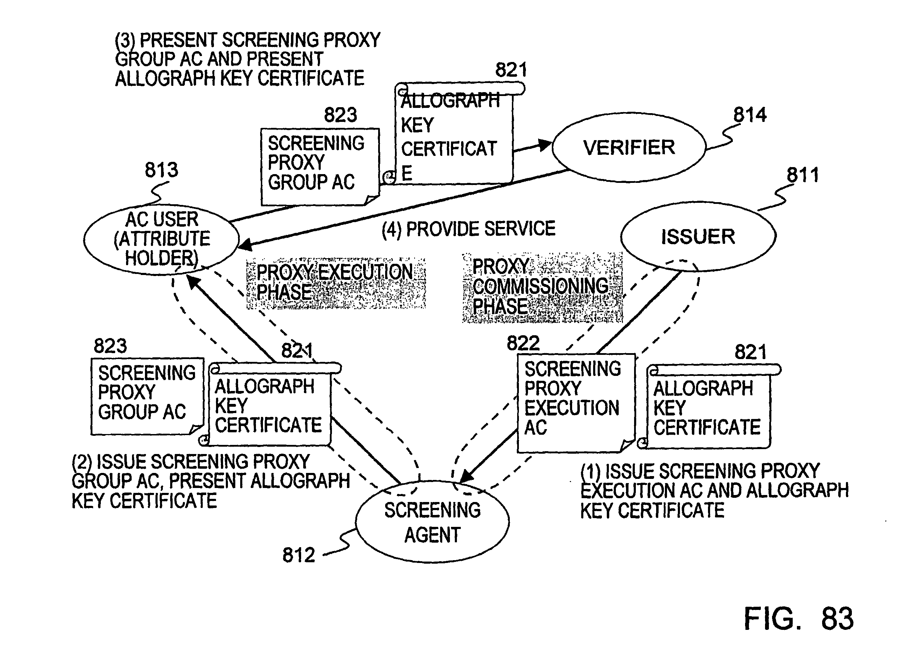

The flow of data between the entities including providing of services will be described with reference to Fig. 83. First, in the proxy commissioning phase, a screening proxy execution AC 822 and allograph key certificate 821 are sent from the issuer 811 to the screening agent 812. Next, in the proxy execution phase, a screening proxy group attribute certificate 823 and allograph key certificate 821 are sent to the AC user (attribute holder) 813. Further, the screening proxy group attribute certificate 823 and allograph key certificate 821 are sent from the AC user (attribute holder) 813 to a verifier 814 such as the service provider (SP), where the verifier 814 executes attribute verification of the AC user based on the screening proxy group attribute certificate 823 and allograph key certificate 821, and provides services under the condition that verification is established.

Following signature verification of the allograph key certificate 821, the verifier 814 such as the service provider (SP) or the like extracts the public key (Kpa) for allograph verification stored in the allograph key certificate 821, and executes signature verification of the screening proxy group attribute certificate 823 applying the extracted public key (Kpa).

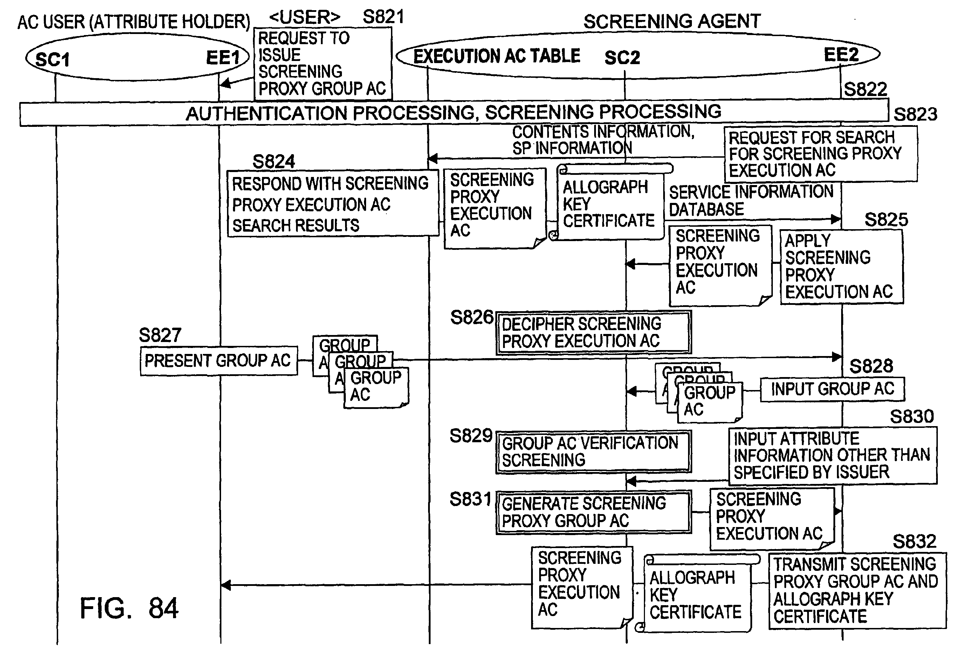

Next, the processing wherein the screening agent which has received a screening proxy execution AC 822 and allograph key certificate 821 from the issuer, generates and issues the screening proxy group attribute certificate 823 based on a request from the AC user, will be described with reference to Fig. 84. In Fig. 84,
EE1: attribute certificate using user device end entity (EE) control unit,
SC1: security chip configured within EE1,
EE2: screening agent user device end entity (EE) control unit,
SC2: security chip configured within EE2, and
Execution AC table: EE2 execution AC table control unit.

Note that the screening agent is not restricted to a user device, and an arrangement may be made wherein a service provider (SP) can execute this. Here, an example wherein the user device functions as a screening agent will be described.

First, in step S821, a user which is the AC user (attribute holder) inputs a screening proxy group attribute certificate (Gp. AC) issuing request via the input interface of the end entity (EE1). The request includes information necessary for generating a screening proxy group attribute certificate (Gp. AC), such as screening agent specifying data, information of the contents or service provider to be used, and so forth.

Upon the end entity (EE1) receiving the screening proxy group attribute certificate (Gp. AC) issuing request from the user, the end entity (EE1) makes a connection request to the end entity (EE2) of the screening agent user device in step S822, and mutual authentication is executed between the security chips (SC1) and (SC2) of the user devices. This is executed as public key mutual authentication processing described earlier with reference to Fig. 13, for example.

Upon mutual authentication being established, in step S823, the end entity (EE2) of the screening agent user device outputs a search request for the screening proxy execution AC to the execution AC table. The search key is, for example, contents information or service provider (SP) information or the like.

In step S824, the execution AC table searches for the corresponding screening proxy execution AC based on the input key from the end entity (EE2), and outputs the execution AC extracted from the table, and the allograph certificate (see 804 in Fig. 82) issued by the issuer and appended to the AC, to the end entity (EE2).

In step S825, the end entity (EE2) outputs the received AC to the security chip (SC2), and makes an application processing request for the execution attribute certificate. The security chip (SC2) performs processing for the received AC in step S826, i.e., deciphering the execution command based on the registration key obtained from the region specified by the address (Ad) stored in the execution attribute certificate (screening proxy execution attribute certificate) in S826.

Further, in step S827, the end entity (EE1) of the AC user inputs the group attribute certificate for screening of the AC user to the end entity (EE2) of the screening agent, and verification processing is performed at the security chip (SC2) of the screening agent.

As described above, the screening agent can execute the screening of the AC user based on the trust relation between the screening agent and the AC user, and while presenting data proving the attributes of the screening agent, or presenting of an already-issued attribute certificate, may not always be necessary, an example is illustrated here wherein the screening proxy group attribute certificate is issued under the conditions of presenting and verifying an already-issued group attribute certificate.

Verification of the group attribute certificate by the security chip (SC2) is as described earlier with reference to Fig. 21 through Fig. 23, and is executed as processing including attribute certificate signature verification, corresponding public key certificate and chain public key certificate confirmation processing, and so forth. In the event that verification is not established, subsequent processing is not executed and the processing is cancelled as error processing. In this case, processing may be performed wherein an error notification is transmitted to the AC user end entity (EE1).

In the event that the verification of the group attribute certificate (Gp. AC) is successful and the authenticity of the group attribute certificate (Gp. AC) has been confirmed, in step S830 additional information (Addinfo) necessary for generating the screening proxy group attribute certificate is input from the end entity (EE2) to the security chip (SC2), the security chip (SC2) generates the screening proxy group attribute certificate, and following sending thereof to the end entity (EE2), is sent to the end entity (EE1) of the AC user from the end entity (EE2) (S832). At the time of this sending processing, an allograph key certificate is attached to the generated screening proxy group attribute certificate.

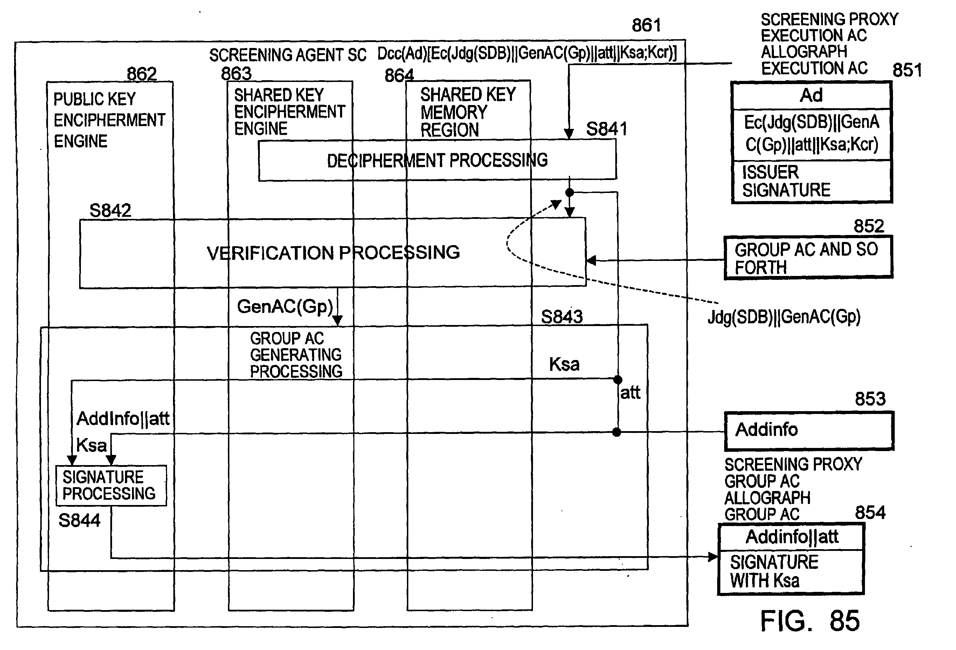

The details of processing executed at the security chip (SC2) of the screening agent, i.e., the processing for inputting the screening proxy execution attribute certificate and generating the screening proxy group attribute certificate, will be described with reference to Fig. 85. A screening proxy execution attribute certificate (AC) 851 holds the data of an execution command, a block address (Ad) of the shared key memory region 864 of the screening agent security chip (SC1) 861 storing the registration key (Kcr) for deciphering the execution command, and an issuer signature. The execution command (Ec (Jdg(SDB)||GenAC(Gp)||att||Ksa;Kcr)) contains a verification screening command (Jdg(SDB)), group attribute certificate compiling command (GenAC(Gp)), attribute information (att), and allograph secret key (Ksa), with a data structure of these having been enciphered with the registration key (Kcr).

Upon inputting the screening proxy execution attribute certificate (AC) 851, first, the registration key is obtained from the shared key memory region 864 based on the address (Ad) of the screening proxy execution attribute certificate (AC) 851, and the execution command within the screening proxy execution attribute certificate (AC) 851 is deciphered. Next, in step S842, verification of the group attribute certificate input from the AC user via the end entity is performed based on the verification screening command (Jdg(SDB)). The verification processing is as described earlier with reference to Fig. 21 through Fig. 23, and is executed as processing including attribute certificate signature verification, corresponding public key certificate and chain public key certificate confirmation processing, and so forth. In the event that verification is not established, subsequent processing is not executed and the processing is cancelled as error processing. In the event that the verification of the group attribute certificate (Gp. AC) is successful and the authenticity of the group attribute certificate (Gp. AC) has been confirmed, the flow proceeds to step S843.

At step S843, the screening proxy group attribute certificate is generated and transmitted based on the group attribute certificate compiling command (GenAC(Gp)) within the execution command of the screening proxy execution AC 851. This is processing corresponding to the generating and verification of the registration key generating execution AC, and generating and transmission of the service providing execution AC, described earlier with reference to Fig. 60, Fig. 61, and Fig. 63 through Fig. 65, and is the same as processing at the security module of the service provider (SP) in Fig. 63 through Fig. 65. Preferably, additional information (addinfo) 853 is attached to the screening proxy attribute certificate indicating that it is a screening proxy attribute certificate, thereby indicating difference to normal attribute certificates.

In step S844, the allograph secret key (Ksa) obtained from the execution command of the screening proxy execution attribute certificate 851 is applied to sign the additional information (addinfo) and attribute information (att), thereby generating a screening proxy group attribute certificate 854, which is transmitted to the AC user (attribute holder) via the end entity (EE2). Note that the allograph key certificate is attached to the generated screening proxy group attribute certificate and sent to the AC user.

The AC user presents the screening proxy group attribute certificate issued by the above processing and the allograph key certificate to a verifier such as a service provider or the like, and receives services under the condition that the attributes are verified. The verifier such as a service provider or the like applies a key which can be obtained from the allograph key certificate so as to be able to verify the signature of the screening proxy group attribute certificate.

An example of applying the above-described screening proxy group attribute certificate is issuing screening proxy group attribute certificates regarding which the number of accounts is limited. In the event that a service provider (SP) is to provide service to all family members of the family of Mr. A, whether or not the family of Mr. A is screened using a group attribute certificate (Gp. AC) proving the family of household A.

At this time, while attribute screening with high reliability could be realized if an attribute certificate (AC) issued by a third-party organization having basic citizen information, such as a city hall, were used as the group attribute certificate (Gp. AC) proving membership in household A, such attribute certificates may not be available for use. On the other hand, Mr. A himself issuing a group attribute certificate (Gp. AC) proving membership in household A is possible depending on the will of Mr. A. However, it is unlikely that the individual Mr. A could be determined to be trustworthy as an attribute authority (AA) which is the true issuing entity of an attribute certificate.

Accordingly, a screening proxy group attribute certificate is issued applying the above-described screening proxy execution AC. In this case, Mr. A issues a screening proxy group attribute certificate applying the screening proxy execution AC, serving as the screening agent as the representative of the family of Mr. A. The screening for issuing the screening proxy group attribute certificate can be realized based on the trust relation between the screening agent (Mr. A) and the AC user (the family of Mr. A), and presenting data proving the attributes of the screening agent, or presenting of an already-issued attribute certificate, may not always be necessary. Thus, screening proxy group attribute certificates can be issued based on the trust relation between the screening agent and the AC user, such as deeming screening to have been established once the fact that the screening agent is family is recognized.

However, there is the possibility that Mr. A might issue a screening proxy group attribute certificate to a friend Mr. B who is not a family member, but with attributes showing to be a family member of Mr. A. In order to reduce the possibility of such cases, a restriction can be placed on the number of screening proxy group attribute certificates issued, such as with settings wherein the upper limit = 5 for example, thereby preventing excessive unauthorized use.

The above-described screening proxy group attribute certificate issuing processing arrangement can be realized in the same way for group attribute certificates wherein devices owned by Mr. A are set as a group, and Mr. A can issue screening proxy issue group attribute certificates to each of his own devices based on the screening proxy execution AC, with Mr. A serving as the screening agent with the screening proxy group attribute certificate applying the screening proxy execution AC.

Further, an example of processing applying a screening proxy group attribute certificate is an example of application to voting in an election. Using screening proxy group attribute certificates enables the voter to be able to vote such that none other than the candidate voted for can tell who the voter voted for, not even the election board members.

In this processing example, let us say that Screening agent: voter, and AC user (attribute holder): candidate.

This voting system is a model wherein a voter communicates with a candidate instead of the election board at the time of voting, unlike an actual election. First, the service provider (SP) issues a screening proxy execution Ac to the voter. A candidate tells the voter a unique identification value, i.e., an identification value which is different from all other votes, and issues a screening proxy group attribute certificate (Gp. AC) having that number and the PKC serial No. of the candidate whom the voter intends to vote for as attributes, based on the screening proxy execution AC, and sends this to the candidate. The screening proxy execution AC is automatically destroyed following generating the screening proxy group attribute certificate (Pg. AC).

The number of votes is counted based on the number of screening proxy group attribute certificates (Gp. AC) issued to each candidate, thereby determining the winner. All screening proxy group attribute certificates with the same identification number are viewed as having been copied, and only count as one vote.

### (7-3-2) Allograph execution attribute certificate

Next, the allograph execution attribute certificate will be described. An Allograph execution AC is an execution attribute certificate enabling the AC user (attribute holder) himself/herself to issue group attribute certificates (allograph group attribute certificate) for application to own service.

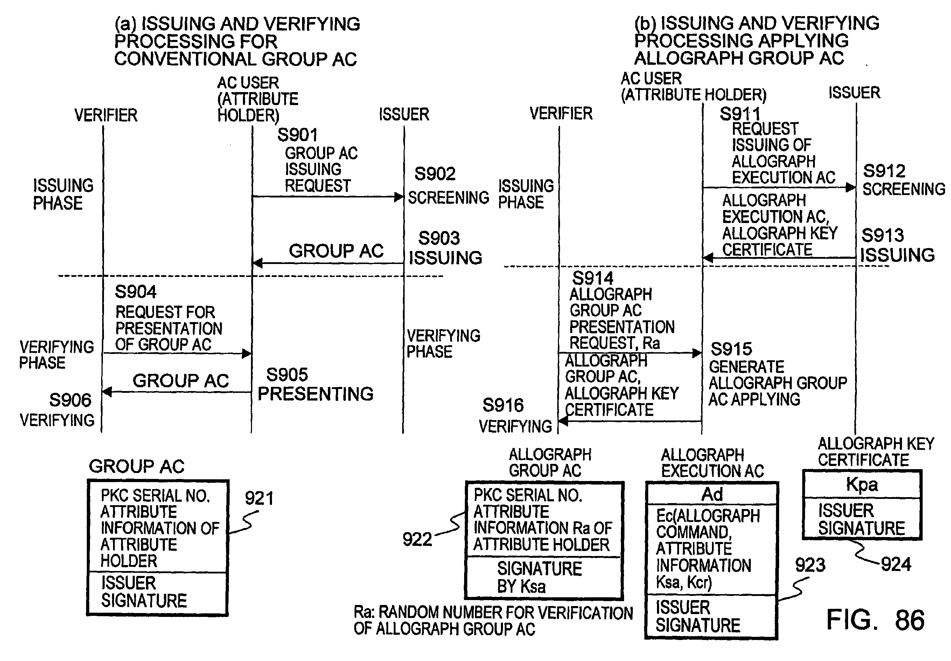

The overview of the allograph execution attribute certificate will be described with reference to Fig. 86. Fig. 86(a) illustrates the issuing and application processing arrangement of a normal attribute certificate. A request for issuing an attribute certificate, a group attribute certificate (Gp. AC) in this case, is made from the attribute holder which is the user of the attribute certificate (AC), to an issuer, e.g., an attribute authority (AA), attribute certificate registration authority (ARA), or service provider (SP) (S901). In this case for example, presenting data proving the attributes of the AC user is necessary. In the above-described examples, an example of presenting an already-issued group attribute certificate which a credit card company for example, has already issued to the AC user, as described.

The issuer performs screening (S902) as user confirmation, for attributes of the AC user and so forth, and upon determination being made that screening has been established, an attribute certificate 921 proving the attributes of the AC user (a Gp. AC here) is issued to the user (S903).

The AC user (attribute holder) can receive application of service by presenting the issued group attribute certificate (Gp. AC) to a verifier such as a service provider (SP), wherein the AC user (attribute holder) presents the group attribute certificate (Gp. AC) (S905) in response to a group attribute certificate (Gp. AC) presentation request (S904) from the verifier, whereby verification of the group attribute certificate (Gp. AC) is performed by the verifier (S906).

The example shown in (b) is a group attribute certificate (Gp. AC) issuing and application processing sequence applying the allograph execution attribute certificate, which will be described now in detail.

First, the AC user (attribute holder) makes a request for issuing an allograph execution attribute certificate (AC) to an issuer, e.g., an attribute authority (AA), attribute certificate registration authority (ARA), or service provider (SP) (S911). The issuer performs screening of the data proving the attributes of the AC user, e.g., an already-issued group attribute certificate or the like (S912), and upon determining that screening has been established, issues an allograph execution attribute certificate 923. The issuer also provides the allograph key certificate 924 to the AC user (attribute holder) at this time.

The allograph key certificate 924 has a public key (Kpa) used for generating and verifying an allograph, and issuer signature data. Also, as with the execution certificate described above, the allograph execution attribute certificate 923 is made up of a block address (Ad) indicating the storage region of the registration key (Kcr) within the shared key memory of the user device of the screening agent, and execution command (Ec(allograph command||attribute information||Ksa;Kcr)) enciphered with the registration key (Kcr), and issuer signature.

The secret key (Ksa) included in the execution command is a secret key used for generating and verifying an allograph, and is a secret key corresponding to the aforementioned public key (Kpa).

Steps S911 through 913 are an issuing phase, and following the issuing phase, a verifying phase is started. In step S914, a verifier such as a service provider (SP) executes a presentation request for the allograph group attribute certificate (Gp. AC) to the AC user (attribute holder). At the time of this presentation request, the verifier such as a service provider (SP) or the like transmits a verifying random number (Ra) for the allograph group attribute certificate (Gp. AC) to the AC user (attribute holder).

In step S915, the AC user (attribute holder) applies the allograph group attribute certificate received earlier from the issuer to generate an allograph group attribute certificate (Gp. AC) 922, in response to an allograph group attribute certificate (Gp. AC) presentation request from the verifier such as a service provider (SP). The details of this generating processing will be described later. The allograph group attribute certificate (Gp. AC) 922 includes the verifying random number (Ra) received from the verifier in the information such as the serial number of the public key certificate (PKC) of the AC user (attribute holder), attribute information, etc., and a signature is attached using the secret key (Ksa) stored in the execution command of the allograph execution attribute certificate 923 received from the issuer earlier.

The AC user (attribute holder) sends the generated allograph group attribute certificate 922 and the allograph key certificate 924 together to the verifier (S916). After signature verification of the allograph key certificate 924, the verifier extracts the allograph verifying public key (Kpa) stored in the allograph key certificate 924, and applies the extracted public key (Kpa) to execute signature verification of the allograph group attribute certificate 922. Further, verifying a match between the random number stored in the allograph group attribute certificate and the random number generated by itself earlier allows confirmation that the allograph group attribute certificate has been presented in response to the request of the verifier, by this verification.

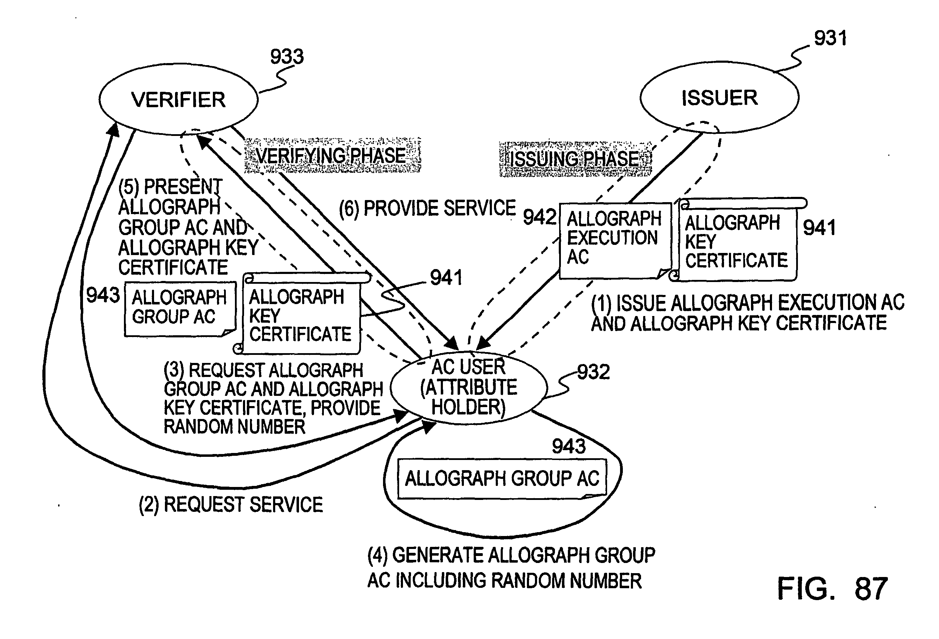

The flow of data among the entities including service providing will be described with reference to Fig. 87. first, in the issuing phase, an allograph key certificate 941 and allograph execution attribute certificate 942 are sent to the AC user (attribute holder) from the issuer 931 to the AC user (attribute holder) 932. Next, upon a service request being made from the AC user (attribute holder) 932 to a verifier 933 such as the service provider (SP) or the like, the verifier 933 makes an allograph group attribute certificate (Gp. AC) presentation request to the AC user (attribute holder) 932. At the time of this presentation request, the verifier 933 transmits a verifying random number (Ra) for the allograph group attribute certificate (Gp. AC) to the AC user (attribute holder) 932.

The AC user (attribute holder) 932 applies the allograph group attribute certificate received earlier from the issuer to generate an allograph group attribute certificate (Gp. AC) 943, in response to an allograph group attribute certificate (Gp. AC) presentation request from the verifier 933. The allograph group attribute certificate (Gp. AC) 943 includes the verifying random number (Ra) received from the verifier in the information such as the serial number of the public key certificate (PKC) of the AC user (attribute holder) 932, attribute information, etc., and a signature is attached using the secret key (Ksa) stored in the execution command of the allograph execution attribute certificate 942 received from the issuer earlier.

Next, the AC user (attribute holder) 932 sends the allograph group attribute certificate 943 and the allograph key certificate 941 together to the verifier, and the verifier executes attribute verification of the AC user based on the allograph group attribute certificate 943 and the allograph key certificate 941, and provides services under the condition that verification is established.

Following signature verification of the allograph key certificate 941, the verifier 933 such as a service provider (SP) extracts the allograph verifying public key (Kpa) stored in the allograph key certificate 941, and applies the extracted public key (Kpa) to execute signature verification of the allograph group attribute certificate 943, and verifies the allograph group attribute certificate 943 by collation of the stored random number.

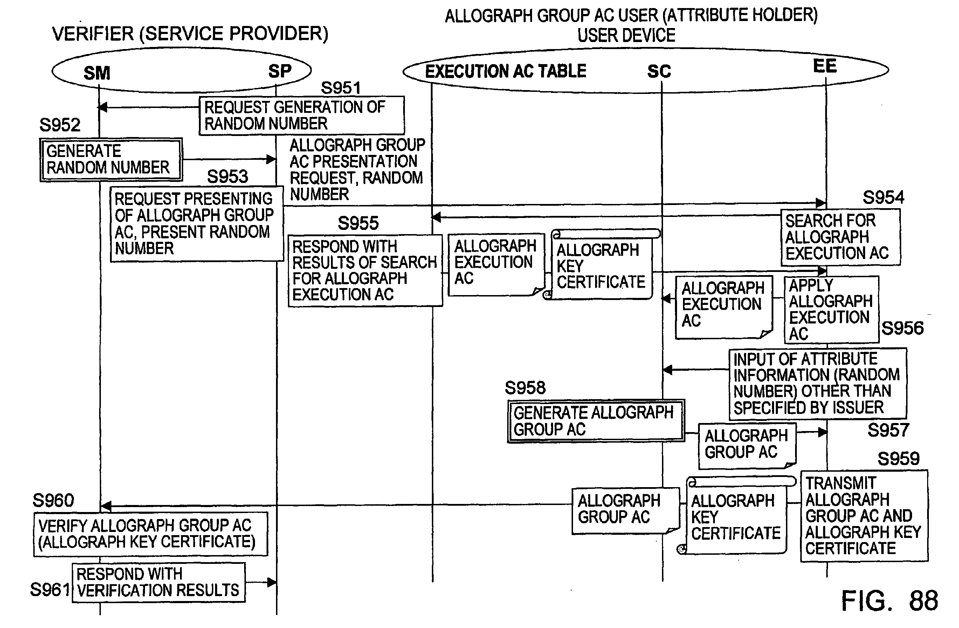

Next, the details of processing executed by an AC user having the allograph group attribute certificate and the allograph key certificate issued by the issuer at the time of a allograph group attribute certificate presentation request from a verifier such as a service provider (SP) or the like, will be described with reference to Fig. 88. In Fig. 88,
SP: service provider control unit for executing verification of attribute certificates,
SM: security module of SP
EE: attribute certificate using user device end entity (EE) control unit,
SC: security chip configured within EE, and
Execution AC table: execution AC table control unit of EE.

The processing shown in Fig. 88 illustrates the processing following mutual authentication having been established between the security module (SM) of the service provider (SP) and the security chip (SC) of the user device.

Following establishment of mutual authentication, the service provider (SP) makes a request to generate a random number (S951) to be applied at the time of attribute certificate verification of the security module (SM), and in step S952, the security module (SM) generates a random number in response to the request, that is output to the service provider (SP).

In step S953, the service provider (SP) makes a allograph group attribute certificate presentation request to the end entity (EE). At this time, the service provider (SP) transmits the verifying random number (Ra) of the allograph group attribute certificate (Gp. AC) to the end entity (EE) as well.

In step S954, the end entity (EE) makes a search of the execution AC table for an allograph execution attribute certificate to be applied for generating the allograph group attribute certificate (Gp. AC), and in step S955, the execution AC table outputs the allograph execution attribute certificate and the corresponding allograph key certificate to the end entity (EE).

In step S956, the end entity (EE) requests application processing of the allograph execution attribute certificate, i.e., allograph group attribute certificate generating processing, of the security chip (SC), and in step S958, the security chip (SC) executes the allograph group attribute certificate generating processing. The details of the allograph group attribute certificate generating processing are the same as the processing of the allograph group attribute certificate based on the allograph execution attribute certificate described with reference to Fig. 85 earlier. Note however, that the random number (Ra) received from the verifier is stored in the allograph group attribute certificate.

In step S958, the security chip (SC) sends the generated allograph group attribute certificate to the end entity (EE). In step S959, the end entity (EE) transmits the allograph group attribute certificate, and the allograph key certificate already received from the issuer earlier, to the security module (SM) of the service provider side.

Upon the security module (SM) of the service provider side receiving the allograph group attribute certificate and the allograph key certificate, the public key (Kpa) for allograph verification stored in the allograph key certificate is extracted, the extracted public key (Kpa) is applied to perform signature verification of the allograph group attribute certificate, and also verification based on collation processing of the stored random number in the allograph group attribute certificate, and the verification results are notified to the service provider (SP). The service provider (SP) provides service in the event that verification is established according to the response results, and in the event that verification is not established service stopping processing is performed.

A normal attribute certificate is an example of applying an allograph execution attribute certificate. That is to say, using an allograph execution attribute certificate instead of a normal attribute certificate allows the destruction processing function of the execution attribute certificate to be used, so the trouble of revocation processing such as making reference to a list for destruction each time verification is performed, and reduction in reliability, can be solved.

A further application example is an allograph attribute certificate wherein the number of times of proving attributes is restricted. That is to say, using an allograph execution attribute certificate having number of times restricting functions as a group attribute certificate for permitting providing of services other than deciphering of enciphered data as well, can enable restricted services to be provided without the trouble of having an external entity such as a server to hold number of times information, and without reducing processing efficiency.

### [(8) Configuration of entities]

Next, a configuration example of entities serving as information processing devices, such as the end entity (EE) having a security chip (SC) or a user identification device (UID) having security chip (SC), or a service provider (SP) or the like serving as a user device for executing the above-described processing, i.e., generating, verifying, transmission/reception, etc., will be described with reference to drawings.

The end entity information processing devices such as user devices and service providers and the like each have a CPU for performing various types of data processing and control, and also have communication means capable of communicating with other entities, and can be configured as various types of information processing device such as servers, PCs, PDAs, portable communication terminal devices, and so forth, for example.

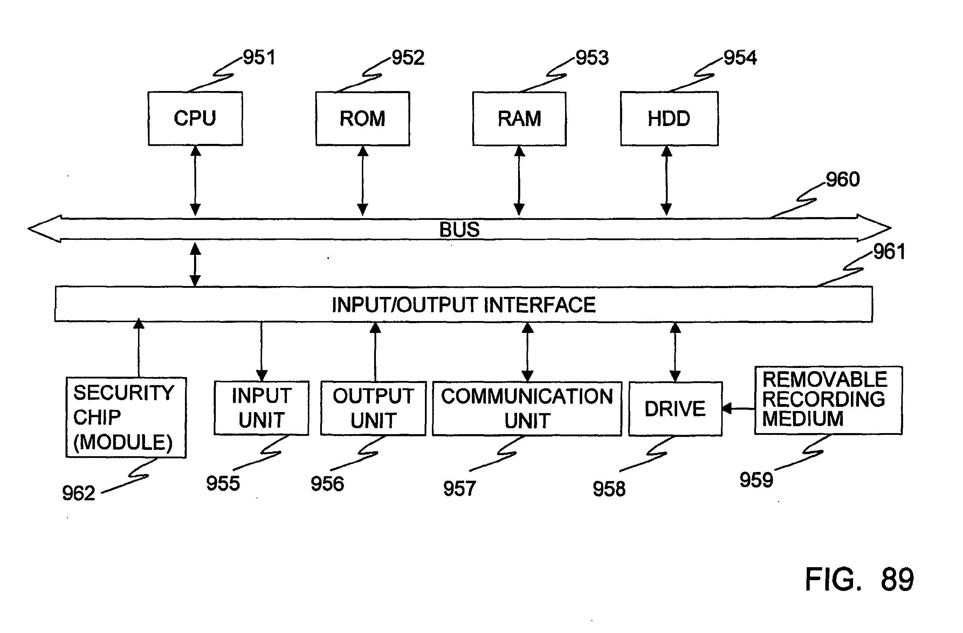

Fig. 89 illustrates an information processing device configuration example. Note that the configuration example shown in Fig. 89 is but an example, and that the entities do not necessarily need to have all of the functions shown here. The CPU (Central Processing Unit) 951 shown in Fig. 89 is a processor for executing various application programs and an OS (Operating System). The ROM (Read-Only-Memory) 952 stores programs to be executed by the CPU 951, and fixed data such as computation parameters. The RAM (Random Access Memory) 953 is used as a storage area and work area for programs executed by the processing of the CPU 951, and parameters which change as necessary according to processing of the programs.

The HDD 954 executes control of a hard disk, and executes processing for storing and reading various types of data and programs to and from the hard disk. The security chip 962 is of a configuration having an anti-tampering structure as described above, and has an enciphering processing unit, a data processing unit, and memory for storing key data necessary for encipherment processing, verification of attribute certificates as privilege confirmation processing, execution of generating processing, and so forth.

A bus 960 is configured of a PCI (Peripheral Component Interface) bus or the like, and enables data transfer with the input/output devices via the modules and input/output interface 961.

An input unit 955 is configured of a keyboard, pointing device, etc., for example, and is operated by the user to input various types of commands and data to the CPU 951. The output unit 956 is a CRT, liquid crystal display, etc., and displays various types of information by text, images, etc.

A communication unit 957 is configured of an entity connected to a device such as a network interface, connected device interface, etc., realizing communication processing with a service provider or the like for example, and processing for transmitting data supplied from storage units, data processed by the CPU 951, and enciphered data, or receiving data from other entities, is carried out under control of the CPU 951.

A drive 958 is a drive for executing recording and reproduction of removable recording media 959 such as flexible disks, CD-ROM (Compact Disc Read Only Memory), MO (Magneto optical) disks, DVD (Digital Versatile Disc), magnetic disks, semiconductor memory, or the like, and reproduces programs or data from the removable recording media 959 and stores programs or data to the removable recording media 959.

In the event of reading out programs or data recorded in a recording medium and executing or processing at the CPU 951, the program or data that has been read out is supplied to the RAM 953, connected for example, via the interface 961 and bus 960.

Programs for executing the processing at the user devices, service provider, etc., included in the above description, is either stored in ROM 952 for example and processed by the CPU 951, or stored in the hard disk and supplied to the CPU 951 via the HDD 954 to be executed.

The present invention has been described so far with reference to particular embodiments. However, it is self-evident that one skilled in the art can make various modifications and substitutions without departing from the spirit and scope of the present invention. That is to say, the present invention has been disclosed through examples, and should not be interpreted restrictively. The essence of the invention should be determined based on the section of the Claims of the invention, listed at the opening.

Note that the series of processing described in the specification can be executed by hardware, software, of a combined configuration of both. In the event of executing the processing with software, a program describing the processing sequence is installed in memory of a computer built into dedicated hardware and executed, or the program is installed in a general-purpose computer capable of various types of processing, so as to be executed.

For example, a program can be recorded in a hard disk or ROM (Read Only Memory) serving as recording media beforehand. Or, the program can be temporarily or permanently stored (recorded) in flexible disks, CD-ROM (Compact Disc Read Only Memory), MO (Magneto optical) disks, DVD (Digital Versatile Disc), magnetic disks, semiconductor memory, or like removable recording media. Such removable recording media can be provided as so-called packaged software.

Also, besides being installed from removable recording media such as described above into a computer, the program can be transferred wirelessly to the computer from a download site, transferred to the computer via cable through a network such as a LAN (Local Area Network) or Internet or the like, with the computer receiving programs being transferred in such a way and installing in a recording medium such as a built-in hard disk or the like.

Further, note that the various types of processing described in the specification are not restricted to being executed in the time-sequence described, but may be executed in parallel or individually, according to the processing capabilities of the device executing the processing, or as necessary. Also note that the term system as used in the present specification is a logical group of multiple devices, and is not restricted to the component devices being within a single housing.

### Industrial Applicability

As described above, according to the privilege managing system, information processing device, and method, of the present invention, a group attribute certificate which has, as stored information, group identification information corresponding to a group which is a set of certain devices or certain users, and also has affixed an electronic signature of an issuer, is issued to a service reception entity, and verification is performed by means of signature verification for of the group attribute certificate presented from the user device regarding whether or not there has been tampering, screening is performed regarding whether or not this is a service-permitted group based on group identification information stored in the group attribute certificate, and determination is made regarding whether or not service can be provided, based on the screening; accordingly, centralized privilege confirmation corresponding to various user sets or device sets can be made, so management of individual privilege information can be omitted, thereby enabling effective privilege management.

Further, according to the privilege managing system, information processing device, and method, of the present invention, determining processing regarding whether or not service can be provided is enabled applying a group information database wherein a group identifier and permitted service information for members belonging to the group are correlated, thereby enabling detailed differentiation of setting privileges for each group.

Further, according to the privilege managing system, information processing device, and method, of the present invention, screening regarding whether or not the object of service permission is executed for each of a plurality of sets of different group identification information obtained from a plurality of group attribute certificates based on a plurality of different group definitions presented by the user device, and determining processing regarding whether or not service can be provided can be executed under the condition that all group identification sets are the object of service permission, thereby enabling various arrangements of privilege settings, such as providing services based on multiple conditions such as a group set corresponding to a group set for devices and a group set for users, and so forth.

Further, according to the access privilege managing system, communication processing device, and method, of the present invention, based on group identification information stored in a group attribute certificate which has, as stored information, group identification information corresponding to a group which is a set of certain communication devices or certain users, and also has affixed an electronic signature of an issuer, screening is performed regarding whether or not the access requesting device is a device which belongs to an access-permitted group, and determination regarding whether or not access can be permitted is made based on the screening, thereby permitting access only to an access requesting communication processing device group which users or user devices which are a member of a group arbitrarily set by users having communication processing devices.

Further, according to the access privilege managing system, communication processing device, and method, of the present invention, screening is performed regarding whether or not the access requesting device is a device owned by a user belonging to an access-permitted group, based on a group attribute certificate issued to a user identification device which is an individual identification device making up the access requesting device, and determination is made regarding whether or not access can be permitted, based on the screening, so even in the event that the communication processing device has been changed, access is permitted in the screening based on the group attribute certificate issued to the user identification device which is the individual identification device, and cases wherein access is forbidden due to changing the communication processing device can be prevented.

According to the data processing system, data processing device, and method, of the present invention, in a data processing system for executing data processing between multiple mutually communicable devices, a data processing requesting device, which requests data processing to the other device with which communication is being made, transmits to a data processing requested device a group attribute certificate which has, as stored information, group identification information corresponding to a group which is a set of certain devices or certain users, verification processing of the received group attribute certificate is performed at the data processing requested device, determination is made regarding whether or not the data processing requesting device has data processing requesting privileges based on the verification, and data processing is performed based on determination of privileges, so cases wherein processing is executed by a wrong device or user is prevented, and proper data processing based on valid privileges is carried out.

Further, according to the data processing system, data processing device, and method, of the present invention, with an arrangement wherein a plurality of data processing devices request data processing of the other device with which communication is being made, thereby collaboratively executing data processing, each of the devices transmits the group attribute certificate stored in itself at the time of data processing requesting of the other device with which communication is being made, and under the condition of verification being established at the receiving device, processing corresponding to the data processing request is mutually executed, thereby enabling proper collaborative data processing accompanying communication between the plurality of data processing devices.

Further, according to the data processing system, data processing device, and method, of the present invention, a maintenance executing device and a maintenance service receiving device each store control attribute certificate and a service attribute certificate, with the attribute certificates being exchanged at the time of executing maintenance service, and mutually verified and screened at each device, wherein maintenance processing is performed under the condition that screening has been established, so maintenance processing can be realized in a sure manner within the set privilege ranges of each.

## Claims

1. A privilege management system for managing service reception privileges of user devices;
wherein a user device which is a service reception entity holds a group attribute certificate which has, as stored information, group identification information corresponding to a group which is a set of certain devices or certain users, and also has affixed an electronic signature of an issuer;
and wherein a service provider which is a service providing entity has a configuration for executing verification, by means of signature verification, of the group attribute certificate presented from said user device regarding whether or not there has been tampering, performing screening regarding whether or not this is a service-permitted group based on group identification information stored in said group attribute certificate, and executing determination regarding whether or not service can be provided, based on said screening.

2. A privilege management system according to Claim 1, wherein said group attributes certificate is a certificate issued to a user device corresponding to a device or a user, under the conditions that mutual authentication is established between a group attributes certificate issuing entity and the user device, and that the device or user to which the certificate is to be issued is following an issuance policy permitted by said service provider.

3. A privilege management system according to Claim 1, wherein the issuing processing for a new group attributes certificate is of a configuration carried out under the condition that verification is established at the group attributes certificate issuing entity regarding an already-issued group attributes certificate which the user device already holds.

4. A privilege management system according to Claim 1, wherein said service provider is of a configuration having a group information database wherein said group identifier and permitted service information for members belonging to the group are correlated, wherein said group information database is searched based on the group identification information stored in said group attributes certificate presented by said user device, and determining processing regarding whether or not service can be provided is executed.

5. A privilege management system according to Claim 1, wherein said service provider is of a configuration wherein screening regarding whether or not the object of service permission is executed for each of a plurality of sets of different group identification information obtained from a plurality of group attribute certificates based on a plurality of different group definitions presented by said user device, and determining processing regarding whether or not service can be provided is executed under the condition that all group identification sets are the object of service permission.

6. A privilege management system according to Claim 1, wherein said service provider is of a configuration wherein screening regarding whether or not the object of service permission is executed for first group identification information obtained from a first group attribute certificate based on group definitions from said user device wherein devices are group members, and screening regarding whether or not the object of service permission is executed for second group identification information obtained from a second group attribute certificate based on group definitions from said user device wherein devices are group users, and determining processing regarding whether or not service can be provided is executed under the condition that all group identification sets are the object of service permission.

7. A privilege management system according to Claim 1, wherein said user device is of a configuration including an end entity as a device for executing communication with said service provider, and a user identification device as an individual identification device;
wherein said group attribute certificate is issued individually to each of said end entity and user identification device, with issuing processing being carried out under the condition that mutual authentication has been established between the group attribute certificate issuing entity and said end entity or said user identification device.

8. A privilege management system according to Claim 1, of a configuration wherein said group attribute certificate is an attribute certificate issued by an attribute authority, and a group identifier is stored in an attribute information filed within the attribute certificate.

9. A privilege management system according to Claim 1, wherein said group attribute certificate is of a configuration storing link information regarding a public key certificate corresponding to said group attribute certificate;
and wherein said service provider is of a configuration wherein verification of the public key certificate obtained by said link information is also executed at the time of performing verification of said group attribute certificate.

10. An information processing device for executing data processing as service providing processing, comprising:
a data reception unit for receiving a group attribute certificate which has, as stored information, group identification information corresponding to a group which is a set of certain devices or certain users, and also has affixed an electronic signature of an issuer; and
a group attribute certificate verification processing unit for executing verification, by means of signature verification, of the group attribute certificate regarding whether or not there has been tampering, performing screening regarding whether or not this is a service-permitted group based on group identification information stored in said group attribute certificate, and executing determination regarding whether or not service can be provided, based on said screening.

11. An information processing device according to Claim 10, of a configuration further comprising a group information database wherein said group identifier and permitted service information for members belonging to the group are correlated;
wherein said group attribute certificate verification processing unit searches said group information database based on the group identification information stored in said group attributes certificate presented by said user device, and executes determining processing regarding whether or not service can be provided.

12. An information processing device according to Claim 10, wherein said group attribute certificate verification processing unit is of a configuration wherein screening regarding whether or not the object of service permission is executed for each of a plurality of sets of different group identification information obtained from a plurality of group attribute certificates based on a plurality of different group definitions presented by said user device, and determining processing regarding whether or not service can be provided is executed.

13. A privilege management method for managing service reception privileges of user devices, comprising:
as an execution step at a user device which is a service reception entity, a step for transmitting to a service provider which is a service providing entity a group attribute certificate which has, as stored information, group identification information corresponding to a group which is a set of certain devices or certain users, and also has affixed an electronic signature of an issuer;
and, as an execution step at said service provider, a step for performing verification, by means of signature verification, of the group attribute certificate presented from said user device regarding whether or not there has been tampering, performing screening regarding whether or not this is a service-permitted group based on group identification information stored in said group attribute certificate, and executing determination regarding whether or not service can be provided, based on said screening.

14. A privilege management method according to Claim 13, further comprising a group attribute certificate issuing processing step for issuing said group attributes certificate to a user device corresponding to a device or a user;
wherein said group attribute certificate issuing processing step is a processing step for issuing the group attribute certificate to a user device corresponding to a device or a user under the conditions that mutual authentication is established between a group attributes certificate issuing entity and the user device, and that the device or user to which the certificate is to be issued is following an issuance policy permitted by said service provider.

15. A privilege management method according to Claim 14, wherein said group attribute certificate issuing processing step includes a verification processing step regarding an already-issued group attributes certificate which the user device already holds, wherein issuing of a group attributes certificate is carried out under the condition that said verification is established.

16. A privilege management method according to Claim 13, wherein said service provider is of a configuration having a group information database wherein said group identifier and permitted service information for members belonging to the group are correlated, wherein said group information database is searched based on the group identification information stored in said group attributes certificate presented by said user device, and determining processing regarding whether or not service can be provided is executed.

17. A privilege management method according to Claim 13, wherein said service provider is of a configuration wherein screening regarding whether or not the object of service permission is executed for each of a plurality of sets of different group identification information obtained from a plurality of group attribute certificates based on a plurality of different group definitions presented by said user device, and determining processing regarding whether or not service can be provided is executed under the condition that all group identification sets are the object of service permission.

18. A privilege management method according to Claim 13, wherein at said service provider, screening regarding whether or not the object of service permission is executed for first group identification information obtained from a first group attribute certificate based on group definitions from said user device wherein devices are group members, and screening regarding whether or not the object of service permission is executed for second group identification information obtained from a second group attribute certificate based on group definitions from said user device wherein devices are group users, and determining processing regarding whether or not service can be provided is executed under the condition that all group identification sets are the object of service permission.

19. A privilege management method according to Claim 13, wherein said group attribute certificate is of a configuration storing link information regarding a public key certificate corresponding to said group attribute certificate;
and wherein said service provider is of a configuration wherein verification of the public key certificate obtained by said link information is also executed at the time of performing verification of said group attribute certificate.

20. An information processing method for an information processing device for executing data processing as service providing processing, said method comprising:
a certificate reception step for receiving from a service providing device, a group attribute certificate which has, as stored information, group identification information corresponding to a group which is a set of certain devices or certain users, and also has affixed an electronic signature of an issuer, as an attribute certificate to be applied to service usage privilege confirmation processing; and
a group attribute certificate verification processing step for executing verification, by means of signature verification of the group attribute certificate, regarding whether or not there has been tampering, performing screening regarding whether or not this is a service-permitted group based on group identification information stored in said group attribute certificate, and executing determination regarding whether or not service can be provided, based on said screening.

21. An information processing method according to Claim 20, said information processing device further comprising a group information database wherein said group identifier and permitted service information for members belonging to the group are correlated;
wherein said group attribute certificate verification processing step includes a step for searching said group information database based on the group identification information stored in said group attributes certificate presented by said user device, and executing determining processing regarding whether or not service can be provided.

22. An information processing method according to Claim 20, wherein said group attribute certificate verification processing step includes a step for executing screening regarding whether or not the object of service permission is executed for each of a plurality of sets of different group identification information obtained from a plurality of group attribute certificates based on a plurality of different group definitions presented by said user device, and executing determining processing regarding whether or not service can be provided under the condition that all group identification sets are the object of service permission.

23. A computer program for effecting execution of privilege management processing for managing service reception privileges of user devices, said program comprising:
a certificate reception step for receiving from a service providing device, a group attribute certificate which has, as stored information, group identification information corresponding to a group which is a set of certain devices or certain users, and also has affixed an electronic signature of an issuer, as an attribute certificate to be applied to service usage privilege confirmation processing; and
a group attribute certificate verification processing step for executing verification, by means of signature verification of the group attribute certificate, regarding whether or not there has been tampering, performing screening regarding whether or not this is a service-permitted group based on group identification information stored in said group attribute certificate, and executing determination regarding whether or not service can be provided, based on said screening.

24. An access privilege management system for executing access restrictions between communication devices having communication functions;
wherein an access requesting device stores, in storage means, a group attribute certificate which has, as stored information, group identification information corresponding to a group which is a set of certain communication devices or certain users, and also has affixed an electronic signature of an issuer;
and wherein an access requested device, which is the object of an access request from said access requesting device, executes verification, by means of signature verification, of the group attribute certificate presented from said access requesting device regarding whether or not there has been tampering, performing screening regarding whether or not said access requesting device is a device which belongs to an access-permitted group based on group identification information stored in said group attribute certificate, and executes determination regarding whether or not access can be permitted, based on said screening.

25. An access privilege management system according to Claim 24, wherein said access requested device has a configuration for performing screening regarding whether or not said access requesting device is an end entity belonging to an access-permitted group, based on a group attribute certificate issued to the end entity which is an access executing device making up said access requesting device, and executing determination regarding whether or not access can be permitted, based on said screening.

26. An access privilege management system according to Claim 24, wherein said access requested device has a configuration for performing screening regarding whether or not said access requesting device is a device owned by a user belonging to an access-permitted group, based on a group attribute certificate issued to a user identification device which is an individual identification device making up said access requesting device, and executing determination regarding whether or not access can be permitted, based on said screening.

27. An access privilege management system according to Claim 24, of a configuration wherein said access requesting device and said access requested device have security chips with anti-tampering configurations, with mutual authentication being executed between the mutual security chips, and wherein, under the condition that mutual authentication has been established, said access requested device executes signature verification of the group attribute certificate presented from said access requesting device, and screening regarding whether or not the device belongs to an access-permitted group.

28. An access privilege management system according to Claim 24, of a configuration wherein said access requested device receives from a device an issuing request for a group attribute certificate certifying that the device is an access-permitted group member;
and wherein, under the conditions that mutual authentication between devices has been established and that the group attribute certificate issue requesting device is following an issuance policy permitted by said access requested device, issues a group attribute certificate to a device corresponding to a device or a user, certifying that the device is an access-permitted group member.

29. An access privilege management system according to Claim 24, of a configuration wherein said access requested device receives from a device an issuing request for a group attribute certificate certifying that the device is an access-permitted group member;
and wherein, under the conditions that mutual authentication between devices has been established and that verification and screening is established for an already-issued group attribute certificate already held by the group attribute certificate issue requesting device, issues a group attribute certificate to a device corresponding to a device or a user, certifying that the device is an access-permitted group member.

30. An access privilege management system according to Claim 24, wherein said group attribute certificate is of a configuration storing link information regarding a public key certificate corresponding to said group attribute certificate;
and wherein said access requesting device is of a configuration wherein verification of the public key certificate obtained by said link information is also executed at the time of performing verification of said group attribute certificate.

31. A communication processing device for executing access restriction processing, comprising:
a reception unit for receiving, from an access requesting device, a group attribute certificate which has, as stored information, group identification information corresponding to a group which is a set of certain communication devices or certain users, and also has affixed an electronic signature of an issuer; and
an access privilege determination processing unit for executing group attribute certificate verification processing functions, for executing verification, by means of signature verification, of the group attribute certificate received from said access requesting device regarding whether or not there has been tampering, performing screening regarding whether or not said access requesting device is a device which belongs to an access-permitted group based on group identification information stored in said group attribute certificate, and executing determination regarding whether or not access can be permitted, based on said screening.

32. A communication processing device according to Claim 31, wherein said access privilege determination processing unit has a configuration for performing screening regarding whether or not said access requesting device is an end entity belonging to an access-permitted group, based on a group attribute certificate issued to the end entity which is an access executing device at said access requesting device, and executing determination regarding whether or not access can be permitted, based on said screening.

33. A communication processing device according to Claim 31, wherein said access privilege determination processing unit has a configuration for performing screening regarding whether or not said access requesting device is a device owned by a user belonging to an access-permitted group, based on a group attribute certificate issued to a user identification device which is an individual identification device making up said access requesting device, and executing determination regarding whether or not access can be permitted, based on said screening.

34. A communication processing device according to Claim 31, comprising an encipherment processing unit for executing mutual authentication with said access requesting device;
wherein said access privilege determination processing unit has a configuration for, under the condition that mutual authentication has been established, executing signature verification of the group attribute certificate presented from said access requesting device, and screening regarding whether or not the device belongs to an access-permitted group.

35. A communication processing device according to Claim 31, further comprising an attribute certificate generating unit for generating a group attribute certificate which has, as stored information, group identification information corresponding to a group which is a set of certain communication devices or certain users, and also has affixed an electronic signature of an issuer.

36. A communication processing device according to Claim 31, wherein said group attribute certificate is of a configuration storing link information regarding a public key certificate corresponding to said group attribute certificate;
and wherein said access privilege determination processing unit is of a configuration wherein verification of the public key certificate obtained by said link information is also executed at the time of performing verification of said group attribute certificate.

37. An access privilege management method for executing access restrictions between communication devices having communication functions, said method comprising:
a step for an access requesting device to transmit to an access requested device, which is the object of an access request, a group attribute certificate which has, as stored information, group identification information corresponding to a group which is a set of certain communication devices or certain users, and also has affixed an electronic signature of an issuer;
a step for said access requested device to receive the group attribute certificate presented by said access requesting device;
a screening step for executing verification, by means of signature verification, of the group attribute certificate presented from said access requesting device regarding whether or not there has been tampering, and performing screening regarding whether or not said access requesting device is a device which belongs to an access-permitted group based on group identification information stored in said group attribute certificate;
and a step for executing determination regarding whether or not access can be permitted, based on the screening results in said screening step.

38. An access privilege management method according to Claim 37, wherein said access requested device performs screening regarding whether or not said access requesting device is an end entity belonging to an access-permitted group, based on a group attribute certificate issued to the end entity which is an access executing device at said access requesting device, and executing determination regarding whether or not access can be permitted, based on said screening.

39. An access privilege management method according to Claim 37, wherein said access requested device performs screening regarding whether or not said access requesting device is a device owned by a user belonging to an access-permitted group, based on a group attribute certificate issued to a user identification device which is an individual identification device at said access requesting device, and executing determination regarding whether or not access can be permitted, based on said screening.

40. An access privilege management method according to Claim 37, further comprising a mutual authentication execution step between security chips with anti-tampering configurations of said access requesting device and said access requested device;
wherein, under the condition that mutual authentication has been established, said access requested device executes signature verification of the group attribute certificate presented from said access requesting device, and screening regarding whether or not the device belongs to an access-permitted group.

41. An access privilege management method according to Claim 37, further comprising a step for said access requested device to receive from a device an issuing request for a group attribute certificate certifying that the device is an access-permitted group member; and
a step wherein, under the conditions that mutual authentication between devices has been established and that the group attribute certificate issue requesting device is following an issuance policy permitted by said access requested device, a group attribute certificate is issued to a device corresponding to a device or a user.

42. An access privilege management method according to Claim 37, further comprising, as an execution step at said access requested device in response to an issuing request from a device for a group attribute certificate certifying that the device is an access-permitted group member, a step for executing processing for issuing a group attribute certificate to a device corresponding to a device or a user, certifying that the device is an access-permitted group member, under the conditions that mutual authentication between devices has been established and that verification and screening is established for an already-issued group attribute certificate already held by the group attribute certificate issue requesting device.

43. An access privilege management method according to Claim 37, wherein said group attribute certificate is of a configuration storing link information regarding a public key certificate corresponding to said group attribute certificate;
and wherein said access requesting device is of a configuration wherein verification of the public key certificate obtained by said link information is also executed at the time of performing verification of said group attribute certificate.

44. A communication managing method for a communication processing device for executing access restriction processing, said method comprising:
a reception step for receiving, from an access requesting device, a group attribute certificate which has, as stored information, group identification information corresponding to a group which is a set of certain communication devices or certain users, and also has affixed an electronic signature of an issuer; and
an access privilege determination processing step for executing verification, by means of signature verification, of the group attribute certificate received from said access requesting device regarding whether or not there has been tampering, performing screening regarding whether or not said access requesting device is a device which belongs to an access-permitted group based on group identification information stored in said group attribute certificate; and
an access permissible/impermissible determination step for executing determination regarding whether or not access can be permitted, based on the access privilege determination processing results.

45. A communication managing method according to Claim 44, wherein said access privilege determination processing step includes a step performing screening regarding whether or not said access requesting device is an end entity belonging to an access-permitted group, based on a group attribute certificate issued to the end entity which is an access executing device at said access requesting device.

46. A communication managing method according to Claim 44, wherein said access privilege determination processing step includes a step for performing screening regarding whether or not said access requesting device is a device owned by a user belonging to an access-permitted group, based on a group attribute certificate issued to a user identification device which is an individual identification device making up said access requesting device.

47. A communication managing method according to Claim 44, further comprising an authentication processing step for executing mutual authentication with said access requesting device;
wherein, in said access privilege determination processing step, signature verification of the group attribute certificate presented from said access requesting device, and screening regarding whether or not the device belongs to an access-permitted group, are executed, under the condition that mutual authentication has been established.

48. A communication managing method according to Claim 44, wherein said group attribute certificate is of a configuration storing link information regarding a public key certificate corresponding to said group attribute certificate;
and wherein, in said access privilege determination processing step, verification of the public key certificate obtained by said link information is also executed at the time of performing verification of said group attribute certificate.

49. A computer program for effecting execution of a communication managing method for a communication processing device for executing access restriction processing, said program comprising:
a reception step for receiving, from an access requesting device, a group attribute certificate which has, as stored information, group identification information corresponding to a group which is a set of certain communication devices or certain users, and also has affixed an electronic signature of an issuer; and
an access privilege determination processing step for executing verification, by means of signature verification, of the group attribute certificate received from said access requesting device regarding whether or not there has been tampering, performing screening regarding whether or not said access requesting device is a device which belongs to an access-permitted group based on group identification information stored in said group attribute certificate; and
an access permissible/impermissible determination step for executing determination regarding whether or not access can be permitted, based on the access privilege determination processing results.

50. A data processing system for executing data processing accompanied by data communication processing, between a plurality of devices capable of mutual communication, wherein, of said plurality of devices, a data processing requesting device, which requests data processing to the other device with which communication is being made, holds a group attribute certificate which has, as stored information, group identification information corresponding to a group which is a set of certain devices or certain users, and also has affixed an electronic signature of an issuer, and transmits said group attribute certificate to a data processing requested device at the time of data processing requesting processing;
and wherein said data processing requested device executes verification processing of the received group attribute certificate, determines whether or not said data processing requesting device has data processing requesting privileges based on said verification, and executes data processing based on determination of privileges.

51. A data processing system according to Claim 50, wherein the group attribute certificate stored in said data processing requesting device has as the issuer thereof the data processing requested device, and has affixed the electronic signature of the data processing requested device;
and wherein said data processing requested device is of a configuration for executing electronic signature verification processing applying a public key of itself, as verification processing of the received group attribute certificate.

52. A data processing system according to Claim 50, wherein all of said mutually communicable plurality of devices are devices which mutually request data processing of the other device with which communication is being made, with each of the devices having a configuration storing the group attribute certificate issued by the communication party device and transmitting the group attribute certificate stored in itself at the time of data processing requesting of the other device with which communication is being made, and under the condition of verification being established at the receiving device, processing corresponding to the data processing request is mutually executed.

53. A data processing system according to Claim 50, wherein all of said mutually communicable plurality of devices have security chips with anti-tampering configurations, with mutual authentication being executed between the mutual security chips at the time of data processing requesting of the other device with which communication is being made, and wherein, under the condition that mutual authentication has been established, said transmission of group attribute certificates between the devices, and verification of the transmitted group attribute certificates, is executed.

54. A data processing system according to Claim 50, wherein the group attribute certificate stored in the data processing requesting device has as the issuer thereof the data processing requested device;
and wherein issuing processing is performed under the condition that mutual authentication has been established between the data processing requesting device and the data processing requested device.

55. A data processing system according to Claim 50, wherein, of said mutually communicable plurality of devices, at least one or more devices comprise, as a device configuration, an end entity for executing communication processing with other device and data processing, and a user identification device having individual identification functions capable of exchanging data with said end entity;
and wherein, in the event that said group attribute certificate is issued to members making up a certain user group, issuing processing is carried out under the condition that mutual authentication is established between said user identification device and a group attribute certificate issuing processing executing device.

56. A data processing system according to Claim 50, wherein, of said mutually communicable plurality of devices, one is a maintenance executing device for executing maintenance processing for devices;
and wherein the other devices are service receiving device which receive the maintenance service from said maintenance executing device;
and wherein said service receiving device stores a service attribute certificate which is a group attribute certificate issued by said maintenance executing device;
and wherein said maintenance executing device stores a control attribute certificate which is a group attribute certificate issued by said service receiving device;
and wherein said service attribute certificate is applied for verification at said maintenance executing device that said service receiving device belongs to a group of devices or users having maintenance service receiving privileges;
and wherein said control attribute certificate is applied for verification at said service receiving device that said maintenance executing device belongs to a group of devices or users having maintenance service executing privileges.

57. A data processing system according to Claim 56, wherein a maintenance program executed at said service receiving device is transmitted to or stored in said service receiving device as an enciphered maintenance program;
and wherein said service receiving device is of a configuration for deciphering said enciphered maintenance program within a security chip having an anti-tampering configuration, and then executing on said service receiving device.

58. A data processing system according to Claim 56, wherein maintenance processing executed at said service receiving device is executed based on commands transmitted from said maintenance executing device to said service receiving device;
and wherein said service receiving device transmits a response to said maintenance executing device for the execution results of said commands, and said maintenance executing device executes transmission of new commands to said service receiving device based on the transmitted response.

59. A data processing device for executing data processing based on data processing requests from a data processing requesting device, said data processing device comprising:
a data reception unit for receiving from said data processing requesting device a group attribute certificate which has, as stored information, group identification information corresponding to a group which is a set of certain devices or certain users and also has affixed an electronic signature of an issuer;
a privilege determining processing unit for executing verification processing of the received group attribute certificate, and determining whether or not said data processing requesting device has data processing requesting privileges based on said verification; and
a data processing unit for executing data processing based on determination of privileges.

60. A data processing device according to Claim 59, wherein said privilege determining processing unit is of a configuration for executing electronic signature verification processing applying a public key of itself, as verification processing of the received group attribute certificate.

61. A data processing device according to Claim 59, wherein said data processing device has a security chip with an anti-tampering configuration and comprising an enciphering processing unit;
and wherein said enciphering processing unit has a configuration wherein mutual authentication is executed with the data processing requesting device in response to a data processing request from the data processing requesting device;
and wherein said privilege determining processing unit is of a configuration for executing verification of the group attribute certificate, under the condition that mutual authentication has been established.

62. A data processing device according to Claim 59, wherein said data processing device is of a configuration comprising an attribute certificate generating processing unit having functions for generating a group attribute certificate which has, as stored information, group identification information corresponding to a group which is a set of certain devices or certain users, and also has affixed an electronic signature.

63. A data processing method for executing data processing accompanied by data communication processing, between a plurality of devices capable of mutual communication, wherein, of said plurality of devices, a data processing requesting device, which requests data processing to the other device with which communication is being made, executes a step for transmitting, to the other device with which communication is being made at the time of data processing requesting processing, a group attribute certificate which has, as stored information, group identification information corresponding to a group which is a set of certain devices or certain users, and also has affixed an electronic signature of an issuer;
and wherein said data processing requested device executes:
a verification processing step for the received group attribute certificate;
a step for determining whether or not said data processing requesting device has data processing requesting privileges based on said verification; and
a step for executing data processing based on determination of privileges.

64. A data processing method according to Claim 63, wherein the group attribute certificate stored in said data processing requesting device has as the issuer thereof the data processing requested device, and has affixed the electronic signature of the data processing requested device;
and wherein, in said verification processing step at said data processing requested device, electronic signature verification processing applying a public key of itself is executed, as verification processing of the received group attribute certificate.

65. A data processing method according to Claim 63, wherein all of said mutually communicable plurality of devices are devices which mutually request data processing of the other device with which communication is being made, with each of the devices having a configuration storing the group attribute certificate issued by the communication party device and transmitting the group attribute certificate stored in itself at the time of data processing requesting of the other device with which communication is being made, and under the condition of verification being established at the receiving device, processing corresponding to the data processing request is mutually executed.

66. A data processing method according to Claim 63, wherein all of said mutually communicable plurality of devices have security chips with anti-tampering configurations, with mutual authentication being executed between the mutual security chips at the time of data processing requesting of the other device with which communication is being made, and wherein, under the condition that mutual authentication has been established, said transmission of group attribute certificates between the devices, and verification of the transmitted group attribute certificates, is executed.

67. A data processing method according to Claim 63, further comprising an issuing processing step for the group attribute certificate stored in the data processing requesting device;
said issuing processing step being executed under the condition that mutual authentication has been established between the data processing requesting device and the data processing requested device.

68. A data processing method according to Claim 63, further comprising an issuing processing step for the group attribute certificate stored in the data processing requesting device;
wherein, in the event that said group attribute certificate is issued to members making up a certain user group, said issuing processing step is executed under the condition that mutual authentication is established with a user identification device having individual identification functions making of the data processing requesting device.

69. A data processing method according to Claim 63,
wherein, of said mutually communicable plurality of devices, one is a maintenance executing device for executing maintenance processing for devices, and wherein the other devices are service receiving device which receive the maintenance service from said maintenance executing device, said method comprising:
a step for said service receiving device to transmit to said maintenance executing device a service attribute certificate which is a group attribute certificate issued by said maintenance executing device;
a service attribute certificate verification step for said maintenance executing device to execute verification of the received service attribute certificate;
a step for said maintenance executing device to transmit to said service receiving device a control attribute certificate which is a group attribute certificate issued by said service receiving device;
a control attribute certificate verification step for said service receiving device to execute verification of said control attribute certificate; and
a maintenance processing step for executing maintenance processing under the condition that both verification of said service attribute certificate verification and said control attribute certificate verification have been established.

70. A data processing method according to Claim 69, wherein a maintenance program executed at said service receiving device is transmitted to or stored in said service receiving device as an enciphered maintenance program;
and wherein said service receiving device is of a configuration for deciphering said enciphered maintenance program within a security chip having an anti-tampering configuration, and then executing on said service receiving device.

71. A data processing method according to Claim 69, wherein maintenance processing executed at said service receiving device is executed based on commands transmitted from said maintenance executing device to said service receiving device;
and wherein said service receiving device transmits a response to said maintenance executing device for the execution results of said commands, and said maintenance executing device executes transmission of new commands to said service receiving device based on the transmitted response.

72. A data processing method for executing data processing based on data processing requests from a data processing requesting device, said method comprising:
a data reception step for receiving from said data processing requesting device a group attribute certificate which has, as stored information, group identification information corresponding to a group which is a set of certain devices or certain users and also has affixed an electronic signature of an issuer;
a privilege determining processing step for executing verification processing of the received group attribute certificate, and determining whether or not said data processing requesting device has data processing requesting privileges based on said verification; and
a data processing step for executing data processing based on determination of privileges.

73. A data processing method according to Claim 72, wherein said privilege determining processing step includes a step for executing electronic signature verification processing applying a public key of itself, as verification processing of the received group attribute certificate.

74. A data processing method according to Claim 72, further comprising a step for executing mutual authentication with the data processing requesting device in response to a data processing request from the data processing requesting device;
and wherein said privilege determining processing step executes verification of the group attribute certificate, under the condition that mutual authentication has been established.

75. A computer program for effecting execution of data processing based on data processing requests from a data processing requesting device, said program comprising:
a data reception step for receiving from said data processing requesting device a group attribute certificate which has, as stored information, group identification information corresponding to a group which is a set of certain devices or certain users and also has affixed an electronic signature of an issuer;
a privilege determining processing step for executing verification processing of the received group attribute certificate, and determining whether or not said data processing requesting device has data processing requesting privileges based on said verification; and
a data processing step for executing data processing based on determination of privileges.
